# EUROPEAN PATENT APPLICATION

(11) **EP 4 329 036 A1**
(43) Date of publication of application: **28.02.2024**
(21) Application number: 22807506.5
(22) Date of filing: 11.05.2022
(51) Int. Cl.: H01M 10/0567, H01M 10/052, H01M 10/0568

(54) **NON-AQUEOUS ELECTROLYTIC SOLUTION AND SECONDARY BATTERY**

(30) Priority: 14.05.2021 JP 2021082508
(71) Applicant: Nippon Shokubai Co., Ltd., Osaka-shi, Osaka 541-0043 (JP)
(72) Inventor: MIZUNO Hiroyuki, Suita-shi, Osaka 564-0034 (JP); NISHIHATA Ryo, Suita-shi, Osaka 564-0034 (JP); OKAJIMA Masayuki, Suita-shi, Osaka 564-0034 (JP); ITO Yutaro, Suita-shi, Osaka 564-0034 (JP); ODANI Toru, Suita-shi, Osaka 564-0034 (JP)
(74) Representative: Germain Maureau
(86) International application number: PCT/JP2022/019959
(87) International publication number: WO 2022/239807

(57) **Abstract**

Anon-aqueous electrolyte solution contains: as an electrolyte, LiN(FSO₂)₂; and as an additive, at least one selected from the group consisting of a silicon atom-containing compound represented by the general formula (2): Si(R⁵)₂(OR⁶)₂, a boron atom-containing compound represented by the general formula (3): B(OR⁶)₃, a carbon atom-containing compound represented by the general formula (4): C(=O)(R⁵)(OR⁶), a sulfur atom-containing compound represented by the general formula (5): {S(=O)₂(R⁵)_{y}}ₓ(OR⁶)_{x(2-y)}, and a phosphorus atom-containing compound represented by the general formula (6): P(=O)(R⁵)_{y}(OR⁶)₂.

## Description

### TECHNICAL FIELD

The present disclosure relates to a non-aqueous electrolyte solution and a secondary battery.

### BACKGROUND ART

In order to improve the performance of secondary batteries such as lithium ion secondary batteries, various non-aqueous electrolyte solutions used in secondary batteries have been studied. For example, Patent Document 1 proposes a non-aqueous electrolyte (non-aqueous electrolyte solution) containing an imide salt such as lithium bis(fluorosulfonyl imide), a glyme, and a fluorinated ether, and further containing lithium nitrate. Patent Document 2 proposes a non-aqueous electrolyte solution containing lithium bis(fluorosulfonyl)imide and a trimethylsilyl phosphate (TMSPa) additive. Patent Document 3 proposes a non-aqueous electrolyte solution containing lithium hexafluorophosphate and a boroxine compound. Patent Document 4 proposes an electrolyte solution for a non-aqueous electricity storage device, containing: a non-aqueous solvent; a lithium salt; a sulfur-containing compound; and a compound in which at least one hydrogen atom of an acid is substituted with a trimethylsilyl group or the like. The acid is selected from the group consisting of a protonic acid with an atom selected from the group consisting of a phosphorus atom and a boron atom, a sulfonic acid, and a carboxylic acid. Patent Document 5 proposes an electrolyte solution additive for non-aqueous electricity storage devices, containing a compound which contains from two to four P atoms in one molecule and a structural unit represented by the predetermined formula.

### CITATION LIST

### PATENT DOCUMENTS

Patent Document 1: Japanese Unexamined Patent Publication No. 2018-67501
Patent Document 2: Japanese Unexamined Patent Publication No. 2017-529671
Patent Document 3: Japanese Unexamined Patent Publication No. 2016-152140
Patent Document 4: Japanese Unexamined Patent Publication No. 2015-156372
Patent Document 5: Japanese Unexamined Patent Publication No. 2016-192401

### SUMMARY OF THE INVENTION

### TECHNICAL PROBLEM

Based on the studies so far, the inventors of the present application have found that a non-aqueous electrolyte solution containing a sulfonylimide compound such as lithium bis(fluorosulfonyl)imide as an electrolyte salt improves performance of a lithium ion secondary battery, such as high-temperature durability and charge-discharge cycle characteristics. The inventors of the present application have found that a battery using a non-aqueous electrolyte solution containing a sulfonylimide compound has an advantageous effect of small charge transfer resistance (impedance) at low temperatures (e.g., -30°C) and small battery direct current resistance (DCR) as compared with a battery using a non-aqueous electrolyte solution which contains a lithium compound (such as LiPF₆ and LiBF₄) alone other than the sulfonylimide compound as an electrolyte.

In the non-aqueous electrolyte solution described in Patent Document 1, the charge transfer resistance is reduced by adding the lithium nitrate, but there is room for improvement in terms of high-temperature durability. Further, in the non-aqueous electrolyte solution described in Patent Document 2, the battery performance is improved by adding trimethylsilyl phosphate, but the effects of reducing the charge transfer resistance at low temperatures and battery direct current resistance are insufficient. In Patent Documents 3 to 5, a non-aqueous electrolyte solution containing a sulfonylimide compound is not considered in the first place. In addition, the electrolyte solution containing a phosphorus compound with a trimethylsilyl group described in Patent Document 5 suppresses the increase in direct current resistance during a high-temperature cycle, but the effect is not sufficient, and the battery performance deteriorates during a charge-discharge cycle at low temperatures.

As described above, none of the non-aqueous electrolyte solutions described in Patent Documents 1 to 5 has sufficient battery performance, and there is room for improvement.

The present disclosure was made in view of the points described above, and an object thereof is to provide a non-aqueous electrolyte solution containing a sulfonylimide compound and capable of improving the battery performance, and a secondary battery including the non-aqueous electrolyte solution.

### SOLUTION TO THE PROBLEM

As a result of further studies, the inventors of the present application have found that a battery using a non-aqueous electrolyte solution containing a sulfonylimide compound causes greater self-discharge from a fully charged state than a battery using a non-aqueous electrolyte solution containing a lithium compound (e.g., LiPF₆ or LiBF₄) alone other than the sulfonylimide compound as an electrolyte salt, and that there is room for improvement in storage characteristics of the battery. The inventors of the present application have also found that self-discharge during battery storage increases by adding lithium nitrate to the non-aqueous electrolyte solution containing the sulfonylimide compound.

The findings were first discovered by the inventors of the present application, and Patent Documents 1 to 5 or any other documents are silent about the self-discharge of the battery using the non-aqueous electrolyte solution containing the sulfonylimide compound (especially lithium bis(fluorosulfonyl)imide).

Even when trimethylsilyl phosphate [tris(trimethylsilyl) phosphate)] described in Patent Document 2 was added to the non-aqueous electrolyte solution containing the sulfonylimide compound, the effect of suppressing self-discharge was insufficient.

Patent Document 4 indicates that self-discharge of the battery is suppressed by adding tris(trimethylsilyl) phosphate, tris(trimethylsilyl) phosphite, or the like to a non-aqueous electrolyte solution containing LiPF₆. In Patent Document 4, charged capacity during charging at 50°C and a constant voltage of 4.55 V for 240 hours can be used as an indicator of self-discharge of the battery. However, this indicator assumes that continuous charge at 50°C and 4.55 V for 240 hours causes oxidative decomposition of the electrolyte solution at the positive electrode, and that the charge consumption due to this side reaction is self-discharge. The indicators are related to evaluation of durability of the electrolyte solution, and are different from an intended indicator based on charge consumption when there is no electric load between the positive and negative electrodes as the self-discharge. In actual evaluation of self-discharge at high temperatures, the effect of suppressing self-discharge was not sufficient.

In order to improve the storage characteristics and performance of the battery, the technology disclosed herein uses a specific compound in a non-aqueous electrolyte solution containing a sulfonylimide compound to suppress self-discharge of the battery and reduce charge transfer resistance (impedance) and battery direct current resistance (DCR). The present disclosure is specifically as follows.

The present disclosure is directed to a non-aqueous electrolyte solution containing: as an electrolyte, LiN(FSO₂)₂ (sulfonylimide compound); and as an additive, at least one selected from the group consisting of as an additive, a silicon atom-containing compound represented by the general formula (2): Si(R⁵)₂(OR⁶)₂ (2), (in the general formula (2), R⁵ and R⁶ are identical to or different from each other and each represent an alkyl group with 1 to 6 carbon atoms (optionally having a substituent), a fluoroalkyl group with 1 to 6 carbon atoms (optionally having a substituent), an aryl group (optionally having a substituent), a silyl group (optionally having a substituent), an alkali metal atom, an onium salt, or a hydrogen atom); a silicon atom-containing compound represented by the general formula (14): Si(R⁵)₄ (14) (in the formula (14), R⁵ represents the same as defined above); a boron atom-containing compound represented by the general formula (3): B(OR⁶)₃ (3) (in the formula (3), R⁶ represents the same as defined above); carbon atom-containing compound represented by the general formula (4): C(=O)(R⁵)(OR⁶) (4) (in the formula (4), R⁵ and R⁶ represent the same as defined above); a sulfur atom-containing compound represented by the general formula (5): {S(=O)₂(R⁵)_{y}}ₓ(OR⁶)_{x(2-y)} (5) (in the formula (5), R⁵ and R⁶ represent the same as defined above, x represents an integer of 1 or 2, and y represents an integer of 0 or 1, provide that when x is 2 and y is 1, (OR⁶)₂ is (-O-R⁶-O-), and the formula (5) represents S(=O)₂(R⁵)-O-R⁶-O-S(=O)₂(R⁵); and a phosphorus atom-containing compound represented by a general formula (6): P(=O)(R⁵)_{y}(OR⁶)₂ (6) (in the formula (6), R⁵, R⁶, and y represent the same as defined above, provided that when the formula (6) is a polymerizable group, y is 0, one of (OR⁶)₂ is (-O-), and the formula (6) represents [-P(=O)(OR⁶)O-]ₙ). The non-aqueous electrolyte solution optionally dissolves at least one of carbon dioxide (CO₂), carbon monoxide (CO), a bicarbonate ion (HCO₃), or a carbonate ion (CO₃²⁻).

The non-aqueous electrolyte solution of the present disclosure contains:
as an electrolyte, LiN(FSO₂)₂; and as an additive, at least one selected from the group consisting of a silicon atom-containing compound represented by the general formula (2), a silicon atom-containing compound represented by the general formula (14), a boron atom-containing compound represented by the general formula (3), a carbon atom-containing compound represented by the general formula (4), a sulfur atom-containing compound represented by the general formula (5), a phosphorus atom-containing compound represented by the general formula (6), a phosphorus atom-containing compound represented by the general formula (7): P(OR⁶)₃ (7) (in the formula (7), R⁶ represents the same as defined above), a phosphorus atom-containing compound represented by the general formula (8): P(=O)(OR⁶)₃ (8) (in the formula (8), R⁶ represents the same as defined above), and a boroxine compound represented by the general formula (9).

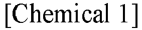

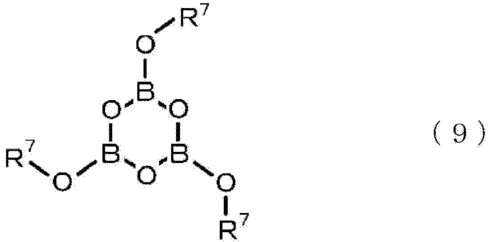

(In the formula (9), R⁷'s are identical to or different from each other and each represent an alkyl group with 1 to 6 carbon atoms (optionally having a substituent), a fluoroalkyl group with 1 to 6 carbon atoms (optionally having a substituent), or a cycloalkyl group (optionally having a substituent). The non-aqueous electrolyte solution further contains at least one of carbon dioxide (CO₂), carbon monoxide (CO), a bicarbonate ion (HCO₃⁻), or a carbonate ion (CO₃²⁻) dissolved therein.)

In the non-aqueous electrolyte solution, a total amount of the at least one of carbon dioxide (CO₂), carbon monoxide (CO), a bicarbonate ion (HCO₃⁻), or a carbonate ion (CO₃²⁻) dissolved may be 20 ppm by mass or more.

In the non-aqueous electrolyte solution, the electrolyte may contain at least one selected from the group consisting of a compound represented by the general formula (10): LiPFₐ(CₘF₂ₘ₊₁)₆-ₐ (a: 0 ≤ a ≤ 6, m: 1 ≤ m ≤ 4) (10), a compound represented by the general formula (11): LiBF_{b}(CₙF₂ₙ₊₁)_{4-b} (0 ≤ b ≤ 4, 1 ≤ n ≤ 4) (11), and LiAsF₆.

The non-aqueous electrolyte solution may further contain at least one selected from the group consisting of a compound represented by the general formula (12): M¹NO₃ (M¹ represents an alkali metal element) (12) and a compound represented by the general formula (13).

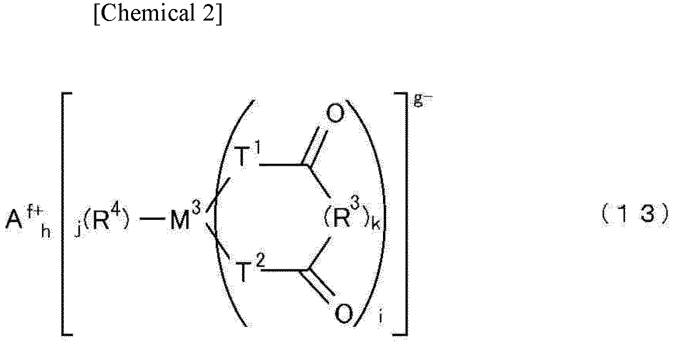

(In the general formula (13), M³ represents B or P, A^{f+} represents a metal ion, H, or an onium ion, 1 ≤ f ≤ 3, 1 ≤ g ≤ 3, h is g/f, 1 ≤ i ≤ 3, 0 ≤ j ≤ 4, k is 0 or 1, R³ represents an alkylene group with 1 to 10 carbon atoms or a halogenated alkylene group with 1 to 10 carbon atoms, R⁴ represents F or a fluorinated alkyl group with 1 to 10 carbon atoms, and T¹ and T² each independently represent O or S.)

The non-aqueous electrolyte solution of the present disclosure contains an electrolyte and, as an additive, at least one selected from the group consisting of ethyl polyphosphate, triisopropylsilyl polyphosphate, and tert-butyldimethylsilyl polyphosphate.

The present disclosure is further directed to a secondary battery using the non-aqueous electrolyte solution.

### ADVANTAGES OF THE INVENTION

The present disclosure can provide a non-aqueous electrolyte solution containing a sulfonylimide compound and capable of improving the battery performance, and a secondary battery including the non-aqueous electrolyte solution.

### BRIEF DESCRIPTION OF THE DRAWING

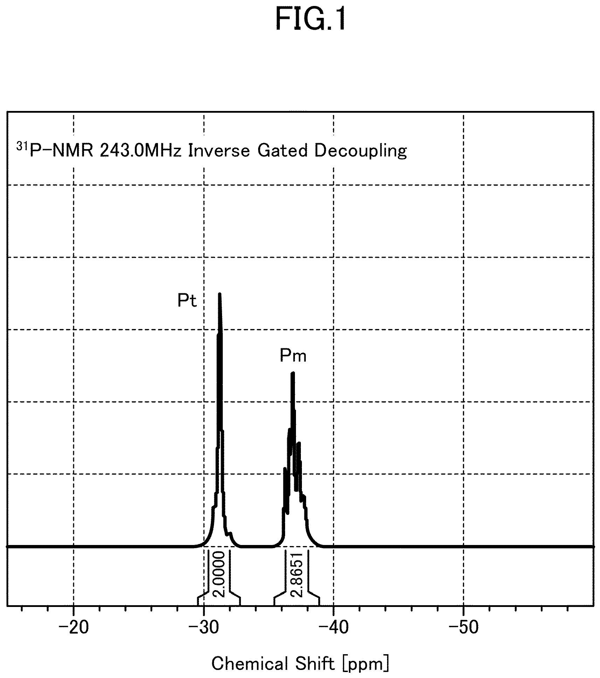

FIG. 1 is a ³¹P-NMR spectrum of trimethylsilyl polyphosphate (Compound M) as a reagent used in an Example 5-2 series.

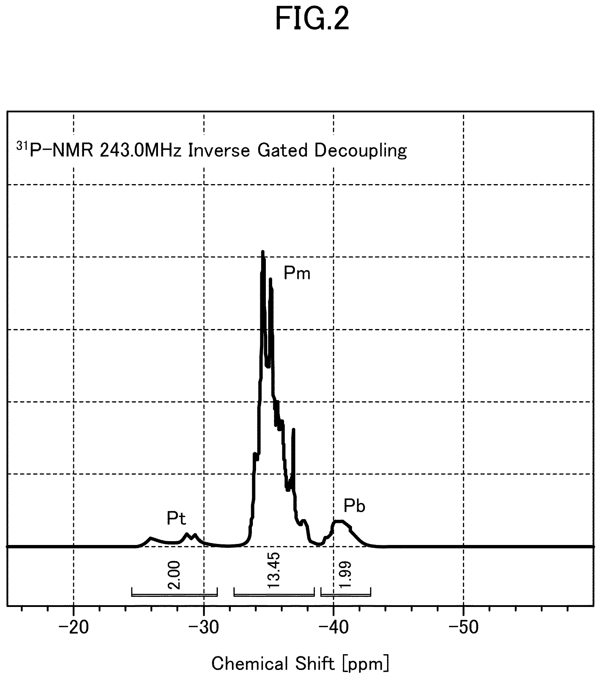

FIG. 2 is a ³¹P-NMR spectrum of trimethylsilyl polyphosphate (Compound M2) synthesized in an Example 5-2(2) series.

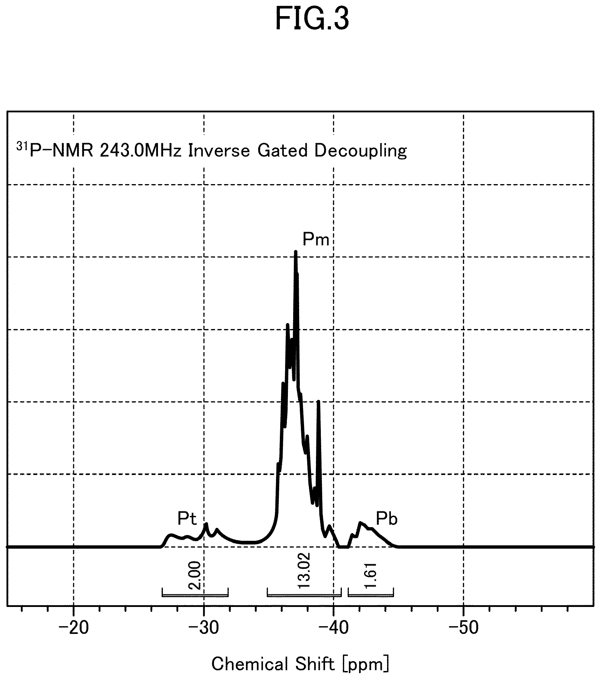

FIG. 3 is a ³¹P-NMR spectrum of trimethylsilyl polyphosphate (Compound M3) synthesized in an Example 5-2(3) series.

### DESCRIPTION OF EMBODIMENTS

Hereinafter, embodiments of the present disclosure will be described in detail. The following description of preferred embodiments is merely an example in nature, and is not intended to limit the scope, applications, or use of the present disclosure.

### <First Non-Aqueous Electrolyte Solution>

A first non-aqueous electrolyte solution according to the present embodiment contains an electrolyte and a specific compound.

### (Electrolyte)

The electrolyte includes a sulfonylimide compound represented by the general formula (1):
[Chemical 3]

LiN(R¹SO₂)(R²SO₂) (1)

(hereinafter referred to as a "sulfonylimide compound (1)", a fluorine-containing sulfonylimide salt).

In the general formula (1), R¹ and R² are identical or different from each other and (each independently) represent a fluorine atom, an alkyl group with 1 to 6 carbon atoms, or a fluoroalkyl group with 1 to 6 carbon atoms.

Examples of the alkyl group with 1 to 6 carbon atoms include a methyl group, an ethyl group, a propyl group, an isopropyl group, a butyl group, a pentyl group, and a hexyl group. Among the alkyl groups with 1 to 6 carbon atoms, a linear or branched alkyl group with 1 to 6 carbon atoms is preferable, and a linear alkyl group with 1 to 6 carbon atoms is more preferable.

Examples of the fluoroalkyl group with 1 to 6 carbon atoms include an alkyl group with 1 to 6 carbon atoms, with some or all of hydrogen atoms substituted with fluorine atoms. Examples of the fluoroalkyl group with 1 to 6 carbon atoms include a fluoromethyl group, a difluoromethyl group, a trifluoromethyl group, a fluoroethyl group, a difluoroethyl group, a trifluoroethyl group, and a pentafluoroethyl group. In particular, the fluoroalkyl group may be a perfluoroalkyl group.

The substituents R¹ and R² are each preferably a fluorine atom or a perfluoroalkyl group (e.g., a perfluoroalkyl group with 1 to 6 carbon atoms, such as a trifluoromethyl group, a pentafluoroethyl group, or a heptafluoropropyl group), more preferably a fluorine atom, a trifluoromethyl group, or a pentafluoroethyl group, yet more preferably a fluorine atom or a trifluoromethyl group, still more preferably a fluorine atom. The substituents R¹ and R² may be identical to or different from each other.

Examples of the sulfonylimide compound (1) include lithium bis(fluorosulfonyl)imide (LiN(FSO₂)₂, hereinafter also referred to as "LiFSI"), lithium bis(trifluoromethylsulfonyl)imide (LiN(CF₃SO₂)₂, hereinafter also referred to as "LiTFSI"), lithium (fluorosulfonyl)(methylsulfonyl)imide, lithium (fluorosulfonyl)(ethylsulfonyl)imide, lithium (fluorosulfonyl)(trifluoromethylsulfonyl)imide, lithium(fluorosulfonyl)(pentafluoroethylsulfonyl)imide, lithium (fluorosulfonyl)(heptafluoropropylsulfonyl)imide, lithium bis(pentafluoroethylsulfonyl)imide, and lithium bis(heptafluoropropylsulfonyl)imide. The sulfonylimide compounds (1) may be used alone or in combination of two or more of them. Alternatively, as the sulfonylimide compound (1), a commercially available product may be used, or one obtained by synthesis using any known method may also be used.

Among these sulfonylimide compounds (1), LiN(FSO₂)₂ and LiN(CF₃SO₂)₂ are preferable, and LiN(FSO₂)₂ is more preferable, in view of reducing the impedance and DCR of the battery and improving low temperature charge-discharge characteristics and charge-discharge cycle characteristics. In other words, the non-aqueous electrolyte solution contains preferably at least one of LiN(FSO₂)₂ or LiN(CF₃SO₂)₂, more preferably LiN(FSO₂)₂.

The electrolyte only has to include the sulfonylimide compound (1), but may also include another electrolyte (an electrolyte other than the sulfonylimide compound (1)). Examples of the other electrolyte include an imide salt and a non-imide salt.

Examples of the imide salt include another fluorine-containing sulfonylimide salt (hereinafter referred to as "other sulfonylimide compound") that is different from the sulfonylimide compound (1). Examples of the other sulfonylimide compound include a non-lithium salt of fluorine-containing sulfonylimide listed above as the sulfonylimide compound (1) (e.g., a salt obtained by substituting lithium (ion) in the sulfonylimide compound (1) with a cation other than the lithium ion). Examples of the salt substituted with a cation other than the lithium ion include: an alkali metal salt such as a sodium salt, a potassium salt, a rubidium salt, and a cesium salt; an alkali earth metal salt such as a beryllium salt, a magnesium salt, a calcium salt, a strontium salt, and a barium salt; an aluminum salt; an ammonium salt; and a phosphonium salt. The other sulfonylimide compounds may be used alone or in combination of two or more. Alternatively, as the other sulfonylimide compound, a commercially available product may be used, or one obtained by synthesis using a known method may also be used.

Examples of the non-imide salt include a salt of a non-imide-based anion and a cation (lithium ions and the cations shown above as examples). Examples of the non-imide salt include a compound represented by the general formula (10):
[Chemical 4]

LiPFₐ(CₘF₂ₘ₊₁)₆₋ₐ (0 ≤ a ≤ 6 and 1 ≤ m ≤ 4) (10)

(hereinafter referred to as a "fluorophosphoric acid compound (10)"); a compound represented by the general formula (11):
[Chemical 5]

LiBF_{b}(CnF₂ₙ₊₁)_{4-b} (0 ≤ b ≤ 4, 1 ≤ n ≤ 4) (11),

and (hereinafter referred to as a "fluoroboric acid compound (11)"), lithium salts such as lithium hexafluoroarsenate (LiAsF₆), LiSbF₆, LiClO₄, LiSCN, LiAlF₄, CF₃SO₃Li, LiC[(CF₃SO₂)₃], LiN(NO₂), and LiN[(CN)₂], and non-lithium salts (e.g., salts obtained by substituting a lithium (ion) with the above-described cation in these lithium salts, such as NaBF₄, NaPF₆, and NaPF₃(CF₃)₃). These non-imide salts may be used alone or in combination of two or more of them. Alternatively, as the non-imide salt, a commercially available product may be used, or one obtained by synthesis using a known method may also be used.

Among the other electrolytes, the non-imide salts are preferable in view of ion conductivity and costs. Among them, the fluorophosphoric acid compound (10), the fluoroboric acid compound (11), and LiAsF₆ are preferable, and the fluorophosphoric acid compound (10) is more preferable.

Examples of the fluorophosphoric acid compound (10) include LiPF₆, LiPF₃(CF₃)₃, LiPF₃(C₂F₅)₃, LiPF₃(C₃F7)₃, and LiPF₃(C₄F₉)₃. Among the fluorophosphoric acid compounds (10), LiPF₆ or LiPF₃(C₂F₅)₃ is preferable, LiPF₆. is more preferable.

Examples of the fluoroboric acid compound (11) include LiBF₄, LiBF(CF₃)₃, LiBF(C₂F₅)₃, and LiBF(C₃F₇)₃. Among the fluoroboric acid compounds (11) LiBF₄ or LiBF(CF₃)₃ is preferable, and LiBF₄ is more preferable.

These electrolyte salts (the sulfonylimide compound (1) and the other electrolyte) may be present (contained) in the ionic form in the non-aqueous electrolyte solution.

The concentration of the sulfonylimide compound (1) in the non-aqueous electrolyte solution is preferably 0.01 mol/L or more, more preferably 0.05 mol/L or more, yet more preferably 0.1 mol/L or more, still more preferably 0.2 mol/L or more, even more preferably 0.5 mol/L or more, in view of reducing the impedance and DCR of the battery. In view of keeping the battery performance from decreasing due to the increase in viscosity of the electrolyte solution, the concentration is preferably 5 mol/L or less, more preferably 3 mol/L or less, yet more preferably 2 mol/L or less.

The content of the sulfonylimide compound (1) in the non-aqueous electrolyte solution is preferably 10 mol% or more, more preferably 20 mol% or more, yet more preferably 30 mol% or more, particularly preferably 50 mol% or more with respect to the total of 100 mol% of the electrolyte salt contained in the non-aqueous electrolyte solution, in view of reducing the impedance and DCR of the battery.

The electrolyte salt may be an electrolyte salt of a simple salt composition containing the sulfonylimide compound (1) alone, or an electrolyte salt of a mixed salt composition containing the sulfonylimide compound (1) and other electrolyte. The electrolyte salt of the mixed salt composition is preferably an electrolyte salt of a mixed salt composition containing the sulfonylimide compound (1) and the fluorophosphoric acid compound (10), more preferably an electrolyte salt of a mixed salt composition containing at least one of LiN(FS0₂)₂ or LiN(CF₃SO₂)₂ and LiPF₆, particularly preferably an electrolyte salt of a mixed salt composition containing LiN(FSO₂)₂ and LiPF₆.

When the electrolyte salt of the mixed salt composition containing the sulfonylimide compound (1) and the other electrolyte is used, the concentration of the other electrolyte in the non-aqueous electrolyte solution is preferably 0.1 mol/L or more, more preferably 0.2 mol/L or more, yet more preferably 0.5 mol/L or more, in view of reducing the impedance and DCR of the battery. The concentration is preferably 1.5 mol/L or less, more preferably 1 mol/L or less, yet more preferably 0.8 mol/L or less, in view of reducing the impedance and DCR of the battery.

The total concentration of the electrolyte in the non-aqueous electrolyte solution is preferably 0.8 mol/L or more, more preferably 1 mol/L or more, yet more preferably 1.2 mol/L, in view of reducing the impedance and DCR of the battery. In view of keeping the battery performance from decreasing due to the increase in viscosity of the electrolyte solution, the concentration is preferably 5 mol/L or less, more preferably 3 mol/L or less, yet more preferably 2 mol/L or less.

The concentration of the sulfonylimide compound (1) is preferably raised in view of reducing the impedance and DCR of the battery. The ratio between the sulfonylimide compound (1) and the other electrolyte (a mole ratio between the concentration of the sulfonylimide compound and the concentration of the other electrolyte) is preferably 1:25 or more, more preferably 1:10 or more, yet more preferably 1:8 or more, still more preferably 1:5 or more, even more preferably 1:2 or more, particularly preferably 1:1 or more, and preferably 25:1 or less, more preferably 10:1 or less, yet more preferably 5:1 or less, still more preferably 2:1 or less.

### (Specific Compound)

The first non-aqueous electrolyte solution further contains, as an additive, at least one of various specific compounds shown below besides the sulfonylimide compound (1). As described above, since the first non-aqueous electrolyte solution contains a sulfonylimide compound (1) and at least one of specific compounds in combination, suppression of self-discharge of the battery and reduction of the charge transfer resistance (impedance) and the battery direct current resistance (DCR) of the battery can be both achieved. In other words, the storage characteristics of the battery and the battery performance can be improved.

### <Classification for Each Central Atom>

### (Silicon Atom-Containing Compound)

Examples of the specific compound containing a silicon atom as a central atom include a silicon atom-containing compound represented by the general formula (2):
[Chemical 6]

Si(R⁵)₂(OR⁶)₂ (2)

(hereinafter referred to as a "silicon atom-containing compound (2)") and a silicon atom-containing compound represented by the general formula (14):
[Chemical 7]

Si(R⁵)₄ (14)

(hereinafter referred to as a "silicon atom-containing compound (14)").

In the general formula (2), R⁵ and R⁶ are identical to or different from each other and (each independently) represent an alkyl group with 1 to 6 carbon atoms (optionally having a substituent), a fluoroalkyl group with 1 to 6 carbon atoms (optionally having a substituent), an aryl group (optionally having a substituent), a silyl group (optionally having a substituent), an alkali metal atom (such as a lithium atom, a sodium atom, a potassium atom, and a rubidium atom), an onium salt, or a hydrogen atom.

In the general formula (2), R⁵ is preferably an aryl group (such as a phenyl group, a tolyl group, and an o-xylyl group), more preferably a phenyl group. R⁵'s are preferably identical to each other.

In the general formula (2), R⁶ is preferably a linear or branched alkyl group with 1 to 6 carbon atoms (optionally having a substituent), more preferably a linear alkyl group with 1 to 3 carbon atoms (optionally having a substituent), yet more preferably a methyl group. R⁶'s are preferably identical to each other.

Specific examples of the silicon atom-containing compound (2) include diphenylsilanediol (R⁵ represents a phenyl group, R⁶ represents a hydrogen atom) and dimethoxydiphenylsilane (R⁵ represents a phenyl group, R⁶ represents a methyl group).

When the silicon atom-containing compound (2) is added to the non-aqueous electrolyte solution containing a sulfonylimide compound (1), the battery using the electrolyte solution reduces the impedance and DCR and also suppresses self-discharge, which is a problem specific to the non-aqueous electrolyte solution containing the sulfonylimide compound (1). Further, when CO₂ or other component, which will be described later, is dissolved in the electrolyte solution, the effect exhibited by the addition of the silicon atom-containing compound (2) is further enhanced. In other word, the combination of the addition of the silicon atom-containing compound (2) and the dissolving of CO₂ or other component exhibits a synergistic effect of suppressing self-discharge of the battery and reducing the impedance and DCR.

In the general formula (14), R⁵ represents the same as defined above. In the general formula (14), R⁵ is preferably a trialkylsilyl group with 1 to 6 carbon atoms (optionally having a substituent), more preferably a trialkylsilyl group with 1 to 3 carbon atoms (optionally having a substituent), yet more preferably a trimethylsilyl group. Herein, the trialkylsilyl group with 1 to 6 or 1 to 3 carbon atoms refers to a silyl group having three alkyl groups with 1 to 6 or 1 to 3 carbon atoms bonded thereto. R⁵'s are preferably identical to each other.

Specific examples of the silicon atom-containing compound (14) include tetrakis(trimethylsiloxy)silane (R⁵ represents a trimethylsilyl group).

When the silicon atom-containing compound (14) is added to the non-aqueous electrolyte solution containing the sulfonylimide compound (1), the battery using the electrolyte solution reduces the impedance and DCR and also suppresses self-discharge, which is a problem specific to the non-aqueous electrolyte solution containing the sulfonylimide compound (1). Further, when CO₂ or other component, which will be described later, is dissolved in the electrolyte solution, the effect exhibited by the addition of the silicon atom-containing compound (14) is further enhanced. In other word, the combination of the addition of the silicon atom-containing compound (14) and the dissolving of CO₂ or other component exhibits a synergistic effect of suppressing self-discharge of the battery and reducing the impedance and DCR.

### (Boron Atom-Containing Compound)

Examples of the specific compound containing a boron atom as a central atom include a boron atom-containing compound represented by the general formula (3):
[Chemical 8]

B(OR⁶)₃ (3)

(hereinafter referred to as a "boron atom-containing compound (3)").

In the general formula (3), R⁶ represents the same as defined above. In the general formula (3), R⁶ is preferably a linear or branched alkyl group with 1 to 6 carbon atoms (optionally having a substituent), a trifluoro alkyl group with 1 to 6 carbon atoms (optionally having a substituent), or a trialkylsilyl group with 1 to 6 carbon atoms (optionally having a substituent), more preferably a linear alkyl group with 1 to 4 carbon atoms (optionally having a substituent), a trifluoro alkyl group with 1 to 4 carbon atoms (optionally having a substituent), or a trialkylsilyl group with 1 to 3 carbon atoms (optionally having a substituent), yet more preferably a methyl group, an ethyl group, a butyl group, a trifluoromethyl group, a trifluoroethyl group, or a trimethylsilyl group, still more preferably a trimethylsilyl group. Herein, the trialkylsilyl group with 1 to 6 or 1 to 3 carbon atoms refers to a silyl group having three alkyl groups with 1 to 6 or 1 to 3 carbon atoms bonded thereto. R⁶'s are preferably identical to each other.

Specific examples of the boron atom-containing compound (3) include trimethyl borate (R⁶ represents a methyl group), triethyl borate (R⁶ represents an ethyl group), triisopropyl borate (R⁶ represents an isopropyl group), tributyl borate (R⁶ represents a butyl group), tris(2,2,2)trifluoroethyl borate (R⁶ represents a trifluoroethyl group), and tris(trimethylsilyl)borate (R⁶ represents a trimethylsilyl group). These boron atom-containing compounds (3) may be used alone or in combination of two or more of them. Among the boron atom-containing compounds (3), tris(trimethylsilyl)borate is preferable.

When the boron atom-containing compound (3) is added to the non-aqueous electrolyte solution containing a sulfonylimide compound (1), the battery using the electrolyte solution reduces the impedance and DCR and also suppresses self-discharge, which is a problem specific to the non-aqueous electrolyte solution containing the sulfonylimide compound (1). Further, when CO₂ or other component, which will be described later, is dissolved in the electrolyte solution, the effect exhibited by the addition of the boron atom-containing compound (3) is further enhanced. In other word, the combination of the addition of the boron atom-containing compound (3) and the dissolving of CO₂ or other component exhibits a synergistic effect of suppressing self-discharge of the battery and reducing the impedance and DCR.

### (Carbon Atom-Containing Compound)

Examples of the specific compound containing a carbon atom as a central atom include a carbon atom-containing compound represented by the general formula (4):
[Chemical 9]

C(=O)(R⁵)(OR⁶) (4)

(hereinafter referred to as a "carbon atom-containing compound (4)").

In the general formula (4), R⁵ and R⁶ represent the same as defined above). In the general formula (4), R⁵ is preferably a linear or branched alkyl group with 1 to 6 carbon atoms (optionally having a substituent) or a trifluoro alkyl group with 1 to 6 carbon atoms (optionally having a substituent)), more preferably a linear alkyl group with 1 to 3 carbon atoms (optionally having a substituent) or a trifluoro alkyl group with 1 to 3 carbon atoms (optionally having a substituent), yet more preferably a methyl group or a trifluoromethyl group, still more preferably a trifluoromethyl group.

In the general formula (4), R⁶ is preferably a trialkylsilyl group with 1 to 6 carbon atoms (optionally having a substituent), more preferably a trialkylsilyl group with 1 to 3 carbon atoms (optionally having a substituent), yet more preferably a trimethylsilyl group. Herein, the trialkylsilyl group with 1 to 6 or 1 to 3 carbon atoms refers to a silyl group having three alkyl groups with 1 to 6 or 1 to 3 carbon atoms bonded thereto.

Specific examples of the carbon atom-containing compound (4) include trimethylsilyl acetate (R⁵ represents a methyl group, R⁶ represents a trimethylsilyl group), trimethylsilyl trifluoroacetate (R⁵ represents a trifluoromethyl group, R⁶ represents a trimethylsilyl group). The carbon atom-containing compounds (4) may be used alone or in combination of two or more of them. Among the carbon atom-containing compounds (4), trimethylsilyl trifluoroacetate is preferable.

When the carbon atom-containing compound (4) is added to the non-aqueous electrolyte solution containing a sulfonylimide compound (1), the battery using the electrolyte solution reduces the impedance and DCR and also suppresses self-discharge, which is a problem specific to the non-aqueous electrolyte solution containing the sulfonylimide compound (1). Further, when CO₂ or other component, which will be described later, is dissolved in the electrolyte solution, the effect exhibited by the addition of the carbon atom-containing compound (4) is further enhanced. In other word, the combination of the addition of the carbon atom-containing compound (4) and the dissolving of CO₂ or other component exhibits a synergistic effect of suppressing self-discharge of the battery and reducing the impedance and DCR.

### (Sulfur Atom-Containing Compound)

Examples of the specific compound containing a sulfur atom as a central atom include a sulfur-containing compound represented by the general formula (5):
[Chemical 10]

{S(=O)₂(R⁵)_{y}}ₓ(OR⁶)_{x(2-y)} (5)

(hereinafter referred to as a "sulfur atom-containing compound (5)").

In the general formula (5), R⁵ and R⁶ represent the same as defined above, x represents an integer of 1 or 2, and y represents an integer of 0 or 1.

In the general formula (5), when x is 2 and y is 1, (OR⁶)₂ represents (-O-R⁶-O-) In other words, the sulfur atom-containing compound (5) is also represented by the general formula (5a):
[Chemical 11]

S(=O)₂(R⁵)-O-R⁶-O-S(=O)₂(R⁵) (5a).

In the general formulae (5) and (5a), R⁵ is preferably a trifluoro alkyl group with 1 to 6 carbon atoms (optionally having a substituent), more preferably a trifluoro alkyl group with 1 to 3 carbon atoms (optionally having a substituent), yet more preferably a trifluoromethyl group.

In the general formula (5), R⁶ is preferably a trialkylsilyl group with 1 to 6 carbon atoms (optionally having a substituent) or a silyl group with an alkyl group with 1 to 6 carbon atoms (optionally having a substituent) and two alkyl groups with 1 to 6 carbon atoms (optionally having a substituent) which differ in carbon number, structure (such as chain, cyclic), and the like from each other, bonded thereto, more preferably a trialkylsilyl group with 1 to 4 carbon atoms (optionally having a substituent) or a silyl group with an alkyl group with 1 to 2 carbon atoms (optionally having a substituent) and two alkyl groups with 1 to 4 carbon atoms (optionally having a substituent) which differ in carbon number, structure (such as chain, cyclic), and the like from each other, bonded thereto, yet more preferably a trimethylsilyl group or a tert-butyldimethylsilyl group (optionally having a substituent), still more preferably a trimethylsilyl group. Herein, the trialkylsilyl group with 1 to 6 or 1 to 4 carbon atoms refers to a silyl group having three alkyl groups with 1 to 6 or 1 to 4 carbon atoms bonded thereto. In the general formula (5a), R⁶ is preferably a linear or branched dialkylsilyl group with 1 to 6 carbon atoms (optionally having a substituent), more preferably a linear dialkylsilyl group with 1 to 4 carbon atoms (optionally having a substituent), yet more preferably a di-tert-butylsilyl group (optionally having a substituent). Herein, the dialkylsilyl group with 1 to 6 or 1 to 4 carbon atoms refers to a silyl group with two alkyl groups with 1 to 6 or 1 to 4 carbon atoms bonded thereto.

Specific examples of the sulfur atom-containing compound (5) include trimethylsilyl trifluoromethane sulfonate (in the general formula (5), R⁵ represents a trifluoromethyl group, R⁶ represents a trimethylsilyl group, and x and y each represent 1); bis(trimethylsilyl) sulfate (in the general formula (5), R⁶ represents a trimethylsilyl group, x represents 1, y represents 0); di-tert-butylsilyl bis(trifluoromethane sulfonate) (in the general formula (5a), R⁵ represents a trifluoromethyl group, and R⁶ represents a di(tert-butyl)silyl group); tert-butyldimethylsilyl trifluoromethane sulfonate (in the general formula (5), R⁵ represents a trifluoromethyl group, R⁶ represents a tert-butyldimethylsilyl group, and x and y each represent 1). The sulfur atom-containing compounds (5) may be used alone or in combination of two or more of them. Among the sulfur atom-containing compounds (5), bis(trimethylsilyl) sulfate or tert-butyldimethylsilyl trifluoromethane sulfonate is preferable.

When the sulfur atom-containing compound (5) is added to the non-aqueous electrolyte solution containing a sulfonylimide compound (1), the battery using the electrolyte solution reduces the impedance and DCR and also suppresses self-discharge, which is a problem specific to the non-aqueous electrolyte solution containing the sulfonylimide compound (1). Further, when CO₂ or other component, which will be described later, is dissolved in the electrolyte solution, the effect exhibited by the addition of the sulfur atom-containing compound (5) is further enhanced. In other word, the combination of the addition of the sulfur atom-containing compound (5) and the dissolving of CO₂ or other component exhibits a synergistic effect of suppressing self-discharge of the battery and reducing the impedance and DCR.

### (Phosphorus Atom-Containing Compound)

Examples of a specific compound containing a phosphorus atom as a central atom include a phosphorus atom-containing compound represented by the general formula (6):
[Chemical 12]

P(=O)(R⁵)_{y}(OR⁶)₂ (6)

(hereinafter referred to as a "phosphorus atom-containing compound (6)"), and a phosphorus atom-containing compound represented by the general formula (7):
[Chemical 13]

P(OR⁶)₃ (7)

(hereinafter referred to as a "phosphorus atom-containing compound (7)").

In the general formula (6), R⁵, R⁶, and y represent the same as defined above.

When the general formula (6) represents a polymerizable group (polymer), y represents 0 (no R⁵), one of two (OR⁶)s represents (-O-). In other words, the phosphorus atom-containing compound (6) is represented also by the general formula (6a):
[Chemical 14]

[-P(=O)(OR⁶)O-]ₙ (6a).

In the general formula (6), R⁵ is preferably a hydrogen atom.

In the general formulae (6) and (6a), R⁶ is preferably a linear alkyl group with 1 to 6 carbon atoms (optionally having a substituent), a trifluoro alkyl group with 1 to 6 carbon atoms (optionally having a substituent), a trialkylsilyl group with 1 to 6 carbon atoms (optionally having a substituent), or a silyl group with an alkyl group with 1 to 6 carbon atoms (optionally having a substituent) and two alkyl groups with 1 to 6 carbon atoms (optionally having a substituent) which differ in carbon number, structure (such as chain, cyclic), and the like from each other, bonded thereto, more preferably a linear alkyl group with 1 to 3 carbon atoms (optionally having a substituent), a trifluoro alkyl group with 1 to 3 carbon atoms (optionally having a substituent), a trialkylsilyl group with 1 to 4 carbon atoms (optionally having a substituent), or a silyl group with an alkyl group with 1 to 4 carbon atoms and two alkyl groups with 1 to 6 carbon atoms (optionally having a substituent) which differ in carbon number, structure (such as chain, cyclic), and the like from each other, bonded thereto, yet more preferably an ethyl group, a trifluoroethyl group, a trimethylsilyl group, a triethylsilyl group, a triisopropylsilyl group, a tert-butyldimethylsilyl group, or a tert-butyldiphenylsilyl group, still more preferably a trimethylsilyl group. Herein, the trialkylsilyl group with 1 to 6 or 1 to 4 carbon atoms refers to a silyl group having three alkyl groups with 1 to 6 or 1 to 4 carbon atoms bonded thereto. In the general formulae (6) and (6a), R⁶ may be a trialkoxysilyl group (-Si(-OR)₃) having three alkyl groups (R) with 1 to 6 or 1 to 4 carbon atoms bonded to a silyl group via oxygen atoms. Examples of the trialkoxysilyl group include a trimethoxysilyl group, a triethoxysilyl group, a triisopropoxysilyl group, a tert-butoxydimethoxysilyl group, and a tert-butoxydiphenoxysilyl group. The three alkyl groups or alkoxy groups may be identical to or different from each other. In the general formula (6), R⁶'s are preferably identical to each other.

In the general formula (6a), n represents a polymerization degree. Preferably, n = 1 to 200.

Specific examples of the phosphorus atom-containing compound (6) include bis(2,2,2-trifluoroethyl) phosphite (in the general formula (6), R⁵ represents a hydrogen atom, R⁶ represents a trifluoroethyl group, and y represents 1), ethyl polyphosphate (in the general formula (6a), R⁶ represents an ethyl group), trimethylsilyl polyphosphate (TMS, in the general formula (6a), R⁶ represents a trimethylsilyl group), triethylsilyl polyphosphate (TES, in the general formula (6a), R⁶ represents a triethylsilyl group), triisopropylsilyl polyphosphate (TIPS, in the general formula (6a), R⁶ represents a triisopropylsilyl group), tert-butyldimethylsilyl polyphosphate (TBDMS, in the general formula (6a), R⁶ represents a tert-butyldimethylsilyl group), tert-butyldimethylsilyl polyphosphate (TBDMS, in the general formula (6a), R⁶ represents a tert-butyldimethylsilyl group), trimethoxysilyl polyphosphate (in the general formula (6a), R⁶ represents a trimethoxysilyl group), triethoxysilyl polyphosphate (in the general formula (6a), R⁶ represents a triethoxysilyl group), triisopropoxysilyl polyphosphate (in the general formula (6a), R⁶ represents a triisopropoxysilyl group, tert-butoxydimethoxysilyl polyphosphate (in the general formula (6a), R⁶ represents a tert-butoxydimethoxysilyl group), and tert-butoxydiphenoxysilyl polyphosphate (in the general formula (6a), R⁶ represents a tert-butoxydiphenoxysilyl group. The phosphorus atom-containing compounds (6) may be used alone or in combination of two or more of them. Among the phosphorus atom-containing compounds (6), trimethylsilyl polyphosphate is preferable.

For the trimethylsilyl polyphosphate, the structures such as the chain structure represented by the structural formula (6a-1), the cyclic structure represented by the structural formula (6a-2), and the branched structure represented by the structural formula (6a-3) can by analyzed by measuring the presence or absence of peaks indicating binding between the phosphorus atom and the surrounding groups and their presence ratio (the integral ratio of each peak) by, for example, ³¹P-NMR or the like. Examples of the conditions for the measurements by ³¹P-NMR include conditions described in Examples, which will be described later.

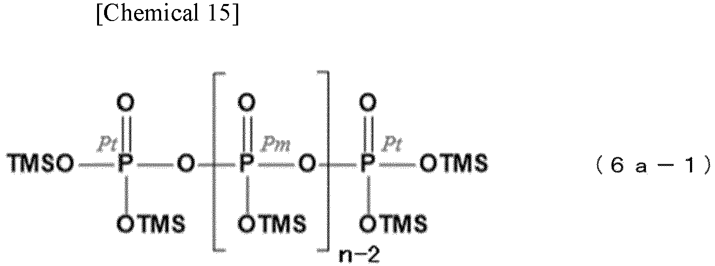

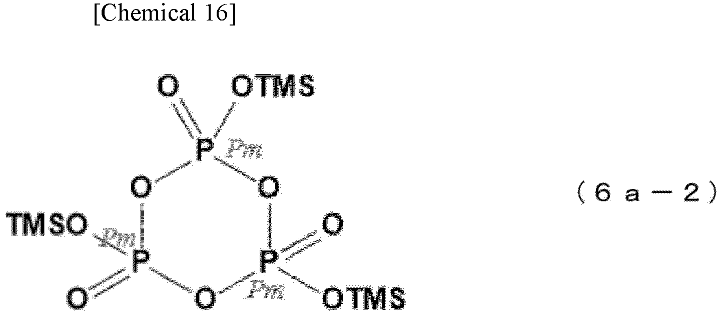

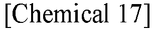

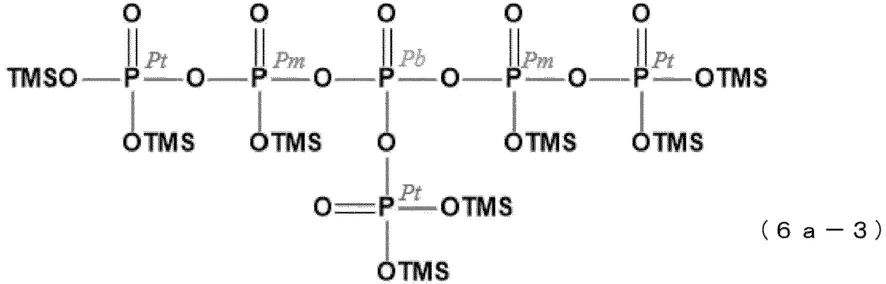

In each of the structural formulae (6a-1) to (6a-3), "TMS" represents a trimethylsilyl group, n represents a polymerization degree, and Pt, Pm and Pb each represent a peak of phosphorus atom. Pt represents a peak of a phosphorus atom at a terminal, a side chain, or the like, specifically a phosphorus atom having one group (hereinafter also referred to as a "-O-P group") in which a hydrogen atom of a hydroxy group is substituted with another adjacent phosphorus atom. Pm represents a peak of a phosphorus atom in the linear structure, specifically a phosphorus atom having two "-O-P groups." Pb represents a peak of a phosphorus atom in a branched structure, specifically a phosphorus atom having three "-O-P groups." As described above, the presence or absence of the branched structure and its presence ratio, the polymerization degree n, and the like are estimated from the presence or absence of Pt, Pm, and Pb and the integral ratio thereof. For example, if entire trimethylsilyl polyphosphate has a chain structure represented by the structural formula (6a-1) (the structure without Pb peak), and the integral value in the region of Pt is 1, its polymerization degree n is represented by 2 × {(the integral value of Pt) + (the integral value of Pm)} = 2 × {1 + (the integral value of Pm)}. If the integral value of the region of Pt is 2, its polymerization degree n is represented by (the integral value of Pt) + (the integral value of Pm) = 2 + (the integral value of Pm). For example, for trimethylsilyl polyphosphates used in Example 5-2 series, which will be described later, an average of the polymerization degrees n is estimated to be 4.87. When trimethylsilyl polyphosphates include the trimethylsilyl polyphosphate having the cyclic structure represented by the structural formula (6a-2), the polymerization degree n is estimated to be smaller than above. In view of suppressing self-discharge of the battery and further improving the battery performance, the trimethylsilyl polyphosphates preferably include the trimethylsilyl polyphosphate having a Pb peak, i.e., a branched structure represented by the structural formula (6a-3). In such a case, the integral ratio of Pt, Pm, and Pb is preferably Pt:Pm:Pb = 1.0:3.0:0.2 to 1.0:9.0:3.0, more preferably Pt:Pm:Pb = 1.0:6.0:0.7 to 1.0:7.0:1.2.

When the phosphorus atom-containing compound (6) is added to the non-aqueous electrolyte solution containing a sulfonylimide compound (1), the battery using the electrolyte solution reduces the impedance and DCR and also suppresses self-discharge, which is a problem specific to the non-aqueous electrolyte solution containing the sulfonylimide compound (1). Further, when CO₂ or other component, which will be described later, is dissolved in the electrolyte solution, the effect exhibited by the addition of the phosphorus atom-containing compound (6) is further enhanced. In other word, the combination of the addition of the phosphorus atom-containing compound (6) and the dissolving of CO₂ or other component exhibits a synergistic effect of suppressing self-discharge of the battery and reducing the impedance and DCR.

In the general formula (7), R⁶ represents the same as defined above. In the general formula (7), R⁶ is preferably a linear or branched alkyl group with 1 to 6 carbon atoms (optionally having a substituent) or a trialkylsilyl group with 1 to 6 carbon atoms (optionally having a substituent), more preferably a linear alkyl group with 1 to 4 carbon atoms (optionally having a substituent) or a trialkylsilyl group with 1 to 3 carbon atoms (optionally having a substituent), yet more preferably a methyl group or a trimethylsilyl group, still more preferably a trimethylsilyl group. Herein, the trialkylsilyl group with 1 to 6 or 1 to 3 carbon atoms refers to a silyl group having three alkyl groups with 1 to 6 or 1 to 3 carbon atoms bonded thereto. R⁶'s are preferably identical to each other.

Specific examples of the phosphorus atom-containing compound (7) include trimethyl phosphite (R⁶ represents a methyl group) and tris(trimethylsilyl) phosphite (R⁶ represents a trimethylsilyl group). The phosphorus atom-containing compounds (7) may be used alone or in combination of two or more of them. Among the phosphorus atom-containing compounds (7), tris(trimethylsilyl) phosphite is preferable.

When the phosphorus atom-containing compound (7) is added to the non-aqueous electrolyte solution containing a sulfonylimide compound (1), the battery using the electrolyte solution reduces the impedance and DCR and also suppresses self-discharge, which is a problem specific to the non-aqueous electrolyte solution containing the sulfonylimide compound (1). Further, when CO₂ or other component, which will be described later, is dissolved in the electrolyte solution, the effect exhibited by the addition of the phosphorus atom-containing compound (7) is further enhanced. In other word, the combination of the addition of the phosphorus atom-containing compound (7) and the dissolving of CO₂ or other component exhibits a synergistic effect of suppressing self-discharge of the battery and reducing the impedance and DCR.

Specific compounds such as the silicon atom-containing compound (2), the boron atom-containing compound (3), the carbon atom-containing compound (4), the sulfur atom-containing compound (5), the phosphorus atom-containing compound (6), and the phosphorus atom-containing compound (7) may be used alone or in combination of two or more of them. When two or more specific compounds are used in combination, two or more compounds represented by the same general formula may be used, or multiple specific compounds represented by different general formulae may be used in combination.

Among the specific compounds (2) to (7), the boron atom-containing compound (3), the carbon atom-containing compound (4), the sulfur atom-containing compound (5), the phosphorus atom-containing compound (6), and the phosphorus atom-containing compound (7) are preferable, trimethyl borate, triethyl borate, triisopropyl borate, tributyl borate, tris(2,2,2)trifluoroethyl borate, tris(trimethylsilyl)borate, trimethylsilyl trifluoroacetate, trimethylsilyl trifluoromethane sulfonate, bis(trimethylsilyl) sulfate, di-tert-butylsilyl bis(trifluoromethane sulfonate), tert-butyldimethylsilyl trifluoromethane sulfonate, trimethylsilyl polyphosphate, and tris(trimethylsilyl) phosphite are more preferable, tris(trimethylsilyl)borate, trimethylsilyl trifluoroacetate, trimethylsilyl trifluoromethane sulfonate, bis(trimethylsilyl) sulfate, di-tert-butylsilyl bis(trifluoromethane sulfonate), tert-butyldimethylsilyl trifluoromethane sulfonate, trimethylsilyl polyphosphate, and tris(trimethylsilyl) phosphite are yet more preferable, trimethylsilyl trifluoroacetate, trimethylsilyl trifluoromethane sulfonate, bis(trimethylsilyl) sulfate, di-tert-butylsilyl bis(trifluoromethane sulfonate), tert-butyldimethylsilyl trifluoromethane sulfonate, trimethylsilyl polyphosphate, and tris(trimethylsilyl) phosphite are still more preferable, trimethylsilyl polyphosphate is particularly preferable.

In view of suppressing self-discharge of the battery and further improving the battery performance, the content of each of the specific compounds (2) to (7) (the content of one specific compound) in the non-aqueous electrolyte solution is preferably 0.01 mass% or more, more preferably 0.1 mass% or more, yet more preferably 0.2 mass% or more, still more preferably 0.3 mass% or more, even more preferably 0.5 mass% or more, and preferably 3 mass% or less, more preferably 2 mass% or less, yet more preferably 1 mass% or less.

When multiple specific compounds (2) to (7) are used, the total content of the specific compounds in the non-aqueous electrolyte solution is, in view of suppressing self-discharge of the battery and further improving the battery performance, preferably 5 mass% or less, more preferably 3 mass% or less, yet more preferably 2 mas% or less.

### <Classification by Number of Oxygen Atoms around Central Atom>

The specific compounds (2) to (7) can be classified as follows according to the number of oxygen atoms around the central atom.

### (Compound having Two Oxygen Atoms around Central Atom)

Examples of the compound having two oxygen atoms around the central atom include a compound represented by the general formula (20):

Q¹(R⁵)ₓ(...OR⁶)₂ (20)

(hereinafter also referred to as an "O₂-containing compound (20)").

In the general formula (20), Q¹ represents a carbon atom or a silicon atom. R⁵ and R⁶ are identical to or different from each other and (each independently) represent an alkyl group with 1 to 6 carbon atoms (optionally having a substituent), a fluoroalkyl group with 1 to 6 carbon atoms (optionally having a substituent), an aryl group (optionally having a substituent), a silyl group (optionally having a substituent), an alkali metal atom, an onium salt, or a hydrogen atom. x represents an integer of 1 or 2. "..." indicates that at least one of the bonds is a sing bond, and the other is a double bond, and in the case of double bond, (...OR⁶) is (=O).

In the general formula (20), R⁵ is preferably a linear or branched alkyl group with 1 to 6 carbon atoms (optionally having a substituent), a trifluoro alkyl group with 1 to 6 carbon atoms (optionally having a substituent), or an aryl group (such as a phenyl group, a tolyl group, or an o-xylyl group), more preferably a linear alkyl group with 1 to 3 carbon atoms (optionally having a substituent), a trifluoro alkyl group with 1 to 3 carbon atoms (optionally having a substituent), or a phenyl group, yet more preferably a methyl group, a trifluoromethyl group, or a phenyl group, still more preferably a trifluoromethyl group. When x is 2, i.e., there are two R⁵'s, they are preferably the same group.

In the general formula (20), R⁶ is preferably a linear or branched alkyl group with 1 to 6 carbon atoms (optionally having a substituent) or a trialkylsilyl group with 1 to 6 carbon atoms (optionally having a substituent), more preferably a linear alkyl group with 1 to 3 carbon atoms (optionally having a substituent) or a trialkylsilyl group with 1 to 3 carbon atoms (optionally having a substituent), yet more preferably a methyl group or a trimethylsilyl group, still more preferably a trimethylsilyl group. Herein, the trialkylsilyl group with 1 to 6 or 1 to 3 carbon atoms refers to a silyl group having three alkyl groups with 1 to 6 or 1 to 3 carbon atoms bonded thereto. R⁶'s are preferably identical to each other.

Specific examples of the O₂-containing compound (20) include trimethylsilyl trifluoroacetate (in the general formula (20), "(...OR⁶)₂" represents "(-OR⁶) and (=O)", R⁵ represents a trifluoromethyl group, R⁶ represents a trimethylsilyl group, and x represents 1), diphenylsilanediol (in the general formula (20), "(...OR⁶)₂" represents "(-OR⁶)_{2,}" R⁵ represents a phenyl group, R⁶ represents a hydrogen atom, and x represents 2), dimethoxydiphenylsilane (in the general formula (20), "(...OR⁶)₂" represents "(-OR⁶)_{2,}" R⁵ represents a phenyl group, R⁶ represents a methyl group, and x represents 2), and trimethylsilyl acetate (in the general formula (20), "(...OR⁶)₂" represents "(-OR⁶) and (=O)", R⁵ represents a methyl group, R⁶ represents a trimethylsilyl group, and x represents 1). The O₂-containing compounds (20) may be used alone or in combination of two or more of them. Among the O₂-containing compounds (20), trimethylsilyl trifluoroacetate is preferable.

### (Compound having Three Oxygen Atoms Around Central Atom)

Examples of the compound having three oxygen atoms around the central atom include a compound represented by the general formula (30):

Q²(...OR⁶)₃ (30)

(hereinafter also referred to as an "O₃-containing compound (30)") and a compound represented by the general formula (35):

{Q³(R⁵)}ₓ{(...OR⁶)₃}ₓ (35)

(hereinafter also referred to as an "O₃-containing compound (35)").

In the general formula (30), Q² represents a boron atom or a phosphorus atom. R⁶ and "..." represent the same as defined above.

Examples of the preferred structure of the O₃-containing compound (30) include the general formula (31):

Q²(OR⁶)₃ (31).

When the general formula (30) is a polymerizable group (polymer), one of three (...OR⁶) represents (-O-). In other words, the O₃-containing compound (30) is represented also by the general formula (32):

[-Q₂[(...OR⁶)₂]O-]ₙ (32),

more specifically the general formula (33):

[-Q₂(OR⁶)(=O)O-]ₙ (33).

In the general formula (30), R⁶ is preferably a linear or branched alkyl group with 1 to 6 carbon atoms (optionally having a substituent), a trifluoro alkyl group with 1 to 6 carbon atoms (optionally having a substituent), or a trialkylsilyl group with 1 to 6 carbon atoms (optionally having a substituent), more preferably a linear alkyl group with 1 to 4 carbon atoms (optionally having a substituent), a trifluoro alkyl group with 1 to 3 carbon atoms (optionally having a substituent), or a trialkylsilyl group with 1 to 3 carbon atoms (optionally having a substituent), yet more preferably a methyl group, an ethyl group, a butyl group, a trifluoroethyl group, or a trimethylsilyl group. Herein, the trialkylsilyl group with 1 to 6 or 1 to 3 carbon atoms refers to a silyl group having three alkyl groups with 1 to 6 or 1 to 3 carbon atoms bonded thereto. R⁶'s are preferably identical to each other.

In the general formulae (32) and (33), n represents a polymerization degree. Preferably, n = 1 to 200.

Specific examples of the O₃-containing compound (30) include tris(trimethylsilyl) phosphite (in the general formula (30), (...OR⁶)₃ represents (-OR⁶)₃, and R⁶ represents a trimethylsilyl group) ethyl polyphosphate (in the general formula (33), R⁶ represents an ethyl group), trimethylsilyl polyphosphate (TMS, in the general formula (33), R⁶ represents a trimethylsilyl group), triethylsilyl polyphosphate (TES, in the general formula (33), R⁶ represents a triethylsilyl group), triisopropylsilyl polyphosphate (TIPS, in the general formula (33), R⁶ represents a triisopropylsilyl group), tert-butyldimethylsilyl polyphosphate (TBDMS, in the general formula (33), R⁶ represents a tert-butyldimethylsilyl group), tert-butyldimethylsilyl polyphosphate (TBDPS, in the general formula (33), R⁶ represents a tert-butyldiphenylsilyl group), trimethoxysilyl polyphosphate (in the general formula (33), R⁶ represents a trimethoxysilyl group), triethoxysilyl polyphosphate (in the general formula (33), R⁶ represents a triethoxysilyl group), triisopropoxysilyl polyphosphate (in the general formula (33), R⁶ represents a triisopropoxysilyl group, tert-butoxydimethoxysilyl polyphosphate (in the general formula (33), R⁶ represents a tert-butoxydimethoxysilyl group), tert-butoxydiphenoxysilyl polyphosphate (in the general formula (33), R⁶ represents a tert-butoxydiphenoxysilyl group), trimethyl borate (in the general formula (30), "(...OR⁶)₃" represents "(-OR⁶)₃," R⁶ represents a methyl group), triethyl borate (in the general formula (30), "(...OR⁶)₃" represents "(-OR⁶)₃," R⁶ represents an ethyl group), triisopropyl borate (in the general formula (30), "(...OR⁶)₃" represents "(-OR⁶)₃," R⁶ represents an isopropyl group), tributyl borate (in the general formula (30), "(...OR⁶)₃" represents "(-OR⁶)₃," R⁶ represents a butyl group), tris(2,2,2)trifluoroethyl borate (in the general formula (30), "(...OR⁶)₃" represents "(-OR⁶)₃," R⁶ represents a trifluoroethyl group), tris(trimethylsilyl)borate (in the general formula (30), "(...OR⁶)₃" represents (-OR⁶)₃, R⁶ represents a trimethylsilyl group), and trimethyl phosphite (in the general formula (30), (...OR⁶)₃ represents (-OR⁶)₃, R⁶ represents a methyl group).. The O₃-containing compounds (30) may be used alone or in combination of two or more of them. Among the O₃-containing compounds (30), tris(trimethylsilyl) phosphite, trimethylsilyl polyphosphate, trimethyl borate, triethyl borate, tributyl borate, tris(2,2,2)trifluoroethyl borate, and tris(trimethylsilyl)borate are preferable, tris(trimethylsilyl) phosphite, trimethylsilyl polyphosphate and tris(trimethylsilyl)borate are more preferable, tris(trimethylsilyl) phosphite and trimethylsilyl polyphosphate are yet more preferable, and trimethylsilyl polyphosphate is still more preferable.

In the general formula (35), Q³ represents a phosphorus atom or a sulfur atom. x represents an integer of 1 or 2. R⁵, R⁶, and "..." represent the same as defined above.

When x = 2 in the general formula (35), two out of six (... OR⁶) represent (-O-R⁶-O-). In other words, the O₃-containing compound (35) is represented also by the general formula (36):

Q³(R⁵)(...OR⁶)₂-O-R⁶-O-Q³(R⁵)(...OR⁶)₂ (36),

more specifically the general formula (37):

Q³(R⁵)(=O)₂-O-R⁶-O-Q³(=O)(OR⁶)₂ (37).

In the general formula (35), R⁵ is preferably a trifluoro alkyl group with 1 to 6 carbon atoms (optionally having a substituent) or a hydrogen atom, more preferably a trifluoro alkyl group with 1 to 3 carbon atoms (optionally having a substituent) or a hydrogen atom, yet more preferably a trifluoromethyl group or a hydrogen atom. R⁵'s are preferably identical to each other.

In the general formula (35), R⁶ is preferably a trifluoro alkyl group with 1 to 6 carbon atoms (optionally having a substituent) or a trialkylsilyl group with 1 to 6 carbon atoms (optionally having a substituent), more preferably a trifluoro alkyl group with 1 to 4 carbon atoms (optionally having a substituent) or a trialkylsilyl group with 1 to 4 carbon atoms (optionally having a substituent), yet more preferably a trifluoroethyl group, a trimethylsilyl group, or a tert-butylsilyl group. Herein, the trialkylsilyl group with 1 to 6 or 1 to 4 carbon atoms refers to a silyl group having three alkyl groups with 1 to 6 or 1 to 4 carbon atoms bonded thereto. R⁶'s are preferably identical to each other.

Specific examples of the O₃-containing compound (35) include trimethylsilyl trifluoromethane sulfonate. (in the general formula (35), R⁵ represents a trifluoromethyl group, "(...OR⁶)₃" represents "(-OR⁶) and (=O)₂," R⁶ represents a trimethylsilyl group, x represents 1), di-tert-butylsilyl bis(trifluoromethane sulfonate) (in the general formula (37), R⁵ represents a trifluoromethyl group, R⁶ represents a di(tert-butyl)silyl group), tert-butyldimethylsilyl trifluoromethane sulfonate (in the general formula (35), R⁵ represents a trifluoromethyl group, "(...OR⁶)₃" represents "(-OR⁶) and (=O)₂," R⁶ represents a tert-butyldimethylsilyl group), and bis(2,2,2-trifluoroethyl) phosphite (in the general formula (35), R⁵ represents a hydrogen atom, "(...OR⁶)₃" represents "(-OR⁶)₂ and (=O)," R⁶ represents a trifluoroethyl group, y represents 1). The O₃-containing compounds (35) may be used alone or in combination of two or more of them. Among the O₃-containing compounds (35), trimethylsilyl trifluoromethane sulfonate, di-tert-butylsilyl bis(trifluoromethane sulfonate), and tert-butyldimethylsilyl trifluoromethane sulfonate are preferable.

### (Compound having Four Oxygen Atoms around Central Atom)

Examples of the compound having four oxygen atoms around the central atom include a compound represented by the general formula (40):

S(...OR⁶)₄ (40)

(hereinafter also referred to as an "O₄-containing compound (40)").

In the general formula (40), R⁶ and "..." represent the same as defined above. In the general formula (40), R⁶ is preferably a trialkylsilyl group with 1 to 6 carbon atoms (optionally having a substituent), more preferably a trialkylsilyl group with 1 to 3 carbon atoms (optionally having a substituent), yet more preferably a trimethylsilyl group. Herein, the trialkylsilyl group with 1 to 6 or 1 to 3 carbon atoms refers to a silyl group having three alkyl groups with 1 to 6 or 1 to 3 carbon atoms bonded thereto. R⁶'s are preferably identical to each other.

Specific examples of the O₄-containing compound (40) include bis(trimethylsilyl) sulfate (in the general formula (40), "(...OR⁶)₄" represents "(-OR⁶)₂ and (=O)₂", R⁶ represents a trimethylsilyl group).

Specific compounds such as the O₂-containing compound (20), the O₃-containing compound (30), the O₃-containing compound (35), and the O₄-containing compound (40) may be used alone or in combination of two or more of them. When two or more specific compounds are used in combination, two or more compounds represented by the same general formula may be used, or multiple specific compounds represented by different general formulae may be used in combination.

### (Additive)

The first non-aqueous electrolyte solution may further contain, besides the specific compounds (2) to (7), an additive other than the specific compounds (2) to (7) in order to improve various battery performances.

Examples of the additive include a compound represented by the general formula (12):
[Chemical 18]

M¹NO₃ (12)

(hereinafter also referred to as an "nitric acid compound (12)"), and a compound represented by the general formula (13).

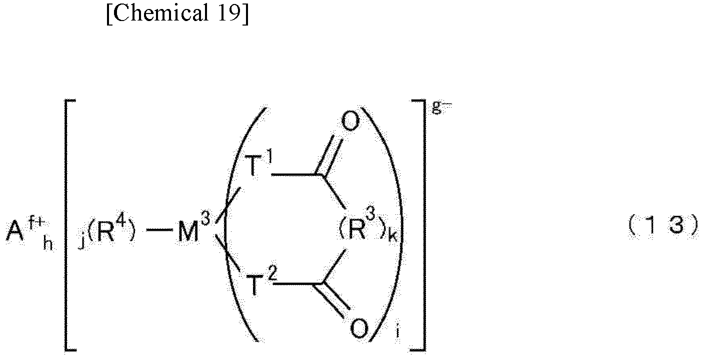

### (Hereinafter also referred to as a "fluoro-oxalate compound (13)".)

Examples of the alkali metal element represented by M¹ in the general formula (12) include lithium, sodium, potassium, rubidium, and cesium. Among them, lithium is preferable.

Specific examples of the nitric acid compound (12) include lithium nitrate (LiNO₃), sodium nitrate (NaNO₃), and potassium nitrate (KNO₃). The nitric acid compounds (12) may be used alone or in combination of two or more of them. Among the nitric acid compounds (12), lithium nitrate is preferable.

The present inventors found that when the nitric acid compound (12) is added to the non-aqueous electrolyte solution containing the sulfonylimide compound (1), the battery using the electrolyte solution reduces the impedance and DCR of the battery, but causes large self-discharge, and there is room for improvement in storage characteristics of the battery. The inventors of the present application also found that when the nitric acid compound (12) is added to and CO₂ or other component, which will be described later, is dissolved in the non-aqueous electrolyte solution containing the sulfonylimide compound (1), the storage characteristics of the battery can be improved. Specifically, it was found that in the battery using the non-aqueous electrolyte solution which contains the sulfonylimide compound (1) and uses the combination of the addition of LiNO₃ and dissolution of CO₂, a synergistic effect of reducing the impedance and DCR and suppressing self-discharge is obtained.

When CO₂ is dissolved in the non-aqueous electrolyte solution, the nitric acid compound (12) may be used alone without combined use with the specific compounds (2) to (7). If the specific compounds (2) to (7) and the nitric acid compound (12) are used in combination, further improvement of the effects of reducing the impedance and DCR can be expected.

In the general formula (13), M³ represents boron (B) or phosphorus (P).

In the general formula (13), A^{f+} represents a metal ion, hydrogen (H), or an onium ion. Examples of the metal ion include an alkali metal ion, an alkali earth metal ion, and a trivalent metal ion. Examples of the alkali metal and the alkali earth metal include those described above. Examples of the trivalent metal include boron (B), aluminum (Al), gallium (Ga), indium (In), and thallium (Tl). Among the metal ions, Li⁺, Na⁺, Mg²⁺, and Ca²⁺ are preferable, and Li⁺ is more preferable. Examples of the onium ion include chain quaternary ammonium such as tetraethylammonium, tetrabutylammonium, and triethylmethylammonium; chain tertiary ammonium such as triethylammonium, tributylammonium, dibutylmethylammonium, and dimethyl ethylammonium; imidazolium such as 1-ethyl-3-methylimidazolium and 1,2,3-trimethylimidazolium; and pyrrolidinium such as N,N-dimethylpyrrolidinium and N-ethyl-N-methylpyrrolidinium. Among them, chain quaternary ammonium and imidazolium are preferable, and chain quaternary ammonium is more preferable. That is, f, g, and h in the general formula (13) are preferably 1.

In the general formula (13), R³ represents an alkylene group with 1 to 10 carbon atoms or a halogenated alkylene group with 1 to 10 carbon atoms. Examples of the alkylene group with 1 to 10 carbon atoms include a methylene group, an ethylene group, a propylene group, a butylene group, a pentylene group, a hexylene group, a heptylene group, an octylene group, a nonylene group, and a decalene group, which may be branched. Examples of the halogenated alkylene group with 1 to 10 carbon atoms include an alkylene group with 1 to 10 carbon atoms and having some or all of hydrogen atoms substituted with F, Cl, Br, or I (preferably with F, e.g., a fluoromethylene group or a fluoroethylene group). Among R³'s, an alkylene group with 1 to 4 carbon atoms and a fluorinated alkylene group with 1 to 4 carbon atoms are preferable, an alkylene group with 1 to 2 carbon atoms and a fluorinated alkylene group with 1 to 2 carbon atoms are more preferable. k is 0 or 1. When k is 0, it represents a direct bond of a carbonyl group, and the compound of the general formula (13) is oxalatoborate or oxalatophosphonium. k is preferably 0.

In the general formula (13), R⁴ represents fluorine (F) or a fluorinated alkyl group with 1 to 10 carbon atoms. Examples of the fluorinated alkyl group with 1 to 10 carbon atoms include a fluoromethyl group, a difluoromethyl group, a trifluoromethyl group, a fluoroethyl group, a difluoroethyl group, a trifluoroethyl group, a tetrafluoroethyl group, a perfluoroethyl group, a fluoropropyl group, a perfluoropropyl group, a perfluorobutyl group, and a perfluorooctyl group. R⁴ is preferably a fluorinated alkyl group with 1 to 2 carbon atoms or F, more preferably F.

In the general formula (13), T¹ and T² each independently (identically or differently) represent oxygen (O) or sulfur (S). Both of T¹ and T² are preferably O for availability.

In the general formula (13), i is preferably 1 or 2 when M³ is boron (B), j is 2 when i is 1, and R⁴ is more preferably F. When i is 2, j is 0. When M³ is P (phosphorus), i is 1 to 3, j is 4 when i is 1, j is 2 when i is 2, and j is 0 when i is 3.

Examples of the fluoro-oxalate compound (13) include difluoro(oxalato)borate salts, bis(oxalato)borate salts, tetrafluorophosphonium salts, difluorobis(oxalato)phosphonium salts, and tris(oxalato)phosphonium salts. More specific examples include lithium salts having an oxalate skeleton such as lithium bis(oxalato)borate (LiBOB), lithium difluoro(oxalato)borate (LiDFOB), lithium difluoro(oxalato)phosphanite (LIDFOP), lithium tetrafluoro(oxalato)phosphate (LITFOP), lithium difluorobis(oxalato)phosphate (LiDFOP), and lithium tris(oxalato)phosphate. The fluoro-oxalate compounds (13) may be used alone or in combination of two or more of them. Among the fluoro-oxalate compounds (13), LiBOB and LiDFOB are preferable, and LiDFOB is more preferable in view of reducing the impedance and DCR of the battery.

Additives such as the nitric acid compounds (12) and the fluoro-oxalate compounds (13) may be used alone or in combination of two or more of them. When two or more of them are used in combination, two or more of the nitric acid compounds (12) or the fluoro-oxalate compounds (13) may be used, or multiple nitric acid compounds (12) and multiple fluoro-oxalate compounds (13) may be used in combination.

In view of suppressing self-discharge of the battery and further improving the battery performance, the content of each additive (the content of one type of additive) in the non-aqueous electrolyte solution is preferably 0.01 mass% or more, more preferably 0.1 mass% or more, yet more preferably 0.2 mass% or more, still more preferably 0.3 mass% or more, even more preferably 0.5 mass% or more, and preferably 3 mass% or less, more preferably 2 mass% or less, yet more preferably 1 mass% or less.

When multiple additives are used, the total content of the additives in the non-aqueous electrolyte solution is, in view of suppressing self-discharge of the battery and further improving the battery performance, preferably 5 mass% or less, more preferably 3 mass% or less, yet more preferably 2 mas% or less.

### (Other Components)

The first non-aqueous electrolyte solution according to the present embodiment may contain other additives (compounds other than the specific compounds (2) to (7) and the additives (12) and (13)) for improving various characteristics of the lithium ion secondary battery. Examples of the other additives include carboxylic anhydrides such as succinic anhydride, glutaric anhydride, maleic anhydride, citraconic anhydride, glutaconic anhydride, itaconic anhydride, diglycolic anhydride, cyclohexane dicarboxylic anhydride, cyclopentanetetracarboxylic dianhydride, and phenylsuccinic anhydride; sulfur-containing compounds such as ethylene sulfite, 1,3-propane sultone, 1,4-butane sultone, methyl methanesulfonate, busulfan, sulfolane, sulfolen, dimethyl sulfone, tetramethylthiuram monosulfide, and trimethylene glycol sulfate; nitrogen-containing compounds such as 1-methyl-2-pyrrolidinone, 1-methyl-2-piperidone, 3-methyl-2-oxazolidinone, 1,3-dimethyl-2-imidazolidinone, and N-methylsuccinimide; saturated hydrocarbon compounds such as heptane, octane, and cycloheptane; carbonate compounds such as fluoroethylene carbonate (FEC), trifluoropropylene carbonate, phenylethylene carbonate, and erythritan carbonate; sulfamic acid (amidesulfuric acid, H₃NSO₃); sulfamate salts (alkali metal salts such as a lithium salt, a sodium salt, and a potassium; alkali earth metal salts such as a calcium salt, a strontium salt, and a barium salt; other metal salts such as a manganese salt, a copper salt, a zinc salt, an iron salt, a cobalt salt, and a nickel salt; an ammonium salt; and a guanidine salt); fluorophosphoric acid compounds such as lithium monofluorophosphate (Li₂PO₃F) and lithium difluorophosphate (LiPO₂F₂); and fluorosulfonic acid compounds such as lithium fluorosulfonate (LiFSO₃), sodium fluorosulfonate (NaFSO₃), potassium fluorosulfonate (KFSO₃), and magnesium fluorosulfonate (Mg(FSO₃)₂). The other additives may be used alone or in combination of two or more of them.

The other additive is preferably used in a range of 0.1 mass% or more to 10 mass% or less, more preferably in a range of 0.2 mass% or more to 8 mass% or less, and even more preferably in a range of 0.3 mass% or more to 5 mass% or less, with respect to 100 mass% of the non-aqueous electrolyte solution. When the amount of the other additive used is too small, it may be difficult for the other additive to exhibit its effect. On the other hand, when the amount of the other additive used is large, it is also difficult for the other additive to exhibit its effect corresponding to the amount added, and the non-aqueous electrolyte solution may become more viscous, lowering the conductivity.

### (At Least One of CO₂, CO, HCO₃⁻ or CO₃²⁻)

The first non-aqueous electrolyte solution according to the present embodiment may dissolve at least one of carbon dioxide (CO₂), carbon monoxide (CO), a bicarbonate ion (HCO₃⁻), or a carbonate ion (CO₃²⁻) (hereinafter also referred to as "CO₂ or other component").

As described above, the inventors of the present application have found that the battery using the non-aqueous electrolyte solution containing the sulfonylimide compound (1) causes greater self-discharge from a fully charged state than a battery using a non-aqueous electrolyte solution containing the other electrolyte (such as LiPF₆ or LiBF₄) alone. More specifically, the inventors have found that the battery using the non-aqueous electrolyte solution containing the sulfonylimide compound (1) causes greater self-discharge depending on the concentration of the sulfonylimide compound (1). As a result of intensive studies to solve the problems unique to the non-aqueous electrolyte solution containing the sulfonylimide compound (1), the inventors of the present application have found that addition of the specific compounds (2) to (7) to and dissolution of CO₂ or other component in a predetermined amount or more in the non-aqueous electrolyte solution containing the sulfonylimide compound (1) further enhance the synergistic effect of suppressing self-discharge of the battery and reducing the charge transfer resistance of the battery and the battery direct current resistance. Further, as described in the following examples, the non-aqueous electrolyte solution containing the sulfonylimide compound (1) causes further suppression of less self-discharge (has excellent self-discharge suppression effect (storage characteristic)) when CO₂ is dissolved into the electrolyte solution, and brings great improvements in battery performance, such as reduced DCR and impedance of the battery and improved low temperature charge-discharge characteristics and charge-discharge cycle characteristics, compared with a non-aqueous electrolyte solution containing LiPF₆ alone.

In this specification, CO₂ or other component dissolved in the non-aqueous electrolyte solution containing the sulfonylimide compound (1) means CO₂ or other component that is intentionally dissolved in the non-aqueous electrolyte solution, but does not exclude, for example, the CO₂ or other component originally contained in a raw material of the non-aqueous electrolyte solution such as an electrolyte solution solvent, or CO₂ or other component that is inevitably dissolved in the non-aqueous electrolyte solution in an ordinary production process of the non-aqueous electrolyte solution or the secondary battery. In other words, the total amount of dissolved CO₂ or other component, which will be described later, may include CO₂ or other component in the raw material and CO₂ or other component inevitably dissolved, together with CO₂ or other component intentionally dissolved.

CO₂ or other component dissolved in the non-aqueous electrolyte solution is not limited to have any particular form, and may be present in at least one of CO₂, CO, HCO₃⁻, or CO₃²⁻, i.e., in any one of the forms or two or more of the forms.

The total amount of CO₂ or other component dissolved in the non-aqueous electrolyte solution is, for example, preferably 20 ppm by mass or more, more preferably 50 ppm by mass or more, yet more preferably 100 ppm by mass or more, still more preferably 150 ppm by mass or more, even more preferably 200 ppm by mass or more, particularly preferably 250 ppm by mass or more, in terms of the ratio to the electrolyte solution. The upper limit of the total amount of dissolved CO₂ or other component is not limited to a particular value, but is, for example, equal to or lower than the saturation concentration at 25°C. The total amount of dissolved CO₂ or other component can be measured by a method described in the following examples, for example, gas chromatography.

In this specification, the total amount of CO₂ or other component dissolved in the non-aqueous electrolyte solution means: the total amount of CO₂ or other component dissolved in the electrolyte solution after the preparation (just prepared) or after an optional aging period (e.g., one week) for stabilizing the amount of dissolved CO₂ or other component in the preparing of the non-aqueous electrolyte solution; or the total amount of CO₂ or other component dissolved in the electrolyte solution extracted from the secondary battery in, for example, a nitrogen atmosphere after the aging of the battery in the process of manufacturing the secondary battery. Examples of the aging include the following processes and processes performed under the conditions described in the following section of Examples.
(I) After the solution is injected and the battery is partially charged, the battery is treated (stored) at a high temperature of 30°C or higher for a period of not less than 6 hours and not more than 28 days. The battery which has been degassed, resealed, and then checked to have no defects in the initial performance by charge-discharge is stored at 50% depth of charge for a week or more to check that the battery has no defects caused by the self-discharge.
(II) The same process as the process (I) except that no high temperature treatment is performed after the partial charging.
(III) The same process as the process (I) except that no degassing is performed after the high temperature treatment. Examples of the method of dissolving CO₂ or other component in the non-aqueous electrolyte solution containing the sulfonylimide compound (1) include: a method (A) of dissolving CO₂ or other component in the non-aqueous electrolyte solution in the preparing of the non-aqueous electrolyte solution; and a method (B) of dissolving CO₂ or other component in the non-aqueous electrolyte solution in the process of manufacturing the secondary battery.

Specifically, the method (A) of dissolving CO₂ or other component in the non-aqueous electrolyte solution in the preparing of the non-aqueous electrolyte solution includes injecting a non-aqueous electrolyte solution that contains the sulfonylimide compound (1) and 20 ppm by mass or more of CO₂ or other component dissolved (hereinafter also referred to as an "electrolyte solution containing CO₂ or other component dissolved" or a "CO₂ dissolving electrolyte solution") into the secondary battery. Examples of the method of dissolving CO₂ or other component in the non-aqueous electrolyte solution (dissolving) include: bringing a gas containing CO₂ or other component into contact with the non-aqueous electrolyte solution (liquid contacting); blowing the gas containing CO₂ or other component into the non-aqueous electrolyte solution (bubbling); stirring the non-aqueous electrolyte solution in a gas atmosphere containing CO₂ or other component (stirring); bringing a high-pressure gas containing CO₂ or other component into contact with the non-aqueous electrolyte solution (a method of pressurizing the gas containing CO₂ or other component into the non-aqueous electrolyte solution, pressurizing); and adding a substance that generates the gas containing CO₂ or other component to the non-aqueous electrolyte solution (adding). Examples of the substance that generates the gas containing CO₂ or other component include bicarbonate, carbonate, and dry ice. CO₂ or other component can be dissolved in an electrolyte solution solvent generally used for a non-aqueous electrolyte solution. Thus, the non-aqueous electrolyte solution may be prepared by dissolving the sulfonylimide compound (1) in an electrolyte solvent containing CO₂ or other component dissolved in advance. CO₂ or other component can be dissolved in the electrolyte solution solvent by the same method as described above. As another method, introducing a non-aqueous electrolyte solution prepared in advance into a sealed container to about 1/10 of the volume of the container and filling the container with CO₂ or other component after the inside of the container is made almost vacuum is repeated several times to replace the air in the container with CO₂ or other component, and finally, the container is stored in a sealed state at a cool temperature for several days (replacing). The dissolving may include at least one of the above-described processes or a combination of the processes. The dissolving preferably includes at least one of the pressurizing, the liquid contacting, the bubbling, or the replacing, more preferably at least one of the pressurizing, the liquid contacting, or the bubbling, yet more preferably the pressurizing and the replacing (or a combination of the pressurizing and the replacing).

In the method (A), the secondary battery may be assembled in a CO₂ atmosphere or an atmosphere containing CO₂ in view of controlling the total amount of CO₂ or other component dissolved in the non-aqueous electrolyte solution to be constant. Specifically, injecting the non-aqueous electrolyte solution containing CO₂ or other component dissolved in advance into the battery or the process after the injecting may be carried out in the CO₂ atmosphere or the atmosphere containing CO₂. Alternatively, the battery into which the electrolyte solution has been injected may be exposed to a high pressure CO₂ atmosphere.

The electrolyte solution containing CO₂ or other component dissolved, used in the method (A), is obtained by the method for manufacturing a non-aqueous electrolyte solution of the present embodiment. The method includes the dissolving including at least one of the above-described processes to dissolve 20 ppm by mass or more of CO₂ or other component in the non-aqueous electrolyte solution containing the sulfonylimide compound (1).

Examples of the method (B) of dissolving CO₂ or other component in the non-aqueous electrolyte solution in the process of manufacturing the secondary battery include: assembling the secondary battery in a CO₂ atmosphere and injecting the non-aqueous electrolyte solution into the battery (specifically, a battery housing with three sides sealed is filled with CO₂ after the inside of the housing is made almost vacuum, the non-aqueous electrolyte solution is injected into the battery from an unsealed side, and the battery is sealed at normal pressure); and replacing the air in the battery with CO₂ after the non-aqueous electrolyte solution is injected into the battery. The replacement of the air in the battery with CO₂ can be carried out in the same manner as the replacement of the air in the container with CO₂. Specifically, the process of filling the battery housing containing the non-aqueous electrolyte solution with CO₂ after the inside of the housing is made almost vacuum is repeated several times to replace the air in the housing with CO₂.

The total amount of CO₂ or other component dissolved in the non-aqueous electrolyte solution varies depending on the temperature of the non-aqueous electrolyte solution. Thus, the temperature of the non-aqueous electrolyte solution is preferably controlled to be constant in the process of preparing the non-aqueous electrolyte solution and/or the process of manufacturing the secondary battery.

### (Electrolyte Solution Solvent)

The first non-aqueous electrolyte solution according to the present embodiment may contain an electrolyte solution solvent. The electrolyte solution solvent is not limited to particular solvents and may be any kind of electrolyte solution solvent that can dissolve and disperse the electrolyte salt. Examples of the electrolyte solution solvent include non-aqueous solvents and media such as a polymer and polymer gel that can be a substitute for the electrolyte solution solvent. Any solvents that are generally used for batteries can be used.

Suitable examples of the non-aqueous solvents include a solvent that has a large dielectric constant and a boiling point of 60°C or higher, dissolves the electrolyte salt well, and is electrochemically stable in a wide range. An organic solvent having a low water content is more preferable. Examples of the organic solvent include: ether solvents such as ethylene glycol dimethyl ether, ethylene glycol diethyl ether, tetrahydrofuran, 2-methyltetrahydrofuran, 2,6-dimethyltetrahydrofuran, tetrahydropyran, crown ethers, triethylene glycol dimethyl ether, tetraethylene glycol dimethyl ether, 1,4-dioxane, and 1,3-dioxolane; chain carbonate ester (carbonate) solvents such as dimethyl carbonate, ethyl methyl carbonate, dimethyl carbonate, diphenyl carbonate, and methylphenyl carbonate; saturated cyclic carbonate solvents such as ethylene carbonate, propylene carbonate, 2,3-dimethyl ethylene carbonate, 1,2-butylene carbonate, and erythritan carbonate; cyclic carbonate ester solvents having an unsaturated bond such as vinylene carbonate, methyl vinylene carbonate, ethyl vinylene carbonate, 2-vinyl ethylene carbonate, and phenylethylene carbonate; fluorine-containing cyclic carbonate ester solvents such as fluoroethylene carbonate, 4,5-difluoroethylene carbonate, and trifluoropropylene carbonate; aromatic carboxylic acid ester solvents such as methyl benzoate and ethyl benzoate; lactone solvents such as γ-butyrolactone, γ-valerolactone, and δ-valerolactone; phosphoric acid ester solvents such as trimethyl phosphate, ethyl dimethyl phosphate, diethyl methyl phosphate, and triethyl phosphate; nitrile solvents such as acetonitrile, propionitrile, methoxypropionitrile, glutaronitrile, adiponitrile, 2-methylglutaronitrile, valeronitrile, butyronitrile, and isobutylonitrile; sulfur compound solvents such as dimethyl sulfone, ethyl methyl sulfone, diethyl sulfone, sulfolane, 3-methylsulfolane, and 2,4-dimethylsulfolane; aromatic nitrile solvents such as benzonitrile and tolunitrile; and nitromethane, 1,3-dimethyl-2-imidazolidinone; 1,3-dimethyl-3,4,5,6-tetrahydro-2(1H)-pyrimidinone; 3-methyl-2-oxazolidinone. These solvents may be used alone or in combination of two or more thereof.

Among the electrolyte solution solvents, carbonate solvents such as chain carbonate ester solvents and cyclic carbonate ester solvents, a lactone solvent, and an ether solvent are preferable, dimethyl carbonate, ethyl methyl carbonate, dimethyl carbonate, ethylene carbonate, propylene carbonate, γ-butyrolactone, and γ-valerolactone are more preferable, carbonate solvents such as dimethyl carbonate, ethyl methyl carbonate, dimethyl carbonate, ethylene carbonate, and propylene carbonate are yet more preferable.

The polymer or the polymer gel can be used instead of the electrolyte solution solvent by the following method. Examples of the method include: a method of dropping a solution prepared by dissolving an electrolyte salt in a solvent onto a polymer film formed by a known method to impregnate the polymer film with the electrolyte salt and the non-aqueous solvent so that the polymer film supports the electrolyte salt and the non-aqueous solvent; a method of melting and mixing a polymer and an electrolyte salt at a temperature higher than the melting point of the polymer, forming the mixture into a film, and impregnating the film with a solvent (these methods form gel electrolytes); a method of mixing a non-aqueous electrolyte solution prepared by dissolving an electrolyte salt in an organic solvent in advance with a polymer, forming the mixture into a film by casting or coating, and volatilizing the organic solvent; and a method of molding a mixture obtained by melting and mixing a polymer and an electrolyte salt at a temperature higher than the melting point of the polymer (these methods form intrinsic polymer electrolytes).

Examples of the polymer used as a substitute for the electrolyte solution solvent include polyethylene oxide (PEO) that is a homopolymer or copolymer of an epoxy compound (such as ethylene oxide, propylene oxide, butylene oxide, and allyl glycidyl ether), polyether polymers such as polypropylene oxide, methacrylic polymers such as polymethylmethacrylate (PMMA), nitrile polymers such as polyacrylonitrile (PAN), fluorine polymers such as polyvinylidene fluoride (PVdF), polyvinylidene fluoride-hexafluoropropylene, and copolymers thereof. These polymers may be used alone or in combination of two or more of them.

### <Second Non-aqueous Electrolyte Solution>

Next, a second non-aqueous electrolyte solution will be described below. The second non-aqueous electrolyte solution according to the present embodiment contains an electrolyte and a specific compound, and contains CO₂ or other component dissolved therein. Specifically, the second non-aqueous electrolyte solution is different from the first non-aqueous electrolyte solution in configuration in terms of the kind of the specific compound and dissolving CO₂ or other component. The other points are the same as those in the first non-aqueous electrolyte solution, and thus, detailed description thereof is omitted herein. In other words, the electrolyte, the additives, the other components, the electrolyte solution solvent, the amount of the CO₂ or other component dissolved and the method for the dissolving in the first non-aqueous electrolyte solution are all applied also to the second non-aqueous electrolyte solution. Further, regarding the specific compound, detailed description of the same kinds of compounds will be omitted.

### (Specific Compound)

### <Classification by Each Central Atom>

The second non-aqueous electrolyte solution further contains, as an additive, at least one of various specific compounds shown below besides the sulfonylimide compound (1). As described above, since the second non-aqueous electrolyte solution contains a sulfonylimide compound (1) and at least one of specific compounds in combination, suppression of self-discharge of the battery and reduction of the charge transfer resistance (impedance) and the battery direct current resistance (DCR) of the battery can be both achieved. In other words, the storage characteristics of the battery and the battery performance can be improved. In the second non-aqueous electrolyte solution, the following compounds can also be used in addition to the silicon atom-containing compound (2), the silicon atom-containing compound (14), the boron atom-containing compound (3), the carbon atom-containing compound (4), the "sulfur atom-containing compound (5), the phosphorus atom-containing compound (6), and the phosphorus atom-containing compound (7).

### (Phosphorus Atom-Containing Compound)

Examples of a specific compound containing a phosphorus atom as a central atom include a phosphorus atom-containing compound represented by the general formula (8):
[Chemical 20]

P(=O)(OR⁶)₃ (8)

(hereinafter also referred to as a "phosphorus atom-containing compound (8)").

In the general formula (8), R⁶ represents the same as defined above. In the general formula (8), three R⁶' sub are preferably identically a trimethylsilyl group with 1 to 6 carbon atoms (optionally having a substituent), more preferably identically a trialkylsilyl group with 1 to 3 carbon atoms (optionally having a substituent), yet more preferably identically a trimethylsilyl group. Herein, the trialkylsilyl group with 1 to 6 or 1 to 3 carbon atoms refers to a silyl group having three alkyl groups with 1 to 6 or 1 to 3 carbon atoms bonded thereto.

Specific examples of the phosphorus atom-containing compound (8) include tris(trimethylsilyl) phosphate.

As mentioned above, even if the phosphorus atom-containing compound (8) such as tris(trimethylsilyl) phosphate is added to the non-aqueous electrolyte solution containing the sulfonylimide compound (1), the self-discharge suppression effect is insufficient. However, the combination of the addition of the phosphorus atom-containing compound (8) and the dissolution of the CO₂ or other component exhibits the effect of suppression of the self-discharge of the battery in addition to the effects of reducing the charge transfer resistance (impedance) and the battery direct current resistance (DCR). In other words, the storage characteristics of the battery and the battery performance can be improved.

### (Boroxine Compound)

Examples of the boroxine compound include a boroxine compound represented by the general formula (9):

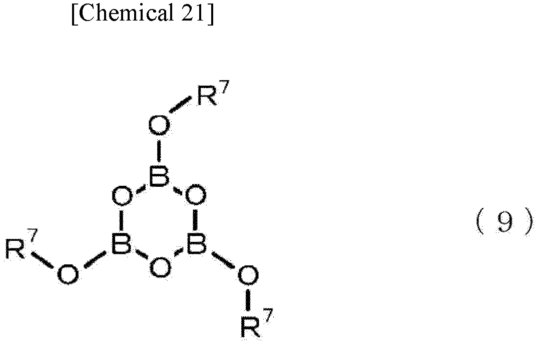

### (Hereinafter also referred to as a "boroxine compound (9)".)

In the general formula (9), R⁷'s are identical to or different from each other and (each independently) represent an alkyl group with 1 to 6 carbon atoms (optionally having a substituent), a fluoroalkyl group with 1 to 6 carbon atoms (optionally having a substituent), or a cycloalkyl group (optionally having a substituent). Each R⁷ may contain halogen, nitrogen, sulfur, oxygen, and the like as necessary.

In the general formula (9), three R⁷'s are each preferably identically a linear or branched alkyl group with 1 to 6 carbon atoms (optionally having a substituent), a fluoroalkyl group with 1 to 6 carbon atoms (optionally having a substituent), or a cycloalkyl group (optionally having a substituent), more preferably identically a linear or branched alkyl group with 1 to 4 carbon atoms (optionally having a substituent) or a cycloalkyl group (optionally having a substituent).

Specific examples of the boroxine compound (9) include 2,4,6-trimethoxyboroxine, 2,4,6-triisopropoxyboroxine, and 2,4,6-triphenylboroxine. The boroxine compounds (9) may be used alone or in combination of two or more of them.

Even if the boroxine compound (9) is added to the non-aqueous electrolyte solution containing the sulfonylimide compound (1), the self-discharge suppression effect is insufficient. However, the combination of the addition of the boroxine compound (9) and the dissolution of the CO₂ or other component exhibits the effect of suppression of the self-discharge of the battery in addition to the effects of reducing the charge transfer resistance (impedance) and the battery direct current resistance (DCR). In other words, the storage characteristics of the battery and the battery performance can be improved.

Specific compounds such as the silicon atom-containing compound (2), the boron atom-containing compound (3), the carbon atom-containing compound (4), the sulfur atom-containing compound (5), the phosphorus atom-containing compound (6), the phosphorus atom-containing compound (7), the phosphorus atom-containing compound (8), and the boroxine compound (9) may be used alone or in combination of two or more of them. When two or more specific compounds are used in combination, two or more compounds represented by the same general formula may be used, or multiple specific compounds represented by different general formulae may be used in combination.

In view of suppressing self-discharge of the battery and further improving the battery performance, the content of each of the specific compounds (2) to (9) (the content of one specific compound) in the non-aqueous electrolyte solution is preferably 0.01 mass% or more, more preferably 0.1 mass% or more, yet more preferably 0.2 mass% or more, still more preferably 0.3 mass% or more, even more preferably 0.5 mass% or more, and preferably 3 mass% or less, more preferably 2 mass% or less, yet more preferably 1 mass% or less.

When multiple specific compounds (2) to (9) are used, the total content of the specific compounds in the non-aqueous electrolyte solution is, in view of suppressing self-discharge of the battery and further improving the battery performance, preferably 5 mass% or less, more preferably 3 mass% or less, yet more preferably 2 mas% or less.

### <Classification by Number of Oxygen Atoms around Central Atom>

The specific compounds (2) to (9) can be classified as follows according to the number of oxygen atoms around the central atom. Specifically, the specific compounds (2) to (9) can be classified by, in addition to the O₂-containing compound (20), the O₃-containing compound (30), the O₃-containing compound (35), and the O₄-containing compound (40), a compound represented by the general formula (45):

P(...OR⁶)₄ (45)

(hereinafter also referred to as an "O₄-containing compound (45)") as a compound having four oxygen atoms around the central atom.

In the general formula (45), R⁶ and "..." represent the same as defined above. In the general formula (45), R⁶ is preferably a trialkylsilyl group with 1 to 6 carbon atoms (optionally having a substituent), more preferably a trialkylsilyl group with 1 to 3 carbon atoms (optionally having a substituent), yet more preferably a trimethylsilyl group. R⁶'s are preferably identical to each other. Herein, the trialkylsilyl group with 1 to 6 or 1 to 3 carbon atoms refers to a silyl group having three alkyl groups with 1 to 6 or 1 to 3 carbon atoms bonded thereto.

Specific examples of the O₄-containing compound (45) include tris(trimethylsilyl) phosphate (in the general formula (45), "(...OR⁶)₄" represents "(-OR⁶)₃" and (=O)₁," R⁶ represents a trimethylsilyl group).

Specific compounds such as the O₂-containing compound (20), the O₃-containing compound (30), the O_{c}-containing compound (35), the O₄-containing compound (40), and the O₄-containing compound (45) may be used alone or in combination of two or more of them. When two or more specific compounds are used in combination, two or more compounds represented by the same general formula may be used, or multiple specific compounds represented by different general formulae may be used in combination.

### <Third Non-aqueous Electrolyte Solution>

Next, a third non-aqueous electrolyte solution will be described below. A third non-aqueous electrolyte solution according to the present embodiment contains an electrolyte and a specific compound. Specifically, the third non-aqueous electrolyte solution is different from the first or second non-aqueous electrolyte solution in configuration in terms of the fact that the kind of the electrolyte is not specified and the kind of the specific compound is different. The other points are the same as those in the first or second non-aqueous electrolyte solution, and thus, detailed description thereof is omitted herein.

### (Electrolyte)

The electrolyte is not particularly limited, and for example, electrolytes used in the first or second non-aqueous electrolyte solution or the like can be employed. Specific examples of the electrolyte include a sulfonylimide compound (1), and as electrolytes other than the sulfonylimide compound (1), imide salts and non-imide salts (such as the fluorophosphoric acid compound (10), the fluoroboric acid compound (11), and LiAsF₆). The concentration of the electrolyte is also not particularly limited, and the same concentration as that in the first or second non-aqueous electrolyte solution is applied.

### (Specific Compound)

The third non-aqueous electrolyte solution contains, in addition to the electrolyte, at least one of the following specific compounds as an additive among the phosphorus atom-containing compounds (6). As described above, since the third non-aqueous electrolyte solution contains the electrolyte and at least one of specific phosphorus atom-containing compounds (6) in combination, suppression of self-discharge of the battery and reduction of the charge transfer resistance (impedance) and the battery direct current resistance (DCR) can be both achieved. In other words, the storage characteristics of the battery and the battery performance can be improved.

Specifically, the third non-aqueous electrolyte solution contains, as the phosphorus atom-containing compound (6) represented by the general formula (6a), at least one selected from the group consisting of ethyl polyphosphate, triisopropylsilyl polyphosphate (TIPS), and tert-butyldimethylsilyl polyphosphate (TBDMS).

### (Others)

The additives, the other components, the electrolyte solution solvent, the amount of the CO₂ or other component dissolved and the method for the dissolving, described for the first or second non-aqueous electrolyte solution, are all applied also to the third non-aqueous electrolyte solution. For example, in the third non-aqueous electrolyte solution, CO₂ or other component may be dissolved.

The first to third non-aqueous electrolyte solutions described above are used, for example, for a battery (a battery having a charge-discharge mechanism) and a power storage (electrochemical) device (or an ion conductive material constituting such a device). Specifically, the electrolyte solution can be used as an electrolyte solution constituting, for example, a primary battery, a secondary battery (e.g., a lithium (ion) secondary battery), a fuel battery, an electrolytic capacitor, an electric double layer capacitor, a solar battery, and an electrochromic display device. Hereinafter, the description will be made with reference to a battery (especially a secondary battery) as an example.

### <Secondary Battery>

A secondary battery of the present embodiment includes a positive electrode, a negative electrode, and a non-aqueous electrolyte solution. In the secondary battery, any of the first to third non-aqueous electrolyte solutions is used as the non-aqueous electrolyte solution.

### (Positive Electrode)

The positive electrode includes a positive electrode current collector and a positive electrode mixture layer formed on the positive electrode current collector, and is usually in a sheet shape.

Examples of metal used for the positive electrode current collector include iron, copper, aluminum, nickel, stainless steel, titanium, tantalum, gold, and platinum. Among them, aluminum is preferable. The shape and size of the positive electrode current collector are not limited to particular ones.

The positive electrode mixture layer is made of a positive electrode mixture (a positive electrode composition). The positive electrode mixture contains components such as a positive electrode active material, a conductivity aid, and a binder, and a solvent dispersing these components.

In the secondary battery according to the present embodiment, the positive electrode (positive electrode mixture) used is suitably a ternary positive electrode active material such as LiNi_{1/3}Co_{1/3}Mn_{1/3}O₂, LiNi_{0.5}Co_{0.2}Mn_{0.3}O₂, LiNi_{0.6}Co_{0.2}Mn_{0.2}O₂, and LiNi_{0.8}Co_{0.1}Mn_{0.1}O₂; or an iron phosphate positive electrode active material having an olivine structure such as LiFePO₄ and LiFe_{0.995}Mn_{0.005}PO₄. These positive electrode active materials may be used alone or in combination of two or more of them.

The positive electrode preferably contains at least one of the ternary positive electrode active material or the iron phosphate positive electrode active material, but may further contain other positive electrode active material. The other positive electrode active material may be any material that can absorb and desorb various ions (such as lithium ions and sodium ions). For example, a positive electrode active material used in a known secondary battery (a lithium ion secondary battery or a sodium ion secondary battery) can be used.

Examples of the positive electrode active material used for the lithium ion secondary battery include: lithium cobalt oxide; lithium nickel oxide; lithium manganese oxide; transition metal oxides such as ternary oxides represented by LiNi_{1-v-w}CoₓAl_{y}O₂ (0 ≤ v ≤ 1, 0 ≤ w ≤ 1) and other than the ternary positive electrode active materials; compounds having an olivine structure such as LiAPO₄ (A = Mn, Ni, Co); solid solution materials containing multiple transition metals (solid solutions containing an electrochemically inactive layer of Li₂MnO₃ and an electrically active layer of LiMO₂ (M = a transition metal such as Co or Ni); LiCoₓMn₁₋ₓO₂ (0 ≤ x ≤ 1); LiNiₓMn₁₋ₓO₂ (0 ≤ x ≤ 1); compounds having a fluorinated olivine structure such as Li₂APO₄F (A= Fe, Mn, Ni, Co); and sulfur. These may be used alone or in combination of two or more of them.

Examples of the positive electrode active material used for the sodium ion secondary battery include NaNiO₂, NaCoO₂, NaMnO₂, NaVO₂, NaFeO₂, Na(Ni_{X}Mn_{1-X})O₂ (0 < X < 1), Na(Fe_{X}Mn_{1-X})O₂ (0 < X < 1), NaVPO₄F, Na₂FePO₄F, and Na₃V₂(PO₄)₃. These may be used alone or in combination of two or more of them.

Among the other positive electrode active materials, in particular, a positive electrode active material capable of absorbing and desorbing lithium ions may be suitably used. Such a positive electrode active material is used, for example, in a lithium ion secondary battery using a non-aqueous electrolyte solution. Such a non-aqueous system usually has a lower ion conductivity than an aqueous system. However, the present disclosure can efficiently improve the discharge capacity of the non-aqueous system.

The content of the positive electrode active material (the total content if two or more positive electrode active materials are contained) is preferably 75 mass% or more, more preferably 85 mass% or more, yet more preferably 90 mass% or more, and preferably 99 mass% or less, more preferably 98 mass% or less, and yet more preferably 95 mass% or less, with respect to 100 mass% of the total amount of the components contained in the positive electrode mixture material in view of improving the output characteristics and electrical characteristics of the secondary battery.

The conductivity aid is used to improve the output of the lithium ion secondary battery. Conductive carbon is mainly used as the conductivity aid. Examples of the conductive carbon include carbon black, fiber-like carbon, and graphite. These conductivity aids may be used alone or in combination of two or more of them. Among the conductivity aids, carbon black is preferable. Examples of the carbon black include Ketjen black and acetylene black. In the nonvolatile content of the positive electrode mixture, the conductivity aid is preferably contained in an amount of 1 mass% to 20 mass%, more preferably 1.5 mass% to 10 mass%, in view of improving the output characteristics and electrical characteristics of the lithium ion secondary battery.

Examples of the binder include: fluorine-based resins such as polyvinylidene fluoride and polytetrafluoroethylene; synthetic rubbers such as styrene-butadiene rubber and nitrile-butadiene rubber; polyamide-based resins such as polyamideimide; polyolefin-based resins such as polyethylene and polypropylene; a poly(meth)acrylic resin; a polyacrylic acid; and cellulose-based resins such as carboxymethyl cellulose. The binders may be used alone or in combination of two or more of them. These binders may be dissolved or dispersed in a solvent in use.

Examples of the solvent include N-methylpyrrolidone, dimethylformamide, dimethylacetamide, methyl ethyl ketone, tetrahydrofuran, acetonitrile, acetone, ethanol, ethyl acetate, and water. These solvents may be used alone or in combination of two or more of them. The amount of the solvent used is not particularly limited, and may be determined, as appropriate, in accordance with the manufacturing method and the material used.

If necessary, the positive electrode mixture may also contain other component, for example: polymers including non-fluorine polymers such as a (meth)acrylic polymer, a nitrile polymer, and a diene polymer, and fluorine polymers such as polytetrafluoroethylene; an emulsifier such as an anionic emulsifier, a nonionic emulsifier, and a cationic emulsifier; dispersing agents including polymer dispersing agents such as a styrene-maleic acid copolymer and polyvinylpyrrolidone; a thickener such as carboxymethyl cellulose, hydroxyethyl cellulose, polyvinyl alcohol, polyacrylic acid (salt), and an alkali-soluble (meth)acrylic acid-(meth)acrylic acid ester copolymer; and a preservative. In the nonvolatile content of the positive electrode mixture, the other component is contained in an amount of preferably 0 mass% to 15 mass%, more preferably 0 mass% to 10 mass%.

The positive electrode mixture can be prepared, for example, by mixing the positive electrode active material, the conductivity aid, the binder, the solvent, and the optional other component, and dispersing the mixture using a beads mill, a ball mill, or an agitating mixer.

The positive electrode may be formed (coated) by any method. Examples of the method include: (1) a method of applying the positive electrode mixture to the positive electrode current collector (followed by drying) by a common coating method (e.g., a doctor blade method); (2) a method of immersing the positive electrode current collector in the positive electrode mixture (followed by drying); (3) a method of joining a sheet made of the positive electrode mixture to the positive electrode current collector (e.g., with a conductive adhesive) and pressing (and drying) the sheet; (4) a method of applying or casting the positive electrode mixture to which a liquid lubricant has been added onto the positive electrode current collector, forming the positive electrode mixture into a desired shape, and then removing the liquid lubricant (followed by extending the product uniaxially or multiaxially); and (5) a method of making the positive electrode mixture (or a solid content forming the positive electrode mixture layer) into slurry with an electrolyte solution, transferring the slurry in a semi-solid state to a current collector (the positive electrode current collector), and using the positive electrode mixture as an electrode (the positive electrode) without drying.

The positive electrode mixture layer thus formed or coated (applied) may be dried or pressed, if necessary.

### (Negative Electrode)

The negative electrode includes a negative electrode current collector and a negative electrode mixture layer formed on the negative electrode current collector, and is usually formed into a sheet shape.

Examples of metal used for the negative electrode current collector include iron, copper, aluminum, nickel, stainless steel (SUS), titanium, tantalum, gold, and platinum. Among them, copper is preferable. The shape and size of the negative electrode current collector are not limited to particular ones.

The negative electrode mixture layer is made of a negative electrode mixture (a negative electrode composition). The negative electrode mixture contains components such as a negative electrode active material, a conductivity aid, a binder, and a solvent dispersing these components.

The negative electrode active material may be any known negative electrode active material used for various batteries (e.g., a lithium secondary battery) as long as the material can absorb and desorb ions (e.g., lithium ions). A specific negative electrode active material can be graphite materials such as artificial graphite and natural graphite, a mesophase calcined body made from coal or petroleum pitches, carbon materials such as non-graphitizable carbon, a Si-based negative electrode material such as Si, a Si alloy, and SiO, a Sn-based negative electrode material such as a Sn alloy, and lithium alloys such as a lithium metal and a lithium-aluminum alloy. These negative electrode active materials may be used alone or in combination of two or more of them.

The negative electrode mixture may further include a conductivity aid (conductive material), a binder, a solvent, or the like. As the conductivity aid, the binder, the solvent, and the like, the same components as those described above can be used. The proportion and the like of the components used are also the same as those described above.

The negative electrode may be produced in the same manner as the positive electrode.

### (Separator)

The secondary battery may include a separator. The separator is disposed so as to separate between the positive electrode and the negative electrode. The separator is not limited to a particular one, and any known separator can be used in the present disclosure. Specific examples of the separator include a porous sheet (e.g., a polyolefin-based microporous separator and a cellulose-based separator) formed of a polymer capable of absorbing and retaining an electrolyte solution (non-aqueous electrolyte solution), a nonwoven fabric separator, and a porous metal body.

Examples of the material of the porous sheet include polyethylene, polypropylene, and a laminate having a three layer structure of polypropylene, polyethylene, and polypropylene.

Examples of the material of the nonwoven fabric separator include cotton, rayon, acetate, nylon, polyester, polypropylene, polyethylene, polyimide, aramid, and glass. These materials may be used alone or in combination of two or more of them depending on the required mechanical strength.

### (Battery Housing)

A battery element including the positive electrode, the negative electrode, and the non-aqueous electrolyte solution (and the separator) is usually contained in a battery housing to protect the battery element from external shocks and environmental degradation when the battery is in use. The battery housing is made of any material, and any known battery housing can be used.

If necessary, an expanded metal, a fuse, an overcurrent protection element such as a PTC element, or a lead plate may be placed in the battery housing to avoid an increase in internal pressure of the battery and excessive charge/discharge.

The battery (such as the lithium ion secondary battery) is not limited to have a particular shape, and may have any known shape such as a cylindrical shape, a rectangular shape, a laminate shape, a coin shape, and a large shape. In use as a high-voltage (e.g., tens to hundreds of volts) power supply to be mounted in an electric vehicle or a hybrid electric vehicle, for example, individual batteries may be connected in series into a battery module.

The rated charging voltage of the secondary battery (such as the lithium ion secondary battery) is not limited to a particular value, and may be 3.6 V or more, preferably 4.0 V or more, more preferably 4.1 V or more, yet more preferably 4.2 V or more, when the secondary battery includes a positive electrode mainly containing the ternary positive electrode active material. Although the energy density increases as the rated charging voltage increases, the rated charging voltage may be 4.6 V or less (e.g., 4.5 V or less) in view of safety.

### <Method of Manufacturing Secondary Battery>

The secondary battery of the present embodiment can be easily manufactured, for example, by joining a positive electrode and a negative electrode (with a separator interposed therebetween, if necessary), placing the obtained laminate in a battery housing, injecting a non-aqueous electrolyte solution into the battery housing, and sealing the battery housing.

In the method of manufacturing the secondary battery of the present embodiment, the non-aqueous electrolyte solution in the secondary battery dissolves CO₂ or other component. Thus, as described above, (A) CO₂ or other component is dissolved in the non-aqueous electrolyte solution in the process of preparing of the non-aqueous electrolyte solution, i.e., the non-aqueous electrolyte solution of the present embodiment (electrolyte solution containing CO₂ or other component dissolved) is used as the non-aqueous electrolyte solution; or (B) CO₂ or other component is dissolved in the non-aqueous electrolyte solution in the process of manufacturing the secondary battery, i.e., the non-aqueous electrolyte solution is injected into the battery in a CO₂ atmosphere, or the air in the battery in which the non-aqueous electrolyte solution has been injected is replaced with CO₂.

### EXAMPLES

Hereinafter, the present disclosure will be described based on Examples. The present disclosure is not limited to the following Examples, the following Examples can be modified and changed based on the spirit of the present disclosure, and these are not excluded from the scope of the present disclosure.

### <Reference Example Series>

### [Reference Examples 1 to 10]

### [Preparation of Non-Aqueous Electrolyte Solution]

In a mixture solvent of ethylene carbonate (EC) and ethyl methyl carbonate (EMC) in a volume ratio of 3 : 7 (manufactured by Kishida Chemical Co., Ltd.) used as an electrolyte solution solvent, an electrolyte salt of a mixed salt composition containing LiFSI (manufactured by Nippon Shokubai Co., Ltd. and LiPF₆ (manufactured by Stella Chemifa Corporation) was dissolved in concentrations shown in Table 1. Subsequently, lithium nitrate (LiNO₃, manufactured by Tokyo Chemical Industry Co., Ltd.) was added as a nitric acid compound (12) to the solution obtained above so as to have the content shown in Table 1. The mixture was stirred for a day, and an insoluble content was filtered with a membrane filter. Thus, a non-aqueous electrolyte solution (hereinafter also referred to as an "electrolyte solution") was prepared. In Reference Example 5, to the solution obtained above, lithium bis(oxalato)borate (LiBOB, manufactured by Tokyo Chemical Industry Co., Ltd.) was further added in the content shown in Table 1 as a fluoro-oxalate compound (13). In Reference Example 6, to the solution obtained above, lithium difluoro(oxalato)borate (LiDFOB, manufactured by Tokyo Chemical Industry Co., Ltd.) was further added in the content shown in Table 1 as a fluoro-oxalate compound (13).

In the following description, a non-aqueous electrolyte solution that does not intentionally dissolve CO₂ or other component will be referred to as a "reference electrolyte solution." This reference electrolyte solution was obtained without performing the dissolving (before the dissolving was performed), and may contain CO₂ or other component originally contained in the raw material or CO₂ or other component which was inevitably dissolved in the solution.

### [Dissolving of CO₂ into Electrolyte Solution (Dissolving: Pressurizing and Replacing)]

Each reference electrolyte solution obtained above was put into a sealed bottle to about 1/10 of the volume of the bottle. The bottle was allowed to stand in an autoclave with an opening of the bottle facing up in an opened state, and then the autoclave was pressurized to 0.5 MPa with CO₂. Then, a release valve was half opened to lower the pressure in the autoclave to 0.1 MPa (1 atm). This process was repeated a total of three times to replace the air in the autoclave with CO₂. After the replacement, the autoclave was pressurized again to 0.5 MPa with CO₂, and the bottle was left to stand for 30 minutes. The electrolyte solution which had been left to stand for 30 minutes was taken out of the autoclave, and left to stand in a sealed state at room temperature (about 25°C) for two weeks. After being left to stand for two weeks, part of the electrolyte solution that had been left to stand at 0.5 MPa for 30 minutes (for example, Reference example 3 in Table 1) was taken and diluted with the reference electrolyte solution with the same salt composition. Thus, electrolyte solutions with different amounts of CO₂ dissolved (for example, Reference Examples 7 to 10 in Table 1) were prepared.

### [Quantitative Determination of Amount of CO₂ Dissolved in Electrolyte Solution>

The CO₂ dissolving electrolyte solution obtained above was analyzed by gas chromatography to quantitatively determine the amount of CO₂ dissolved in the electrolyte solution (the initial amount of CO₂ dissolved).

The amount of CO₂ dissolved in the non-aqueous electrolyte solution was determined by gas chromatography (gas chromatograph: GC-2010plus, manufactured by Shimadzu Corporation, column: Micropacked-ST manufactured by and Shinwa Chemical Industries, Ltd.) by the following method.

### (Measurement Conditions for Gas Chromatography)

For the measurement by gas chromatography, the non-aqueous electrolyte solution was directly fed into the gas chromatograph purged with nitrogen (in a nitrogen atmosphere) to block atmospheric air from entering the measurement system. The measurement by the gas chromatography was performed under the following conditions.

Column temperature program: the column temperature was kept at 37°C (for 2.5 minutes from the start), raised from 37°C to 250°C (at a rate of 20°C/min), raised from 250°C to 270°C (at a rate of 15°C/min), and kept at 270°C (for 5.42 minutes)
Temperature of vaporization chamber: 130°C
Temperature of detector: 300°C (BID)
Carrier Gas: helium (flow rate in column: 1.33 mL/min)
Injection amount: 1 µL (split method, split ratio: 5.0)
(Method of Quantitatively Determining Amount of CO₂ Dissolved)
Multiple kinds of standard helium gas each mixed with CO₂ in a known mixing ratio were analyzed under the same measurement conditions as the conditions for the gas chromatography described above except that the injection amount (1 µL) was changed to 1 mL, and a calibration curve showing the relationship between the amount of mixed (dissolved) CO₂ and a peak area of CO₂ gas was generated from the obtained peak area of the CO₂ gas. Subsequently, the non-aqueous electrolyte solution obtained in each of Reference Example was analyzed by gas chromatography. Finally, the amount of CO₂ dissolved in each of the non-aqueous electrolyte solutions was determined by the external standard method.

### [Preparation of Laminate Battery]

### (Preparation of Positive Electrode)

LiNi_{1/3}Co_{1/3}Mn_{1/3}O₂ (product number: MX7h, manufactured by Umicore) as the ternary positive electrode active material, acetylene black (AB, product name: Denka Black (registered trademark), manufactured by Denka Co., Ltd.), graphite (product number: SP270, manufactured by Nippon Graphite Industries, Co., Ltd.), and polyvinylidene fluoride (PVdF, product number: KF1120, manufactured by Kureha Corporation) were dispersed in N-methyl-2-pyrrolidone (NMP) to prepare positive electrode mixture slurry (containing the positive electrode active material, AB, graphite, and PVdF in a solid mass ratio of 93 : 2 : 2 : 3). The obtained positive electrode mixture slurry was coated on one side of aluminum foil (a positive electrode current collector, manufactured by Nippon Foil Co., Ltd., thickness: 15 µm) with an applicator so that the coated slurry after drying weighed 19.4 mg/cm², and dried on a hot plate at 110°C for 10 minutes. The obtained product was further dried in a vacuum drying furnace at 110°C for 12 hours. Thereafter, the dried product was pressure-molded by a roll press to a density of 3.1 g/cm³ to obtain a positive electrode sheet (83 µm in thickness).

### (Preparation of Negative Electrode)

Graphite (natural graphite (product number: SMG, manufactured by Hitachi Chemical Co., Ltd.) and artificial graphite (product number: SFG15, manufactured by TIMCAL) in a solid mass ratio of 85 : 15) as the negative electrode active material, styrene-butadiene rubber (SBR, binder), and carboxymethyl cellulose (CMC, binder) were dispersed in ultrapure water to prepare negative electrode mixture slurry (containing the negative electrode active material, SBR, and CMC in a solid mass ratio of 97.3 : 1.5 : 1.2). The obtained negative electrode mixture slurry was coated on one side of copper foil (a negative electrode current collector, manufactured by Fukuda Metal Foil & Powder Co., Ltd., thickness: 15 µm) with an applicator so that the coated slurry after drying weighed 9.8 mg/cm², and dried on a hot plate at 80°C for 10 minutes. The obtained product was further dried in a vacuum drying furnace at 100°C for 12 hours. Thereafter, the dried product was pressure-molded by a roll press to a density of 1.3 g/cm³ to obtain a negative electrode sheet (90 µm in thickness).

### (Preparation of Laminate Battery)

The obtained positive and negative electrodes were cut, and polar leads were ultrasonically welded to the cut positive and negative electrodes. Then, the positive and negative electrodes were disposed to face each other with a 16-µm polyethylene (PE) separator interposed therebetween and sealed at three sides with a laminate film. Thus, batteries containing no solution were obtained. Subsequently, the electrolyte solutions shown in Table 1, 700 µL each, were injected into the batteries containing no solution from one unsealed side.

The battery after the injection was pre-charged in an opened state at 0.2C (6 mA) for 2 hours. Thereafter, the battery was vacuum-sealed and left to stand at room temperature for 3 days. After being left to stand for three days, the battery was charged at 0.5 C (15 mA) and 4.2 V for 5 hours, and then discharged at 0.2 C (6 mA) to a cutoff voltage of 2.75 V, one side of the laminate film was torn, and the battery was degassed by vacuum sealing. The battery after being degassed was charged and discharged under the following conditions, and this operation was defined as conditioning. Thus, a laminate battery (cell) with 4.2 V and 30 mAh was prepared.

### (Conditioning Conditions)

Charging: 0.5 C (15 mA), 5 hours at 4.2 V (25°C) → Discharging: 1 C (30 mA), a cutoff voltage of 2.75 V (25°C)

### [Evaluation of Battery]

### (Impedance)

The cell after the conditioning was charged at a constant current of 1 C (30 mA) and 4.2 V at room temperature for 30 minutes to a 50% depth of charge (SOC) using a charge/discharge tester (product number: ACD-01, manufactured by Asuka Electronic Co., Ltd.). Subsequently, the impedance of the cell was measured with an impedance analyzer (product number: VSP-300, manufactured by BioLogic) under the condition of -30°C in a frequency range from 1 GHz to 1 MHz. A real axis resistance (interface resistance) was obtained from a frequency at which an arc of the measurement value diverges. The frequency at which the arc diverges refers to a frequency at which a value of an imaginary axis reaches the minimum in a frequency range of 10 Hz to 0.001 Hz.

### (Initial DCR)

The cell whose impedance had been measured was charged at a constant current of 1 C (30 mA) and a constant voltage of 4.2 V at room temperature to a cutoff current of 0.02 C (0.6 mA) to reach the fully charged state (100% SOC). Subsequently, the cell that was fully charged was left to stand for 30 minutes, discharged at 6 mA for 10 seconds, left to stand for another 30 minutes, discharged at 30 mA for 10 seconds, left to stand for another 30 minutes, and discharged at 60 mA for 10 seconds. The discharging currents were plotted on the horizontal axis, the difference (ΔV) between the voltage at the start of the discharge at each discharging current and a closing voltage after 10 seconds from the start of the discharge was plotted on the vertical axis, and the slope of a straight line I-V was taken as the "Initial DCR" of the cell.

### (DCR after 300 cycles)

A cycle test of the cell after the measurement of initial DCR, 300 cycles in total, was performed at 45°C under the following charge/discharge conditions (cycle conditions). After the 300 cycles, the DCR in a fully charged state at 25°C ("DCR after 300 cycles") was measured by the same method.

### (Cycle conditions)

Charge: charge at a constant current of 1 C (30 mA) and a constant voltage of 4.2 V to a cutoff current of 0.02 C (0.6 mA), pause for 10 minutes
Discharge: discharge at a constant current (CC) of 1 C (30 mA) to a cutoff voltage of 2.75 V, pause for 10 minutes

### (DCR Increase Rate after 300 Cycles)

The "DCR increase rate after 300 cycles" was determined according to the following mathematical equation (1) using the measurement results of the "initial DCR" and the "DCR after 300 cycles."
[Mathematical 1] $" DCR increase rate after 300 cycles " = " DCR after 300 cycles " / " Initial DCR "$

### (Self-Discharge)

The cell after the conditioning was charged at a constant current of 1 C (30 mA) and a constant voltage of 4.2 V at room temperature to a cutoff voltage of 0.02 C (0.6 mA) to reach a fully charged state (100% SOC). The open circuit voltage (OCR) of the charged cell was measured at room temperature. This measurement value was defined as "Initial OCV"

The cell was then stored at 60°C for 4 weeks. The cell after the storage was cooled for 3 hours at room temperature, and then, an open circuit voltage (OCV) was measured at room temperature. This measurement value was defined as "OCV after storage."

The "OCV difference (ΔV) before and after storage" was determined according to the following mathematical equation (2) using the measurement results of the "initial OCV" and the "OCV after storage."
[Mathematical 2] $\begin{matrix}" OCV difference \left(ΔV\right) before and after storage " = " Initial OCV " - " OCV after \\ storage "\end{matrix}$

The smaller the "OCV difference (ΔV) before and after storage" is, i.e., the smaller the degree of decrease in "OCV after storage" relative to the "initial OCV," is, the less the self-discharge of the battery occurs.

### (DCR after 4-Week Enduring at 60°C)

The cell whose initial DCR had been measured was charged at a constant current of 1 C (30 mA) and a constant voltage of 4.2 V at room temperature to a cutoff current of 0.02 C (0.6 mA) to reach the fully charged state (100% SOC), which was then stored at 60°C for four weeks. The cell was then discharged at room temperature and a constant current of 1 C (30 mA) to a cutoff voltage of 2.75 V, and thereafter measured for remaining capacity. Further, the cell was charged at room temperature and a constant current of 1 C (30 mA) and a constant voltage of 4.2 V to a cutoff voltage of 0.02 C (0.6 mA), then discharged at a constant current of 1 C (30 mA) to a cutoff voltage of 2.75 V, and measured for recovery capacity. After the measurement of the recovery capacity, the cell was measured for DCR under the same conditions as the measurement of the initial DCR. This measurement value was defined as "DCR after 4-week enduring at 60°C."

### (DCR Increase Rate after 4-week Enduring at 60°C)

Further, the "DCR increase rate after 4-week enduring at 60°C" was determined by the following mathematical equation (3) using the measurement results of "initial DCR" and the "DCR after 4-week enduring at 60°C."
[Mathematical 3] $\begin{matrix}" DCR increase rate after 4 -week enduring at 60 ° C " = " DCR after 4 -week enduring \\ at 60 ° C " / " Initial DCR "\end{matrix}$

### [Quantitative Determination of Amount of CO₂ Dissolved in Electrolyte Solution After Conditioning]

After the conditioning, the cell was stored at SOC 50% and room temperature for 4 weeks. After the storage, the cell was disassembled in argon gas, and the electrolyte solution was collected. The amount of CO₂ dissolved in the CO₂ dissolving electrolyte solution after the conditioning ("amount of CO₂ dissolved after conditioning") was determined by analyzing the collected electrolyte solution by gas chromatography in the same manner as described above.

Table 1 shows the results of the impedance, the DCRs before and after cycles (the initial DCR, the DCR after 300 cycles) and the DCR increase rate, the DCRs before and after the 4-week enduring at 60°C (the initial DCR, the DCR after 4-week enduring at 60°C) and the DCR increase rate, the OCVs before and after storage (the initial OCV, the OCV after storage) and the OCV difference (ΔV), and the amounts of CO₂ dissolved in the non-aqueous electrolyte solution before and after the conditioning (the initial amount of CO₂" dissolved, the amount of CO₂ dissolved after conditioning).

### [Reference Comparative Examples 1 to 6 and 8]

In the same mixture solvent as described above, an electrolyte salt of mixed salt composition containing LiFSI and LiPF₆ or an electrolyte salt of simple salt composition containing only LiPF₆ was dissolved in concentrations shown in Table 1. In Reference Comparative Examples 1 to 4, the solution obtained above was used as a non-aqueous electrolyte solution (reference electrolyte solution). In Reference Comparative Example 5, to the solution obtained above, LiBOB was further added in the content shown in Table 1, and the resultant mixture was then stirred for a day to prepare a non-aqueous electrolyte solution. In Reference Comparative Example 6, to the solution obtained above, LiDFOB was further added in the content shown in Table 1, and the resultant mixture was then stirred for a day to prepare a non-aqueous electrolyte solution. In Reference Comparative Example 8, to the solution obtained above, LiNO₃ was further added in the content shown in Table 1, and the resultant mixture was then stirred for a day and filtered with a membrane filter to prepare a non-aqueous electrolyte solution. Subsequently, in the same manner as described above, cells were produced using the respective reference electrolyte solutions obtained above and evaluated except that each electrolyte solution was not subjected to dissolving. Table 1 shows the results.

### [Reference Comparative Example 7]

An electrolyte salt of simple salt composition containing only LiPF₆ was dissolved in the same mixture solvent as described above to have a concentration shown in Table 1. Thus, a non-aqueous electrolyte solution (reference electrolyte solution) was prepared. Subsequently, the reference electrolyte solution obtained above was used to perform dissolving in the same manner as described above. Then, in the same manner as describe above, a cell was produced using the CO₂ dissolving electrolyte solution and evaluated. Table 1 shows the results.

**[Table 1]**

| Non-aqueous electrolyte solution of Ref. Ex. series | Salt composition | Type and content (wt%) of additive | | Amount of CO₂ dissolved in non-aqueous electrolyte solution | | Real axis resistance (impedance , Ω) at - 30°C | DCR | | | | | OCV | | |
|---|---|---|---|---|---|---|---|---|---|---|---|---|---|---|
| | | Nitric acid compound | Fluorooxalato compound | Initial Value (ppm) | Value after conditioning | | Initial value (Ω) | Value (Ω) after 300 cycles | DCR increase rate after 300 cycles | After 4-week durability test at 60° C | DCR increase rate after 4-week durability test at 60°C | Initial value (V) | After 4-week storage at 60°C | Difference (ΔV) before and after storage |
| Ref. Ex. 1 | 0.1M LiFSI+1.1M LiPF₆ | LiNO₃ (0.5) | | 150 | 65 | 14.45 | 1.021 | 1.225 | 1.200 | 1.332 | 1.305 | 4.200 | 4.0579 | 0.1416 |
| Ref. Ex. 2 | 0.2M LiFSI+1.0M LiPF₆ | LiNO₃ (0.5) | | 150 | 70 | 14.29 | 1.001 | 1.201 | 1.200 | 1.292 | 1.291 | 4.200 | 4.0522 | 0.1473 |
| Ref. Ex. 3 | 0.6M LiFSI+0.6M LiPF₆ | LiNO₃ (0.5) | | 150 | 70 | 13.83 | 0.993 | 1.188 | 1.196 | 1.265 | 1.274 | 4.200 | 4.0511 | 0.1484 |
| Ref. Ex. 4 | 1M LiFSI+0.2M LiPF₆ | LiNO₃ (0.5) | | 150 | 65 | 13.55 | 0.981 | 1.169 | 1.192 | 1.248 | 1.272 | 4.200 | 4.0509 | 0.1486 |
| Ref. Ex. 5 | 0.6M LiFSI+0.6M LiPF₆ | LiNO₃ (0.5) | LiBOB (0.5) | 150 | 75 | 34.11 | 1.094 | 1.180 | 1.079 | 1.333 | 1.218 | 4.200 | 4.0612 | 0.1383 |
| Ref. Ex. 6 | 0.6M LiFSI+0.6M LiPF₆ | LiNO₃ (0.5) | LiDFOB (0.5) | 150 | 70 | 17.26 | 1.033 | 1.114 | 1.078 | 1.311 | 1.269 | 4.200 | 4.0604 | 0.1391 |
| Ref. Ex. 7 | 0.6M LiFSI+0.6M LiPF₆ | LiNO₃ (0.5) | | 100 | 60 | 14.02 | 0.998 | 1.190 | 1.192 | 1.271 | 1.274 | 4.199 | 4.0509 | 0.1485 |
| Ref. Ex. 8 | 0.6M LiFSI+0.6M LiPF₆ | LiNO₃ (0.5) | | 60 | 40 | 14.42 | 1.007 | 1.203 | 1.195 | 1.283 | 1.274 | 4.199 | 4.0504 | 0.1490 |
| Ref. Ex. 9 | 0.6M LiFSI+0.6M LiPF₆ | LiNO₃ (0.5) | | 30 | 25 | 14.66 | 1.015 | 1.216 | 1.198 | 1.293 | 1.274 | 4.200 | 4.0497 | 0.1498 |
| Ref. Ex. 10 | 0.6M LiFSI+0.6M LiPF₆ | LiNO₃ (0.5) | | 10 | 10 | 14.88 | 1.035 | 1.252 | 1.210 | 1.320 | 1.275 | 4.199 | 3.9015 | 0.2979 |
| Ref. Comp. Ex. 1 | 1.2M LiPF₆ | | | 1 | 6 | 45.10 | 1.250 | 1.575 | 1.260 | 1.712 | 1.370 | 4.200 | 4.0431 | 0.1564 |
| Ref. Comp. Ex. 2 | 0.2M LiFSI+1.0M LiPF₆ | | | 1 | 4 | 41.66 | 1.163 | 1.419 | 1.220 | 1.542 | 1.326 | 4.200 | 4.0322 | 0.1673 |
| Ref. Comp. Ex. 3 | 0.6M LiFSI+0.6M LiPF₆ | | | 1 | 5 | 39.30 | 1.107 | 1.344 | 1.214 | 1.446 | 1.306 | 4.200 | 4.0282 | 0.1713 |
| Ref. Comp. Ex. 4 | 1M LiFSI+0.2M LiPF₆ | | | 1 | 5 | 37.33 | 1.085 | 1.314 | 1.211 | 1.412 | 1.301 | 4.200 | 4.0212 | 0.1783 |
| Ref. Comp. Ex. 5 | 0.6M LiFSI+0.6M LiPF₆ | | LiBOB (0.5) | 1 | 6 | 428.62 | 1.808 | 1.952 | 1.080 | 2.222 | 1.229 | 4.200 | 4.0388 | 0.1607 |
| Ref. Comp. Ex. 6 | 0.6M LiFSI+0.6M LiPF₆ | | LiDFOB (0.5) | 1 | 5 | 40.08 | 1.141 | 1.232 | 1.080 | 1.462 | 1.281 | 4.200 | 4.0318 | 0.1677 |
| Ref. Comp. Ex. 7 | 1.2M LiPF₆ | | | 150 | 70 | 33.56 | 1.187 | 1.493 | 1.258 | 1.622 | 1.366 | 4.200 | 4.0598 | 0.1397 |
| Ref. Comp. Ex. 8 | 0.6M LiFSI+0.6M LiPF₆ | LiNO₃ (0.5) | | 1 | 5 | 14.88 | 1.035 | 1.252 | 1.210 | 1.322 | 1.277 | 4.199 | 3.8771 | 0.3223 |

### [Consideration of Table 1 (Reference Example Series)]

Comparison between Reference Examples 1 to 4 (or Reference Comparison Examples 1 to 4) showed that, depending on the concentration of LiFSI, the impedance and DCRs (initial DCR, DCR after 300 cycles, and DCR after 4-week enduring at 60°C) were reduced, while the OCV difference (ΔV) before and after storage was large, i.e., self-discharge was increased.

Comparison between Reference Comparative Example 3 and Reference Comparative Example 8 with the same salt composition showed that by adding LiNO₃ to the electrolyte solution, the impedance and DCR were significantly reduced, and the DCR increase rates after 300 cycles and after 4-week enduring at 60°C were reduced, while self-discharge was increased.

Comparison between Reference Examples 3 and 7 to 10 and Reference Comparative Example 8 with the same salt composition showed that by dissolving CO₂ in the electrolyte solution, the OCV difference (ΔV) before and after storage was small, i.e., self-discharge due to addition of LiNO₃ was reduced, while the impedance and DCR were further reduced. As can be seen from above, it was shown that the battery using the electrolyte solution with addition of LiNO₃ and dissolution of CO₂ in combination had a synergistic effect of reducing the impedance and the DCR and reducing self-discharge. It was further shown that this synergistic effect was significant when the amount of CO₂ dissolved in the electrolyte solution exceeded 10 ppm by mass (e.g., 20 ppm by mass or more).

Comparison between Reference Examples 3, 5, and 6 and Reference Comparative Examples 3, 5, and 6 with the same salt composition showed that when the electrolyte solution containing LiNO₃ further contained LiBOB or LIDFOB (particularly LiBOB), the impedance and the DCR significantly increased, and when the electrolyte solution contained LiNO₃ and further dissolved CO₂ therein, the increase in the impedance and the DCR was suppressed. Comparison between Reference Examples 3, 5, and 6 (or Reference Comparative Examples 3, 5, and 6) with the same salt composition showed that when the electrolyte solution containing LiNO₃ further contained LiBOB or LIDFOB, the DCR increase rate after 300 cycles was small, i.e., an increase in DCR after 300 cycles was suppressed, and self-discharge was suppressed.

### <Example 1 Series>

### [Examples 1 to 4]

In a mixture solvent of ethylene carbonate (EC) and ethyl methyl carbonate (EMC) in a volume ratio of 3 : 7 (manufactured by Kishida Chemical Co., Ltd.) used as an electrolyte solution solvent, an electrolyte salt of a mixed salt composition containing LiFSI (manufactured by Nippon Shokubai Co., Ltd.) and LiPF₆ (manufactured by Stella Chemifa Corporation) was dissolved in concentrations shown in Table 2. To the solution obtained, dimethoxydiphenylsilane (Compound A, manufactured by Tokyo Chemical Industry Co., Ltd.) was added in the content shown in Table 2 as the silicon atom-containing compound (2) represented by the general formula (2). The resultant mixture was then stirred for a day. Thus, a non-aqueous electrolyte solution (reference electrolyte solution) was prepared. Subsequently, in the same manner as described above, cells were produced using the respective reference electrolyte solutions obtained above and evaluated except that each electrolyte solution was not subjected to dissolving. Table 2 shows the results.

### [Examples 5 to 10]

Each non-aqueous electrolyte solution (reference electrolyte solution) was prepared in the same manner as described above. In Example 9, to the solution obtained above, trimethylsilyl trifluoromethane sulfonate (Compound I, manufactured by Tokyo Chemical Industry Co., Ltd.) was further added in the content shown in Table 2 as a sulfur atom-containing compound (5) represented by the general formula (5). In Example 10, to the solution obtained above, lithium nitrate (LiNO₃,manufactured by Tokyo Chemical Industry Co., Ltd.) was added in the content shown in Table 2 as a nitric acid compound (12), and the resultant mixture was then stirred for a day and filtered with a membrane filter. Subsequently, each reference electrolyte solution obtained was used to perform dissolving in the same manner as described above. Then, in the same manner as describe above, a cell was produced using the CO₂ dissolving electrolyte solution and evaluated. Table 2 shows the results.

### [Comparative Examples 1 to 6, 8, and 9]

In the same mixture solvent as described above, an electrolyte salt of mixed salt composition containing LiFSI and LiPF₆ or an electrolyte salt of simple salt composition containing only LiPF₆ was dissolved in concentrations shown in Table 2. In Comparative Examples 1 to 4, the solution obtained above was used as a non-aqueous electrolyte solution (reference electrolyte solution). In Comparative Example 5, to the solution obtained above, lithium bis(oxalato)borate (LiBOB, manufactured by Tokyo Chemical Industry Co., Ltd.) was further added in the content shown in Table 2 as a fluoro-oxalate compound (13), and the resultant mixture was stirred for a day to prepare a non-aqueous electrolyte solution. In Comparative Example 6, to the solution obtained above, lithium difluoro(oxalato)borate (LiDFOB, manufactured by Tokyo Chemical Industry Co., Ltd.) was further added in the content shown in Table 2 as a fluoro-oxalate compound (13), and the resultant mixture was stirred for a day to prepare a non-aqueous electrolyte solution. In Comparative Example 8, to the solution obtained above, LiNO₃ was further added in the content shown in Table 2, and the resultant mixture was then stirred for a day and filtered with a membrane filter to prepare a non-aqueous electrolyte solution. In Reference Example 9, to the solution obtained above, dimethoxydiphenylsilane (Compound A) was further added in the content shown in Table 2, and the resultant mixture was then stirred for a day to prepare a non-aqueous electrolyte solution. Subsequently, in the same manner as described above, cells were produced using the respective reference electrolyte solutions obtained above and evaluated except that each electrolyte solution was not subjected to dissolving. Table 2 shows the results.

### [Comparative Example 7]

In the same mixture solvent as described above, an electrolyte salt of simple salt composition containing only LiPF₆ was dissolved in a concentration shown in Table 2. Thus, a non-aqueous electrolyte solution (reference electrolyte solution) was prepared. Subsequently, the reference electrolyte solution obtained above was used to perform dissolving in the same manner as described above. Then, in the same manner as describe above, a cell was produced using the CO₂ dissolving electrolyte solution and evaluated. Table 2 shows the results.

### [(Additional) Evaluation of Battery]

### (DCR increase rate with the same salt composition)

An increase rate of "DCR after 4-week enduring at 60°C" (the DCR increase rate with the same salt composition) due to addition of a specific compound to the non-aqueous electrolyte solution with the same salt composition was determined by the following mathematical equation (4). The "DCR increase rate with the same salt composition" is shown in the column of each Example and Comparative Example containing a specific compound.
[Mathematical 4] $\begin{matrix}" DCR increase rate with the same salt composition " = " DCR after 4 -week enduring \\ at 60 ° C of non-aqueous electrolyte solution with the same salt composition and containing \\ specific compound " / " DCR after 4 -week enduring at 60 ° C of non-aqueous electrolyte solution \\ having no same salt composition and containing no specific compound "\end{matrix}$

For example, in Table 2, the DCR increase rate with the same salt composition of "1.2 M LiPF₆" can be determined by "DCR after 4-week enduring at 60°C of Comparative Example 9"/"DCR after 4-week enduring at 60°C of Comparative Example 1."

### (Amount of Lithium Electrodeposited after Low-Temperature Cycles)

By using a charge/discharge tester, each cell after the conditioning was charged at a constant current of 1 C (30 mA) and a constant voltage of 4.2 V at room temperature to a cutoff voltage of 0.6 mA, then discharged at a constant current of 0.2 C (6 mA) to a cutoff voltage of 2.75 V, and measured for initial capacity. Thereafter, a cycle including charging at a constant current of 2 C (60 mA) and a voltage of 4.2 V and then discharging at a constant current of 1 C (30 mA) to a cutoff voltage of 2.75 V was performed a total of 200 cycles under an environment of -10°C. For the cell after 200 cycles, the capacity after 200 cycles was measured under the same conditions as when the initial capacity was measured at room temperature. The capacity difference ΔC between the initial capacity and the capacity after 200 cycles was converted into a value per 1g of the positive electrode active material, and this converted value was defined as the "amount of lithium electrodeposited on negative electrode after low-temperature cycles" (the amount of electrodeposition after low-temperature cycles).

**[Table 2]**

| Non-aqueous electrolyte solution of Fx. 1 series | Salt composition | Type and content (wt%) of additive | | | Amount of CO₂ dissolved in non-aqueous electrolyte solution | | Real axis resistance (Impedance, Ω) at -30°C | DCR | | | | | | OCV | | | Amount of electrodeposition after low-temperature cycles |
|---|---|---|---|---|---|---|---|---|---|---|---|---|---|---|---|---|---|
| | | Nitric acid compound | Specific compound | Fluorooxalato compound | Initial value (ppm) | Value after conditioning | | Initial value (Ω) | Value (Ω) after 300 cycles | DCR increase rate after 300 cycles | After 4-week enduring at 60°C (Ω) | DCR increase rate after 4-week enduring at 60°C | DCR increase rate at the same salt composition | Initial value (V) | After 4-week storage at 60°C | Difference (ΔV) before and after storage | |
| Fx. 1 | 0.1M LiFSI+1.1MLiPF₆ | | Formula (2): A (0.5) | | 1 | 6 | 36.52 | 1.122 | 1.348 | 1.201 | 1.467 | 1.307 | | 4.1995 | 4.0307 | 0.1688 | |
| Fx. 2 | 0.2M LiFSI+1.0M LiPF₆ | | Formula (2): A (0.5) | | 1 | 5 | 36.16 | 1.106 | 1.326 | 1.199 | 1.443 | 1.305 | 0.936 | 4.1995 | 4.0342 | 0.1653 | 21.2 |
| Ex. 3 | 0.6M LiFSI+0.6M LiPF₆ | | Formula (2): A (0.5) | | 1 | 5 | 35.45 | 1.092 | 1.309 | 1.199 | 1.352 | 1.238 | 0.935 | 4.1995 | 4.0308 | 0.1687 | 16.3 |
| Fx. 4 | 1M LiFSI+0.2M LiPF₆ | | Formula (2): A (0.5) | | 1 | 5 | 35.09 | 1.077 | 1.289 | 1.197 | 1.329 | 1.234 | 0.941 | 4.1995 | 4.0292 | 0.1703 | 15.2 |
| Ex. 5 | 0.6M LiFSI+0.6M LiPF₆ | | Formula (2): A (0.5) | | 150 | 77 | 32.23 | 1.059 | 1.264 | 1.194 | 1.311 | 1.238 | 0.907 | 4.1995 | 4.0624 | 0.1371 | 15.4 |
| Fx. 6 | 0.6M LiFSI+0.6M LiPF₆ | | Formula (2): A (0.5) | | 60 | 50 | 32.55 | 1.069 | 1.278 | 1.195 | 1.322 | 1.236 | | 4.1995 | 4.0616 | 0.1379 | 15.8 |
| Ex. 7 | 0.6M LiFSI+0.6M LiPF₆ | | Formula (2): A (0.5) | | 30 | 29 | 33.19 | 1.085 | 1.297 | 1.195 | 1.342 | 1.237 | | 4.1995 | 4.0598 | 0.1397 | 15.9 |
| Fx. 8 | 0.6M LiFSI+0.6M LiPF₆ | | Formula (2): A (0.5) | | 10 | 9 | 33.35 | 1.091 | 1.304 | 1.196 | 1.350 | 1.238 | | 4.1995 | 4.0309 | 0.1686 | 16.2 |
| Ex. 9 | 0.6M LiFSI+0.6M LiPF₆ | | Formula (2): A (0.5) | | 150 | 76 | 3202 | 1.051 | 1.260 | 1.199 | 1.315 | 1.251 | 0.909 | 4.1995 | 4.0670 | 0.1325 | |
| | | | Formula (5): I (0.5) | | | | | | | | | | | | | | |
| Ex. 10 | 0.6M LiFSI+0.6M LiPF₆ | LiNO₃ (0.5) | Formula (2): A (0.5) | | 150 | 75 | 14.22 | 0.991 | 1.184 | 1.195 | 1.286 | 1.298 | | 4.1995 | 4.0526 | 0.1469 | |
| Comp. Ex. 1 | 1.2M LiPF₆ | | | | 1 | 6 | 45.10 | 1.250 | 1.575 | 1.260 | 1.712 | 1.370 | 0.985 | 4.1995 | 4.0431 | 0.1564 | 34.4 |
| Comp. Ex. 2 | 0.2M LiFSI+1.0M LiPF₆ | | | | 1 | 4 | 41.66 | 1.163 | 1.419 | 1.220 | 1.542 | 1.326 | | 4.1995 | 4.0322 | 0.1673 | 24.4 |
| Comp. Ex. 3 | 0.6M LiFSI+0.6M LiPF₆ | | | | 1 | 5 | 39.30 | 1.107 | 1.344 | 1.214 | 1.446 | 1.306 | | 4.1995 | 4.0282 | 0.1713 | 17.7 |
| Comp. Ex. 4 | 1M LiFSI+0.2M LiPF₆ | | | | 1 | 5 | 37.33 | 1.085 | 1.314 | 1.211 | 1.412 | 1.301 | | 4.1995 | 4.0212 | 0.1783 | 16.8 |
| Comp. Ex. 5 | 0.6M LiFSI+0.6M LiPF₆ | | | LiBOB (0.5) | 1 | 6 | 428.62 | 1.808 | 1.952 | 1.080 | 2.222 | 1.229 | | 4.1995 | 4.0388 | 0.1607 | |
| Comp. Ex. 6 | 0.6M LiFSI+0.6M LiPF₆ | | | LiDFOB (0.5) | 1 | 5 | 40.08 | 1.141 | 1.232 | 1.080 | 1.462 | 1.281 | | 4.1995 | 4.0318 | 0.1677 | |
| Comp. Ex. 7 | 1.2M LiPF₆ | | | | 150 | 70 | 33.56 | 1.187 | 1.493 | 1.258 | 1.622 | 1.366 | | 4.1995 | 4.0598 | 0.1397 | 30.6 |
| Comp. Ex. 8 | 0.6M LiFSI+0.6M LiPF₆ | LiNO₃ (0.5) | | | 1 | 70 | 14.88 | 1.035 | 1.252 | 1.210 | 1.322 | 1.277 | | 4.1994 | 3.8771 | 0.3223 | |
| Comp. Ex. 9 | 1.2M LiPF₆ | | Formula (2): A (0.5) | | 1 | 6 | 42.72 | 1.243 | 1.554 | 1.250 | 1.687 | 1.357 | | 4.1995 | 4.0431 | 0.1564 | 41.2 |

### [Consideration of Table 2 (Example 1 Series)]

Comparison between Examples 1 to 4 and Comparative Examples 2 to 4 showed that, depending on the concentration of LiFSI, the impedance and DCRs (initial DCR, DCR after 300 cycles, and DCR after 4-week enduring at 60°C) were reduced, and the effect of the reduction became significant by adding dimethoxydiphenylsilane (Compound A) to the electrolyte solution.

Comparison between Examples 2 to 4 and Comparative Examples 2 to 4 with the same salt composition and comparison between Comparative Example 9 and Comparative Example 1 with the same salt composition showed that the mixed salt composition containing LiFSI and LiPF₆ had higher effect of reducing the impedance and DCR due to addition of dimethoxydiphenylsilane, than the simple salt composition containing only LiPF₆. Further, it was also shown that the DCR increase rate after 300 cycles and DCR increase rate after 4-week enduring at 60°C were low.

Comparison between Examples 1 to 8 showed that, depending on the concentration of LiFSI, the OCV difference (ΔV) before and after storage increased, i.e., self-discharge increased, but when CO₂ was dissolved in the electrolyte solution containing dimethoxydiphenylsilane, the OCV difference (ΔV) before and after storage decreased, i.e., self-discharge was suppressed, while the impedance and DCR were further reduced.

Comparison between Comparative Examples 1 to 4, Comparative Example 7, Comparative Example 9, and Examples 2 to 9 showed that, depending on the concentration of LiFSI, the amount of electrodeposition after low-temperature cycles decreased, and degradation of the negative electrode due to low-temperature charging was suppressed. It was also shown that the addition of dimethoxydiphenylsilane to the simple salt composition containing only LiPF₆ increased the amount of lithium electrodeposited on the negative electrode during low-temperature cycles, and degradation of the negative electrode due to low temperature charging progressed. It was also shown that when dimethoxydiphenylsilane was added to the mixed salt composition containing LiFSI and LiPF₆, the amount of electrodeposition after low-temperature cycles decreased, and degradation of the negative electrode due to low temperature charging was suppressed.

Comparison between Examples 1 to 4, Comparative Examples 2 to 4, and Comparative Examples 1 and 9 showed that the effects of suppressing self-discharge, reducing the impedance, and suppressing the DCR increase due to addition of dimethoxydiphenylsilane were higher for the salt mixture containing LiFSI and LiPF₆ than for the simple salt composition containing only LiPF₆. The reason for which the effect of adding dimethoxydiphenylsilane is enhanced is considered to be that a coating film derived from an anionic component of LiFSI is provided on the interface between the positive and negative electrodes, so that solubility of LiFSI is high and the viscosity of the electrolyte solution at low temperature is reduced. It was also shown that the effect of reducing the impedance and DCR and the effect of suppressing self-discharge became significant when the amount of CO₂ dissolved in the electrolyte solution exceeded 10 ppm by mass (e.g., 20 ppm by mass or more).

The reason for which the effect of suppressing self-discharge due to dissolution of CO₂ is higher for the electrolyte solution having the mixed salt composition containing LiFSI and LiPF₆ than for the simple salt composition containing only LiPF₆ is considered to be related to the order of formation of the coating film of the anionic component of FSI formed on the positive and negative electrodes during charging and the coating film of a lithium carbonate component from CO₂.

Comparison between Examples 5 and 10 with the same salt composition showed that when LiNO₃ was further added to the electrolyte solution containing dimethoxydiphenylsilane and CO₂ dissolved, the impedance and DCR significantly decreased.

Comparison of the DCR increase rates after 4-week enduring at 60°C with the same salt composition due to addition of dimethoxydiphenylsilane showed that the DCR increase rate was significantly lower and the effect of suppressing the DCR increase was higher, for the electrolyte solution having the mixed salt composition containing LiFSI and LiPF6 than for the simple salt composition containing only LiPF₆. The same results were shown for the DCR increase rate after 300 cycles with the same salt composition due to addition of dimethoxydiphenylsilane. It was further shown that the effect of suppressing the DCR increase was further enhanced by dissolution of CO₂ or addition of trimethylsilyl trifluoromethane sulfonate (Compound I). The reason for this is also considered to be that anion coating film of LiFSI is formed on the positive and negative electrodes.

### <Example 2-1 Series>

### [Examples 1 to 4, 10, and 12]

In a mixture solvent of ethylene carbonate (EC) and ethyl methyl carbonate (EMC) in a volume ratio of 3 : 7 (manufactured by Kishida Chemical Co., Ltd.) used as an electrolyte solution solvent, an electrolyte salt of a mixed salt composition containing LiFSI (manufactured by Nippon Shokubai Co., Ltd.) and LiPF₆ (manufactured by Stella Chemifa Corporation) was dissolved in concentrations shown in Table 3. To the solution obtained above, trimethyl borate (Compound B, manufactured by Tokyo Chemical Industry Co., Ltd.) was added in the content shown in Table 3 as the boron atom-containing compound (3) represented by the general formula (3). The resultant mixture was then stirred for a day. Thus, a non-aqueous electrolyte solution (reference electrolyte solution) was prepared. In Example 10, to the solution obtained above, bis(trimethylsilyl) sulfate (Compound J, manufactured by Tokyo Chemical Industry Co., Ltd.) was further added in the content shown in Table 3 as a sulfur atom-containing compound (5) represented by the general formula (5). In Example 12, to the solution obtained above, tris(trimethylsilyl) phosphate (Compound N, manufactured by Tokyo Chemical Industry Co., Ltd.) was further added in the content shown in Table 3 as a phosphorus atom-containing compound (8) represented by the general formula (8). Subsequently, in the same manner as described above, cells were produced using the respective reference electrolyte solutions obtained above and evaluated except that each electrolyte solution was not subjected to dissolving. Table 3 shows the results.

### [Examples 5 to 9 and 11]

Each non-aqueous electrolyte solution (reference electrolyte solution) was prepared in the same manner as described above. In Example 9, to the solution obtained above, lithium nitrate (LiNO₃, manufactured by Tokyo Chemical Industry Co., Ltd.) was added in the content shown in Table 3 as the nitric acid compound (12), and the resultant mixture was then stirred for a day and filtered with a membrane filter. In Example 11, to the solution obtained above, bis(trimethylsilyl) sulfate (Compound J) was further added in the content shown in Table 3. Subsequently, each reference electrolyte solution obtained was used to perform dissolving in the same manner as described above. Then, in the same manner as describe above, a cell was produced using the CO₂ dissolving electrolyte solution and evaluated. Table 3 shows the results.

### [Comparative Examples 1 to 6, 8, and 9]

In the same mixture solvent as described above, an electrolyte salt of mixed salt composition containing LiFSI and LiPF₆ or an electrolyte salt of simple salt composition containing only LiPF₆ was dissolved in concentrations shown in Table 3. In Comparative Examples 1 to 4, the solution obtained above was used as a non-aqueous electrolyte solution (reference electrolyte solution). In Comparative Example 5, to the solution obtained above, lithium bis(oxalato)borate (LiBOB, manufactured by Tokyo Chemical Industry Co., Ltd.) was further added in the content shown in Table 3 as a fluoro-oxalate compound (13), and the resultant mixture was stirred for a day to prepare a non-aqueous electrolyte solution. In Comparative Example 6, to the solution obtained above, lithium difluoro(oxalato)borate (LiDFOB, manufactured by Tokyo Chemical Industry Co., Ltd.) was further added in the content shown in Table 3 as a fluoro-oxalate compound (13), and the resultant mixture was stirred for a day to prepare a non-aqueous electrolyte solution. In Comparative Example 8, to the solution obtained above, LiNO₃ was further added in the content shown in Table 3, and the resultant mixture was then stirred for a day and filtered with a membrane filter to prepare a non-aqueous electrolyte solution. In Comparative Example 9, to the solution obtained above, trimethyl borate (Compound B) was further added in the content shown in Table 3, and the resultant mixture was then stirred for a day to prepare a non-aqueous electrolyte solution. Subsequently, in the same manner as described above, cells were produced using the respective reference electrolyte solutions obtained above and evaluated except that each electrolyte solution was not subjected to dissolving. Table 3 shows the results.

### [Comparative Example 7]

In the same mixture solvent as described above, an electrolyte salt of simple salt composition containing only LiPF₆ was dissolved in a concentration shown in Table 3. Thus, a non-aqueous electrolyte solution (reference electrolyte solution) was prepared. Subsequently, the reference electrolyte solution obtained above was used to perform dissolving in the same manner as described above. Then, in the same manner as describe above, a cell was produced using the CO₂ dissolving electrolyte solution and evaluated. Table 3 shows the results.

**[Table 3]**

| Non-aqueous electrolyte solution of Ex. 2-1 series | Salt composition | Type and content (wt%) of additive | | | Amount of CO₂ dissolved in non-aqueous electrolyte solution | | Real axis resistance (Impedance, Ω) at -30°C | DCR | | | | | | OCV | | | Amount of electrodeposition after low-temperature cycles |
|---|---|---|---|---|---|---|---|---|---|---|---|---|---|---|---|---|---|
| | | Nitric acid compound | Specific compound | Fluorooxalato compound | Initial value (ppm) | Value after conditioning | | Initial value (Ω) | Value (Ω) after 300 cycles | DCR increase rate after 300 cycles | After 4-week enduring at 60°C (Ω) | DCR increase rate after 4-week enduring at 60°C | DCR increase rate at the same salt composition | Initial value (V) | After 4-week storage at 60°C | Difference (ΔV) before and after storage | |
| Fx. 1 | 0.1M LiFSI+1.1M LiPF₆ | | Formula (3): B (0.5) | | 1 | 6 | 19.55 | 1.059 | 1.156 | 1.091 | 1.442 | 1.361 | | 4.1996 | 4.0421 | 0.1575 | |
| Fx. 2 | 0.2M LiFSI+1.0M LiPF₆ | | Formula (3): B (0.5) | | 1 | 5 | 19.35 | 1.049 | 1.139 | 1.086 | 1.424 | 1.358 | 0.923 | 4.1996 | 4.0401 | 0.1595 | 24.1 |
| Ex. 3 | 0.6M LiFSI+0.6M LiPF₆ | | Formula (3): B (0.5) | | 1 | 4 | 19.16 | 1.038 | 1.122 | 1.081 | 1.345 | 1.295 | 0.930 | 4.1995 | 4.0388 | 0.1607 | 16.6 |
| Fx. 4 | 1M LiFSI+0.2M LiPF₆ | | Formula (3): B (0.5) | | 1 | 5 | 18.97 | 1.028 | 1.110 | 1.080 | 1.327 | 1.291 | 0.940 | 4.1995 | 4.0372 | 0.1623 | 15.4 |
| Fx. 5 | 0.6M LiFSI+0.6M LiPF₆ | | Formula (3): B (0.5) | | 150 | 76 | 18.08 | 0.993 | 1.070 | 1.078 | 1.287 | 1.296 | | 4.1995 | 4.0806 | 0.1189 | 15.9 |
| Fx. 6 | 0.6M LiFSI+0.6M LiPF₆ | | Formula (3): B (0.5) | | 60 | 55 | 19.07 | 0.997 | 1.075 | 1.079 | 1.294 | 1.298 | | 4.1996 | 4.0799 | 0.1197 | 16.2 |
| Ex. 7 | 0.6M LiFSI+0.6M LiPF₆ | | Formula (3): B (0.5) | | 30 | 29 | 19.16 | 1.002 | 1.081 | 1.079 | 1.304 | 1.302 | | 4.1996 | 4.0787 | 0.1209 | 16.5 |
| Fx. 8 | 0.6M LiFSI+0.6M LiPF₆ | | Formula (3): B (0.5) | | 10 | 12 | 18.40 | 1.005 | 1.086 | 1.081 | 1.341 | 1.335 | | 4.1995 | 4.0426 | 0.1569 | 16.5 |
| Ex. 9 | 0.6M LiFSI+0.6M LiPF₆ | LiNO₃ (0.5) | Formula (3): B (0.5) | | 150 | 79 | 12.97 | 0.963 | 1.039 | 1.079 | 1.251 | 1.299 | | 4.1996 | 4.0616 | 0.1380 | 16.0 |
| Ex. 10 | 0.6M LiFSI+0.6M LiPF₆ | | Formula (3): B (0.5) | | 1 | 4 | 18.59 | 1.009 | 1.095 | 1.085 | 1.311 | 1.299 | | 4.1996 | 4.0391 | 0.1605 | |
| | | | Formula (5): J (0.5) | | | | | | | | | | | | | | |
| Ex. 11 | 0.6M LiFSI+0.6M LiPF₆ | | Formula (3): B (0.5) | | 150 | 79 | 17.54 | 0.978 | 1.054 | 1.078 | 1.268 | 1.297 | | 4.1996 | 4.0811 | 0.1185 | |
| | | | Formula (5): J (0.5) | | | | | | | | | | | | | | |
| Ex. 12 | 0.6M LiFSI+0.6M LiPF₆ | | Formula (3): B (0.5) | | 1 | 5 | 18.95 | 1.023 | 1.105 | 1.080 | 1.327 | 1.297 | | 4.1996 | 4.0393 | 0.1603 | |
| | | | Formula (8): N (0.5) | | | | | | | | | | | | | | |
| Comp. Ex. 1 | 1.2M LiPF₆ | | | | 1 | 6 | 45.10 | 1.250 | 1.575 | 1.260 | 1.712 | 1.370 | | 4.1995 | 4.0431 | 0.1564 | 34.4 |
| Comp. Ex. 2 | 0.2M LiFSI+1.0M LiPF₆ | | | | 1 | 4 | 41.66 | 1.163 | 1.419 | 1.220 | 1.542 | 1.326 | | 4.1995 | 4.0322 | 0.1673 | 24.4 |
| Comp. Ex. 3 | 0.6M LiFSI+0.6M LiPF₆ | | | | 1 | 5 | 39.30 | 1.107 | 1.344 | 1.214 | 1.446 | 1.306 | | 4.1995 | 4.0282 | 0.1713 | 17.7 |
| Comp. Ex. 4 | 1M LiFSI+0.2M LiPF₆ | | | | 1 | 5 | 37.33 | 1.085 | 1.314 | 1.211 | 1.412 | 1.301 | | 4.1995 | 4.0212 | 0.1783 | 16.8 |
| Comp. Ex. 5 | 0.6M LiFSI+0.6M LiPF₆ | | | LiBOB (0.5) | 1 | 6 | 428.62 | 1.808 | 1.952 | 1.080 | 2.222 | 1.229 | | 4.1995 | 4.0388 | 0.1607 | |
| Comp. Ex. 6 | 0.6M LiFSI+0.6M LiPF₆ | | | LiDFOB (0.5) | 1 | 5 | 40.08 | 1.141 | 1.232 | 1.080 | 1.462 | 1.281 | | 4.1995 | 4.0318 | 0.1677 | |
| Comp. Ex. 7 | 1.2M LiPF₆ | | | | 150 | 70 | 33.56 | 1.187 | 1.493 | 1.258 | 1.622 | 1.366 | | 4.1995 | 4.0598 | 0.1397 | 30.6 |
| Comp. Ex. 8 | 0.6M LiFSI+0.6M LiPF₆ | LiNO₃ (0.5) | | | 1 | 70 | 14.88 | 1.035 | 1.252 | 1.210 | 1.322 | 1.277 | | 4.1994 | 3.8771 | 0.3223 | |
| Comp. Ex. 9 | 1.2M LiPF₆ | | Formula (3): B (0.5) | | 1 | 5 | 39.62 | 1.215 | 1.425 | 1.173 | 1.661 | 1.367 | 0.970 | 4.1995 | 4.0432 | 0.1563 | 41.2 |

### [Consideration of Table 3 (Example 2-1 Series)]

Comparison between Examples 1 to 4 and Comparative Examples 2 to 4 showed that, depending on the concentration of LiFSI, the impedance and DCRs (initial DCR, DCR after 300 cycles, and DCR after 4-week enduring at 60°C) were reduced, and the effect of the reduction became significant by adding trimethyl borate (Compound B) to the electrolyte solution.

Comparison between Examples 1 to 4 and Comparative Examples 2 to 4 showed that, depending on the concentration of LiFSI, the OCV difference (ΔV) before and after storage increased, i.e., self-discharge increased, but when trimethyl borate was added to the electrolyte solution, the OCV difference (ΔV) before and after storage decreased, i.e., self-discharge was suppressed.

Comparison between Examples 2 to 4 and Comparative Examples 2 to 4 with the same salt composition and comparison between Comparative Example 9 and Comparative Example 1 with the same salt composition showed that the mixed salt composition containing LiFSI and LiPF₆ had higher effects of reducing the impedance, suppressing self-discharge, and suppressing the DCR increase due to addition of trimethyl borate, than the simple salt composition containing only LiPF₆.

Comparison between Comparative Examples 1 to 4, Comparative Example 7, Comparative Example 9, and Examples 2 to 9 showed that, depending on the concentration of LiFSI, the amount of electrodeposition after low-temperature cycles decreased, and degradation of the negative electrode due to low-temperature charging was suppressed. It was also shown that the addition of trimethyl borate to the simple salt composition containing only LiPF₆ increased the amount of lithium electrodeposited on the negative electrode during low-temperature cycles, and degradation of the negative electrode due to low temperature charging progressed. It was also shown that when trimethyl borate was added to the mixed salt composition containing LiFSI and LiPF₆, the amount of electrodeposition after low-temperature cycles decreased, and degradation of the negative electrode due to low temperature charging was suppressed.

The reason for which the effects obtained due to addition of trimethyl borate are higher for the mixed salt composition containing LiFSI and LiPF₆ than for the simple salt composition containing only LiPF₆ is considered to be that the coating film derived from an anionic component of LiFSI is formed on the interface between the positive and negative electrodes, so that the solubility of LiFSI is high and the viscosity of the electrolyte solution at low temperature is thereby reduced.

Comparison between Example 3 and Examples 5 to 8 with the same salt composition showed that when CO₂ was dissolved in the electrolyte solution containing trimethyl borate, the effect of reducing the impedance and DCR and the effect of suppressing self-discharge were further enhanced. It was further shown that these effects became significant when the amount of CO₂ dissolved in the electrolyte solution exceeded 10 ppm by mass (e.g., 20 ppm by mass or more).
The reason for which the effect of suppressing self-discharge due to dissolution of CO₂ is higher for the electrolyte solution having the mixed salt composition containing LiFSI and LiPF₆ than for the simple salt composition containing only LiPF₆ is considered to be related to the order of formation of the coating film of the anionic component of FSI formed on the positive and negative electrodes during charging and the coating film of a lithium carbonate component from CO₂.

Comparison between Examples 5 and 9 and Comparative Example 8 with the same salt composition showed that when LiNO₃ was further added to the electrolyte solution containing trimethyl borate, the impedance and the DCR significantly decreased. It was also shown that although self-discharge increased, the self-discharge due to addition of LiNO₃ was suppressed by dissolving CO₂ in the electrolyte solution.

Comparison between Example 3 and Examples 10 and 12 with the same salt composition (no CO₂ dissolved) and comparison between Example 5 and Example 11 with the same salt composition (CO₂ dissolved) showed that when bis(trimethylsilyl) sulfate (Compound J) or tris(trimethylsilyl) phosphate (Compound N) was further added to the electrolyte solution containing trimethyl borate, the impedance and the DCR significantly decreased.

Comparison of the DCR increase rates after 4-week enduring at 60°C with the same salt composition due to addition of trimethyl borate showed that the DCR increase rate was significantly lower and the effect of suppressing the DCR increase was higher, for the electrolyte solution having the mixed salt composition containing LiFSI and LiPF6 than for the simple salt composition containing only LiPF₆. The same results were shown for the DCR increase rate after 300 cycles with the same salt composition due to addition of trimethyl borate. The reason for this is also considered to be that anion coating film of LiFSI is formed on the positive and negative electrodes.

### <Example 2-2 Series>

### [Examples 1 to 4, 11, and 12]

In a mixture solvent of ethylene carbonate (EC) and ethyl methyl carbonate (EMC) in a volume ratio of 3 : 7 (manufactured by Kishida Chemical Co., Ltd.) used as an electrolyte solution solvent, an electrolyte salt of a mixed salt composition containing LiFSI (manufactured by Nippon Shokubai Co., Ltd.) and LiPF₆ (manufactured by Stella Chemifa Corporation) was dissolved in concentrations shown in Table 4. To the solution obtained above, tris(trimethylsilyl)borate (Compound C, manufactured by Tokyo Chemical Industry Co., Ltd.) was added in the content shown in Table 4 as the boron atom-containing compound (3) represented by the general formula (3). The resultant mixture was then stirred for a day. Thus, a non-aqueous electrolyte solution (reference electrolyte solution) was prepared. In Example 11, to the solution obtained above, trimethylsilyl polyphosphate (Compound M, manufactured by Sigma-Aldrich Co. LLC) was further added in the content shown in Table 4 as a phosphorus atom-containing compound (6) represented by the general formula (6). In Example 12, to the solution obtained above, tris(trimethylsilyl) phosphate (Compound N, manufactured by Tokyo Chemical Industry Co., Ltd.) was further added in the content shown in Table 4 as a phosphorus atom-containing compound (8) represented by the general formula (8). Subsequently, in the same manner as described above, cells were produced using the respective reference electrolyte solutions obtained above and evaluated except that each electrolyte solution was not subjected to dissolving. Table 4 shows the results.

### [Examples 5 to 10]

Each non-aqueous electrolyte solution (reference electrolyte solution) was prepared in the same manner as described above. In Example 9, to the solution obtained above, lithium nitrate (LiNO₃, manufactured by Tokyo Chemical Industry Co., Ltd.) was added in the content shown in Table 4 as the nitric acid compound (12), and the resultant mixture was then stirred for a day and filtered with a membrane filter. In Example 10, to the solution obtained above, LiNO₃ and dimethoxydiphenylsilane (Compound A) which was a silicon atom-containing compound (2) represented by the general formula (2) were further added in the contents shown in Table 4, and the resultant mixture was then stirred for a day and filtered with a membrane filter. Subsequently, each reference electrolyte solution obtained was used to perform dissolving in the same manner as described above. Then, in the same manner as describe above, a cell was produced using the CO₂ dissolving electrolyte solution and evaluated. Table 4 shows the results.

### [Comparative Examples 1 to 6, 8, and 9]

In the same mixture solvent as described above, an electrolyte salt of mixed salt composition containing LiFSI and LiPF₆ or an electrolyte salt of simple salt composition containing only LiPF₆ was dissolved in concentrations shown in Table 4. In Comparative Examples 1 to 4, the solution obtained above was used as a non-aqueous electrolyte solution (reference electrolyte solution). In Comparative Example 5, to the solution obtained above, lithium bis(oxalato)borate (LiBOB, manufactured by Tokyo Chemical Industry Co., Ltd.) was further added in the content shown in Table 4 as a fluoro-oxalate compound (13), and the resultant mixture was stirred for a day to prepare a non-aqueous electrolyte solution. In Comparative Example 6, to the solution obtained above, lithium difluoro(oxalato)borate (LiDFOB, manufactured by Tokyo Chemical Industry Co., Ltd.) was further added in the content shown in Table 4 as a fluoro-oxalate compound (13), and the resultant mixture was stirred for a day to prepare a non-aqueous electrolyte solution. In Comparative Example 8, to the solution obtained above, LiNO₃ was further added in the content shown in Table 4, and the resultant mixture was then stirred for a day and filtered with a membrane filter to prepare a non-aqueous electrolyte solution. In Comparative Example 9, to the solution obtained above, tris(trimethylsilyl)borate (Compound C) was further added in the content shown in Table 4, and the resultant mixture was then stirred for a day to prepare a non-aqueous electrolyte solution. Subsequently, in the same manner as described above, cells were produced using the respective reference electrolyte solutions obtained above and evaluated except that each electrolyte solution was not subjected to dissolving. Table 4 shows the results.

### [Comparative Example 7]

In the same mixture solvent as described above, an electrolyte salt of simple salt composition containing only LiPF₆ was dissolved in a concentration shown in Table 4. Thus, a non-aqueous electrolyte solution (reference electrolyte solution) was prepared. Subsequently, the reference electrolyte solution obtained above was used to perform dissolving in the same manner as described above. Then, in the same manner as describe above, a cell was produced using the CO₂ dissolving electrolyte solution and evaluated. Table 4 shows the results.

**[Table 4]**

| Non-aqueous electrolyte solution of Ex. 2-2 series | Salt composition | Type and content (wt%) of additive | | | Amount of CO₂ dissolved in non-aqueous electrolyte solution | | Real axis resistance (Impedance, Ω) at -30°C | DCR | | | | | | OCV | | | Amount of electrodeposition after low-temperature cycles |
|---|---|---|---|---|---|---|---|---|---|---|---|---|---|---|---|---|---|
| | | Nitric acid compound | Specific compound | Fluorooxalato compound | Initial value (ppm) | Value after conditioning | | Initial value (Ω) | Value (Ω) after 300 cycles | DCR increase rate after 300 cycles | After 4-week enduring at 60°C (Ω) | DCR increase rate after 4-week enduring at 60°C | DCR increase rate at the same salt composition | Initial value (V) | After 4-week storage at 60°C | Difference (ΔV) before and after storage | |
| Ex. 1 | 0.1M LiFSI+1.1M LiPF₆ | | Formula (3): C (0.5) | | 1 | 7 | 18.87 | 1.047 | 1.122 | 1.071 | 1.321 | 1.262 | | 4.1996 | 4.0414 | 0.1582 | |
| Ex. 2 | 0.2M LiFSI+1.0M LiPF₆ | | Formula (3): C (0.5) | | 1 | 6 | 18.69 | 1.036 | 1.110 | 1.072 | 1.310 | 1.265 | 0.850 | 4.1996 | 4.0391 | 0.1605 | 23.4 |
| Ex. 3 | 0.6M LiFSI+0.6M LiPF₆ | | Formula (3): C (0.5) | | 1 | 5 | 18.50 | 1.030 | 1.103 | 1.071 | 1.300 | 1.263 | 0.899 | 4.1996 | 4.0377 | 0.1619 | 15.2 |
| Ex. 4 | 1M LiFSI+0.2M LiPF₆ | | Formula (3): C (0.5) | | 1 | 5 | 18.32 | 1.024 | 1.098 | 1.072 | 1.281 | 1.251 | 0.907 | 4.1996 | 4.0316 | 0.1680 | 14.4 |
| Ex. 5 | 0.6M LiFSI+0.6M LiPF₆ | | Formula (3): C (0.5) | | 150 | 76 | 17.29 | 0.990 | 1.061 | 1.071 | 1.251 | 1.263 | | 4.1996 | 4.0784 | 0.1212 | 14.6 |
| Ex. 6 | 0.6M LiFSI+0.6M LiPF₆ | | Formula (3): C (0.5) | | 60 | 50 | 17.38 | 0.994 | 1.065 | 1.071 | 1.260 | 1.267 | | 4.1996 | 4.0764 | 0.1232 | 14.6 |
| Ex. 7 | 0.6M LiFSI+0.6M LiPF₆ | | Formula (3): C (0.5) | | 30 | 30 | 17.45 | 0.999 | 1.070 | 1.071 | 1.277 | 1.278 | | 4.1996 | 4.0751 | 0.1245 | 150 |
| Ex. 8 | 0.6M LiFSI+0.6M LiPF₆ | | Formula (3): C (0.5) | | 10 | 11 | 17.55 | 1.002 | 1.074 | 1.071 | 1.288 | 1.285 | | 4.1996 | 4.0405 | 0.1591 | 15.2 |
| Ex. 9 | 0.6M LiFSI+0.6M LiPF₆ | LiNO₃ (0.5) | Formula (3): C (0.5) | | 150 | 74 | 12.90 | 0.963 | 1.040 | 1.080 | 1.222 | 1.269 | | 4.1996 | 4.0612 | 0.1384 | 14.4 |
| Ex. 10 | 0.6M LiFSI+0.6M LiPF₆ | LiNO₃ (0.5) | Formula(3): C (0.5) | | 150 | 72 | 12.90 | 0.963 | 1.041 | 1.081 | 1.221 | 1.268 | | 4.1996 | 4.0621 | 0.1375 | |
| | | | Formula(2): A (0.5) | | | | | | | | | | | | | | |
| Ex. 11 | 0.6M LiFSI+0.6M LiPF₆ | | Formula (3): C (0.5) | | 1 | 5 | 18.28 | 1.029 | 1.103 | 1.072 | 1.301 | 1.264 | | 4.1996 | 4.0380 | 0.1616 | |
| | | | Formula (6): M (0.5) | | | | | | | | | | | | | | |
| Ex. 12 | 0.6M LiFSI+0.6M LiPF₆ | | Formula (3): C (0.5) | | 1 | 5 | 18.17 | 1.028 | 1.102 | 1.072 | 1.302 | 1.266 | | 4.1996 | 4.0381 | 0.1615 | |
| | | | Formula (8): N (0.5) | | | | | | | | | | | | | | |
| Comp. Ex. 1 | 1.2M LiPF₆ | | | | 1 | 6 | 45.10 | 1.250 | 1.575 | 1.260 | 1.712 | 1.370 | | 4.1995 | 4.0431 | 0.1564 | 34.4 |
| Comp. Ex. 2 | 0.2M LiFSI+1.0M LiPF₆ | | | | 1 | 4 | 41.66 | 1.163 | 1.419 | 1.220 | 1.542 | 1.326 | | 4.1995 | 4.0322 | 0.1673 | 24.4 |
| Comp. Ex. 3 | 0.6M LiFSI+0.6M LiPF₆ | | | | 1 | 5 | 39.30 | 1.107 | 1.344 | 1.214 | 1.446 | 1.306 | | 4.1995 | 4.0282 | 0.1713 | 17.7 |
| Comp. Ex. 4 | 1M LiFSI+0.2M LiPF₆ | | | | 1 | 5 | 37.33 | 1.085 | 1.314 | 1.211 | 1.412 | 1.301 | | 4.1995 | 4.0212 | 0.1783 | 16.8 |
| Comp. Ex. 5 | 0.6M LiFSI+0.6M LiPF₆ | | | LiBOB (0.5) | 1 | 6 | 428.62 | 1.808 | 1.952 | 1.080 | 2.222 | 1.229 | | 4.1995 | 4.0388 | 0.1607 | |
| Comp. Ex. 6 | 0.6M LiFSI+0.6M LiPF₆ | | | LiDFOB (0.5) | 1 | 5 | 40.08 | 1.141 | 1.232 | 1.080 | 1.462 | 1.281 | | 4.1995 | 4.0318 | 0.1677 | |
| Comp. Ex. 7 | 1.2M LiPF₆ | | | | 150 | 70 | 33.56 | 1.187 | 1.493 | 1.258 | 1.622 | 1.366 | | 4.1995 | 4.0598 | 0.1397 | 30.6 |
| Comp. Ex. 8 | 0.6M LiFSI+0.6M LiPF₆ | LiNO₃ (0.5) | | | 1 | 70 | 14.88 | 1.035 | 1.252 | 1.210 | 1.322 | 1.277 | | 4.1994 | 3.8771 | 0.3223 | |
| Comp. Ex. 9 | 1.2M LiPF₆ | | Formula (3): C (0.5) | | 1 | 5 | 37.72 | 1.189 | 1.301 | 1.094 | 1.622 | 1.364 | 0.947 | 4.1995 | 4.0430 | 0.1565 | 38.3 |

### [Configuration of Table 4 (Example 2-2 Series)]

Comparison between Examples 1 to 4 and Comparative Examples 2 to 4 showed that, depending on the concentration of LiFSI, the impedance and DCRs (initial DCR, DCR after 300 cycles, and DCR after 4-week enduring at 60°C) were reduced, and the effect of the reduction became significant by adding tris(trimethylsilyl)borate (Compound C) to the electrolyte solution.

Comparison between Examples 1 to 4 and Comparative Examples 2 to 4 showed that, depending on the concentration of LiFSI, the OCV difference (ΔV) before and after storage increased, i.e., self-discharge increased, but when tris(trimethylsilyl)borate was added to the electrolyte solution, the OCV difference (ΔV) before and after storage decreased, i.e., self-discharge was suppressed.

Comparison between Examples 2 to 4 and Comparative Examples 2 to 4 with the same salt composition and comparison between Comparative Example 9 and Comparative Example 1 with the same salt composition showed that the mixed salt composition containing LiFSI and LiPF₆ had higher effects of reducing the impedance, suppressing self-discharge and suppressing the DCR increase due to addition of tris(trimethylsilyl)borate, than the simple salt composition containing only LiPF₆.

Comparison between Comparative Examples 1 to 4, Comparative Example 7, Comparative Example 9, and Examples 2 to 9 showed that, depending on the concentration of LiFSI, the amount of electrodeposition after low-temperature cycles decreased, and degradation of the negative electrode due to low-temperature charging was reduced. It was also shown that the addition of tris(trimethylsilyl)borate to the simple salt composition containing only LiPF₆ increased the amount of lithium electrodeposited on the negative electrode during low-temperature cycles, and degradation of the negative electrode due to low temperature charging progressed. It was also shown that when tris(trimethylsilyl)borate was added to the mixed salt composition containing LiFSI and LiPF₆, the amount of electrodeposition after low-temperature cycles decreased, and degradation of the negative electrode due to low temperature charging was suppressed.

The reason for which the effects obtained due to addition of tris(trimethylsilyl)borate were higher for the mixed salt composition containing LiFSI and LiPF₆ than for the simple salt composition containing only LiPF₆ is considered to be that the coating film derived from an anionic component of LiFSI is formed on the interface between the positive and negative electrodes, so that the solubility of LiFSI is high and the viscosity of the electrolyte solution at low temperature is thereby reduced.

Comparison between Examples 3 and Examples 5 to 8 with the same salt composition showed that when CO₂ was dissolved in the electrolyte solution containing tris(trimethylsilyl)borate, the effects of reducing the impedance and DCR, suppressing self-discharge, and suppressing low-temperature electrodeposition were further enhanced. It was further shown that these effects became significant when the amount of CO₂ dissolved in the electrolyte solution exceeded 10 ppm by mass (e.g., 20 ppm by mass or more).

The reason for which these effects due to dissolution of CO₂ are enhanced is considered to be that a coating film derived from CO₂ is formed on the positive and negative electrodes, so that lithium ion intercalation (intercalation (insertion) reaction) on the positive electrode during storage is suppressed, side reactions in the positive electrode are suppressed, and low-temperature charging acceptability to the negative electrode is improved.

The reason for which the effect of suppressing self-discharge due to dissolution of CO₂ is higher for the electrolyte solution having the mixed salt composition containing LiFSI and LiPF₆ than for the simple salt composition containing only LiPF₆ is considered to be related to the order of formation of the coating film of the anionic component of FSI formed on the positive and negative electrodes during charging and the coating film of a lithium carbonate component from CO₂.

Comparison between Examples 5 and 9 and Comparative Example 8 with the same salt composition showed that when LiNO₃ was further added to the electrolyte solution containing tris(trimethylsilyl)borate, the impedance and the DCR significantly decreased. It was also shown that although self-discharge increased, the self-discharge due to addition of LiNO₃ was suppressed by dissolving CO₂ in the electrolyte solution.

Comparison between Example 3 and Examples 11 and 12 with the same salt composition (no CO₂ dissolved) showed that when trimethylsilyl polyphosphate (Compound M) or tris(trimethylsilyl) phosphate (Compound N) was further added to the electrolyte solution containing tris(trimethylsilyl)borate, the impedance and the DCR decreased.

Comparison of the DCR increase rates after 4-week enduring at 60°C with the same salt composition due to addition of tris(trimethylsilyl)borate showed that the DCR increase rate was significantly lower and the effect of suppressing DCR increase was higher, for the electrolyte solution having the mixed salt composition containing LiFSI and LiPF6 than for the simple salt composition containing only LiPF₆. The same results were shown for the DCR increase rate after 300 cycles with the same salt composition due to addition of tris(trimethylsilyl)borate. The reason for this is also considered to be that anion coating film of LiFSI is formed on the positive and negative electrodes.

### <Example 2-3 Series>

### [Examples 1 to 4 and 10]

In a mixture solvent of ethylene carbonate (EC) and ethyl methyl carbonate (EMC) in a volume ratio of 3 : 7 (manufactured by Kishida Chemical Co., Ltd.) used as an electrolyte solution solvent, an electrolyte salt of a mixed salt composition containing LiFSI (manufactured by Nippon Shokubai Co., Ltd.) and LiPF₆ (manufactured by Stella Chemifa Corporation) was dissolved in concentrations shown in Table 5. To the solution obtained, triethyl borate (Compound D, manufactured by Tokyo Chemical Industry Co., Ltd.) was added in the content shown in Table 5 as the boron atom-containing compound (3) represented by the general formula (3). The resultant mixture was then stirred for a day. Thus, a non-aqueous electrolyte solution (reference electrolyte solution) was prepared. In Example 10, to the solution obtained above, bis(trimethylsilyl) sulfate (Compound J, manufactured by Tokyo Chemical Industry Co., Ltd.) was further added in the content shown in Table 5 as the sulfur atom-containing compound (5) represented by the general formula (5). Subsequently, in the same manner as described above, cells were produced using the respective reference electrolyte solutions obtained above and evaluated except that each electrolyte solution was not subjected to dissolving. Table 5 shows the results.

### [Examples 5 to 9 and 11]

Each non-aqueous electrolyte solution (reference electrolyte solution) was prepared in the same manner as described above. In Example 9, to the solution obtained above, lithium nitrate (LiNO₃, manufactured by Tokyo Chemical Industry Co., Ltd.) was added in the content shown in Table 5 as the nitric acid compound (12), and the resultant mixture was then stirred for a day and filtered with a membrane filter. In Example 11, to the solution obtained above, bis(trimethylsilyl) sulfate (Compound J) was further added in the content shown in Table 5. Subsequently, each reference electrolyte solution obtained was used to perform dissolving in the same manner as described above. Then, in the same manner as describe above, a cell was produced using the CO₂ dissolving electrolyte solution and evaluated. Table 5 shows the results.

### [Comparative Examples 1 to 6, 8, and 9]

In the same mixture solvent as described above, an electrolyte salt of mixed salt composition containing LiFSI and LiPF₆ or an electrolyte salt of simple salt composition containing only LiPF₆ was added in concentrations shown in Table 5. In Comparative Examples 1 to 4, the solution obtained above was used as a non-aqueous electrolyte solution (reference electrolyte solution). In Comparative Example 5, to the solution obtained above, lithium bis(oxalato)borate (LiBOB, manufactured by Tokyo Chemical Industry Co., Ltd.) was further added in the content shown in Table 5 as a fluoro-oxalate compound (13), and the resultant mixture was stirred for a day to prepare a non-aqueous electrolyte solution. In Comparative Example 6, to the solution obtained above, lithium difluoro(oxalato)borate (LiDFOB, manufactured by Tokyo Chemical Industry Co., Ltd.) was further added in the content shown in Table 5 as a fluoro-oxalate compound (13), and the resultant mixture was stirred for a day to prepare a non-aqueous electrolyte solution. In Comparative Example 8, to the solution obtained above, LiNO₃ was further added in the content shown in Table 5, and the resultant mixture was then stirred for a day and filtered with a membrane filter to prepare a non-aqueous electrolyte solution. In Comparative Example 9, to the solution obtained above, triethyl borate (Compound D) was further added in the content shown in Table 5, and the resultant mixture was then stirred for a day to prepare a non-aqueous electrolyte solution. Subsequently, in the same manner as described above, cells were produced using the respective reference electrolyte solutions obtained above and evaluated except that each electrolyte solution was not subjected to dissolving. Table 5 shows the results.

### [Comparative Example 7]

In the same mixture solvent as described above, an electrolyte salt of simple salt composition containing only LiPF₆ was dissolved in a concentration shown in Table 5. Thus, a non-aqueous electrolyte solution (reference electrolyte solution) was prepared. Subsequently, the reference electrolyte solution obtained above was used to perform dissolving in the same manner as described above. Then, in the same manner as describe above, a cell was produced using the CO₂ dissolving electrolyte solution and evaluated. Table 5 shows the results.

**[Table 5]**

| Non-aqueous electrolyte solution of Ex. 2-3 series | Salt composition | Type and content (wt%) of additive | | | Amount of CO₂ dissolved in non-aqueous electrolyte solution | | Real axis resistance (Impedance, Ω) at -30°C | DCR | | | | | | OCV | | | Amount of electrodeposition after low-temperature cycles |
|---|---|---|---|---|---|---|---|---|---|---|---|---|---|---|---|---|---|
| | | Nitric acid compound | Specific compound | Fluorooxalato compound | Initial value (ppm) | Value after conditioning | | Initial value (Ω) | Value (Ω) after 300 cycles | DCR increase rate after 300 cycles | After 4-week enduring at 60°C (Ω) | DCR increase rate after 4-week enduring at 60°C | DCR increase rate at the same salt composition | Initial value (V) | After 4-week storage at 60°C | Difference (ΔV) before and after storage | |
| Ex. 1 | 0.1M LiFSI+1.1M LiPF₆ | | Formula (3): D (0.5) | | 1 | 6 | 19.32 | 1.051 | 1.259 | 1.198 | 1.361 | 1.295 | | 4.1996 | 4.0425 | 0.1571 | 27.1 |
| Ex. 2 | 0.2M LiFSI+1.0M LiPF₆ | | Formula (3): D (0.5) | | 1 | 6 | 19.11 | 1.047 | 1.249 | 1.193 | 1.356 | 1.295 | 0.879 | 4.1996 | 4.0402 | 0.1594 | 23.1 |
| Ex. 3 | 0.6M LiFSI+0.6M LiPF₆ | | Formula (3): D (0.5) | | 1 | 5 | 18.92 | 1.041 | 1.246 | 1.197 | 1.322 | 1.270 | 0.914 | 4.1996 | 4.0386 | 0.1610 | 16.5 |
| Ex. 4 | 1M LiFSI+0.2M LiPF₆ | | Formula (3): D (0.5) | | 1 | 5 | 18.73 | 1.031 | 1.231 | 1.194 | 1.302 | 1.263 | 0.922 | 4.1996 | 4.0370 | 0.1626 | 14.3 |
| Ex. 5 | 0.6M LiFSI+0.6M LiPF₆ | | Formula (3): D (0.5) | | 150 | 78 | 17.69 | 0.99 6 | 191 | 1.196 | 1.265 | 1.270 | | 4.1996 | 4.0823 | 0.1173 | 15.4 |
| Ex. 6 | 0.6M LiFSI+0.6M LiPF₆ | | Formula (3): D (0.5) | | 60 | 51 | 17.77 | 1.000 | 1.197 | 1.197 | 1.271 | 1.271 | | 4.1996 | 4.0811 | 0.1185 | 15.6 |
| Ex. 7 | 0.6M LiFSI+0.6M LiPF₆ | | Formula (3): D (0.5) | | 30 | 32 | 17.86 | 1.004 | 1.202 | 1.197 | 1.287 | 1.282 | | 4.1996 | 4.0794 | 0.1202 | 16.1 |
| | 0.6M LiFSI+0.6M LiPF₆ | | Formula (3): D (0.5) | | 10 | 12 | 18.22 | 1.008 | 1.207 | 1.198 | 1.302 | 1.292 | | 4.1996 | 4.0452 | 0.1544 | 16.3 |
| Ex. 8 Ex. 9 | 0.6M LiFSI+0.6M LiPF₆ | LiNO₃ (0.5) | Formula (3): D (0.5) | | 150 | 79 | 13.03 | 0.973 | 1.166 | 1.198 | 1.238 | 1.272 | | 4.1996 | 4.0701 | 0.1295 | 14.8 |
| Ex. 10 | 0.6M LiFSI+0.6M LiPF₆ | | Formula (3): D (0.5) | | 1 | 4 | 18.73 | 1.038 | 1.244 | 1.198 | 1.344 | 1.294 | | 4.1996 | 4.0391 | 0.1605 | |
| | | | Formula (5): J (0.5) | | | | | | | | | | | | | | |
| Ex. 11 | 0.6M LiFSI+0.6M LiPF₆ | | Formula (3): D (0.5) | | 150 | 77 | 17.51 | 0.995 | 1.192 | 1.198 | 1.264 | 1.270 | | 4.1996 | 4.0825 | 0.1171 | |
| | | | Formula (5): J (0.5) | | | | | | | | | | | | | | |
| Comp. Ex. 1 | 1.2M LiPF₆ | | | | 1 | 6 | 45.10 | 1.250 | 1.575 | 1.260 | 1.712 | 1.370 | | 4.1995 | 4.0431 | 0.1564 | 34.4 |
| Comp. Ex. 2 | 0.2M LiFSI+1.0M LiPF₆ | | | | 1 | 4 | 41.66 | 1.163 | 1.419 | 1.220 | 1.542 | 1.326 | | 4.1995 | 4.0322 | 0.1673 | 24.4 |
| Comp. Ex. 3 | 0.6M LiFSI+0.6M LiPF₆ | | | | 1 | 5 | 39.30 | 1.107 | 1.344 | 1.214 | 1.446 | 1.306 | | 4.1995 | 4.0282 | 0.1713 | 17.7 |
| Comp. Ex. 4 | 1M LiFSI+0.2M LiPF₆ | | | | 1 | 5 | 37.33 | 1.085 | 1.314 | 1.211 | 1.412 | 1.301 | | 4.1995 | 4.0212 | 0.1783 | 16.8 |
| Comp. Ex. 5 | 0.6M LiFSI+0.6M LiPF₆ | | | LiBOB (0.5) | 1 | 6 | 428.62 | 1.808 | 1.952 | 1.080 | 2.222 | 1.229 | | 4.1995 | 4.0388 | 0.1607 | |
| Comp. Ex. 6 | 0.6M LiFSI+0.6M LiPF₆ | | | LiDFOB (0.5) | 1 | 5 | 40.08 | 1.141 | 1.232 | 1.080 | 1.462 | 1.281 | | 4.1995 | 4.0318 | 0.1677 | |
| Comp. Ex. 7 | 1.2M LiPF₆ | | | | 150 | 70 | 33.56 | 1.187 | 1.493 | 1.258 | 1.622 | 1.366 | | 4.1995 | 4.0598 | 0.1397 | 30.6 |
| Comp. Ex. 8 | 0.6M LiFSI+0.6M LiPF₆ | LiNO₃ (0.5) | | | 1 | 70 | 14.88 | 1.035 | 1.252 | 1.210 | 1.322 | 1.277 | | 4.1994 | 3.8771 | 0.3223 | |
| Comp. Ex. 9 | 1.2M LiPF₆ | | Formula (3): D (0.5) | | 1 | 5 | 36.27 | 1.204 | 1.446 | 1.201 | 1.582 | 1.314 | 0.959 | 4.1995 | 4.0432 | 0.1563 | 39.6 |

### [Consideration of Table 5 (Example 2-3 Series)]

Comparison between Examples 1 to 4 and Comparative Examples 2 to 4 showed that, depending on the concentration of LiFSI, the impedance and DCRs (initial DCR, DCR after 300 cycles, and DCR after 4-week enduring at 60°C) were reduced, and the effect of the reduction became significant by adding triethyl borate (Compound D) to the electrolyte solution.

Comparison between Examples 1 to 4 and Comparative Examples 2 to 4 showed that, depending on the concentration of LiFSI, the OCV difference (ΔV) before and after storage increased, i.e., self-discharge increased, but when triethyl borate was added to the electrolyte solution, the OCV difference (ΔV) before and after storage decreased, i.e., self-discharge was suppressed.

Comparison between Examples 2 to 4 and Comparative Examples 2 to 4 with the same salt composition and comparison between Comparative Example 9 and Comparative Example 1 with the same salt composition showed that the mixed salt composition containing LiFSI and LiPF₆ had higher effects of reducing the impedance, suppressing self-discharge, and suppressing the DCR increase due to addition of triethyl borate, than the simple salt composition containing only LiPF₆.

Comparison between Comparative Examples 1 to 4, Comparative Example 7, Comparative Example 9, and Examples 2 to 9 showed that, depending on the concentration of LiFSI, the amount of electrodeposition after low-temperature cycles decreased, and degradation of the negative electrode due to low-temperature charging was reduced. It was also shown that the addition of triethyl borate to the simple salt composition containing only LiPF₆ increased the amount of lithium electrodeposited on the negative electrode during low-temperature cycles, and degradation of the negative electrode due to low temperature charging progressed. It was also shown that when triethyl borate was added to the mixed salt composition containing LiFSI and LiPF₆, the amount of electrodeposition after low-temperature cycles decreased, and degradation of the negative electrode due to low temperature charging was suppressed.

The reason for which the effects obtained due to addition of triethyl borate were higher for the mixed salt composition containing LiFSI and LiPF₆ than for the simple salt composition containing only LiPF₆ is considered to be that the coating film derived from an anionic component of LiFSI is formed on the interface between the positive and negative electrodes, so that the solubility of LiFSI is high and the viscosity of the electrolyte solution at low temperature is thereby reduced.

Comparison between Examples 3 and Examples 5 to 8 with the same salt composition showed that when CO₂ was dissolved in the electrolyte solution containing triethyl borate, the effects of reducing the impedance and DCR, suppressing self-discharge, and suppressing low-temperature electrodeposition were further enhanced. It was further shown that these effects became significant when the amount of CO₂ dissolved in the electrolyte solution exceeded 10 ppm by mass (e.g., 20 ppm by mass or more).

The reason for which these effects due to dissolution of CO₂ are enhanced is considered to be that a coating film derived from CO₂ is formed on the positive and negative electrodes, so that lithium ion intercalation (intercalation (insertion) reaction) on the positive electrode during storage is suppressed, side reactions in the positive electrode are suppressed, and low-temperature charging acceptability to the negative electrode is improved.

Comparison between Examples 5 and 9 and Comparative Example 8 with the same salt composition showed that when LiNO₃ was further added to the electrolyte solution containing triethyl borate, the impedance and the DCR significantly decreased. It was also shown that although self-discharge increased, the self-discharge due to addition of LiNO₃ was suppressed by dissolving CO₂ in the electrolyte solution.

The reason for which the effect of suppressing self-discharge due to dissolution of CO₂ is higher for the electrolyte solution having the mixed salt composition containing LiFSI and LiPF₆ than for the simple salt composition containing only LiPF₆ is considered to be related to the order of formation of the coating film of the anionic component of FSI formed on the positive and negative electrodes during charging and the coating film of a lithium carbonate component from CO₂.

Comparison between Example 3 and Example 10 with the same salt composition (no CO₂ dissolved) and comparison between Example 5 and Example 11 with the same salt composition (CO₂ dissolved) showed that when bis(trimethylsilyl) sulfate (Compound J) was further added to the electrolyte solution containing triethyl borate, the impedance and the DCR significantly decreased.

Comparison of the DCR increase rates after 4-week enduring at 60°C with the same salt composition due to addition of triethyl borate showed that the DCR increase rate was significantly lower and the effect of suppressing the DCR increase was higher, for the electrolyte solution having the mixed salt composition containing LiFSI and LiPF6 than for the simple salt composition containing only LiPF₆. The same results were shown for the DCR increase rate after 300 cycles with the same salt composition due to addition of triethyl borate. The reason for this is also considered to be that anion coating film of LiFSI is formed on the positive and negative electrodes.

### <Example 2-4 Series>

### [Examples 1 to 4 and 10]

In a mixture solvent of ethylene carbonate (EC) and ethyl methyl carbonate (EMC) in a volume ratio of 3 : 7 (manufactured by Kishida Chemical Co., Ltd.) used as an electrolyte solution solvent, an electrolyte salt of a mixed salt composition containing LiFSI (manufactured by Nippon Shokubai Co., Ltd.) and LiPF₆ (manufactured by Stella Chemifa Corporation) was dissolved in concentrations shown in Table 6. To the solution obtained, tris(2,2,2)trifluoroethyl borate (Compound E, manufactured by Tokyo Chemical Industry Co., Ltd.) was added in the content shown in Table 6 as the boron atom-containing compound (3) represented by the general formula (3). The resultant mixture was then stirred for a day. Thus, a non-aqueous electrolyte solution (reference electrolyte solution) was prepared. In Example 10, to the solution obtained above, trimethylsilyl trifluoromethane sulfonate (Compound I, manufactured by Tokyo Chemical Industry Co., Ltd.) was further added in the content shown in Table 6 as a sulfur atom-containing compound (5) represented by the general formula (5). Subsequently, in the same manner as described above, cells were produced using the respective reference electrolyte solutions obtained above and evaluated except that each electrolyte solution was not subjected to dissolving. Table 6 shows the results.

### [Examples 5 to 9 and 11]

Each non-aqueous electrolyte solution (reference electrolyte solution) was prepared in the same manner as described above. In Example 9, to the solution obtained above, lithium nitrate (LiNO₃, manufactured by Tokyo Chemical Industry Co., Ltd.) was added in the content shown in Table 6 as the nitric acid compound (12), and the resultant mixture was then stirred for a day and filtered with a membrane filter. In Example 11, to the solution obtained above, trimethylsilyl trifluoromethane sulfonate (Compound I) was further added in the content shown in Table 6. Subsequently, each reference electrolyte solution obtained was used to perform dissolving in the same manner as described above. Then, in the same manner as describe above, a cell was produced using the CO₂ dissolving electrolyte solution and evaluated. Table 6 shows the results.

### [Comparative Examples 1 to 6, 8, and 9]

In the same mixture solvent as described above, an electrolyte salt of mixed salt composition containing LiFSI and LiPF₆ or an electrolyte salt of simple salt composition containing only LiPF₆ was added in concentrations shown in Table 6. In Comparative Examples 1 to 4, the solution obtained above was used as a non-aqueous electrolyte solution (reference electrolyte solution). In Comparative Example 5, to the solution obtained above, lithium bis(oxalato)borate (LiBOB, manufactured by Tokyo Chemical Industry Co., Ltd.) was further added in the content shown in Table 6 as a fluoro-oxalate compound (13), and the resultant mixture was stirred for a day to prepare a non-aqueous electrolyte solution. In Comparative Example 6, to the solution obtained above, lithium difluoro(oxalato)borate (LiDFOB, manufactured by Tokyo Chemical Industry Co., Ltd.) was further added in the content shown in Table 6 as a fluoro-oxalate compound (13), and the resultant mixture was stirred for a day to prepare a non-aqueous electrolyte solution. In Comparative Example 8, to the solution obtained above, LiNO₃ was further added in the content shown in Table 6, and the resultant mixture was then stirred for a day and filtered with a membrane filter to prepare a non-aqueous electrolyte solution. In Comparative Example 9, to the solution obtained above, tris(2,2,2)trifluoroethyl borate (Compound E) was further added in the content shown in Table 6, and the resultant mixture was then stirred for a day to prepare a non-aqueous electrolyte solution. Subsequently, in the same manner as described above, cells were produced using the respective reference electrolyte solutions obtained above and evaluated except that each electrolyte solution was not subjected to dissolving. Table 6 shows the results.

### [Comparative Example 7]

In the same mixture solvent as described above, an electrolyte salt of simple salt composition containing only LiPF₆ was dissolved in a concentration shown in Table 6. Thus, a non-aqueous electrolyte solution (reference electrolyte solution) was prepared. Subsequently, the reference electrolyte solution obtained above was used to perform dissolving in the same manner as described above. Then, in the same manner as describe above, a cell was produced using the CO₂ dissolving electrolyte solution and evaluated. Table 6 shows the results.

**[Table 6]**

| Non-aqueous electrolyte solution of Ex. 2-4 series | Salt composition | Type and content (wt%) of additive | | | Amount of CO₂ dissolved in non-aqueous electrolyte solution | | Real axis resistance (Impedance, Ω) at -30°C | DCR | | | | | | OCV | | | Amount of electrodeposition after low-temperature cycles |
|---|---|---|---|---|---|---|---|---|---|---|---|---|---|---|---|---|---|
| | | Nitric acid compound | Specific compound | Fluorooxalato compound | Initial value (ppm) | Value after conditioning | | Initial value (Ω) | Value (Ω) after 300 cycles | DCR increase rate after 300 cycles | After 4-week enduring at 60°C (Ω) | DCR increase rate after 4-week enduring at 60°C | DCR increase rate at the same salt composition | Initial value (V) | After 4-week storage at 60°C | Difference (ΔV) before and after storage | |
| Ex. 1 | 0.1M LiFSI+1.1M LiPF₆ | | Formula (3): E (0.5) | | 1 | 6 | 20.68 | 1.085 | 1.347 | 1.241 | 1.454 | 1.339 | | 4.1996 | 4.0467 | 0.1529 | 23.9 |
| Ex. 2 | 02M LiFSI+ 1.0M LiPF₆ | | Formula (3): E (0.5) | | 1 | 6 | 20.38 | 1.064 | 1.300 | 1.221 | 1.430 | 1.343 | 0.927 | 4.1996 | 4.0421 | 0.1575 | 19.4 |
| Ex. 3 | 0.6M LiFSI+0.6M LiPF₆ | | Formula (3): E (0.5) | | 1 | 5 | 19.98 | 1.054 | 1.276 | 1.211 | 1.334 | 1.266 | 0.923 | 4.1996 | 4.0379 | 0.1617 | 16.3 |
| Ex. 4 | 1M LiFSI+0.2M LiPF₆ | | Formula (3): E (0.5) | | 1 | 5 | 19.58 | 1.033 | 1.250 | 1.210 | 1.301 | 1.260 | 0.921 | 4.1996 | 4.0341 | 0.1655 | 15.5 |
| Ex. 5 | 0.6M LiFSI+0.6M LiPF₆ | | Formula (3): E (0.5) | | 150 | 79 | 18.59 | 0.998 | 1.208 | 1.210 | 1.258 | 1.261 | | 4.1996 | 4.0808 | 0.1188 | 15.4 |
| Ex. 6 | 0.6M LiFSI+0.6M LiPF₆ | | Formula (3): E (0.5) | | 60 | 54 | 18.66 | 0.998 | 1.209 | 1.211 | 1.262 | 1.264 | | 4.1996 | 4.0796 | 0.1200 | 15.7 |
| Ex. 7 | 0.6M LiFSI+0.6M LiPF₆ | | Formula (3): E (0.5) | | 30 | 30 | 18.76 | 1.000 | 1.211 | 1.211 | 1.302 | 1.302 | | 4.1996 | 4.0774 | 0.1222 | 16.1 |
| Ex. 8 | 0.6M LiFSI+0.6M LiPF₆ | | Formula (3): E (0.5) | | 10 | 15 | 18.83 | 1.006 | 1.224 | 1.217 | 1.322 | 1.314 | | 4.1996 | 4.0466 | 0.1530 | 16.3 |
| Ex. 9 | 0.6M LiFSI+0.6M LiPF₆ | LiNO₃ (0.5) | Formula (3): E (0.5) | | 150 | 77 | 13.61 | 0.979 | 1.181 | 1.206 | 1.236 | 1.263 | | 4.1996 | 4.0694 | 0.1302 | 15.7 |
| Ex. 10 | 0.6M LiFSI+0.6M LiPF₆ | | Formula (3): E (0.5) | | 1 | 4 | 19.91 | 1.051 | 1.269 | 1.208 | 1.328 | 1.264 | | 4.1996 | 4.0401 | 0.1595 | |
| | | | Formula (5): I (0.5) | | | | | | | | | | | | | | |
| Ex. 11 | 0.6M LiFSI+0.6M LiPF₆ | | Formula (3): E (0.5) | | 150 | 71 | 18.58 | 0.997 | 1.203 | 1.207 | 1.256 | 1.260 | | 4.1996 | 4.0811 | 0.1185 | |
| | | | Formula (5): I (0.5) | | | | | | | | | | | | | | |
| Comp. Ex. 1 | 1.2M LiPF₆ | | | | 1 | 6 | 45.10 | 1.250 | 1.575 | 1.260 | 1.712 | 1.370 | | 4.1995 | 4.0431 | 0.1564 | 34.4 |
| Comp. Fx. 2 | 0.2M LiFSI+1.0M LiPF₆ | | | | 1 | 4 | 41.66 | 1.163 | 1.419 | 1.220 | 1.542 | 1.326 | | 4.1995 | 4.0322 | 0.1673 | 24.4 |
| Comp. Fx. 3 | 0.6M LiFSI+0.6M LiPF₆ | | | | 1 | 5 | 39.30 | 1.107 | 1.344 | 1.214 | 1.446 | 1.306 | | 4.1995 | 4.0282 | 0.1713 | 17.7 |
| Comp. Ex. 4 | 1M LiFSI+0.2M LiPF₆ | | | | 1 | 5 | 37.33 | 1.085 | 1.314 | 1.211 | 1.412 | 1.301 | | 4.1995 | 4.0212 | 0.1783 | 16.8 |
| Comp. Fx. 5 | 0.6M LiFSI+0.6M LiPF₆ | | | LiBOB (0.5) | 1 | 6 | 428.62 | 1.808 | 1.952 | 1.080 | 2.222 | 1.229 | | 4.1995 | 4.0388 | 0.1607 | |
| Comp. Fx. 6 | 0.6M LiFSI+0.6M LiPF₆ | | | LiDFOB (0.5) | 1 | 5 | 40.08 | 1.141 | 1.232 | 1.080 | 1.462 | 1.281 | | 4.1995 | 4.0318 | 0.1677 | |
| Comp. Ex. 7 | 1.2M LiPF₆ | | | | 150 | 70 | 33.56 | 1.187 | 1.493 | 1.258 | 1.622 | 1.366 | | 4.1995 | 4.0598 | 0.1397 | 30.6 |
| Comp. Fx. 8 | 0.6M LiFSI+0.6M LiPF₆ | LiNO₃ (0.5) | | | 1 | 70 | 14.88 | 1.035 | 1.252 | 1.210 | 1.322 | 1.277 | | 4.1994 | 3.8771 | 0.3223 | |
| Comp. Ex. 9 | 1.2M LiPF₆ | | Formula (3): E (0.5) | | 1 | 5 | 39.65 | 1.199 | 1.501 | 1.252 | 1.633 | 1.362 | 0.954 | 4.1995 | 4.0432 | 0.1563 | 42.2 |

### [Consideration of Table 6 (Example 2-4 Series)]

Comparison between Examples 1 to 4 and Comparative Examples 2 to 4 showed that, depending on the concentration of LiFSI, the impedance and DCRs (initial DCR and DCR after 300 cycles) were reduced, and the effect of the reduction became significant by adding tris(2,2,2)trifluoroethyl borate (Compound E) to the electrolyte solution.

Comparison between Examples 1 to 4 and Comparative Examples 2 to 4 showed that, depending on the concentration of LiFSI, the OCV difference (ΔV) before and after storage increased, i.e., self-discharge increased, but when tris(2,2,2)trifluoroethyl borate was added to the electrolyte solution, the OCV difference (ΔV) before and after storage decreased, i.e., self-discharge was suppressed.

Comparison between Examples 2 to 4 and Comparative Examples 2 to 4 with the same salt composition and comparison between Comparative Example 9 and Comparative Example 1 with the same salt composition showed that the mixed salt composition containing LiFSI and LiPF₆ had higher effects of reducing the impedance, suppressing self-discharge, and suppressing the DCR increase due to addition of tris(2,2,2)trifluoroethyl borate, than the simple salt composition containing only LiPF₆.

Comparison between Comparative Examples 1 to 4, Comparative Example 7, Comparative Example 9, and Examples 2 to 9 showed that, depending on the concentration of LiFSI, the amount of electrodeposition after low-temperature cycles decreased, and degradation of the negative electrode due to low-temperature charging was reduced. It was also shown that the addition of tris(2,2,2)trifluoroethyl borate to the simple salt composition containing only LiPF₆ increased the amount of lithium electrodeposited on the negative electrode during low-temperature cycles, and degradation of the negative electrode due to low temperature charging progressed. It was also shown that when tris(2,2,2)trifluoroethyl borate was added to the mixed salt composition containing LiFSI and LiPF₆, the amount of electrodeposition after low-temperature cycles decreased, and degradation of the negative electrode due to low temperature charging was suppressed.

The reason for which the effects obtained due to addition of tris(2,2,2)trifluoroethyl borateare were higher for the mixed salt composition containing LiFSI and LiPF₆ than for the simple salt composition containing only LiPF₆ is considered to be that the coating film derived from an anionic component of LiFSI is formed on the interface between the positive and negative electrodes, so that the solubility of LiFSI is high and the viscosity of the electrolyte solution at low temperature is thereby reduced.

Comparison between Examples 3 and Examples 5 to 8 with the same salt composition showed that when CO₂ was dissolved in the electrolyte solution containing tris(2,2,2)trifluoroethyl borate, the effects of reducing the impedance and DCR, suppressing self-discharge, and suppressing low-temperature electrodeposition were further enhanced. It was further shown that these effects became significant when the amount of CO₂ dissolved in the electrolyte solution exceeded 10 ppm by mass (e.g., 20 ppm by mass or more).

The reason for which these effects due to dissolution of CO₂ are enhanced is considered to be that a coating film derived from CO₂ is formed on the positive and negative electrodes, so that lithium ion intercalation (intercalation (insertion) reaction) on the positive electrode during storage is suppressed, side reactions in the positive electrode are suppressed, and low-temperature charging acceptability to the negative electrode is improved.

Comparison between Examples 5 and 9 and Comparative Example 8 with the same salt composition showed that when LiNO₃ was further added to the electrolyte solution containing tris(2,2,2)trifluoroethyl borate, the impedance and the DCR significantly decreased. It was also shown that although self-discharge increased, the self-discharge due to addition of LiNO₃ was suppressed by dissolving CO₂ in the electrolyte solution.

The reason for which the effect of suppressing self-discharge due to dissolution of CO₂ is higher for the electrolyte solution having the mixed salt composition containing LiFSI and LiPF₆ than for the simple salt composition containing only LiPF₆ is considered to be related to the order of formation of the coating film of the anionic component of FSI formed on the positive and negative electrodes during charging and the coating film of a lithium carbonate component from CO₂.

Comparison between Example 3 and Example 10 with the same salt composition (no CO₂ dissolved) and comparison between Example 5 and Example 11 with the same salt composition (CO₂ dissolved) showed that when trimethylsilyl trifluoromethane sulfonate (Compound I) was further added to the electrolyte solution containing tris(2,2,2)trifluoroethyl borate, the impedance and the DCR significantly decreased.

Comparison of the DCR increase rates after 4-week enduring at 60°C with the same salt composition due to addition of tris(2,2,2)trifluoroethyl borate showed that the DCR increase rate was significantly lower and the effect of suppresing DCR increase was higher, for the electrolyte solution having the mixed salt composition containing LiFSI and LiPF6 than for the simple salt composition containing only LiPF₆. The same results were shown for the DCR increase rate after 300 cycles with the same salt composition due to addition of tris(2,2,2)trifluoroethyl borate. The reason for this is also considered to be that anion coating film of LiFSI is formed on the positive and negative electrodes.

### <Example 2-5 Series>

### [Examples 1 to 4 and 10]

In a mixture solvent of ethylene carbonate (EC) and ethyl methyl carbonate (EMC) in a volume ratio of 3 : 7 (manufactured by Kishida Chemical Co., Ltd.) used as an electrolyte solution solvent, an electrolyte salt of a mixed salt composition containing LiFSI (manufactured by Nippon Shokubai Co., Ltd.) and LiPF₆ (manufactured by Stella Chemifa Corporation) was dissolved in concentrations shown in Table 7. To the solution obtained above, tributyl borate (Compound F, manufactured by Tokyo Chemical Industry Co., Ltd.) was added in the content shown in Table 7 as the boron atom-containing compound (3) represented by the general formula (3). The resultant mixture was then stirred for a day. Thus, a non-aqueous electrolyte solution (reference electrolyte solution) was prepared. In Example 10, to the solution obtained above, bis(trimethylsilyl) sulfate (Compound J, manufactured by Tokyo Chemical Industry Co., Ltd.) was further added in the content shown in Table 7 as a sulfur atom-containing compound (5) represented by the general formula (5). Subsequently, in the same manner as described above, cells were produced using the respective reference electrolyte solutions obtained above and evaluated except that each electrolyte solution was not subjected to dissolving. Table 7 shows the results.

### [Examples 5 to 9 and 11]

Each non-aqueous electrolyte solution (reference electrolyte solution) was prepared in the same manner as described above. In Example 9, to the solution obtained above, lithium nitrate (LiNO₃, manufactured by Tokyo Chemical Industry Co., Ltd.) was added in the content shown in Table 7 as the nitric acid compound (12), and the resultant mixture was then stirred for a day and filtered with a membrane filter. In Example 11, to the solution obtained above, bis(trimethylsilyl) sulfate (Compound J) was further added in the content shown in Table 7. Subsequently, each reference electrolyte solution obtained was used to perform dissolving in the same manner as described above. Then, in the same manner as describe above, a cell was produced using the CO₂ dissolving electrolyte solution and evaluated. Table 7 shows the results.

### [Comparative Examples 1 to 6, 8, and 9]

In the same mixture solvent as described above, an electrolyte salt of mixed salt composition containing LiFSI and LiPF₆ or an electrolyte salt of simple salt composition containing only LiPF₆ was added in concentrations shown in Table 7. In Comparative Examples 1 to 4, the solution obtained above was used as a non-aqueous electrolyte solution (reference electrolyte solution). In Comparative Example 5, to the solution obtained above, lithium bis(oxalato)borate (LiBOB, manufactured by Tokyo Chemical Industry Co., Ltd.) was further added in the content shown in Table 7 as a fluoro-oxalate compound (13), and the resultant mixture was stirred for a day to prepare a non-aqueous electrolyte solution. In Comparative Example 6, to the solution obtained above, lithium difluoro(oxalato)borate (LiDFOB, manufactured by Tokyo Chemical Industry Co., Ltd.) was further added in the content shown in Table 7 as a fluoro-oxalate compound (13), and the resultant mixture was stirred for a day to prepare a non-aqueous electrolyte solution. In Comparative Example 8, to the solution obtained above, LiNO₃ was further added in the content shown in Table 7, and the resultant mixture was then stirred for a day and filtered with a membrane filter to prepare a non-aqueous electrolyte solution. In Comparative Example 9, to the solution obtained above, tributyl borate (Compound F) was further added in the content shown in Table 7, and the resultant mixture was then stirred for a day to prepare a non-aqueous electrolyte solution. Subsequently, in the same manner as described above, cells were produced using the respective reference electrolyte solutions obtained above and evaluated except that each electrolyte solution was not subjected to dissolving. Table 7 shows the results.

### [Comparative Example 7]

In the same mixture solvent as described above, an electrolyte salt of simple salt composition containing only LiPF6 was dissolved in a concentration shown in Table 7. Thus, a non-aqueous electrolyte solution (reference electrolyte solution) was prepared. Subsequently, the reference electrolyte solution obtained above was used to perform dissolving in the same manner as described above. Then, in the same manner as describe above, a cell was produced using the CO₂ dissolving electrolyte solution and evaluated. Table 7 shows the results.

**[Table 7]**

| Non-aqueous electrolyte solution of Ex. 2-5 series | Salt composition | Type and content (wt/o) of additive | | | Amount of CO₂ dissolved in non-aqueous electrolyte solution | | Real axis resistance (Impedance, Ω) at -30°C | DCR | | | | | | OCV | | | Amount of electrodeposition after low-temperature cycles |
|---|---|---|---|---|---|---|---|---|---|---|---|---|---|---|---|---|---|
| | | Nitric acid compound | Specific compound | Fluorooxalato compound | Initial value (ppm) | Value after conditioning | | Initial value (Ω) | Value (Ω) after 300 cycles | DCR increase rate after 300 cycles | After 4-week enduring at 60°C (Ω) | DCR increase rate after 4-week enduring at 60°C | DCR increase rate at the same salt composition | Initial value (V) | After 4-week storage at 60°C | Difference (ΔV) before and after storage | |
| Ex. 1 | 0.1M LiFSI+1.1M LiPF₆ | | Formula (3): F (0.5) | | 1 | 6 | 20.39 | 1.073 | 1.348 | 1.257 | 1.368 | 1.275 | | 4.1996 | 4.0368 | 0.1628 | 26.1 |
| Ex. 2 | 02M LiFSI+1.0M LiPF₆ | | Formula (3): F (0.5) | | 1 | 5 | 20.19 | 1.067 | 1.300 | 1.218 | 1.354 | 1.268 | 0.878 | 4.1996 | 4.0333 | 0.1663 | 20.7 |
| Ex. 3 | 0.6M LiFSI+0.6M LiPF₆ | | Formula (3): F (0.5) | | 1 | 4 | 19.79 | 1.052 | 1.277 | 1.214 | 1.322 | 1.257 | 0.914 | 4.1996 | 4.0312 | 0.1684 | 16.6 |
| Ex. 4 | 1M LiFSI+0.2M LiPF₆ | | Formula (3): F (0.5) | | 1 | 4 | 19.55 | 1.033 | 1.249 | 1.210 | 1.292 | 1.251 | 0.915 | 4.1996 | 4.0286 | 0.1710 | 15.4 |
| Ex. 5 | 0.6M LiFSI+0.6M LiPF₆ | | Formula (3): F (0.5) | | 150 | 78 | 18.55 | 0.989 | 1.199 | 1.213 | 1.234 | 1.248 | | 4.1996 | 4.0601 | 0.1395 | 15.6 |
| Ex. 6 | 0.6M LiFSI+0.6M LiPF₆ | | Formula (3): F (0.5) | | 60 | 50 | 18.62 | 0.992 | 1.203 | 1.214 | 1.245 | 1.256 | | 4.1996 | 4.0585 | 0.1411 | 15.8 |
| Ex. 7 | 0.6M LiFSI+0.6M LiPF₆ | | Formula (3): F (0.5) | | 30 | 26 | 18.72 | 0.998 | 1.212 | 1.214 | 1.268 | 1.270 | | 4.1996 | 4.0572 | 0.1424 | 16.2 |
| Ex. 8 | 0.6M LiFSI+0.6M LiPF₆ | | Formula (3): F (0.5) | | 10 | 12 | 18.75 | 0.998 | 1.212 | 1.214 | 1.310 | 1.312 | | 4.1996 | 4.0362 | 0.1634 | 16.4 |
| Ex. 9 | 0.6M LiFSI+0.6M LiPF₆ | LiNO₃ (0.5) | Formula (3): F (0.5) | | 150 | 76 | 13.52 | 0.968 | 1.160 | 1.198 | 1.209 | 1.249 | | 4.1996 | 4.0521 | 0.1475 | 15.2 |
| Ex. 10 | 0.6M LiFSI+0.6M LiPF₆ | | Formula (3): F (0.5) | | 1 | 4 | 19.69 | 1.047 | 1.270 | 1.214 | 1.316 | 1.257 | | 4.1996 | 4.0321 | 0.1675 | |
| | | | Formula (5): J (0.5) | | | | | | | | | | | | | | |
| Ex. 11 | 0.6M LiFSI+0.6M LiPF₆ | | Formula (3): F (0.5) | | 150 | 76 | 18.48 | 0.988 | 1.198 | 1.213 | 1.226 | 1.241 | | 4.1996 | 4.0616 | 0.1380 | |
| | | | Formula (5): J (0.5) | | | | | | | | | | | | | | |
| Comp. Ex. 1 | 1.2M LiPF₆ | | | | 1 | 6 | 45.10 | 1.250 | 1.575 | 1.260 | 1.712 | 1.370 | | 4.1995 | 4.0431 | 0.1564 | 34.4 |
| Comp. Fx. 2 | 0.2M LiFSI+1.0M LiPF₆ | | | | 1 | 4 | 41.66 | 1.163 | 1.419 | 1.220 | 1.542 | 1.326 | | 4.1995 | 4.0322 | 0.1673 | 24.4 |
| Comp. Fx. 3 | 0.6M LiFSI+0.6M LiPF₆ | | | | 1 | 5 | 39.30 | 1.107 | 1.344 | 1.214 | 1.446 | 1.306 | | 4.1995 | 4.0282 | 0.1713 | 17.7 |
| Comp. Ex. 4 | 1M LiFSI+0.2M LiPF₆ | | | | 1 | 5 | 37.33 | 1.085 | 1.314 | 1.211 | 1.412 | 1.301 | | 4.1995 | 4.0212 | 0.1783 | 16.8 |
| Comp. Fx. 5 | 0.6M LiFSI+0.6M LiPF₆ | | | LiBOB (0.5) | 1 | 6 | 428.62 | 1.808 | 1.952 | 1.080 | 2.222 | 1.229 | | 4.1995 | 4.0388 | 0.1607 | |
| Comp. Fx. 6 | 0.6M LiFSI+0.6M LiPF₆ | | | LiDFOB (0.5) | 1 | 5 | 40.08 | 1.141 | 1.232 | 1.080 | 1.462 | 1.281 | | 4.1995 | 4.0318 | 0.1677 | |
| Comp. Ex. 7 | 1.2M LiPF₆ | | | | 150 | 70 | 33.56 | 1.187 | 1.493 | 1.258 | 1.622 | 1.366 | | 4.1995 | 4.0598 | 0.1397 | 30.6 |
| Comp. Fx. 8 | 0.6M LiFSI+0.6M LiPF₆ | LiNO₃ (0.5) | | | 1 | 70 | 14.88 | 1.035 | 1.252 | 1.210 | 1.322 | 1.277 | | 4.1994 | 3.8771 | 0.3223 | |
| Comp. Ex. 9 | 1.2M LiPF₆ | | Formula (3): F (0.5) | | 1 | 5 | 39.22 | 1.205 | 1.498 | 1.243 | 1.631 | 1.354 | 0.953 | 4.1994 | 4.0435 | 0.1559 | 44.4 |

### [Consideration of Table 7 (Example 2-5 Series)]

Comparison between Examples 1 to 4 and Comparative Examples 2 to 4 showed that, depending on the concentration of LiFSI, the impedance and DCRs (initial DCR, DCR after 300 cycles, and DCR after 4-week enduring at 60°C) were reduced, and the effect of the reduction became significant by adding tributyl borate (Compound F) to the electrolyte solution. Comparison between Examples 1 to 4 and Comparative Examples 2 to 4 showed that, depending on the concentration of LiFSI, the OCV difference (ΔV) before and after storage increased, i.e., self-discharge increased, but when tributyl borate was added to the electrolyte solution, the OCV difference (ΔV) before and after storage decreased, i.e., self-discharge was suppressed.

Comparison between Examples 2 to 4 and Comparative Examples 2 to 4 with the same salt composition and comparison between Comparative Example 9 and Comparative Example 1 with the same salt composition showed that the mixed salt composition containing LiFSI and LiPF₆ had higher effects of reducing the impedance, suppressing self-discharge and suppressing the DCR increase due to addition of tributyl borate, than the simple salt composition containing only LiPF₆.

Comparison between Comparative Examples 1 to 4, Comparative Example 7, Comparative Example 9, and Examples 2 to 9 showed that, depending on the concentration of LiFSI, the amount of electrodeposition after low-temperature cycles decreased, and degradation of the negative electrode due to low-temperature charging was reduced. It was also shown that the addition of tributyl borate to the simple salt composition containing only LiPF₆ increased the amount of lithium electrodeposited on the negative electrode during low-temperature cycles, and degradation of the negative electrode due to low temperature charging progressed. It was also shown that when tributyl borate was added to the mixed salt composition containing LiFSI and LiPF₆, the amount of electrodeposition after low-temperature cycles decreased, and degradation of the negative electrode due to low temperature charging was suppressed.

The reason for which the effects obtained due to addition of tributyl borate were higher for the mixed salt composition containing LiFSI and LiPF₆ than for the simple salt composition containing only LiPF₆ is considered to be that the coating film derived from an anionic component of LiFSI is formed on the interface between the positive and negative electrodes, so that the solubility of LiFSI is high and the viscosity of the electrolyte solution at low temperature is thereby reduced.

Comparison between Examples 3 and Examples 5 to 8 with the same salt composition showed that when CO₂ was dissolved in the electrolyte solution containing tributyl borate, the effects of reducing the impedance and DCR, suppressing self-discharge, and suppressing low-temperature electrodeposition were further enhanced. It was further shown that these effects became significant when the amount of CO₂ dissolved in the electrolyte solution exceeded 10 ppm by mass (e.g., 20 ppm by mass or more).

The reason for which these effects due to dissolution of CO₂ are enhanced is considered to be that a coating film derived from CO₂ is formed on the positive and negative electrodes, so that lithium ion intercalation (intercalation (insertion) reaction) on the positive electrode during storage is suppressed, side reactions in the positive electrode are suppressed, and low-temperature charging acceptability to the negative electrode is improved.

Comparison between Examples 5 and 9 and Comparative Example 8 with the same salt composition showed that when LiNO₃ was further added to the electrolyte solution containing tributyl borate, the impedance and the DCR significantly decreased. It was also shown that although self-discharge increased, the self-discharge due to addition of LiNO₃ was suppressed by dissolving CO₂ in the electrolyte solution.

The reason for which the effect of suppressing self-discharge due to dissolution of CO₂ is higher for the electrolyte solution having the mixed salt composition containing LiFSI and LiPF₆ than for the simple salt composition containing only LiPF₆ is considered to be related to the order of formation of the coating film of the anionic component of FSI formed on the positive and negative electrodes during charging and the coating film of a lithium carbonate component from CO₂.

Comparison between Example 3 and Example 10 with the same salt composition (no CO₂ dissolved) and comparison between Example 5 and Example 11 with the same salt composition (CO₂ dissolved) showed that when bis(trimethylsilyl) sulfate (Compound J) was further added to the electrolyte solution containing tributyl borate, the impedance and the DCR significantly decreased.

Comparison of the DCR increase rates after 4-week enduring at 60°C with the same salt composition due to addition of tributyl borate showed that the DCR increase rate was significantly lower and the effect of suppressing the DCR increase was higher, for the electrolyte solution having the mixed salt composition containing LiFSI and LiPF6 than for the simple salt composition containing only LiPF₆. The same results were shown for the DCR increase rate after 300 cycles with the same salt composition due to addition of tributyl borate. The reason for this is also considered to be that anion coating film of LiFSI is formed on the positive and negative electrodes.

### <Example 3-1 Series>

### [Examples 1 to 4]

In a mixture solvent of ethylene carbonate (EC) and ethyl methyl carbonate (EMC) in a volume ratio of 3 : 7 (manufactured by Kishida Chemical Co., Ltd.) used as an electrolyte solution solvent, an electrolyte salt of a mixed salt composition containing LiFSI (manufactured by Nippon Shokubai Co., Ltd.) and LiPF₆ (manufactured by Stella Chemifa Corporation) was dissolved in concentrations shown in Table 8. To the solution obtained above, trimethylsilyl acetate (Compound G, manufactured by Tokyo Chemical Industry Co., Ltd.) was added in the content shown in Table 8 as the carbon atom-containing compound (4) represented by the general formula (4). The resultant mixture was then stirred for a day. Thus, a non-aqueous electrolyte solution (reference electrolyte solution) was prepared. Subsequently, in the same manner as described above, cells were produced using the respective reference electrolyte solutions obtained above and evaluated except that each electrolyte solution was not subjected to dissolving. Table 8 shows the results.

### [Examples 5 to 8]

Each non-aqueous electrolyte solution (reference electrolyte solution) was prepared in the same manner as described above. Subsequently, each reference electrolyte solution obtained was used to perform dissolving in the same manner as described above. Then, in the same manner as describe above, a cell was produced using the CO₂ dissolving electrolyte solution and evaluated. Table 8 shows the results.

### [Comparative Examples 1 to 6, 8, and 9]

In the same mixture solvent as described above, an electrolyte salt of mixed salt composition containing LiFSI and LiPF₆ or an electrolyte salt of simple salt composition containing only LiPF₆ was dissolved in concentrations shown in Table 8. In Comparative Examples 1 to 4, the solution obtained above was used as a non-aqueous electrolyte solution (reference electrolyte solution). In Comparative Example 5, to the solution obtained above, lithium bis(oxalato)borate (LiBOB, manufactured by Tokyo Chemical Industry Co., Ltd.) was further added in the content shown in Table 8 as a fluoro-oxalate compound (13), and the resultant mixture was stirred for a day to prepare a non-aqueous electrolyte solution. In Comparative Example 6, to the solution obtained above, lithium difluoro(oxalato)borate (LiDFOB, manufactured by Tokyo Chemical Industry Co., Ltd.) was further added in the content shown in Table 8 as a fluoro-oxalate compound (13), and the resultant mixture was stirred for a day to prepare a non-aqueous electrolyte solution. In Comparative Example 8, to the solution obtained above, lithium nitrate (LiNO₃, manufactured by Tokyo Chemical Industry Co., Ltd.) was added in the content shown in Table 8 as the nitric acid compound (12), and the resultant mixture was then stirred for a day and filtered with a membrane filter. Thus, a non-aqueous electrolyte solution was prepared. In Comparative Example 9, to the solution obtained above, trimethylsilyl acetate (Compound G) was further added in the content shown in Table 8, and the resultant mixture was then stirred for a day to prepare a non-aqueous electrolyte solution. Subsequently, in the same manner as described above, cells were produced using the respective reference electrolyte solutions obtained above and evaluated except that each electrolyte solution was not subjected to dissolving. Table 8 shows the results.

### [Comparative Example 7]

In the same mixture solvent as described above, an electrolyte salt of simple salt composition containing only LiPF₆ was dissolved in a concentration shown in Table 8. Thus, a non-aqueous electrolyte solution (reference electrolyte solution) was prepared. Subsequently, the reference electrolyte solution obtained above was used to perform dissolving in the same manner as described above. Then, in the same manner as describe above, a cell was produced using the CO₂ dissolving electrolyte solution and evaluated. Table 8 shows the results.

**[Table 8]**

| Non-aqueous electrolyte solution of Ex. 3-1 series | Salt composition | Type and content (wt/o) of additive | | | Amount of CO₂ dissolved in non-aqueous electrolyte solution | | Real axis resistance (impedance, Ω) at -30°C | DCR | | | | | | OCV | | | Amount of electrodeposition after low-temperature cycles |
|---|---|---|---|---|---|---|---|---|---|---|---|---|---|---|---|---|---|
| | | Nitric acid compound | Specific compound | Fluorooxalato compound | Initial value (ppm) | Value after conditioning | | Initial value (Ω) | Value (Ω) after 300 cycles | DCR increase rate after 300 cycles | After 4-week enduring at 60°C (Ω) | DCR increase rate after 4-week enduring at 60°C | DCR increase rate at the same salt composition | Initial value (V) | After 4-week storage at 60°C | Difference (ΔV) before and after storage | |
| Ex. 1 | 0.1 M LiFSI+1.1 M LiPF₆ | | Formula(4): G (0.5) | | 1 | 4 | 25.63 | 1.112 | 1.413 | 1.271 | 1.511 | 1.359 | | 4.1995 | 4.0431 | 0.1564 | 30.3 |
| Ex. 2 | 0.2M LiFSI+1.0M LiPF₆ | | Formula(4): G (0.5) | | 1 | 5 | 25.34 | 1.103 | 1.352 | 1.225 | 1.455 | 1.319 | 0.944 | 4.1995 | 4.0425 | 0.1570 | 24.1 |
| Ex. 3 | 0.6M LiFSI+0.6M LiPF₆ | | Formula(4): G (0.5) | | 1 | 6 | 24.53 | 1.087 | 1.335 | 1.228 | 1.356 | 1.247 | 0.938 | 4.1995 | 4.0384 | 0.1611 | 17.4 |
| Ex. 4 | 1M LiFSI+0.2M LiPF₆ | | Formula(4): G (0.5) | | 1 | 5 | 24.04 | 1.076 | 1.313 | 1.220 | 1.324 | 1.230 | 0.938 | 4.1995 | 4.0313 | 0.1682 | 16.1 |
| Ex. 5 | 0.6M LiFSI+0.6M LiPF₆ | | Formula(4): G (0.5) | | 150 | 71 | 22.79 | 1.065 | 1.295 | 1.216 | 1.322 | 1.241 | | 4.1995 | 4.0622 | 0.1373 | 16.8 |
| Ex. 6 | 0.6M LiFSI+0.6M LiPF₆ | | Formula(4): G (0.5) | | 60 | 46 | 23.75 | 1.067 | 1.299 | 1.217 | 1.331 | 1.247 | | 4.1995 | 4.0618 | 0.1377 | 17.1 |
| Ex. 7 | 0.6M LiFSI+0.6M LiPF₆ | | Formula(4): G (0.5) | | 40 | 30 | 24.16 | 1.071 | 1.306 | 1.220 | 1.346 | 1.257 | | 4.1994 | 4.0615 | 0.1379 | 17.2 |
| Ex. 8 | 0.6M LiFSI+0.6M LiPF₆ | | Formula(4): G (0.5) | | 10 | 9 | 24.50 | 1.073 | 1.312 | 1.223 | 1.351 | 1.259 | | 4.1995 | 4.0289 | 0.1706 | 17.4 |
| Comp. Ex. 1 | 1.2M LiPF₆ | | | | 1 | 6 | 45.10 | 1.250 | 1.575 | 1.260 | 1.712 | 1.370 | | 4.1995 | 4.0431 | 0.1564 | 34.4 |
| Comp. Ex. 2 | 0.2M LiFSI+1.0M LiPF₆ | | | | 1 | 4 | 41.66 | 1.163 | 1.419 | 1.220 | 1.542 | 1.326 | | 4.1995 | 4.0322 | 0.1673 | 24.4 |
| Comp. Ex. 3 | 0.6M LiFSI+0.6M LiPF₆ | | | | 1 | 5 | 39.30 | 1.107 | 1.344 | 1.214 | 1.446 | 1.306 | | 4.1995 | 4.0282 | 0.1713 | 17.7 |
| Comp. Ex. 4 | 1M LiFSI+0.2M LiPF₆ | | | | 1 | 5 | 37.33 | 1.085 | 1.314 | 1.211 | 1.412 | 1.301 | | 4.1995 | 4.0212 | 0.1783 | 16.8 |
| Comp. Ex. 5 | 0.6M LiFSI+0.6M LiPF₆ | | | LiBOB (0.5) | 1 | 6 | 428.62 | 1.808 | 1.952 | 1.080 | 2.222 | 1.229 | | 4.1995 | 4.0388 | 0.1607 | |
| Comp. Ex. 6 | 0.6M LiFSI+0.6M LiPF₆ | | | LiDFOB (0.5) | 1 | 5 | 40.08 | 1.141 | 1.232 | 1.080 | 1.462 | 1.281 | | 4.1995 | 4.0318 | 0.1677 | |
| Comp. Ex. 7 | 1.2M LiPF₆ | | | | 150 | 70 | 33.56 | 1.187 | 1.493 | 1.258 | 1.622 | 1.366 | | 4.1995 | 4.0598 | 0.1397 | 30.6 |
| Comp. Ex. 8 | 0.6M LiFSI+0.6M LiPF₆ | LiNO₃ (0.5) | | | 1 | 70 | 14.88 | 1.035 | 1.252 | 1.210 | 1.322 | 1.277 | | 4.1994 | 3.8771 | 0.3223 | |
| Comp. Ex. 9 | 1.2M LiPF₆ | | Formula(4): G (0.5) | | 1 | 5 | 40.61 | 1.241 | 1.567 | 1.263 | 1.666 | 1.342 | 0.973 | 4.1995 | 4.0431 | 0.1564 | 45.6 |

### [Consideration of Table 8 (Example 3-1 Series)]

Comparison between Examples 1 to 4 and Comparative Examples 2 to 4 showed that, depending on the concentration of LiFSI, the impedance and DCRs (initial DCR, DCR after 300 cycles, and DCR after 4-week enduring at 60°C) were reduced, and the effect of the reduction became significant by adding trimethylsilyl acetate (Compound G) to the electrolyte solution.

Comparison between Examples 1 to 4 and Comparative Examples 2 to 4 showed that, depending on the concentration of LiFSI, the OCV difference (ΔV) before and after storage increased, i.e., self-discharge increased, but when trimethylsilyl acetate was added to the electrolyte solution, the OCV difference (ΔV) before and after storage decreased, i.e., self-discharge was suppressed.

Comparison between Examples 2 to 4 and Comparative Examples 2 to 4 with the same salt composition and comparison between Comparative Example 9 and Comparative Example 1 with the same salt composition showed that the mixed salt composition containing LiFSI and LiPF₆ had higher effects of reducing the impedance, suppressing self-discharge, and suppressing the DCR increase due to addition of trimethylsilyl acetate, than the simple salt composition containing only LiPF₆.

Comparison between Comparative Examples 1 to 4, Comparative Example 7, Comparative Example 9, and Examples 2 to 9 showed that, depending on the concentration of LiFSI, the amount of electrodeposition after low-temperature cycles decreased, and degradation of the negative electrode due to low-temperature charging was reduced. It was also shown that the addition of trimethylsilyl acetate to the simple salt composition containing only LiPF₆ increased the amount of lithium electrodeposited on the negative electrode during low-temperature cycles, and degradation of the negative electrode due to low temperature charging progressed. It was also shown that when trimethylsilyl acetate was added to the mixed salt composition containing LiFSI and LiPF₆, the amount of electrodeposition after low-temperature cycles decreased, and degradation of the negative electrode was suppressed.

The reason for which the effects obtained due to addition of trimethylsilyl acetate were higher for the mixed salt composition containing LiFSI and LiPF₆ than for the simple salt composition containing only LiPF₆ is considered to be that the coating film derived from an anionic component of LiFSI is formed on the interface between the positive and negative electrodes, so that the solubility of LiFSI is high and the viscosity of the electrolyte solution at low temperature is thereby reduced.

Comparison between Examples 1 to 8 showed that, depending on the concentration of LiFSI, the OCV difference (ΔV) before and after storage increased, i.e., self-discharge increased, but when CO₂ was dissolved in the electrolyte solution containing trimethylsilyl acetate, the OCV difference (ΔV) before and after storage decreased, i.e., self-discharge was suppressed, while the impedance, DCR, and the low-temperature electrodeposition further decreased.

The reason for which the effect of suppressing self-discharge due to dissolution of CO₂ is higher for the electrolyte solution having the mixed salt composition containing LiFSI and LiPF₆ than for the simple salt composition containing only LiPF₆ is considered to be related to the order of formation of the coating film of the anionic component of FSI formed on the positive and negative electrodes during charging and the coating film of a lithium carbonate component from CO₂.

It was also shown that the effect of reducing the impedance and DCR and the effect of suppressing self-discharge became significant when the amount of CO₂ dissolved in the electrolyte solution exceeded 10 ppm by mass (e.g., 20 ppm by mass or more).

The reason for which these effects due to dissolution of CO₂ are enhanced is considered to be that a coating film derived from CO₂ is formed on the positive and negative electrodes, so that lithium ion intercalation (intercalation (insertion) reaction) on the positive electrode during storage is suppressed, side reactions in the positive electrode are suppressed, and low-temperature charging acceptability to the negative electrode is improved.

Comparison of the DCR increase rates after 4-week enduring at 60°C with the same salt composition due to addition of trimethylsilyl acetate showed that the DCR increase rate was significantly lower and the effect of suppressing the DCR increase was higher, for the electrolyte solution having the mixed salt composition containing LiFSI and LiPF6 than for the simple salt composition containing only LiPF₆. The same results were shown for the DCR increase rate after 300 cycles with the same salt composition due to addition of trimethylsilyl acetate. The reason for this is also considered to be that anion coating film of LiFSI is formed on the positive and negative electrodes.

### <Example 3-2 Series>

### [Examples 1 to 4]

In a mixture solvent of ethylene carbonate (EC) and ethyl methyl carbonate (EMC) in a volume ratio of 3 : 7 (manufactured by Kishida Chemical Co., Ltd.) used as an electrolyte solution solvent, an electrolyte salt of a mixed salt composition containing LiFSI (manufactured by Nippon Shokubai Co., Ltd.) and LiPF₆ (manufactured by Stella Chemifa Corporation) was dissolved in concentrations shown in Table 9. To the solution obtained above, trimethylsilyl trifluoroacetate (Compound H, manufactured by Tokyo Chemical Industry Co., Ltd.) was added in the content shown in Table 9 as the carbon atom-containing compound (4) represented by the general formula (4). The resultant mixture was then stirred for a day. Thus, a non-aqueous electrolyte solution (reference electrolyte solution) was prepared. Subsequently, in the same manner as described above, cells were produced using the respective reference electrolyte solutions obtained above and evaluated except that each electrolyte solution was not subjected to dissolving. Table 9 shows the results.

### [Examples 5 to 8]

Each non-aqueous electrolyte solution (reference electrolyte solution) was prepared in the same manner as described above. Subsequently, each reference electrolyte solution obtained was used to perform dissolving in the same manner as described above. Then, in the same manner as describe above, a cell was produced using the CO₂ dissolving electrolyte solution and evaluated. Table 9 shows the results.

### [Comparative Examples 1 to 6, 8, and 9]

In the same mixture solvent as described above, an electrolyte salt of mixed salt composition containing LiFSI and LiPF₆ or an electrolyte salt of simple salt composition containing only LiPF₆ was dissolved in concentrations shown in Table 9. In Comparative Examples 1 to 4, the solution obtained above was used as a non-aqueous electrolyte solution (reference electrolyte solution). In Comparative Example 5, to the solution obtained above, lithium bis(oxalato)borate (LiBOB, manufactured by Tokyo Chemical Industry Co., Ltd.) was further added in the content shown in Table 9 as a fluoro-oxalate compound (13), and the resultant mixture was stirred for a day to prepare a non-aqueous electrolyte solution. In Comparative Example 6, to the solution obtained above, lithium difluoro(oxalato)borate (LiDFOB, manufactured by Tokyo Chemical Industry Co., Ltd.) was further added in the content shown in Table 9 as a fluoro-oxalate compound (13), and the resultant mixture was stirred for a day to prepare a non-aqueous electrolyte solution. In Comparative Example 8, a non-aqueous electrolyte solution was prepared as follows. To the solution obtained above, lithium nitrate (LiNO₃, manufactured by Tokyo Chemical Industry Co., Ltd.) was added in the content shown in Table 9 as the nitric acid compound (12), and the resultant mixture was then stirred for a day and filtered with a membrane filter. In Comparative Example 9, to the solution obtained above, trimethylsilyl trifluoroacetate (Compound H) was further added in the content shown in Table 9, and the resultant mixture was then stirred for a day to prepare a non-aqueous electrolyte solution. Subsequently, in the same manner as described above, cells were produced using the respective reference electrolyte solutions obtained above and evaluated except that each electrolyte solution was not subjected to dissolving. Table 9 shows the results.

### [Comparative Example 7]

In the same mixture solvent as described above, an electrolyte salt of simple salt composition containing only LiPF₆ was dissolved in a concentration shown in Table 9. Thus, a non-aqueous electrolyte solution (reference electrolyte solution) was prepared. Subsequently, the reference electrolyte solution obtained above was used to perform dissolving in the same manner as described above. Then, in the same manner as describe above, a cell was produced using the CO₂ dissolving electrolyte solution and evaluated. Table 9 shows the results.

**[Table 9]**

| Non-aqueous electrolyte solution of Ex. 3-2 series | Salt composition | Type and content (wt/o) of additive | | | Amount of CO₂ dissolved in non-aqueous electrolyte solution | | Real axis resistance (impedance, Ω) at -30°C | DCR | | | | | | OCV | | | Amount of electrodeposition after low-temperature cycles |
|---|---|---|---|---|---|---|---|---|---|---|---|---|---|---|---|---|---|
| | | Nitric acid compound | Specific compound | Fluorooxalato compound | Initial value (ppm) | Value after conditioning | | Initial value (Ω) | Value (Ω) after 300 cycles | DCR increase rate after 300 cycles | After 4-week enduring at 60°C (Ω) | DCR increase rate after 4-week enduring at 60°C | DCR increase rate at the same salt composition | Initial value (V) | After 4-week storage at 60°C | Difference (ΔV) before and after storage | |
| Ex. 1 | 0.1 M LiFSI+1.1 M LiPF₆ | | Formula(4): H (0.5) | | 1 | 4 | 22.43 | 1.094 | 1.190 | 1.088 | 1.443 | 1.319 | | 4.1995 | 4.0342 | 0.1653 | 27.7 |
| Ex. 2 | 0.2M LiFSI+1.0M LiPF₆ | | Formula(4): H (0.5) | | 1 | 5 | 21.34 | 1.087 | 1.182 | 1.088 | 1.406 | 1.294 | 0.912 | 4.1995 | 4.0336 | 0.1659 | 22.7 |
| Ex. 3 | 0.6M LiFSI+0.6M LiPF₆ | | Formula(4): H (0.5) | | 1 | 6 | 20.53 | 1.075 | 1.159 | 1.078 | 1.334 | 1.241 | 0.923 | 4.1995 | 4.0305 | 0.1690 | 16.1 |
| Ex. 4 | 1M LiFSI+0.2M LiPF₆ | | Formula(4): H (0.5) | | 1 | 5 | 20.04 | 1.069 | 1.150 | 1.076 | 1.318 | 1.233 | 0.933 | 4.1995 | 4.0233 | 0.1762 | 14.9 |
| Ex. 5 | 0.6M LiFSI+0.6M LiPF₆ | | Formula(4): H (0.5) | | 150 | 71 | 19.01 | 1.053 | 1.129 | 1.072 | 1.301 | 1.235 | | 4.1995 | 4.0631 | 0.1364 | 15.4 |
| Ex. 6 | 0.6M LiFSI+0.6M LiPF₆ | | Formula(4): H (0.5) | | 60 | 46 | 19.10 | 1.059 | 1.137 | 1.074 | 1.311 | 1.238 | | 4.1995 | 4.0629 | 0.1366 | 15.7 |
| Ex. 7 | 0.6M LiFSI+0.6M LiPF₆ | | Formula(4): H (0.5) | | 40 | 30 | 19.32 | 1.062 | 1.143 | 1.076 | 1.319 | 1.242 | | 4.1994 | 4.0627 | 0.1367 | 15.9 |
| Ex. 8 | 0.6M LiFSI+0.6M LiPF₆ | | Formula(4): H (0.5) | | 10 | 9 | 2050 | 1.070 | 1.153 | 1.078 | 1.332 | 1.245 | | 4.1995 | 4.0311 | 0.1684 | 16.1 |
| Comp. Ex. 1 | 1.2M LiPF₆ | | | | 1 | 6 | 45.10 | 1.250 | 1.575 | 1.260 | 1.712 | 1.370 | | 4.1995 | 4.0431 | 0.1564 | 34.4 |
| Comp. Ex. 2 | 0.2M LiFSI+1.0M LiPF₆ | | | | 1 | 4 | 41.66 | 1.163 | 1.419 | 1.220 | 1.542 | 1.326 | | 4.1995 | 4.0322 | 0.1673 | 24.4 |
| Comp. Ex. 3 | 0.6M LiFSI+0.6M LiPF₆ | | | | 1 | 5 | 39.30 | 1.107 | 1.344 | 1.214 | 1.446 | 1.306 | | 4.1995 | 4.0282 | 0.1713 | 17.7 |
| Comp. Ex. 4 | 1M LiFSI+0.2M LiPF₆ | | | | 1 | 5 | 37.33 | 1.085 | 1.314 | 1.211 | 1.412 | 1.301 | | 4.1995 | 4.0212 | 0.1783 | 16.8 |
| Comp. Ex. 5 | 0.6M LiFSI+0.6M LiPF₆ | | | LiBOB (0.5) | 1 | 6 | 428.62 | 1.808 | 1.952 | 1.080 | 2.222 | 1.229 | | 4.1995 | 4.0388 | 0.1607 | |
| Comp. Ex. 6 | 0.6M LiFSI+0.6M LiPF₆ | | | LiDFOB (0.5) | 1 | 5 | 40.08 | 1.141 | 1.232 | 1.080 | 1.462 | 1.281 | | 4.1995 | 4.0318 | 0.1677 | |
| Comp. Ex. 7 | 1.2M LiPF₆ | | | | 150 | 70 | 33.56 | 1.187 | 1.493 | 1.258 | 1.622 | 1.366 | | 4.1995 | 4.0598 | 0.1397 | 30.6 |
| Comp. Ex. 8 | 0.6M LiFSI+0.6M LiPF₆ | LiNO₃ (0.5) | | | 1 | 70 | 14.88 | 1.035 | 1.252 | 1.210 | 1.322 | 1.277 | | 4.1994 | 3.8771 | 0.3223 | |
| Comp. Ex. 9 | 1.2M LiPF₆ | | Formula(4): H (0.5) | | 1 | 5 | 38.22 | 1.234 | 1.479 | 1.199 | 1.634 | 1.324 | 0.954 | 4.1995 | 4.0431 | 0.1564 | 43.8 |

### [Consideration of Table 9 (Example 3-2 Series)]

Comparison between Examples 1 to 4 and Comparative Examples 2 to 4 showed that, depending on the concentration of LiFSI, the impedance and DCRs (initial DCR, DCR after 300 cycles, and DCR after 4-week enduring at 60°C) were reduced, and the effect of the reduction became significant by adding trimethylsilyl trifluoroacetate (Compound H) to the electrolyte solution.

Comparison between Examples 1 to 4 and Comparative Examples 2 to 4 showed that, depending on the concentration of LiFSI, the OCV difference (ΔV) before and after storage increased, i.e., self-discharge increased, but when trimethylsilyl trifluoroacetate was added to the electrolyte solution, the OCV difference (ΔV) before and after storage decreased, i.e., self-discharge was suppressed.

Comparison between Examples 2 to 4 and Comparative Examples 2 to 4 with the same salt composition and comparison between Comparative Example 9 and Comparative Example 1 with the same salt composition showed that the mixed salt composition containing LiFSI and LiPF₆ had higher effects of reducing the impedance, suppressing self-discharge, and suppressing the DCR increase rate due to addition of trimethylsilyl trifluoroacetate, than the simple salt composition containing only LiPF₆.

Comparison between Comparative Examples 1 to 4, Comparative Example 7, Comparative Example 9, and Examples 2 to 9 showed that, depending on the concentration of LiFSI, the amount of electrodeposition after low-temperature cycles decreased, and degradation of the negative electrode due to low-temperature charging was reduced. It was also shown that the addition of trimethylsilyl trifluoroacetate to the simple salt composition containing only LiPF₆ increased the amount of lithium electrodeposited on the negative electrode during low-temperature cycles, and degradation of the negative electrode due to low temperature charging progressed. It was also shown that when trimethylsilyl trifluoroacetate was added to the mixed salt composition containing LiFSI and LiPF₆, the amount of electrodeposition after low-temperature cycles decreased, and degradation of the negative electrode due to low temperature charging was suppressed.

The reason for which the effects obtained due to addition of trimethylsilyl trifluoroacetate were higher for the mixed salt composition containing LiFSI and LiPF₆ than for the simple salt composition containing only LiPF₆ is considered to be that the coating film derived from an anionic component of LiFSI is formed on the interface between the positive and negative electrodes, so that the solubility of LiFSI is high and the viscosity of the electrolyte solution at low temperature is thereby reduced.

Comparison between Examples 1 to 8 showed that, depending on the concentration of LiFSI, the OCV difference (ΔV) before and after storage increased, i.e., self-discharge increased, but when CO₂ was dissolved in the electrolyte solution containing trimethylsilyl trifluoroacetate, the OCV difference (ΔV) before and after storage decreased, i.e., self-discharge was suppressed, while the impedance and DCR further decreased. The reason for which the effect of suppressing self-discharge due to dissolution of CO₂ is higher for the electrolyte solution having the mixed salt composition containing LiFSI and LiPF₆ than for the simple salt composition containing only LiPF₆ is considered to be related to the order of formation of the coating film of the anionic component of FSI formed on the positive and negative electrodes during charging and the coating film of a lithium carbonate component from CO₂.

It was also shown that the effect of reducing the impedance and DCR and the effect of suppressing self-discharge became significant when the amount of CO₂ dissolved in the electrolyte solution exceeded 10 ppm by mass (e.g., 20 ppm by mass or more).

The reason for which these effects due to dissolution of CO₂ are enhanced is considered to be that a coating film derived from CO₂ is formed on the positive and negative electrodes, so that lithium ion intercalation (intercalation (insertion) reaction) on the positive electrode during storage is suppressed, side reactions in the positive electrode are suppressed, and low-temperature charging acceptability to the negative electrode is improved.

Comparison of the DCR increase rates after 4-week enduring at 60°C with the same salt composition due to addition of trimethylsilyl trifluoroacetate showed that the DCR increase rate was significantly lower and the effect of suppressing the DCR increase was higher, for the electrolyte solution having the mixed salt composition containing LiFSI and LiPF6 than for the simple salt composition containing only LiPF₆. The same results were shown for the DCR increase rate after 300 cycles with the same salt composition due to addition of trimethylsilyl trifluoroacetate. The reason for this is also considered to be that anion coating film of LiFSI is formed on the positive and negative electrodes.

### <Example 4-1 Series>

### [Examples 1 to 4]

In a mixture solvent of ethylene carbonate (EC) and ethyl methyl carbonate (EMC) in a volume ratio of 3 : 7 (manufactured by Kishida Chemical Co., Ltd.) used as an electrolyte solution solvent, an electrolyte salt of a mixed salt composition containing LiFSI (manufactured by Nippon Shokubai Co., Ltd.) and LiPF₆ (manufactured by Stella Chemifa Corporation) was dissolved in concentrations shown in Table 10. To the solution obtained, trimethylsilyl trifluoromethane sulfonate (Compound I, manufactured by Tokyo Chemical Industry Co., Ltd.) was added in the content shown in Table 10 as the sulfur atom-containing compound (5) represented by the general formula (5). The resultant mixture was then stirred for a day. Thus, a non-aqueous electrolyte solution (reference electrolyte solution) was prepared. Subsequently, in the same manner as described above, cells were produced using the respective reference electrolyte solutions obtained above and evaluated except that each electrolyte solution was not subjected to dissolving. Table 10 shows the results.

### [Examples 5 to 8]

Each non-aqueous electrolyte solution (reference electrolyte solution) was prepared in the same manner as described above. Subsequently, each reference electrolyte solution obtained was used to perform dissolving in the same manner as described above. Then, in the same manner as describe above, a cell was produced using the CO₂ dissolving electrolyte solution and evaluated. Table 10 shows the results.

### [Comparative Examples 1 to 6, 8, and 9]

In the same mixture solvent as described above, an electrolyte salt of mixed salt composition containing LiFSI and LiPF₆ or an electrolyte salt of simple salt composition containing only LiPF₆ was dissolved in concentrations shown in Table 10. In Comparative Examples 1 to 4, the solution obtained above was used as a non-aqueous electrolyte solution (reference electrolyte solution). In Comparative Example 5, to the solution obtained above, lithium bis(oxalato)borate (LiBOB, manufactured by Tokyo Chemical Industry Co., Ltd.) was further added in the content shown in Table 10 as a fluoro-oxalate compound (13), and the resultant mixture was stirred for a day to prepare a non-aqueous electrolyte solution. In Comparative Example 6, to the solution obtained above, lithium difluoro(oxalato)borate (LiDFOB, manufactured by Tokyo Chemical Industry Co., Ltd.) was further added in the content shown in Table 10 as a fluoro-oxalate compound (13), and the resultant mixture was stirred for a day to prepare a non-aqueous electrolyte solution. In Comparative Example 8, a non-aqueous electrolyte solution was prepared as follows. To the solution obtained above, lithium nitrate (LiNO₃, manufactured by Tokyo Chemical Industry Co., Ltd.) was added in the content shown in Table 10 as the nitric acid compound (12), and the resultant mixture was then stirred for a day and filtered with a membrane filter. In Comparative Example 9, to the solution obtained above, trimethylsilyl trifluoromethane sulfonate (Compound I) was further added in the content shown in Table 10, and the resultant mixture was then stirred for a day to prepare a non-aqueous electrolyte solution. Subsequently, in the same manner as described above, cells were produced using the respective reference electrolyte solutions obtained above and evaluated except that each electrolyte solution was not subjected to dissolving. Table 10 shows the results.

### [Comparative Example 7]

In the same mixture solvent as described above, an electrolyte salt of simple salt composition containing only LiPF₆ was dissolved in a concentration shown in Table 10. Thus, a non-aqueous electrolyte solution (reference electrolyte solution) was prepared. Subsequently, the reference electrolyte solution obtained above was used to perform dissolving in the same manner as described above. Then, in the same manner as describe above, a cell was produced using the CO₂ dissolving electrolyte solution and evaluated. Table 10 shows the results.

**[Table 10]**

| Non-aqueous electrolyte solution of Ex. 4-1 series | Salt composition | Type and content (wt/o) of additive | | | Amount of CO₂ dissolved in non-aqueous electrolyte solution | | Real axis resistance (impedance, Ω) at -30°C | DCR | | | | | | OCV | | | Amount of electrodeposition after low-temperature cycles |
|---|---|---|---|---|---|---|---|---|---|---|---|---|---|---|---|---|---|
| | | Nitric acid compound | Specific compound | Fluorooxalato compound | Initial value (ppm) | Value after conditioning | | Initial value (Ω) | Value (Ω) after 300 cycles | DCR increase rate after 300 cycles | After 4-week enduring at 60°C (Ω) | DCR increase rate after 4-week enduring at 60°C | DCR increase rate at the same salt composition | Initial value (V) | After 4-week storage at 60°C | Difference (ΔV) before and after storage | |
| Ex. 1 | 0.1 M LiFSI+1.1 M LiPF₆ | | Formula (5): I (0.5) | | 2 | 5 | 29.16 | 1.114 | 1.193 | 1.071 | 1.404 | 1.260 | | 4.1995 | 4.0376 | 0.1619 | 22.2 |
| Ex. 2 | 0.2M LiFSI+1.0M LiPF₆ | | Formula (5): I (0.5) | | 2 | 6 | 28.85 | 1.105 | 1.179 | 1.067 | 1.388 | 1.256 | 0.900 | 4.1995 | 4.0366 | 0.1629 | 19.5 |
| Ex. 3 | 0.6M LiFSI+0.6M LiPF₆ | | Formula (5): I (0.5) | | 2 | 5 | 28.01 | 1.089 | 1.160 | 1.065 | 1.352 | 1.242 | 0.935 | 4.1995 | 4.0329 | 0.1666 | 15.5 |
| Ex. 4 | 1M LiFSI+0.2M LiPF₆ | | Formula (5): I (0.5) | | 3 | 6 | 27.45 | 1.078 | 1.144 | 1.061 | 1.338 | 1.241 | 0.948 | 4.1995 | 4.0264 | 0.1731 | 13.2 |
| Ex. 5 | 0.6M LiFSI+0.6M LiPF₆ | | Formula (5): I (0.5) | | 150 | 75 | 25.94 | 1.056 | 1.120 | 1.060 | 1.311 | 1.241 | | 4.1995 | 4.0633 | 0.1362 | 14.2 |
| Ex. 6 | 0.6M LiFSI+0.6M LiPF₆ | | Formula (5): I (0.5) | | 60 | 46 | 26.98 | 1.059 | 1.123 | 1.061 | 1.318 | 1.245 | | 4.1995 | 4.0626 | 0.1369 | 14.5 |
| Ex. 7 | 0.6M LiFSI+0.6M LiPF₆ | | Formula (5): I (0.5) | | 30 | 31 | 27.44 | 1.062 | 1.129 | 1.063 | 1.325 | 1.248 | | 4.1994 | 4.0596 | 0.1398 | 15.1 |
| Ex. 8 | 0.6M LiFSI+0.6M LiPF₆ | | Formula (5): I (0.5) | | 10 | 10 | 27.81 | 1.065 | 1.134 | 1.065 | 1.347 | 1.265 | | 4.1995 | 4.0349 | 0.1646 | 15.4 |
| Comp. Ex. 1 | 1.2M LiPF₆ | | | | 1 | 6 | 45.10 | 1.250 | 1.575 | 1.260 | 1.712 | 1.370 | | 4.1995 | 4.0431 | 0.1564 | 34.4 |
| Comp. Ex. 2 | 0.2M LiFSI+1.0M LiPF₆ | | | | 1 | 4 | 41.66 | 1.163 | 1.419 | 1.220 | 1.542 | 1.326 | | 4.1995 | 4.0322 | 0.1673 | 24.4 |
| Comp. Ex. 3 | 0.6M LiFSI+0.6M LiPF₆ | | | | 1 | 5 | 39.30 | 1.107 | 1.344 | 1.214 | 1.446 | 1.306 | | 4.1995 | 4.0282 | 0.1713 | 17.7 |
| Comp. Ex. 4 | 1M LiFSI+0.2M LiPF₆ | | | | 1 | 5 | 37.33 | 1.085 | 1.314 | 1.211 | 1.412 | 1.301 | | 4.1995 | 4.0212 | 0.1783 | 16.8 |
| Comp. Ex. 5 | 0.6M LiFSI+0.6M LiPF₆ | | | LiBOB (0.5) | 1 | 6 | 428.62 | 1.808 | 1.952 | 1.080 | 2.222 | 1.229 | | 4.1995 | 4.0388 | 0.1607 | |
| Comp. Ex. 6 | 0.6M LiFSI+0.6M LiPF₆ | | | LiDFOB (0.5) | 1 | 5 | 40.08 | 1.141 | 1.232 | 1.080 | 1.462 | 1.281 | | 4.1995 | 4.0318 | 0.1677 | |
| Comp. Ex. 7 | 1.2M LiPF₆ | | | | 150 | 70 | 33.56 | 1.187 | 1.493 | 1.258 | 1.622 | 1.366 | | 4.1995 | 4.0598 | 0.1397 | 30.6 |
| Comp. Ex. 8 | 0.6M LiFSI+0.6M LiPF₆ | LiNO₃ (0.5) | | | 1 | 70 | 14.88 | 1.035 | 1.252 | 1.210 | 1.322 | 1.277 | | 4.1994 | 3.8771 | 0.3223 | |
| Comp. Ex. 9 | 1.2M LiPF₆ | | Formula (5): I (0.5) | | 1 | 5 | 39.21 | 1.242 | 1.426 | 1.148 | 1.645 | 1.324 | 0.961 | 4.1995 | 4.0431 | 0.1564 | 38.2 |

### [Consideration of Table 10 (Example 4-1 Series)]

Comparison between Examples 1 to 4 and Comparative Examples 2 to 4 showed that, depending on the concentration of LiFSI, the impedance and DCRs (initial DCR, DCR after 300 cycles, and DCR after 4-week enduring at 60°C) were reduced, and the effect of the reduction became significant by adding trimethylsilyl trifluoromethane sulfonate (Compound I) to the electrolyte solution.

Comparison between Examples 1 to 4 and Comparative Examples 2 to 4 showed that, depending on the concentration of LiFSI, the OCV difference (ΔV) before and after storage increased, i.e., self-discharge increased, but when trimethylsilyl trifluoromethane sulfonate was added to the electrolyte solution, the OCV difference (ΔV) before and after storage decreased i.e., self-discharge was suppressed.

Comparison between Examples 2 to 4 and Comparative Examples 2 to 4 with the same salt composition and comparison between Comparative Example 9 and Comparative Example 1 with the same salt composition showed that the mixed salt composition containing LiFSI and LiPF₆ had higher effects of reducing the impedance, suppressing self-discharge, and suppressing the DCR increase due to addition of trimethylsilyl trifluoromethane sulfonate, than the simple salt composition containing only LiPF₆.

Comparison between Comparative Examples 1 to 4, Comparative Example 7, Comparative Example 9, and Examples 2 to 9 showed that, depending on the concentration of LiFSI, the amount of electrodeposition after low-temperature cycles decreased, and degradation of the negative electrode due to low-temperature charging was reduced. It was also shown that the addition of trimethylsilyl trifluoromethane sulfonate to the simple salt composition containing only LiPF₆ increased the amount of lithium electrodeposited on the negative electrode during low-temperature cycles, and degradation of the negative electrode due to low temperature charging progressed. It was also shown that when trimethylsilyl trifluoromethane sulfonate was added to the mixed salt composition containing LiFSI and LiPF₆, the amount of electrodeposition after low-temperature cycles decreased, and degradation of the negative electrode due to low temperature charging was suppressed.

The reason for which the effects obtained due to addition of trimethylsilyl trifluoromethane sulfonate were higher for the mixed salt composition containing LiFSI and LiPF₆ than for the simple salt composition containing only LiPF₆ is considered to be that the coating film derived from an anionic component of LiFSI is formed on the interface between the positive and negative electrodes, so that the solubility of LiFSI is high and the viscosity of the electrolyte solution at low temperature is thereby reduced.

Comparison between Examples 1 to 8 showed that, depending on the concentration of LiFSI, the OCV difference (ΔV) before and after storage increased, i.e., self-discharge increased, but when CO₂ was dissolved in the electrolyte solution containing trimethylsilyl trifluoromethane sulfonate, the OCV difference (ΔV) before and after storage decreased, i.e., self-discharge was suppressed, while the impedance and DCR further decreased.

The reason for which the effect of suppressing self-discharge due to dissolution of CO₂ is higher for the electrolyte solution having the mixed salt composition containing LiFSI and LiPF₆ than for the simple salt composition containing only LiPF₆ is considered to be related to the order of formation of the coating film of the anionic component of FSI formed on the positive and negative electrodes during charging and the coating film of a lithium carbonate component from CO₂.

It was also shown that the effect of reducing the impedance and DCR and the effect of suppressing self-discharge became significant when the amount of CO₂ dissolved in the electrolyte solution exceeded 10 ppm by mass (e.g., 20 ppm by mass or more).

The reason for which these effects due to dissolution of CO₂ are enhanced is considered to be that a coating film derived from CO₂ is formed on the positive and negative electrodes, so that lithium ion intercalation (intercalation (insertion) reaction) on the positive electrode during storage is suppressed, side reactions in the positive electrode are suppressed, and low-temperature charging acceptability to the negative electrode is improved.

Comparison of the DCR increase rates after 4-week enduring at 60°C with the same salt composition due to addition of trimethylsilyl trifluoromethane sulfonate showed that the DCR increase rate was significantly lower and the effect of suppressing the DCR increase was higher for the electrolyte solution having the mixed salt composition containing LiFSI and LiPF6 than for the simple salt composition containing only LiPF₆. The same results were shown for the DCR increase rate after 300 cycles with the same salt composition due to addition of trimethylsilyl trifluoromethane sulfonate. The reason for this is also considered to be that anion coating film of LiFSI is formed on the positive and negative electrodes.

### <Example 4-2 Series>

### [Examples 1 to 4]

In a mixture solvent of ethylene carbonate (EC) and ethyl methyl carbonate (EMC) in a volume ratio of 3 : 7 (manufactured by Kishida Chemical Co., Ltd.) used as an electrolyte solution solvent, an electrolyte salt of a mixed salt composition containing LiFSI (manufactured by Nippon Shokubai Co., Ltd.) and LiPF₆ (manufactured by Stella Chemifa Corporation) was dissolved in concentrations shown in Table 11. To the solution obtained above, bis(trimethylsilyl) sulfate (Compound J, manufactured by Tokyo Chemical Industry Co., Ltd.) was added in the content shown in Table 11 as the sulfur atom-containing compound (5) represented by the general formula (5). The resultant mixture was then stirred for a day. Thus, a non-aqueous electrolyte solution (reference electrolyte solution) was prepared. Subsequently, in the same manner as described above, cells were produced using the respective reference electrolyte solutions obtained above and evaluated except that each electrolyte solution was not subjected to dissolving. Table 11 shows the results.

### [Examples 5 to 10]

Each non-aqueous electrolyte solution (reference electrolyte solution) was prepared in the same manner as described above. In Example 9, to the solution obtained above, lithium nitrate (LiNO₃, manufactured by Tokyo Chemical Industry Co., Ltd.) was added in the content shown in Table 11 as the nitric acid compound (12), and the resultant mixture was then stirred for a day and filtered with a membrane filter. In Example 10, to the solution obtained above, LiNO₃ and lithium difluoro(oxalato)borate (LiDFOB, manufactured by Tokyo Chemical Industry Co., Ltd.) as the fluoro-oxalate compound (13) was further added in the contents shown in Table 11, and the resultant mixture was then stirred for a day and filtered with a membrane filter. Subsequently, each reference electrolyte solution obtained was used to perform dissolving in the same manner as described above. Then, in the same manner as describe above, a cell was produced using the CO₂ dissolving electrolyte solution and evaluated. Table 11 shows the results.

### [Comparative Examples 1 to 6, 8, and 9]

In the same mixture solvent as described above, an electrolyte salt of mixed salt composition containing LiFSI and LiPF₆ or an electrolyte salt of simple salt composition containing only LiPF₆ was dissolved in concentrations shown in Table 11. In Comparative Examples 1 to 4, the solution obtained above was used as a non-aqueous electrolyte solution (reference electrolyte solution). In Comparative Example 5, to the solution obtained above, lithium bis(oxalato)borate (LiBOB, manufactured by Tokyo Chemical Industry Co., Ltd.) was further added in the content shown in Table 11 as a fluoro-oxalate compound (13), and the resultant mixture was stirred for a day to prepare a non-aqueous electrolyte solution. In Comparative Example 6, to the solution obtained above, lithium difluoro(oxalato)borate (LiDFOB, manufactured by Tokyo Chemical Industry Co., Ltd.) was further added in the content shown in Table 11 as a fluoro-oxalate compound (13), and the resultant mixture was stirred for a day to prepare a non-aqueous electrolyte solution. In Comparative Example 8, to the solution obtained above, lithium nitrate (LiNO₃, manufactured by Tokyo Chemical Industry Co., Ltd.) was added in the content shown in Table 11 as the nitric acid compound (12), and the resultant mixture was then stirred for a day and filtered with a membrane filter. Thus, a non-aqueous electrolyte solution was prepared. In Comparative Example 9, to the solution obtained above, bis(trimethylsilyl) sulfate (Compound J) was further added in the content shown in Table 11, and the resultant mixture was then stirred for a day to prepare a non-aqueous electrolyte solution. Subsequently, in the same manner as described above, cells were produced using the respective reference electrolyte solutions obtained above and evaluated except that each electrolyte solution was not subjected to dissolving. Table 11 shows the results.

### [Comparative Example 7]

In the same mixture solvent as described above, an electrolyte salt of simple salt composition containing only LiPF₆ was dissolved in a concentration shown in Table 11. Thus, a non-aqueous electrolyte solution (reference electrolyte solution) was prepared. Subsequently, the reference electrolyte solution obtained above was used to perform dissolving in the same manner as described above. Then, in the same manner as describe above, a cell was produced using the CO₂ dissolving electrolyte solution and evaluated. Table 11 shows the results.

**[Table 11]**

| Non-aqueous electrolyte solution of Ex. 4-2 series | Salt composition | Type and content (wt/o) of additive | | | Amount of CO₂ dissolved in non-aqueous electrolyte solution | | Real axis resistance (impedance, Ω) at -30°C | DCR | | | | | | OCV | | | Amount of electrodeposition after low-temperature cycles |
|---|---|---|---|---|---|---|---|---|---|---|---|---|---|---|---|---|---|
| | | Nitric acid compound | Specific compound | Fluorooxalato compound | Initial value (ppm) | Value after conditioning | | Initial value (Ω) | Value (Ω) after 300 cycles | DCR increase rate after 300 cycles | After 4-week enduring at 60°C (Ω) | DCR increase rate after 4-week enduring at 60°C | DCR increase rate at the same salt composition | Initial value (V) | After 4-week storage at 60°C | Difference (ΔV) before and after storage | |
| Ex. 1 | 0.1 M LiFSI+1.1 M LiPF₆ | | Formula (5): J (0.5) | | 1 | 6 | 22.37 | 1.093 | 1.179 | 1.079 | 1.451 | 1.328 | | 4.1994 | 4.0368 | 0.1626 | 24.7 |
| Ex. 2 | 0.2M LiFSI+1.0M LiPF₆ | | Formula (5): J (0.5) | | 1 | 5 | 22.15 | 1.085 | 1.168 | 1.077 | 1.354 | 1.248 | 0.878 | 4.1994 | 4.0355 | 0.1639 | 21.7 |
| Ex. 3 | 0.6M LiFSI+0.6M LiPF₆ | | Formula (5): J (0.5) | | 1 | 5 | 21.72 | 1.065 | 1.142 | 1.072 | 1.306 | 1.226 | 0.903 | 4.1994 | 4.0301 | 0.1693 | 15.2 |
| Ex. 4 | 1M LiFSI+0.2M LiPF₆ | | Formula (5): J (0.5) | | 1 | 5 | 21.50 | 1.055 | 1.130 | 1.071 | 1.289 | 1.222 | 0.913 | 4.1995 | 4.0294 | 0.1701 | 14.4 |
| Ex. 5 | 0.6M LiFSI+0.6M LiPF₆ | | Formula (5): J (0.5) | | 150 | 71 | 19.56 | 1.033 | 1.107 | 1.071 | 1.266 | 1.225 | | 4.1995 | 4.0667 | 0.1328 | 14.4 |
| Ex. 6 | 0.6M LiFSI+0.6M LiPF₆ | | Formula (5): J (0.5) | | 60 | 45 | 19.95 | 1.044 | 1.122 | 1.075 | 1.279 | 1.225 | | 4.1995 | 4.0654 | 0.1341 | 14.5 |
| Ex. 7 | 0.6M LiFSI+0.6M LiPF₆ | | Formula (5): J (0.5) | | 30 | 32 | 2005 | 1.048 | 1.122 | 1.071 | 1.286 | 1.227 | | 4.1994 | 4.0641 | 0.1353 | 14.9 |
| Ex. 8 | 0.6M LiFSI+0.6M LiPF₆ | | Formula (5): J (0.5) | | 10 | 11 | 20.15 | 1.054 | 1.130 | 1.072 | 1.302 | 1.235 | | 4.1994 | 4.0311 | 0.1683 | 15.1 |
| Ex. 9 | 0.6M LiFSI+0.6M LiPF₆ | LiNO₃ (0.5) | Formula (5): J (0.5) | | 150 | 74 | 13.54 | 0.987 | 1.064 | 1.078 | 1.202 | 1.218 | | 4.1994 | 4.0546 | 0.1448 | 14.5 |
| Ex. 10 | 0.6M LiFSI+0.6M LiPF₆ | LiNO₃ (0.5) | Formula (5): J (0.5) | LiDFOB (0.5) | 150 | 76 | 18.02 | 1.053 | 1.105 | 1.049 | 1.266 | 1.202 | | 4.1995 | 4.0654 | 0.1341 | 15.5 |
| Comp. Ex. 1 | 1.2M LiPF₆ | | | | 1 | 6 | 45.10 | 1.250 | 1.575 | 1.260 | 1.712 | 1.370 | | 4.1995 | 4.0431 | 0.1564 | 34.4 |
| Comp. Ex. 2 | 0.2M LiFSI+1.0M LiPF₆ | | | | 1 | 4 | 41.66 | 1.163 | 1.419 | 1.220 | 1.542 | 1.326 | | 4.1995 | 4.0322 | 0.1673 | 24.4 |
| Comp. Ex. 3 | 0.6M LiFSI+0.6M LiPF₆ | | | | 1 | 5 | 39.30 | 1.107 | 1.344 | 1.214 | 1.446 | 1.306 | | 4.1995 | 4.0282 | 0.1713 | 17.7 |
| Comp. Ex. 4 | 1M LiFSI+0.2M LiPF₆ | | | | 1 | 5 | 37.33 | 1.085 | 1.314 | 1.211 | 1.412 | 1.301 | | 4.1995 | 4.0212 | 0.1783 | 16.8 |
| Comp. Ex. 5 | 0.6M LiFSI+0.6M LiPF₆ | | | LiBOB (0.5) | 1 | 6 | 428.62 | 1.808 | 1.952 | 1.080 | 2.222 | 1.229 | | 4.1995 | 4.0388 | 0.1607 | |
| Comp. Ex. 6 | 0.6M LiFSI+0.6M LiPF₆ | | | LiDFOB (0.5) | 1 | 5 | 40.08 | 1.141 | 1.232 | 1.080 | 1.462 | 1.281 | | 4.1995 | 4.0318 | 0.1677 | |
| Comp. Ex. 7 | 1.2M LiPF₆ | | | | 150 | 70 | 33.56 | 1.187 | 1.493 | 1.258 | 1.622 | 1.366 | | 4.1995 | 4.0598 | 0.1397 | 30.6 |
| Comp. Ex. 8 | 0.6M LiFSI+0.6M LiPF₆ | LiNO₃ (0.5) | | | 1 | 70 | 14.88 | 1.035 | 1.252 | 1.210 | 1.322 | 1.277 | | 4.1994 | 3.8771 | 0.3223 | |
| Comp. Ex. 9 | 1.2M LiPF₆ | | Formula (5): J (0.5) | | 1 | 5 | 32.12 | 1.224 | 1.371 | 1.120 | 1.578 | 1.289 | 0.922 | 4.1995 | 4.0431 | 0.1564 | 40.2 |

### [Consideration of Table 11 (Example 4-2 Series)]

Comparison between Examples 1 to 4 and Comparative Examples 2 to 4 showed that, depending on the concentration of LiFSI, the impedance and DCRs (initial DCR, DCR after 300 cycles, and DCR after 4-week enduring at 60°C) were reduced, and the effect of the reduction became significant by adding bis(trimethylsilyl) sulfate (Compound J) to the electrolyte solution.

Comparison between Examples 1 to 4 and Comparative Examples 2 to 4 showed that, depending on the concentration of LiFSI, the OCV difference (ΔV) before and after storage increased, i.e., self-discharge increased, but when bis(trimethylsilyl) sulfate was added to the electrolyte solution, the OCV difference (ΔV) before and after storage decreased, i.e., self-discharge was suppressed.

Comparison between Examples 2 to 4 and Comparative Examples 2 to 4 with the same salt composition and comparison between Comparative Example 9 and Comparative Example 1 with the same salt composition showed that the mixed salt composition containing LiFSI and LiPF₆ had higher effects of reducing the impedance, suppressing self-discharge, and suppressing the DCR increase due to addition of bis(trimethylsilyl) sulfate, than the simple salt composition containing only LiPF₆.

Comparison between Comparative Examples 1 to 4, Comparative Example 7, Comparative Example 9, and Examples 2 to 9 showed that, depending on the concentration of LiFSI, the amount of electrodeposition after low-temperature cycles decreased, and degradation of the negative electrode was reduced. It was also shown that the addition of bis(trimethylsilyl) sulfate to the simple salt composition containing only LiPF₆ increased the amount of lithium electrodeposited on the negative electrode during low-temperature cycles, and degradation of the negative electrode progressed. It was also shown that when bis(trimethylsilyl) sulfate was added to the mixed salt composition containing LiFSI and LiPF₆, the amount of electrodeposition after low-temperature cycles decreased, and degradation of the negative electrode was suppressed.

The reason for which the effects obtained due to addition of bis(trimethylsilyl) sulfate were higher for the mixed salt composition containing LiFSI and LiPF₆ than for the simple salt composition containing only LiPF₆ is considered to be that the coating film derived from an anionic component of LiFSI is formed on the interface between the positive and negative electrodes, so that the solubility of LiFSI is high and the viscosity of the electrolyte solution at low temperature is thereby reduced.

Comparison between Examples 3 and Examples 5 to 8 with the same salt composition showed that when CO₂ was dissolved in the electrolyte solution containing bis(trimethylsilyl) sulfate, the effect of reducing the impedance and DCR and the effect of suppressing self-discharge were further enhanced. It was further shown that these effects became significant when the amount of CO₂ dissolved in the electrolyte solution exceeded 10 ppm by mass (e.g., 20 ppm by mass or more).

The reason for which these effects due to dissolution of CO₂ are enhanced is considered to be that a coating film derived from CO₂ is formed on the positive and negative electrodes, so that lithium ion intercalation (intercalation (insertion) reaction) on the positive electrode during storage is suppressed, side reactions in the positive electrode are suppressed, and low-temperature charging acceptability to the negative electrode is improved.

The reason for which the effect of suppressing self-discharge due to dissolution of CO₂ is higher for the electrolyte solution having the mixed salt composition containing LiFSI and LiPF₆ than for the simple salt composition containing only LiPF₆ is considered to be related to the order of formation of the coating film of the anionic component of FSI formed on the positive and negative electrodes during charging and the coating film of a lithium carbonate component from CO₂.

Comparison between Examples 5 and 9 and Comparative Example 8 with the same salt composition showed that when LiNO₃ was further added to the electrolyte solution containing bis(trimethylsilyl) sulfate, the impedance and the DCR significantly decreased. It was also shown that although self-discharge increased, the self-discharge due to addition of LiNO₃ was suppressed by dissolving CO₂ in the electrolyte solution. Comparison of the DCR increase rates after 4-week enduring at 60°C with the same salt composition due to addition of bis(trimethylsilyl) sulfate showed that the DCR increase rate was significantly lower and the effect of suppressing the DCR increase was higher, for the electrolyte solution having the mixed salt composition containing LiFSI and LiPF₆ than for the simple salt composition containing only LiPF₆. The same results were shown for the DCR increase rate after 300 cycles with the same salt composition due to addition of bis(trimethylsilyl) sulfate. The reason for this is also considered to be that anion coating film of LiFSI is formed on the positive and negative electrodes.

### <Example 4-3 Series>

### [Examples 1 to 4]

In a mixture solvent of ethylene carbonate (EC) and ethyl methyl carbonate (EMC) in a volume ratio of 3 : 7 (manufactured by Kishida Chemical Co., Ltd.) used as an electrolyte solution solvent, an electrolyte salt of a mixed salt composition containing LiFSI (manufactured by Nippon Shokubai Co., Ltd.) and LiPF₆ (manufactured by Stella Chemifa Corporation) was dissolved in concentrations shown in Table 12. To the solution obtained, di-tert-butylsilyl bis(trifluoromethane sulfonate) (Compound K, manufactured by Tokyo Chemical Industry Co., Ltd.) was added in the content shown in Table 12 as the sulfur atom-containing compound (5) represented by the general formula (5). The resultant mixture was then stirred for a day. Thus, a non-aqueous electrolyte solution (reference electrolyte solution) was prepared. Subsequently, in the same manner as described above, cells were produced using the respective reference electrolyte solutions obtained above and evaluated except that each electrolyte solution was not subjected to dissolving. Table 12 shows the results.

### [Examples 5 to 9]

Each non-aqueous electrolyte solution (reference electrolyte solution) was prepared in the same manner as described above. In Example 9, to the solution obtained above, lithium nitrate (LiNO₃, manufactured by Tokyo Chemical Industry Co., Ltd.) was added in the content shown in Table 12 as the nitric acid compound (12), and the resultant mixture was then stirred for a day and filtered with a membrane filter. Subsequently, each reference electrolyte solution obtained was used to perform dissolving in the same manner as described above. Then, in the same manner as describe above, a cell was produced using the CO₂ dissolving electrolyte solution and evaluated. Table 12 shows the results.

### [Comparative Examples 1 to 6, 8, and 9]

In the same mixture solvent as described above, an electrolyte salt of mixed salt composition containing LiFSI and LiPF₆ or an electrolyte salt of simple salt composition containing only LiPF₆ was dissolved in concentrations shown in Table 12. In Comparative Examples 1 to 4, the solution obtained above was used as a non-aqueous electrolyte solution (reference electrolyte solution). In Comparative Example 5, to the solution obtained above, lithium bis(oxalato)borate (LiBOB, manufactured by Tokyo Chemical Industry Co., Ltd.) was further added in the content shown in Table 12 as a fluoro-oxalate compound (13), and the resultant mixture was stirred for a day to prepare a non-aqueous electrolyte solution. In Comparative Example 6, to the solution obtained above, lithium difluoro(oxalato)borate (LiDFOB, manufactured by Tokyo Chemical Industry Co., Ltd.) was further added in the content shown in Table 12 as a fluoro-oxalate compound (13), and the resultant mixture was stirred for a day to prepare a non-aqueous electrolyte solution. In Comparative Example 8, to the solution obtained above, lithium nitrate (LiNO₃, manufactured by Tokyo Chemical Industry Co., Ltd.) was added in the content shown in Table 12 as the nitric acid compound (12), and the resultant mixture was then stirred for a day and filtered with a membrane filter. Thus, a non-aqueous electrolyte solution was prepared. In Comparative Example 9, to the solution obtained above, di-tert-butylsilyl bis(trifluoromethane sulfonate) (Compound K) was further added in the content shown in Table 12, and the resultant mixture was then stirred for a day to prepare a non-aqueous electrolyte solution. Subsequently, in the same manner as described above, cells were produced using the respective reference electrolyte solutions obtained above and evaluated except that each electrolyte solution was not subjected to dissolving. Table 12 shows the results.

### [Comparative Example 7]

In the same mixture solvent as described above, an electrolyte salt of simple salt composition containing only LiPF₆ was dissolved in a concentration shown in Table 12. Thus, a non-aqueous electrolyte solution (reference electrolyte solution) was prepared. Subsequently, the reference electrolyte solution obtained above was used to perform dissolving in the same manner as described above. Then, in the same manner as describe above, a cell was produced using the CO₂ dissolving electrolyte solution and evaluated. Table 12 shows the results.

**[Table 12]**

| Non-aqueous electrolyte solution of Ex. 43 series | Salt composition | Type and content (wt%) of additive | | | Amount of CO₂ dissolved in non-aqueous electrolyte solution | | Real axis resistance (impedance, Ω) at -30°C | DCR | | | | | | OCV | | | Amount of electrodeposition after low-temperature cycles |
|---|---|---|---|---|---|---|---|---|---|---|---|---|---|---|---|---|---|
| | | Nitric acid compound | Specific compound | Fluorooxalato compound | Initial value (ppm) | Value after conditioning | | Initial value (Ω) | Value (Ω) after 300 cycles | DCR increase rate after 300 cycles | After 4-week enduring at 60°C (Ω) | DCR increase rate after 4-week enduring at 60°C | DCR increase rate at the same salt composition | Initial value (V) | After 4-week storage at 60°C | Difference (ΔV) before and after storage | |
| Ex. 1 | 0.1 M LiFSI+1.1 M LiPF₆ | | Formula (5): K (0.5) | | 1 | 4 | 22.14 | 1.092 | 1.176 | 1.077 | 1.410 | 1.292 | | 4.1995 | 4.0362 | 0.1633 | 24.1 |
| Ex. 2 | 0.2M LiFSI+1.0M LiPF₆ | | Formula (5): K (0.5) | | 1 | 5 | 21.71 | 1.081 | 1.162 | 1.075 | 1.389 | 1.285 | 0.901 | 4.1995 | 4.0351 | 0.1644 | 20.6 |
| Ex. 3 | 0.6M LiFSI+0.6M LiPF₆ | | Formula (5): K (0.5) | | 1 | 6 | 21.07 | 1.060 | 1.136 | 1.072 | 1.311 | 1.237 | 0.907 | 4.1995 | 4.0305 | 0.1690 | 16.8 |
| Ex. 4 | 1M LiFSI+0.2M LiPF₆ | | Formula (5): K (0.5) | | 1 | 5 | 20.65 | 1.056 | 1.131 | 1.071 | 1.298 | 1.230 | 0.919 | 4.1995 | 4.0267 | 0.1728 | 15.8 |
| Ex. 5 | 0.6M LiFSI+0.6M LiPF₆ | | Formula (5): K (0.5) | | 150 | 70 | 19.16 | 1.033 | 1.105 | 1.069 | 1.276 | 1.235 | | 4.1995 | 4.0652 | 0.1343 | 15.8 |
| Ex. 6 | 0.6M LiFSI+0.6M LiPF₆ | | Formula (5): K (0.5) | | 60 | 42 | 19.73 | 1.046 | 1.119 | 1.070 | 1.286 | 1.230 | | 4.1995 | 4.0644 | 0.1351 | 16.0 |
| Ex. 7 | 0.6M LiFSI+0.6M LiPF₆ | | Formula (5): K (0.5) | | 30 | 33 | 19.97 | 1.049 | 1.124 | 1.072 | 1.292 | 1.232 | | 4.1995 | 4.0612 | 0.1383 | 16.2 |
| Ex. 8 | 0.6M LiFSI+0.6M LiPF₆ | | Formula (5): K (0.5) | | 10 | 12 | 20.23 | 1.053 | 1.132 | 1.075 | 1.307 | 1.241 | | 4.1995 | 4.0315 | 0.1680 | 16.6 |
| Ex. 9 | 0.6M LiFSI+0.6M LiPF₆ | LiNO₃ (0.5) | Formula (5): K (0.5) | | 150 | 74 | 13.52 | 0.988 | 1.063 | 1.076 | 1.224 | 1.239 | | 4.1995 | 4.0552 | 0.1443 | 15.6 |
| Comp. Ex. 1 | 1.2M LiPF₆ | | | | 1 | 6 | 45.10 | 1.250 | 1.575 | 1.260 | 1.712 | 1.370 | | 4.1995 | 4.0431 | 0.1564 | 34.4 |
| Comp. Ex. 2 | 0.2M LiFSI+1.0M LiPF₆ | | | | 1 | 4 | 41.66 | 1.163 | 1.419 | 1.220 | 1.542 | 1.326 | | 4.1995 | 4.0322 | 0.1673 | 24.4 |
| Comp. Ex. 3 | 0.6M LiFSI+0.6M LiPF₆ | | | | 1 | 5 | 39.30 | 1.107 | 1.344 | 1.214 | 1.446 | 1.306 | | 4.1995 | 4.0282 | 0.1713 | 17.7 |
| Comp. Ex. 4 | 1M LiFSI+0.2M LiPF₆ | | | | 1 | 5 | 37.33 | 1.085 | 1.314 | 1.211 | 1.412 | 1.301 | | 4.1995 | 4.0212 | 0.1783 | 16.8 |
| Comp. Ex. 5 | 0.6M LiFSI+0.6M LiPF₆ | | | LiBOB (0.5) | 1 | 6 | 428.62 | 1.808 | 1.952 | 1.080 | 2.222 | 1.229 | | 4.1995 | 4.0388 | 0.1607 | |
| Comp. Ex. 6 | 0.6M LiFSI+0.6M LiPF₆ | | | LiDFOB (0.5) | 1 | 5 | 40.08 | 1.141 | 1.232 | 1.080 | 1.462 | 1.281 | | 4.1995 | 4.0318 | 0.1677 | |
| Comp. Ex. 7 | 1.2M LiPF₆ | | | | 150 | 70 | 33.56 | 1.187 | 1.493 | 1.258 | 1.622 | 1.366 | | 4.1995 | 4.0598 | 0.1397 | 30.6 |
| Comp. Ex. 8 | 0.6M LiFSI+0.6M LiPF₆ | LiNO₃ (0.5) | | | 1 | 70 | 14.88 | 1.035 | 1.252 | 1.210 | 1.322 | 1.277 | | 4.1994 | 3.8771 | 0.3223 | |
| Comp. Ex. 9 | 1.2M LiPF₆ | | Formula (5): K (0.5) | | 1 | 5 | 31.56 | 1.221 | 1.352 | 1.107 | 1.592 | 1.304 | 0.930 | 4.1995 | 4.0431 | 0.1564 | 38.2 |

### [Consideration of Table 12 (Example 4-3 Series)]

Comparison between Examples 1 to 4 and Comparative Examples 2 to 4 showed that, depending on the concentration of LiFSI, the impedance and DCRs (initial DCR, DCR after 300 cycles, and DCR after enduring at 60°C for 4 weeks) were reduced, and the effect of the reduction became significant by adding di-tert-butylsilyl bis(trifluoromethane sulfonate) (Compound K) to the electrolyte solution.

Comparison between Examples 1 to 4 and Comparative Examples 2 to 4 showed that, depending on the concentration of LiFSI, the OCV difference (ΔV) before and after storage increased, i.e., self-discharge increased, but when di-tert-butylsilyl bis(trifluoromethane sulfonate) was added to the electrolyte solution, the OCV difference (ΔV) before and after storage decreased, i.e., self-discharge was suppressed.

Comparison between Examples 2 to 4 and Comparative Examples 2 to 4 with the same salt composition and comparison between Comparative Example 9 and Comparative Example 1 with the same salt composition showed that the mixed salt composition containing LiFSI and LiPF₆ had higher effects of reducing the impedance and DCR and suppressing DCR increasing ratio due to addition oimpedancef di-tert-butylsilyl bis(trifluoromethane sulfonate), than the simple salt composition containing only LiPF₆.

Comparison between Comparative Examples 1 to 4, Comparative Example 7, Comparative Example 9, and Examples 2 to 9 showed that, depending on the concentration of LiFSI, the amount of electrodeposition after low-temperature cycles decreased, and degradation of the negative electrode due to low-temperature charging was reduced. It was also shown that the addition of di-tert-butylsilyl bis(trifluoromethane sulfonate) to the simple salt composition containing only LiPF₆ increased the amount of lithium electrodeposited on the negative electrode during low-temperature cycles, and degradation of the negative electrode due to low temperature charging progressed. It was also shown that when di-tert-butylsilyl bis(trifluoromethane sulfonate) was added to the mixed salt composition containing LiFSI and LiPF₆, the amount of electrodeposition after low-temperature cycles decreased, and degradation of the negative electrode due to low temperature charging was suppressed.

The reason for which the effects obtained due to addition of di-tert-butylsilyl bis(trifluoromethane sulfonate) were higher for the mixed salt composition containing LiFSI and LiPF₆ than for the simple salt composition containing only LiPF₆ is considered to be that the coating film derived from an anionic component of LiFSI is formed on the interface between the positive and negative electrodes, so that the solubility of LiFSI is high and the viscosity of the electrolyte solution at low temperature is thereby reduced.

Comparison between Examples 1 to 8 showed that, depending on the concentration of LiFSI, the OCV difference (ΔV) before and after storage increased, i.e., self-discharge increased, but when CO₂ was dissolved in the electrolyte solution containing di-tert-butylsilyl bis(trifluoromethane sulfonate), the OCV difference (ΔV) before and after storage decreased, i.e., self-discharge was suppressed, while the impedance and DCR further decreased.

The reason for which these effects due to dissolution of CO₂ are enhanced is considered to be that a coating film derived from CO₂ is formed on the positive and negative electrodes, so that lithium ion intercalation (intercalation (insertion) reaction) on the positive electrode during storage is suppressed, side reactions in the positive electrode are suppressed, and low-temperature charging acceptability to the negative electrode is improved.

It was also shown that the effect of reducing the impedance and DCR and the effect of suppressing self-discharge became significant when the amount of CO₂ dissolved in the electrolyte solution exceeded 10 ppm by mass (e.g., 20 ppm by mass or more).

The reason for which the effect of suppressing self-discharge due to dissolution of CO₂ is higher for the electrolyte solution having the mixed salt composition containing LiFSI and LiPF₆ than for the simple salt composition containing only LiPF₆ is considered to be related to the order of formation of the coating film of the anionic component of FSI formed on the positive and negative electrodes during charging and the coating film of a lithium carbonate component from CO₂.

Comparison between Examples 5 and 9 and Comparative Example 8 with the same salt composition showed that when LiNO₃ was further added to the electrolyte solution containing di-tert-butylsilyl bis(trifluoromethane sulfonate), the impedance and the DCR significantly decreased. It was also shown that although self-discharge increased, the self-discharge due to addition of LiNO₃ was suppressed by dissolving CO₂ in the electrolyte solution. Comparison of the DCR increase rates after 4-week enduring at 60°C with the same salt composition due to addition of di-tert-butylsilyl bis(trifluoromethane sulfonate) showed that the DCR increase rate was significantly lower and the effect of suppressing the DCR increase was higher, for the electrolyte solution having the mixed salt composition containing LiFSI and LiPF6 than for the simple salt composition containing only LiPF₆. The same results were shown for the DCR increase rate after 300 cycles with the same salt composition due to addition of di-tert-butylsilyl bis(trifluoromethane sulfonate). The reason for this is also considered to be that anion coating film of LiFSI is formed on the positive and negative electrodes.

### <Example 4-4 Series>

### [Examples 1 to 4]

In a mixture solvent of ethylene carbonate (EC) and ethyl methyl carbonate (EMC) in a volume ratio of 3 : 7 (manufactured by Kishida Chemical Co., Ltd.) used as an electrolyte solution solvent, an electrolyte salt of a mixed salt composition containing LiFSI (manufactured by Nippon Shokubai Co., Ltd.) and LiPF₆ (manufactured by Stella Chemifa Corporation) was dissolved in concentrations shown in Table 13. To the solution obtained above, tert-butyldimethylsilyl trifluoromethane sulfonate (Compound Z, manufactured by Tokyo Chemical Industry Co., Ltd.) was added in the content shown in Table 13 as the sulfur atom-containing compound (5) represented by the general formula (5). The resultant mixture was then stirred for a day. Thus, a non-aqueous electrolyte solution (reference electrolyte solution) was prepared. Subsequently, in the same manner as described above, cells were produced using the respective reference electrolyte solutions obtained above and evaluated except that each electrolyte solution was not subjected to dissolving. Table 13 shows the results.

### [Examples 5 to 9]

Each non-aqueous electrolyte solution (reference electrolyte solution) was prepared in the same manner as described above. In Example 9, to the solution obtained above, lithium nitrate (LiNO₃, manufactured by Tokyo Chemical Industry Co., Ltd.) was added in the content shown in Table 13 as the nitric acid compound (12), and the resultant mixture was then stirred for a day and filtered with a membrane filter. Subsequently, each reference electrolyte solution obtained was used to perform dissolving in the same manner as described above. Then, in the same manner as describe above, a cell was produced using the CO₂ dissolving electrolyte solution and evaluated. Table 13 shows the results.

### [Comparative Examples 1 to 6, 8, and 9]

In the same mixture solvent as described above, an electrolyte salt of mixed salt composition containing LiFSI and LiPF₆ or an electrolyte salt of simple salt composition containing only LiPF₆ was dissolved in concentrations shown in Table 13. In Comparative Examples 1 to 4, the solution obtained above was used as a non-aqueous electrolyte solution (reference electrolyte solution). In Comparative Example 5, to the solution obtained above, lithium bis(oxalato)borate (LiBOB, manufactured by Tokyo Chemical Industry Co., Ltd.) was further added in the content shown in Table 13 as a fluoro-oxalate compound (13), and the resultant mixture was stirred for a day to prepare a non-aqueous electrolyte solution. In Comparative Example 6, to the solution obtained above, lithium difluoro(oxalato)borate (LiDFOB, manufactured by Tokyo Chemical Industry Co., Ltd.) was further added in the content shown in Table 13 as a fluoro-oxalate compound (13), and the resultant mixture was stirred for a day to prepare a non-aqueous electrolyte solution. In Comparative Example 8, to the solution obtained above, lithium nitrate (LiNO₃, manufactured by Tokyo Chemical Industry Co., Ltd.) was added in the content shown in Table 13 as the nitric acid compound (12), and the resultant mixture was then stirred for a day and filtered with a membrane filter. Thus, a non-aqueous electrolyte solution was prepared. In Comparative Example 9, to the solution obtained above, tert-butyldimethylsilyl trifluoromethane sulfonate (Compound Z) was further added in the content shown in Table 13, and the resultant mixture was then stirred for a day to prepare a non-aqueous electrolyte solution. Subsequently, in the same manner as described above, cells were produced using the respective reference electrolyte solutions obtained above and evaluated except that each electrolyte solution was not subjected to dissolving. Table 13 shows the results.

### [Comparative Example 7]

In the same mixture solvent as described above, an electrolyte salt of simple salt composition containing only LiPF₆ was dissolved in a concentration shown in Table 13. Thus, a non-aqueous electrolyte solution (reference electrolyte solution) was prepared. Subsequently, the reference electrolyte solution obtained above was used to perform dissolving in the same manner as described above. Then, in the same manner as describe above, a cell was produced using the CO₂ dissolving electrolyte solution and evaluated. Table 13 shows the results.

**[Table 13]**

| Non-aqueous electrolyte solution of Ex. 4-4 series | Salt composition | Type and content (wt%) of additive | | | Amount of CO₂ dissolved in non-aqueous electrolyte solution | | Real axis resistance (impedance, Ω) at -30°C | DCR | | | | | | OCV | | | Amount of electrodeposition after low-temperature cycles |
|---|---|---|---|---|---|---|---|---|---|---|---|---|---|---|---|---|---|
| | | Nitric acid compound | Specific compound | Fluorooxalato compound | Initial value (ppm) | Value after conditioning | | Initial value (Ω) | Value (Ω) after 300 cycles | DCR increase rate after 300 cycles | After 4-week enduring at 60°C (Ω) | DCR increase rate after 4-week enduring at 60°C | DCR increase rate at the same salt composition | Initial value (V) | After 4-week storage at 60°C | Difference (ΔV) before and after storage | |
| Ex. 1 | 0.1MLiFSI+1.1MLiPF₆ | | Formula (5): Z (0.5) | | 1 | 3 | 22.10 | 1.093 | 1.178 | 1.078 | 1.413 | 1.293 | | 4.1995 | 4.0364 | 0.1631 | 27.4 |
| Ex. 2 | 02MLiFSI+1.0MLiPF₆ | | Formula (5): Z (0.5) | | 1 | 4 | 21.71 | 1.082 | 1.163 | 1.075 | 1.389 | 1.284 | 0.901 | 4.1995 | 4.0353 | 0.1642 | 22.5 |
| Ex. 3 | 0.6M LiFSI+0.6MLiPF₆ | | Formula (5): Z (0.5) | | 1 | 5 | 21.17 | 1.061 | 1.137 | 1.072 | 1.313 | 1.238 | 0.908 | 4.1995 | 4.0308 | 0.1687 | 16.9 |
| Ex. 4 | 1M LiFSI+0.2M LiPF₆ | | Formula (5): Z (0.5) | | 1 | 5 | 20.72 | 1.056 | 1.133 | 1.073 | 1.300 | 1.231 | 0.921 | 4.1995 | 4.0269 | 0.1726 | 15.9 |
| Ex. 5 | 0.6MLiFSI+0.6MLiPF₆ | | Formula (5): Z (0.5) | | 150 | 71 | 19.18 | 1.034 | 1.106 | 1.069 | 1.281 | 1.238 | | 4.1995 | 4.0658 | 0.1337 | 16.3 |
| Ex. 6 | 0.6MLiFSI+0.6MLiPF₆ | | Formula (5): Z (0.5) | | 60 | 42 | 19.81 | 1.047 | 1.120 | 1.070 | 1.288 | 1.230 | | 4.1995 | 4.0647 | 0.1348 | 16.5 |
| Ex. 7 | 0.6MLiFSI+0.6MLiPF₆ | | Formula (5): Z (0.5) | | 30 | 33 | 19.99 | 1.050 | 1.125 | 1.072 | 1.294 | 1.232 | | 4.1995 | 4.0616 | 0.1379 | 16.6 |
| Ex. 8 | 0.6MLiFSI+0.6MLiPF₆ | | Formula (5): Z (0.5) | | 10 | 13 | 20.25 | 1.054 | 1.133 | 1.075 | 1.310 | 1.243 | | 4.1995 | 4.0316 | 0.1679 | 16.9 |
| Ex. 9 | 0.6M LiFSI+0.6M LiPF₆ | LiNO₃ (0.5) | Formula (5): Z (0.5) | | 150 | 75 | 13.70 | 0.989 | 1.064 | 1.076 | 1.226 | 1.240 | | 4.1995 | 4.0554 | 0.1441 | 15.8 |
| Comp. Ex. 1 | 1.2MLiPF₆ | | | | 1 | 6 | 45.10 | 1.250 | 1.575 | 1.260 | 1.712 | 1.370 | | 4.1995 | 4.0431 | 0.1564 | 34.4 |
| Comp. Ex. 2 | 0.2MLiFSI+1.0MLiPF₆ | | | | 1 | 5 | 41.66 | 1.163 | 1.419 | 1.220 | 1.542 | 1.326 | | 4.1995 | 4.0322 | 0.1673 | 24.4 |
| Comp. Ex. 3 | 0.6M LiFSI+0.6MLiPF₆ | | | | 1 | 4 | 39.30 | 1.107 | 1.344 | 1.214 | 1.446 | 1.306 | | 4.1995 | 4.0282 | 0.1713 | 17.7 |
| Comp. Ex. 4 | 1M LiFSI+0.2M LiPF₆ | | | | 1 | 5 | 37.33 | 1.085 | 1.314 | 1.211 | 1.412 | 1.301 | | 4.1995 | 4.0212 | 0.1783 | 16.8 |
| Comp. Ex. 5 | 0.6M LiFSI+0.6MLiPF₆ | | | LiBOB (0.5) | 1 | 5 | 428.62 | 1.808 | 1.952 | 1.080 | 2.222 | 1.229 | | 4.1995 | 4.0388 | 0.1607 | |
| Comp. Ex. 6 | 0.6M LiFSI+0.6M LiPF₆ | | | LiDFOB (0.5) | 1 | 6 | 40.08 | 1.141 | 1.232 | 1.080 | 1.462 | 1.281 | | 4.1995 | 4.0318 | 0.1677 | |
| Comp. Ex. 7 | 1.2M LiPF₆ | | | | 150 | 72 | 33.56 | 1.187 | 1.493 | 1.258 | 1.622 | 1.366 | | 4.1995 | 4.0598 | 0.1397 | 30.6 |
| Comp. Ex. 8 | 0.6M LiFSI+0.6M LiPF₆ | LiNO₃ (0.5) | | | 1 | 72 | 14.88 | 1.035 | 1.252 | 1.210 | 1.322 | 1.277 | | 4.1994 | 3.8771 | 0.3223 | |
| Comp. Ex. 9 | 1.2M LiPF₆ | | Formula (5): Z (0.5) | | 1 | 4 | 31.67 | 1.223 | 1.363 | 1.114 | 1.599 | 1.307 | 0.934 | 4.1995 | 4.0434 | 0.1561 | 39.4 |

### [Consideration of Table 13 (Example 4-4 Series)]

Comparison between Examples 1 to 4 and Comparative Examples 2 to 4 showed that, depending on the concentration of LiFSI, the impedance and DCRs (initial DCR, DCR after 300 cycles, and DCR after 4-week enduring at 60°C) were reduced, and the effect of the reduction became significant by adding tert-butyldimethylsilyl trifluoromethane sulfonate (Compound Z) to the electrolyte solution. Comparison between Examples 1 to 4 and Comparative Examples 2 to 4 showed that, depending on the concentration of LiFSI, the OCV difference (ΔV) before and after storage increased, i.e., self-discharge increased, but when tert-butyldimethylsilyl trifluoromethane sulfonate was added to the electrolyte solution, the OCV difference (ΔV) before and after storage decreased, i.e., self-discharge was suppressed.

Comparison between Examples 2 to 4 and Comparative Examples 2 to 4 with the same salt composition and comparison between Comparative Example 9 and Comparative Example 1 with the same salt composition showed that the mixed salt composition containing LiFSI and LiPF₆ had higher effects of reducing the impedance and DCR and suppressing DCR increasing ratio due to addition of tert-butyldimethylsilyl trifluoromethane sulfonate, than the simple salt composition containing only LiPF₆.

Comparison between Comparative Examples 1 to 4, Comparative Example 7, Comparative Example 9, and Examples 2 to 9 showed that, depending on the concentration of LiFSI, the amount of electrodeposition after low-temperature cycles decreased, and degradation of the negative electrode due to low-temperature charging was reduced. It was also shown that the addition of tert-butyldimethylsilyl trifluoromethane sulfonate to the simple salt composition containing only LiPF₆ increased the amount of lithium electrodeposited on the negative electrode during low-temperature cycles, and degradation of the negative electrode due to low temperature charging progressed. It was also shown that when tert-butyldimethylsilyl trifluoromethane sulfonate was added to the mixed salt composition containing LiFSI and LiPF₆, the amount of electrodeposition after low-temperature cycles decreased, and degradation of the negative electrode due to low temperature charging was suppressed.

The reason for which the effects obtained due to addition of tert-butyldimethylsilyl trifluoromethane sulfonate were higher for the mixed salt composition containing LiFSI and LiPF₆ than for the simple salt composition containing only LiPF₆ is considered to be that the coating film derived from an anionic component of LiFSI is formed on the interface between the positive and negative electrodes, so that the solubility of LiFSI is high and the viscosity of the electrolyte solution at low temperature is thereby reduced.

Comparison between Examples 1 to 8 showed that, depending on the concentration of LiFSI, the OCV difference (ΔV) before and after storage increased, i.e., self-discharge increased, but when CO₂ was dissolved in the electrolyte solution containing tert-butyldimethylsilyl trifluoromethane sulfonate, the OCV difference (ΔV) before and after storage decreased, i.e., self-discharge is suppressed, while the impedance and DCR further decrease.

The reason for which these effects due to dissolution of CO₂ are enhanced is considered to be that a coating film derived from CO₂ is formed on the positive and negative electrodes, so that lithium ion intercalation (intercalation (insertion) reaction) on the positive electrode during storage is suppressed, side reactions in the positive electrode are suppressed, and low-temperature charging acceptability to the negative electrode is improved.

It was also shown that the effect of reducing the impedance and DCR and the effect of suppressing self-discharge became significant when the amount of CO₂ dissolved in the electrolyte solution exceeded 10 ppm by mass (e.g., 20 ppm by mass or more).

The reason for which the effect of suppressing self-discharge due to dissolution of CO₂ is higher for the electrolyte solution having the mixed salt composition containing LiFSI and LiPF₆ than for the simple salt composition containing only LiPF₆ is considered to be related to the order of formation of the coating film of the anionic component of FSI formed on the positive and negative electrodes during charging and the coating film of a lithium carbonate component from CO₂.

Comparison between Examples 5 and 9 and Comparative Example 8 with the same salt composition showed that when LiNO₃ was further added to the electrolyte solution containing tert-butyldimethylsilyl trifluoromethane sulfonate, the impedance and the DCR significantly decreased. It was also shown that although self-discharge increased, the self-discharge due to addition of LiNO₃ was suppressed by dissolving CO₂ in the electrolyte solution.

Comparison of the DCR increase rates after 4-week enduring at 60°C with the same salt composition due to addition of tert-butyldimethylsilyl trifluoromethane sulfonate showed that the DCR increase rate was significantly lower and the effect of suppressing the DCR increase was higher, for the electrolyte solution having the mixed salt composition containing LiFSI and LiPF6 than for the simple salt composition containing only LiPF₆. The same results were shown for the DCR increase rate after 300 cycles with the same salt composition due to addition of tert-butyldimethylsilyl trifluoromethane sulfonate. The reason for this is also considered to be that anion coating film of LiFSI is formed on the positive and negative electrodes.

### <Example 5-1 Series>

### [Examples 1 to 4]

In a mixture solvent of ethylene carbonate (EC) and ethyl methyl carbonate (EMC) in a volume ratio of 3 : 7 (manufactured by Kishida Chemical Co., Ltd.) used as an electrolyte solution solvent, an electrolyte salt of a mixed salt composition containing LiFSI (manufactured by Nippon Shokubai Co., Ltd.) and LiPF₆ (manufactured by Stella Chemifa Corporation) was dissolved in concentrations shown in Table 14. To the solution obtained above, bis(2,2,2-trifluoroethyl) phosphite (Compound L, manufactured by Tokyo Chemical Industry Co., Ltd.) was added in the content shown in Table 14 as the phosphorus atom-containing compound (6) represented by the general formula (6). The resultant mixture was then stirred for a day. Thus, a non-aqueous electrolyte solution (reference electrolyte solution) was prepared. Subsequently, in the same manner as described above, cells were produced using the respective reference electrolyte solutions obtained above and evaluated except that each electrolyte solution was not subjected to dissolving. Table 14 shows the results.

### [Examples 5 to 9]

Each non-aqueous electrolyte solution (reference electrolyte solution) was prepared in the same manner as described above. In Example 9, to the solution obtained above, lithium nitrate (LiNO₃, manufactured by Tokyo Chemical Industry Co., Ltd.) was added in the content shown in Table 14 as the nitric acid compound (12), and the resultant mixture was then stirred for a day and filtered with a membrane filter. Subsequently, each reference electrolyte solution obtained was used to perform dissolving in the same manner as described above. Then, in the same manner as describe above, a cell was produced using the CO₂ dissolving electrolyte solution and evaluated. Table 14 shows the results.

### [Comparative Examples 1 to 6, 8, and 9]

In the same mixture solvent as described above, an electrolyte salt of mixed salt composition containing LiFSI and LiPF₆ or an electrolyte salt of simple salt composition containing only LiPF₆ was dissolved in concentrations shown in Table 14. In Comparative Examples 1 to 4, the solution obtained above was used as a non-aqueous electrolyte solution (reference electrolyte solution). In Comparative Example 5, to the solution obtained above, lithium bis(oxalato)borate (LiBOB, manufactured by Tokyo Chemical Industry Co., Ltd.) was further added in the content shown in Table 14 as a fluoro-oxalate compound (13), and the resultant mixture was stirred for a day to prepare a non-aqueous electrolyte solution. In Comparative Example 6, to the solution obtained above, lithium difluoro(oxalato)borate (LiDFOB, manufactured by Tokyo Chemical Industry Co., Ltd.) was further added in the content shown in Table 14 as a fluoro-oxalate compound (13), and the resultant mixture was stirred for a day to prepare a non-aqueous electrolyte solution. In Comparative Example 8, a non-aqueous electrolyte solution was prepared as follows. To the solution obtained above, lithium nitrate (LiNO₃, manufactured by Tokyo Chemical Industry Co., Ltd.) was added in the content shown in Table 14 as the nitric acid compound (12), and the resultant mixture was then stirred for a day and filtered with a membrane filter. In Comparative Example 9, to the solution obtained above, bis(2,2,2-trifluoroethyl) phosphite (Compound L) was further added in the content shown in Table 14, and the resultant mixture was then stirred for a day to prepare a non-aqueous electrolyte solution. Subsequently, in the same manner as described above, cells were produced using the respective reference electrolyte solutions obtained above and evaluated except that each electrolyte solution was not subjected to dissolving. Table 14 shows the results.

### [Comparative Example 7]

In the same mixture solvent as described above, an electrolyte salt of simple salt composition containing only LiPF₆ was dissolved in a concentration shown in Table 14. Thus, a non-aqueous electrolyte solution (reference electrolyte solution) was prepared. Subsequently, the reference electrolyte solution obtained above was used to perform dissolving in the same manner as described above. Then, in the same manner as describe above, a cell was produced using the CO₂ dissolving electrolyte solution and evaluated. Table 14 shows the results.

**[Table 14]**

| Non-aqueous electrolyte solution of Ex. 5-1 series | Salt composition | Type and content (wt%) of additive | | | Amount of CO₂ dissolved in non-aqueous electrolyte solution | | Real axis resistance (impedance, Ω) at -30°C | DCR | | | | | | OCV | | | Amount of electrodeposition after low-temperature cycles |
|---|---|---|---|---|---|---|---|---|---|---|---|---|---|---|---|---|---|
| | | Nitric acid compound | Specific compound | Fluorooxalato compound | Initial value (ppm) | Value after conditioning | | Initial value (Ω) | Value (Ω) after 300 cycles | DCR increase rate after 300 cycles | After 4-week enduring at 60°C (Ω) | DCR increase rate after 4-week enduring at 60°C | DCR increase rate at the same salt composition | Initial value (V) | After 4-week storage at 60°C | Difference (ΔV) before and after storage | |
| Fx. 1 | 0.1MLiFSI+1.1MLiPF₆ | | Formula (6): L (0.5) | | 1 | 6 | 28.11 | 1.088 | 1.221 | 1.122 | 1.411 | 1.296 | | 4.1995 | 4.0375 | 0.1620 | 27.7 |
| Fx. 2 | 0.2M LiFSI+1.0M LiPF₆ | | Formula (6): L (0.5) | | 1 | 6 | 27.84 | 1.073 | 1.201 | 1.120 | 1.372 | 1.279 | 0.890 | 4.1995 | 4.0357 | 0.1638 | 23.2 |
| Ex. 3 | 0.6M LiFSI+0.6M LiPF₆ | | Formula (6): L (0.5) | | 1 | 5 | 27.29 | 1.052 | 1.157 | 1.100 | 1.292 | 1.229 | 0.893 | 4.1995 | 4.0322 | 0.1673 | 17.1 |
| Ex. 4 | 1M LiFSI+0.2M LiPF₆ | | Formula (6): L (0.5) | | 1 | 5 | 26.88 | 1.031 | 1.123 | 1.090 | 1.274 | 1.236 | 0.902 | 4.1995 | 4.0312 | 0.1683 | 16.2 |
| Ex. 5 | 0.6M LiFSI+0.6M LiPF₆ | | Formula (6): L (0.5) | | 150 | 78 | 24.37 | 1.010 | 1.090 | 1.080 | 1.237 | 1.225 | | 4.1995 | 4.0625 | 0.1370 | 16.6 |
| Ex. 6 | 0.6M LiFSI+0.6M LiPF₆ | | Formula (6): L (0.5) | | 60 | 46 | 24.61 | 1.019 | 1.105 | 1.085 | 1.244 | 1.221 | | 4.1995 | 4.0622 | 0.1373 | 16.8 |
| Ex. 7 | 0.6M LiFSI+0.6M LiPF₆ | | Formula (6): L (0.5) | | 30 | 27 | 24.86 | 1.029 | 1.121 | 1.090 | 1.261 | 1.226 | | 4.1995 | 4.0581 | 0.1414 | 16.9 |
| Fx. 8 | 0.6M LiFSI+0.6M LiPF₆ | | Formula (6): L (0.5) | | 10 | 10 | 25.23 | 1.049 | 1.146 | 1.092 | 1.288 | 1.227 | | 4.1995 | 4.0344 | 0.1651 | 17.1 |
| Ex. 9 | 0.6M LiFSI+0.6M LiPF₆ | LiNO₃ (0.5) | Formula (6): L (0.5) | | 150 | 79 | 14.09 | 0.984 | 1.102 | 1.120 | 1.208 | 1.228 | | 4.1995 | 4.0579 | 0.1416 | 16.1 |
| Comp. Ex. 1 | 1.2M LiPF₆ | | | | 1 | 6 | 45.10 | 1.250 | 1.575 | 1.260 | 1.712 | 1.370 | | 4.1995 | 4.0431 | 0.1564 | 34.4 |
| Comp. Ex. 2 | 0.2M LiFSI+1.0M LiPF₆ | | | | 1 | 4 | 41.66 | 1.163 | 1.419 | 1.220 | 1.542 | 1.326 | | 4.1995 | 4.0322 | 0.1673 | 24.4 |
| Comp. Ex. 3 | 0.6M LiFSI+0.6M LiPF₆ | | | | 1 | 5 | 39.30 | 1.107 | 1.344 | 1.214 | 1.446 | 1.306 | | 4.1995 | 4.0282 | 0.1713 | 17.7 |
| Comp. Ex. 4 | 1M LiFSI+0.2M LiPF₆ | | | | 1 | 5 | 37.33 | 1.085 | 1.314 | 1.211 | 1.412 | 1.301 | | 4.1995 | 4.0212 | 0.1783 | 16.8 |
| Comp. Ex. 5 | 0.6M LiFSI+0.6M LiPF₆ | | | LiBOB (0.5) | 1 | 6 | 428.62 | 1.808 | 1.952 | 1.080 | 2.222 | 1.229 | | 4.1995 | 4.0388 | 0.1607 | |
| Comp. Ex. 6 | 0.6M LiFSI+0.6M LiPF₆ | | | LiDFOB (0.5) | 1 | 5 | 40.08 | 1.141 | 1.232 | 1.080 | 1.462 | 1.281 | | 4.1995 | 4.0318 | 0.1677 | |
| Comp. Ex. 7 | 1.2M LiPF₆ | | | | 150 | 70 | 33.56 | 1.187 | 1.493 | 1.258 | 1.622 | 1.366 | | 4.1995 | 4.0598 | 0.1397 | 30.6 |
| Comp. Ex. 8 | 0.6M LiFSI+0.6M LiPF₆ | LiNO₃ (0.5) | | | 1 | 70 | 14.88 | 1.035 | 1.252 | 1.210 | 1.322 | 1.277 | | 4.1994 | 3.8771 | 0.3223 | |
| Comp. Ex. 9 | 1.2M LiPF₆ | | Formula (6): L (0.5) | | 1 | 5 | 35.21 | 1.214 | 1.381 | 1.137 | 1.562 | 1.287 | 0.912 | 4.1995 | 4.0431 | 0.1564 | 38.7 |

### [Consideration of Table 14 (Example 5-1 Series)]

Comparison between Examples 1 to 4 and Comparative Examples 2 to 4 showed that, depending on the concentration of LiFSI, the impedance and DCRs (initial DCR, DCR after 300 cycles, and DCR after 4-week enduring at 60°C) were reduced, and the effect of the reduction became significant by adding bis(2,2,2-trifluoroethyl) phosphite (Compound L) to the electrolyte solution.

Comparison between Examples 1 to 4 and Comparative Examples 2 to 4 showed that, depending on the concentration of LiFSI, the OCV difference (ΔV) before and after storage increased, i.e., self-discharge increased, but when bis(2,2,2-trifluoroethyl) phosphite was added to the electrolyte solution, the OCV difference (ΔV) before and after storage decreased, i.e., self-discharge was suppressed.

Comparison between Examples 2 to 4 and Comparative Examples 2 to 4 with the same salt composition and comparison between Comparative Example 9 and Comparative Example 1 with the same salt composition showed that the mixed salt composition containing LiFSI and LiPF₆ had higher effects of reducing the impedance, suppressing self-discharge, and suppressing the DCR increase due to addition of bis(2,2,2-trifluoroethyl) phosphite, than the simple salt composition containing only LiPF₆.

Comparison between Comparative Examples 1 to 4, Comparative Example 7, Comparative Example 9, and Examples 2 to 9 showed that, depending on the concentration of LiFSI, the amount of electrodeposition after low-temperature cycles decreased, and degradation of the negative electrode due to low-temperature charging was reduced. It was also shown that the addition of bis(2,2,2-trifluoroethyl) phosphite to the simple salt composition containing only LiPF₆ increased the amount of lithium electrodeposited on the negative electrode during low-temperature cycles, and degradation of the negative electrode due to low temperature charging progressed. It was also shown that when bis(2,2,2-trifluoroethyl) phosphite was added to the mixed salt composition containing LiFSI and LiPF₆, the amount of electrodeposition after low-temperature cycles decreased, and degradation of the negative electrode due to low temperature charging was suppressed.

The reason for which the effects obtained due to addition of bis(2,2,2-trifluoroethyl) phosphite were higher for the mixed salt composition containing LiFSI and LiPF₆ than for the simple salt composition containing only LiPF₆ is considered to be that the coating film derived from an anionic component of LiFSI is formed on the interface between the positive and negative electrodes, so that the solubility of LiFSI is high and the viscosity of the electrolyte solution at low temperature is thereby reduced.

Comparison between Examples 3 and Examples 5 to 8 with the same salt composition showed that when CO₂ was dissolved in the electrolyte solution containing bis(2,2,2-trifluoroethyl) phosphite, the effect of reducing the impedance and DCR and the effect of suppressing self-discharge were further enhanced. It was further shown that these effects became significant when the amount of CO₂ dissolved in the electrolyte solution exceeded 10 ppm by mass (e.g., 20 ppm by mass or more).

The reason for which these effects due to dissolution of CO₂ are enhanced is considered to be that a coating film derived from CO₂ is formed on the positive and negative electrodes, so that lithium ion intercalation (intercalation (insertion) reaction) on the positive electrode during storage is suppressed, side reactions in the positive electrode are suppressed, and low-temperature charging acceptability to the negative electrode is improved.

Comparison between Examples 5 and 9 and Comparative Example 8 with the same salt composition showed that when LiNO₃ was further added to the electrolyte solution containing bis(2,2,2-trifluoroethyl) phosphite, the impedance and the DCR significantly decreased. It was also shown that although self-discharge increased, the self-discharge due to addition of LiNO₃ was suppressed by dissolving CO₂ in the electrolyte solution.

The reason for which the effect of suppressing self-discharge due to dissolution of CO₂ is higher for the electrolyte solution having the mixed salt composition containing LiFSI and LiPF₆ than for the simple salt composition containing only LiPF₆ is considered to be related to the order of formation of the coating film of the anionic component of FSI formed on the positive and negative electrodes during charging and the coating film of a lithium carbonate component from CO₂.

Comparison of the DCR increase rates after 4-week enduring at 60°C with the same salt composition due to addition of bis(2,2,2-trifluoroethyl) phosphite showed that the DCR increase rate was significantly lower and the effect of suppressing the DCR increase was higher, for the electrolyte solution having the mixed salt composition containing LiFSI and LiPF6 than for the simple salt composition containing only LiPF₆. The same results were shown for the DCR increase rate after 300 cycles with the same salt composition due to addition of bis(2,2,2-trifluoroethyl) phosphite. The reason for this is also considered to be that anion coating film of LiFSI is formed on the positive and negative electrodes.

### <Example 5-2 Series>

### [Examples 1 to 4]

In a mixture solvent of ethylene carbonate (EC) and ethyl methyl carbonate (EMC) in a volume ratio of 3 : 7 (manufactured by Kishida Chemical Co., Ltd.) used as an electrolyte solution solvent, an electrolyte salt of a mixed salt composition containing LiFSI (manufactured by Nippon Shokubai Co., Ltd.) and LiPF₆ (manufactured by Stella Chemifa Corporation) was dissolved in concentrations shown in Table 15. To the solution obtained, trimethylsilyl polyphosphate (Compound M, manufactured by Sigma-Aldrich Co. LLC) was added in the content shown in Table 15 as the phosphorus atom-containing compound (6) represented by the general formula (6). The resultant mixture was then stirred for a day. Thus, a non-aqueous electrolyte solution (reference electrolyte solution) was prepared. Subsequently, in the same manner as described above, cells were produced using the respective reference electrolyte solutions obtained above and evaluated except that each electrolyte solution was not subjected to dissolving. Table 15 shows the results.

### (³¹P-NMR Analysis)

As a result of ³¹P-NMR analysis of trimethylsilyl polyphosphate (Compound M), which was a reagent manufactured by Sigma-Aldrich Co. LLC, two peaks were observed: a peak (Pt) appearing at a chemical shift of -28 ppm to -33 ppm; and a peak (Pm) appearing at a chemical shift of -35 ppm to -41 ppm. The integral ratio of the two peaks was Pt : Pm = 1.00 : 1.43. No peak (Pb) appearing at -41 ppm to -45 ppm was observed. In the ³¹P-NMR measurement, JNM ECA500 manufactured by JEOL Ltd. was used, the measurement was performed with a double test tube as a test tube, and the chemical shift was determined with the peak of phosphorus of H₃PO₄ added to one of the double test tube as 0 ppm.

### [Examples 5 to 9]

Each non-aqueous electrolyte solution (reference electrolyte solution) was prepared in the same manner as described above. In Example 9, to the solution obtained above, lithium nitrate (LiNO₃, manufactured by Tokyo Chemical Industry Co., Ltd.) was added in the content shown in Table 15 as the nitric acid compound (12), and the resultant mixture was then stirred for a day and filtered with a membrane filter. Subsequently, each reference electrolyte solution obtained was used to perform dissolving in the same manner as described above. Then, in the same manner as describe above, a cell was produced using the CO₂ dissolving electrolyte solution and evaluated. Table 15 shows the results.

### [Comparative Examples 1 to 6, 8, and 9]

In the same mixture solvent as described above, an electrolyte salt of mixed salt composition containing LiFSI and LiPF₆ or an electrolyte salt of simple salt composition containing only LiPF₆ was dissolved in concentrations shown in Table 15. In Comparative Examples 1 to 4, the solution obtained above was used as a non-aqueous electrolyte solution (reference electrolyte solution). In Comparative Example 5, to the solution obtained above, lithium bis(oxalato)borate (LiBOB, manufactured by Tokyo Chemical Industry Co., Ltd.) was further added in the content shown in Table 15 as a fluoro-oxalate compound (13), and the resultant mixture was stirred for a day to prepare a non-aqueous electrolyte solution. In Comparative Example 6, to the solution obtained above, lithium difluoro(oxalato)borate (LiDFOB, manufactured by Tokyo Chemical Industry Co., Ltd.) was further added in the content shown in Table 15 as a fluoro-oxalate compound (13), and the resultant mixture was stirred for a day to prepare a non-aqueous electrolyte solution. In Comparative Example 8, a non-aqueous electrolyte solution was prepared as follows. To the solution obtained above, lithium nitrate (LiNO₃, manufactured by Tokyo Chemical Industry Co., Ltd.) was added in the content shown in Table 15 as the nitric acid compound (12), and the resultant mixture was then stirred for a day and filtered with a membrane filter. In Comparative Example 9, to the solution obtained above, trimethylsilyl polyphosphate (Compound M) was further added in the content shown in Table 15, and the resultant mixture was then stirred for a day to prepare a non-aqueous electrolyte solution. Subsequently, in the same manner as described above, cells were produced using the respective reference electrolyte solutions obtained above and evaluated except that each electrolyte solution was not subjected to dissolving. Table 15 shows the results.

### [Comparative Example 7]

In the same mixture solvent as described above, an electrolyte salt of simple salt composition containing only LiPF₆ was dissolved in a concentration shown in Table 15. Thus, a non-aqueous electrolyte solution (reference electrolyte solution) was prepared. Subsequently, the reference electrolyte solution obtained above was used to perform dissolving in the same manner as described above. Then, in the same manner as describe above, a cell was produced using the CO₂ dissolving electrolyte solution and evaluated. Table 15 shows the results.

**[Table 15]**

| Non-aqueous electrolyte solution of Ex. 5-2 series | Salt composition | Type and content (wt%) of additive | | | Amount of CO₂ dissolved in non-aqueous electrolyte solution | | Real axis resistance (impedance, Ω) at -30°C | DCR | | | | | | OCV | | | Amount of electrodeposition after low-temperature cycles |
|---|---|---|---|---|---|---|---|---|---|---|---|---|---|---|---|---|---|
| | | Nitric acid compound | Specific compound | Fluorooxalato compound | Initial value (ppm) | Value after conditioning | | Initial value (Ω) | Value (Ω) after 300 cycles | DCR increase rate after 300 cycles | After 4-week enduring at 60°C (Ω) | DCR increase rate after 4-week enduring at 60°C | DCR increase rate at the same salt composition | Initial value (V) | After 4-week storage at 60°C | Difference (ΔV) before and after storage | |
| Fx. 1 | 0.1M LiFSI+1.1MLiPF₆ | | Formula (6): M (0.5) | | 1 | 6 | 37.66 | 1.129 | 1.191 | 1.055 | 1.444 | 1.279 | | 4.1995 | 4.0510 | 0.1485 | 26.8 |
| Fx. 2 | 0.2M LiFSI+1.0M LiPF₆ | | Formula (6): M (0.5) | | 1 | 6 | 37.30 | 1.118 | 1.173 | 1.049 | 1.402 | 1.254 | 0.909 | 4.1995 | 4.0415 | 0.1580 | 22.3 |
| Ex. 3 | 0.6M LiFSI+0.6M LiPF₆ | | Formula (6): M (0.5) | | 1 | 5 | 36.75 | 1.096 | 1.141 | 1.042 | 1.304 | 1.190 | 0.902 | 4.1995 | 4.0345 | 0.1650 | 17.2 |
| Fx. 4 | 1M LiFSI+0.2M LiPF₆ | | Formula (6): M (0.5) | | 1 | 5 | 36.01 | 1.074 | 1.118 | 1.041 | 1.287 | 1.198 | 0.911 | 4.1995 | 4.0301 | 0.1694 | 16.1 |
| Ex. 5 | 0.6M LiFSI+0.6M LiPF₆ | | Formula (6): M (0.5) | | 150 | 76 | 33.41 | 1.063 | 1.107 | 1.041 | 1.262 | 1.187 | | 4.1995 | 4.0594 | 0.1401 | 16.8 |
| Ex. 6 | 0.6M LiFSI+0.6M LiPF₆ | | Formula (6): M (0.5) | | 60 | 48 | 33.74 | 1.070 | 1.119 | 1.045 | 1.284 | 1.199 | | 4.1995 | 4.0587 | 0.1408 | 16.9 |
| Ex. 7 | 0.6M LiFSI+0.6M LiPF₆ | | Formula (6): M (0.5) | | 30 | 30 | 34.24 | 1.075 | 1.124 | 1.046 | 1.289 | 1.199 | | 4.1995 | 4.0564 | 0.1431 | 17.1 |
| Ex. 8 | 0.6M LiFSI+0.6M LiPF₆ | | Formula (6): M (0.5) | | 10 | 9 | 34.57 | 1.088 | 1.139 | 1.047 | 1.303 | 1.198 | | 4.1995 | 4.0312 | 0.1683 | 17.2 |
| Ex. 9 | 0.6M LiFSI+0.6M LiPF₆ | LiNO₃ (0.5) | Formula (6): M (0.5) | | 150 | 78 | 14.49 | 0.992 | 1.033 | 1.042 | 1.178 | 1.188 | | 4.1995 | 4.0526 | 0.1469 | 16.3 |
| Comp. Ex. 1 | 1.2M LiPF₆ | | | | 1 | 6 | 45.10 | 1.250 | 1.575 | 1.260 | 1.712 | 1.370 | | 4.1995 | 4.0431 | 0.1564 | 34.4 |
| Comp. Ex. 2 | 0.2M LiFSI+1.0M LiPF₆ | | | | 1 | 4 | 41.66 | 1.163 | 1.419 | 1.220 | 1.542 | 1.326 | | 4.1995 | 4.0322 | 0.1673 | 24.4 |
| Comp. Ex. 3 | 0.6M LiFSI+0.6M LiPF₆ | | | | 1 | 5 | 39.30 | 1.107 | 1.344 | 1.214 | 1.446 | 1.306 | | 4.1995 | 4.0282 | 0.1713 | 17.7 |
| Comp. Ex. 4 | 1M LiFSI+0.2M LiPF₆ | | | | 1 | 5 | 37.33 | 1.085 | 1.314 | 1.211 | 1.412 | 1.301 | | 4.1995 | 4.0212 | 0.1783 | 16.8 |
| Comp. Ex. 5 | 0.6M LiFSI+0.6M LiPF₆ | | | LiBOB (0.5) | 1 | 6 | 428.62 | 1.808 | 1.952 | 1.080 | 2.222 | 1.229 | | 4.1995 | 4.0388 | 0.1607 | |
| Comp. Ex. 6 | 0.6M LiFSI+0.6M LiPF₆ | | | LiDFOB (0.5) | 1 | 5 | 40.08 | 1.141 | 1.232 | 1.080 | 1.462 | 1.281 | | 4.1995 | 4.0318 | 0.1677 | |
| Comp. Ex. 7 | 1.2M LiPF₆ | | | | 150 | 70 | 33.56 | 1.187 | 1.493 | 1.258 | 1.622 | 1.366 | | 4.1995 | 4.0598 | 0.1397 | 30.6 |
| Comp. Ex. 8 | 0.6M LiFSI+0.6M LiPF₆ | LiNO₃ (0.5) | | | 1 | 70 | 14.88 | 1.035 | 1.252 | 1.210 | 1.322 | 1.277 | | 4.1994 | 3.8771 | 0.3223 | |
| Comp. Ex. 9 | 1.2M LiPF₆ | | Formula (6): M (0.5) | | 1 | 5 | 41.22 | 1.241 | 1.352 | 1.089 | 1.576 | 1.270 | 0.921 | 4.1995 | 4.0431 | 0.1564 | 41.4 |

### [Consideration of Table 15 (Example 5-2 Series)]

Comparison between Examples 1 to 4 and Comparative Examples 2 to 4 showed that, depending on the concentration of LiFSI, the impedance and DCRs (initial DCR, DCR after 300 cycles, and DCR after 4-week enduring at 60°C) were reduced, and the effect of the reduction became significant by adding trimethylsilyl polyphosphate (Compound M) to the electrolyte solution.

Comparison between Examples 1 to 4 and Comparative Examples 2 to 4 showed that, depending on the concentration of LiFSI, the OCV difference (ΔV) before and after storage increased, i.e., self-discharge increased, but when trimethylsilyl polyphosphate was added to the electrolyte solution, the OCV difference (ΔV) before and after storage decreased, i.e., self-discharge was suppressed.

Comparison between Examples 2 to 4 and Comparative Examples 2 to 4 with the same salt composition and comparison between Comparative Example 9 and Comparative Example 1 with the same salt composition showed that the mixed salt composition containing LiFSI and LiPF₆ had higher effects of reducing the impedance, suppressing self-discharge, and suppressing the DCR increase due to addition of trimethylsilyl polyphosphate, than the simple salt composition containing only LiPF₆.

Comparison between Comparative Examples 1 to 4, Comparative Example 7, Comparative Example 9, and Examples 2 to 9 showed that, depending on the concentration of LiFSI, the amount of electrodeposition after low-temperature cycles decreased, and degradation of the negative electrode due to low-temperature charging was reduced. It was also shown that the addition of trimethylsilyl polyphosphate to the simple salt composition containing only LiPF₆ increased the amount of lithium electrodeposited on the negative electrode during low-temperature cycles, and degradation of the negative electrode due to low temperature charging progressed. It was also shown that when trimethylsilyl polyphosphate was added to the mixed salt composition containing LiFSI and LiPF₆, the amount of electrodeposition after low-temperature cycles decreased, and degradation of the negative electrode due to low temperature charging was suppressed.

The reason for which the effects obtained due to addition of trimethylsilyl polyphosphate were higher for the mixed salt composition containing LiFSI and LiPF₆ than for the simple salt composition containing only LiPF₆ is considered to be that the coating film derived from an anionic component of LiFSI is formed on the interface between the positive and negative electrodes, so that the solubility of LiFSI is high and the viscosity of the electrolyte solution at low temperature is thereby reduced.

Comparison between Examples 3 and Examples 5 to 8 with the same salt composition showed that when CO₂ was dissolved in the electrolyte solution containing trimethylsilyl polyphosphate, the effect of reducing the impedance and DCR and the effect of suppressing self-discharge were further enhanced. It was further shown that these effects became significant when the amount of CO₂ dissolved in the electrolyte solution exceeded 10 ppm by mass (e.g., 20 ppm by mass or more).

The reason for which these effects due to dissolution of CO₂ are enhanced is considered to be that a coating film derived from CO₂ is formed on the positive and negative electrodes, so that lithium ion intercalation (intercalation (insertion) reaction) on the positive electrode during storage is suppressed, side reactions in the positive electrode are suppressed, and low-temperature charging acceptability to the negative electrode is improved.

Comparison between Examples 5 and 9 and Comparative Example 8 with the same salt composition showed that when LiNO₃ was further added to the electrolyte solution containing trimethylsilyl polyphosphate, the impedance and the DCR significantly decreased. It was also shown that although self-discharge increased, the self-discharge due to addition of LiNO₃ was suppressed by dissolving CO₂ in the electrolyte solution.

The reason for which the effect of suppressing self-discharge due to dissolution of CO₂ is higher for the electrolyte solution having the mixed salt composition containing LiFSI and LiPF₆ than for the simple salt composition containing only LiPF₆ is considered to be related to the order of formation of the coating film of the anionic component of FSI formed on the positive and negative electrodes during charging and the coating film of a lithium carbonate component from CO₂.

Comparison of the DCR increase rates after 4-week enduring at 60°C with the same salt composition due to addition of trimethylsilyl polyphosphate showed that the DCR increase rate was significantly lower and the effect of suppressing the DCR increase was higher, for the electrolyte solution having the mixed salt composition containing LiFSI and LiPF6 than for the simple salt composition containing only LiPF₆. The same results were shown for the DCR increase rate after 300 cycles with the same salt composition due to addition of trimethylsilyl polyphosphate. The reason for this is also considered to be that anion coating film of LiFSI is formed on the positive and negative electrodes.

### <Example 5-2(2) Series>

### (Synthesis of Trimethylsilyl Polyphosphate)

1.553 g of phosphorus pentoxide was dispersed in 10 mL of methylene chloride, which was a solvent. With stirring the resultant dispersion, 1.710 g of hexamethylene disiloxane was gradually added dropwise, followed by stirring at room temperature for about a day. Thereafter, the solvent was distilled off. Thus, trimethylsilyl polyphosphate (Compound M2) was synthesized.

### (³¹P-NMR Analysis)

As a result of ³¹P-NMR analysis of trimethylsilyl polyphosphate (Compound M2), three peaks were observed: a peak (Pt) appearing at a chemical shift of -28 ppm to -33 ppm; a peak (Pm) appearing at a chemical shift of -35 ppm to -41 ppm; and a peak (Pb) appearing at a chemical shift of -41 ppm to -45 ppm. The integral ratio of the three peaks was Pt : Pm : Pb = 1.00 : 6.73 : 1.00. It is estimated from this analysis result that Compound M2 is trimethylsilyl polyphosphate containing many branched structures (the branched structures represented by the structural formula (6a-3)).

### [Examples 1 to 4]

In a mixture solvent of ethylene carbonate (EC) and ethyl methyl carbonate (EMC) in a volume ratio of 3 : 7 (manufactured by Kishida Chemical Co., Ltd.) used as an electrolyte solution solvent, an electrolyte salt of a mixed salt composition containing LiFSI (manufactured by Nippon Shokubai Co., Ltd.) and LiPF₆ (manufactured by Stella Chemifa Corporation) was dissolved in concentrations shown in Table 15-2. To the solution obtained above, trimethylsilyl polyphosphate (Compound M2) was added in the content shown in Table 15-2 as the phosphorus atom-containing compound (6) represented by the general formula (6). The resultant mixture was then stirred for a day. Thus, a non-aqueous electrolyte solution (reference electrolyte solution) was prepared. Subsequently, in the same manner as described above, cells were produced using the respective reference electrolyte solutions obtained above and evaluated except that each electrolyte solution was not subjected to dissolving. Table 15-2 shows the results.

### [Examples 5 to 8]

Each non-aqueous electrolyte solution (reference electrolyte solution) was prepared in the same manner as described above. Subsequently, each reference electrolyte solution obtained was used to perform dissolving in the same manner as described above. Then, in the same manner as describe above, a cell was produced using the CO₂ dissolving electrolyte solution and evaluated. Table 15-2 shows the results.

### [Comparative Examples 1 to 5]

In the same mixture solvent as described above, an electrolyte salt of mixed salt composition containing LiFSI and LiPF₆ or an electrolyte salt of simple salt composition containing only LiPF₆ was dissolved in concentrations shown in Table 15-2. In Comparative Examples 1 to 4, the solution obtained above was used as a non-aqueous electrolyte solution (reference electrolyte solution). In Comparative Example 5, to the solution obtained above, trimethylsilyl polyphosphate (Compound M2) was further added in the content shown in Table 15-2, and the resultant mixture was then stirred for a day to prepare a non-aqueous electrolyte solution. Subsequently, in the same manner as described above, cells were produced using the respective reference electrolyte solutions obtained above and evaluated except that each electrolyte solution was not subjected to dissolving. Table 15-2 shows the results.

**[Table 15-2]**

| Non-aqueous electrolyte solution of Ex. 5-2(2) series | Salt composition | Type and content (wt%) of additive | Amount of CO₂ dissolved in non-aqueous electrolyte solution | | Real axis resistance (impedance, Ω) at -30°C | DCR | | | | | | OCV | | | Amount of electrodeposition after low-temperature cycles |
|---|---|---|---|---|---|---|---|---|---|---|---|---|---|---|---|
| | | Specific compound | Initial value (ppm) | Value after conditioning | | Initial value (Ω) | Value (Ω) after 300 cycles | DCR increase rate after 300 cycles | After 4-week durability test at 60°C (Ω) | DCR increase rate after 4-week durability test at 60°C | DCR increase rate at the same salt composition | Initial value (V) | After 4-week storage at 60°C | Difference (ΔV) before and after storage | |
| Ex. 1 | 0.1M LiFSI+1.1M LiPF₆ | Formula (6): M2 (0.5) | 1 | 6 | 37.46 | 1.123 | 1.186 | 1.056 | 1.437 | 1.280 | | 4.1995 | 4.0562 | 0.1433 | 26.6 |
| Ex. 2 | 0.2M LiFSI+1.0M LiPF₆ | Formula (6): M2 (0.5) | 1 | 5 | 37.10 | 1.111 | 1.167 | 1.050 | 1.394 | 1.255 | 0.904 | 4.1995 | 4.0466 | 0.1529 | 22.1 |
| Ex. 3 | 0.6M LiFSI+0.6M LiPF₆ | Formula (6): M2 (0.5) | 1 | 5 | 36.52 | 1.090 | 1.136 | 1.042 | 1.296 | 1.189 | 0.896 | 4.1995 | 4.0397 | 0.1598 | 17.0 |
| Ex. 4 | 1M LiFSI+0.2M LiPF₆ | Formula (6): M2 (0.5) | 1 | 5 | 35.81 | 1.064 | 1.107 | 1.040 | 1.269 | 1.193 | 0.899 | 4.1995 | 4.0355 | 0.1640 | 16.0 |
| Ex. 5 | 0.6M LiFSI+0.6M LiPF₆ | Formula (6): M2 (0.5) | 150 | 77 | 33.22 | 1.055 | 1.097 | 1.040 | 1.255 | 1.190 | | 4.1995 | 4.0612 | 0.1383 | 16.5 |
| Ex. 6 | 0.6M LiFSI+0.6M LiPF₆ | Formula (6): M2 (0.5) | 60 | 54 | 33.54 | 1.062 | 1.113 | 1.048 | 1.274 | 1.200 | | 4.1995 | 4.0610 | 0.1385 | 16.8 |
| Ex. 7 | 0.6M LiFSI+0.6M LiPF₆ | Formula (6): M2 (0.5) | 30 | 34 | 34.02 | 1.066 | 1.119 | 1.050 | 1.278 | 1.199 | | 4.1995 | 4.0584 | 0.1411 | 17.0 |
| Ex. 8 | 0.6M LiFSI+0.6M LiPF₆ | Formula (6): M2 (0.5) | 10 | 12 | 34.32 | 1.081 | 1.135 | 1.050 | 1.295 | 1.198 | | 4.1995 | 4.0518 | 0.1477 | 17.0 |
| Comp. Ex. 1 | 1.2M LiPF₆ | | 1 | 5 | 45.10 | 1.250 | 1.575 | 1.260 | 1.712 | 1.370 | | 4.1995 | 4.0431 | 0.1564 | 34.4 |
| Comp. Ex. 2 | 0.2M LiFSI+1.0M LiPF₆ | | 1 | 5 | 41.66 | 1.163 | 1.419 | 1.220 | 1.542 | 1.326 | | 4.1995 | 4.0322 | 0.1673 | 24.4 |
| Comp. Ex. 3 | 0.6M LiFSI+0.6M LiPF₆ | | 1 | 5 | 39.30 | 1.107 | 1.344 | 1.214 | 1.446 | 1.306 | | 4.1995 | 4.0282 | 0.1713 | 17.7 |
| Comp. Ex. 4 | 1M LiFSI+0.2M LiPF₆ | | 1 | 5 | 37.33 | 1.085 | 1.314 | 1.211 | 1.412 | 1.301 | | 4.1995 | 4.0212 | 0.1783 | 16.8 |
| Comp. Ex. 5 | 1.2M LiPF₆ | Formula (6): M2 (0.5) | 1 | 5 | 39.15 | 1.234 | 1.340 | 1.086 | 1.598 | 1.295 | 0.933 | 4.1995 | 4.043 8 | 0.1557 | 41.0 |

### [Consideration of Table 15-2 (Example 5-2(2) Series)]

Comparison between Examples 1 to 4 and Comparative Examples 2 to 4 showed that, depending on the concentration of LiFSI, the impedance and DCRs (initial DCR, DCR after 300 cycles, and DCR after 4-week enduring at 60°C) were reduced, and the effect of the reduction became significant by adding trimethylsilyl polyphosphate (Compound M2) to the electrolyte solution.

Comparison between Examples 1 to 4 and Comparative Examples 2 to 4 showed that, depending on the concentration of LiFSI, the OCV difference (ΔV) before and after storage increased, i.e., self-discharge increased, but when trimethylsilyl polyphosphate was added to the electrolyte solution, the OCV difference (ΔV) before and after storage decreased, i.e., self-discharge was suppressed. Although the reason was unknown, it was shown that self-discharge was yet further suppressed in the synthesized product (Compound M2) for which the Pb peak was observed in ³¹P-NMR Analysis than in the reagent (Compound M) manufactured by Sigma-Aldrich Co. LLC among trimethylsilyl polyphosphates.

Comparison between Examples 2 to 4 and Comparative Examples 2 to 4 with the same salt composition and comparison between Comparative Example 5 and Comparative Example 1 with the same salt composition showed that the mixed salt composition containing LiFSI and LiPF₆ had higher effects of reducing the impedance, suppressing self-discharge, and suppressing the DCR increase due to addition of trimethylsilyl polyphosphate, than the simple salt composition containing only LiPF₆.

Comparison between Comparative Examples 1 to 5 and Examples 2 to 8 showed that, depending on the concentration of LiFSI, the amount of electrodeposition after low-temperature cycles decreased, and degradation of the negative electrode due to low-temperature charging was reduced. It was also shown that the addition of trimethylsilyl polyphosphate to the simple salt composition containing only LiPF₆ increased the amount of lithium electrodeposited on the negative electrode during low-temperature cycles, and degradation of the negative electrode due to low temperature charging progressed. It was also shown that when trimethylsilyl polyphosphate was added to the mixed salt composition containing LiFSI and LiPF₆, the amount of electrodeposition after low-temperature cycles decreased, and degradation of the negative electrode due to low temperature charging was suppressed.

The reason for which the effects obtained due to addition of trimethylsilyl polyphosphate were higher for the mixed salt composition containing LiFSI and LiPF₆ than for the simple salt composition containing only LiPF₆ is considered to be that the coating film derived from an anionic component of LiFSI is formed on the interface between the positive and negative electrodes, so that the solubility of LiFSI is high and the viscosity of the electrolyte solution at low temperature is thereby reduced.

Comparison between Examples 3 and Examples 5 to 8 with the same salt composition showed that when CO₂ was dissolved in the electrolyte solution containing trimethylsilyl polyphosphate, the effect of reducing the impedance and DCR and the effect of suppressing self-discharge were further enhanced. It was further shown that these effects became significant when the amount of CO₂ dissolved in the electrolyte solution exceeded 10 ppm by mass (e.g., 20 ppm by mass or more).

The reason for which these effects due to dissolution of CO₂ are enhanced is considered to be that a coating film derived from CO₂ is formed on the positive and negative electrodes, so that lithium ion intercalation (intercalation (insertion) reaction) on the positive electrode during storage is suppressed, side reactions in the positive electrode are suppressed, and low-temperature charging acceptability to the negative electrode is improved. Comparison of the DCR increase rates after 4-week enduring at 60°C with the same salt composition due to addition of trimethylsilyl polyphosphate showed that the DCR increase rate was significantly lower and the effect of suppressing the DCR increase was higher, for the electrolyte solution having the mixed salt composition containing LiFSI and LiPF6 than for the simple salt composition containing only LiPF₆. The same results were shown for the DCR increase rate after 300 cycles with the same salt composition due to addition of trimethylsilyl polyphosphate. The reason for this is also considered to be that anion coating film of LiFSI is formed on the positive and negative electrodes.

### <Example 5-2(3) Series>

### (Synthesis of Trimethylsilyl Polyphosphate)

1.553 g of phosphorus pentoxide was dispersed in 10 mL of toluene, which was a solvent. With stirring the resultant dispersion, 1.710 g of hexamethylene disiloxane was gradually added dropwise, followed by stirring at room temperature for about a day. Thereafter, the solvent was distilled off. Thus, trimethylsilyl polyphosphate (Compound M3) was synthesized.

### (³¹P-NMR Analysis)

As a result of ³¹P-NMR analysis of trimethylsilyl polyphosphate (Compound M3), three peaks were observed: a peak (Pt) appearing at a chemical shift of -28 ppm to -33 ppm; a peak (Pm) appearing at a chemical shift of -35 ppm to -41 ppm; and a peak (Pb) appearing at a chemical shift of -41 ppm to -45 ppm. The integral ratio of the three peaks was Pt : Pm : Pb = 1.00 : 6.51 : 0.81. It is estimated from this analysis result that Compound M3 is trimethylsilyl polyphosphate containing many branched structures (the branched structures represented by the structural formula (6a-3)).

### [Examples 1 to 4]

In a mixture solvent of ethylene carbonate (EC) and ethyl methyl carbonate (EMC) in a volume ratio of 3 : 7 (manufactured by Kishida Chemical Co., Ltd.) used as an electrolyte solution solvent, an electrolyte salt of a mixed salt composition containing LiFSI (manufactured by Nippon Shokubai Co., Ltd.) and LiPF₆ (manufactured by Stella Chemifa Corporation) was dissolved in concentrations shown in Table 15-3. To the solution obtained above, trimethylsilyl polyphosphate (Compound M3) was added in the content shown in Table 15-3 as the phosphorus atom-containing compound (6) represented by the general formula (6). The resultant mixture was then stirred for a day. Thus, a non-aqueous electrolyte solution (reference electrolyte solution) was prepared. Subsequently, in the same manner as described above, cells were produced using the respective reference electrolyte solutions obtained above and evaluated except that each electrolyte solution was not subjected to dissolving. Table 15-3 shows the results.

### [Examples 5 to 8]

Each non-aqueous electrolyte solution (reference electrolyte solution) was prepared in the same manner as described above. Subsequently, each reference electrolyte solution obtained was used to perform dissolving in the same manner as described above. Then, in the same manner as describe above, a cell was produced using the CO₂ dissolving electrolyte solution and evaluated. Table 15-3 shows the results.

### [Comparative Examples 1 to 5]

In the same mixture solvent as described above, an electrolyte salt of mixed salt composition containing LiFSI and LiPF₆ or an electrolyte salt of simple salt composition containing only LiPF₆ was dissolved in concentrations shown in Table 15-3. In Comparative Examples 1 to 4, the solution obtained above was used as a non-aqueous electrolyte solution (reference electrolyte solution). In Comparative Example 5, to the solution obtained above, trimethylsilyl polyphosphate (Compound M3) was further added in the content shown in Table 15-3, and the resultant mixture was then stirred for a day to prepare a non-aqueous electrolyte solution. Subsequently, in the same manner as described above, cells were produced using the respective reference electrolyte solutions obtained above and evaluated except that each electrolyte solution was not subjected to dissolving. Table 15-3 shows the results.

**[Table 15-3]**

| Non-aqueous electrolyte solution of Ex. 5-2(3) series | Salt composition | Type and content (wt%) of additive | Amount of CO₂ dissolved in non-aqueous electrolyte solution | | Real axis resistance (impedance, Ω) at -30°C | DCR | | | | | | OCV | | | Amount of electrodeposition after low-temperature cycles |
|---|---|---|---|---|---|---|---|---|---|---|---|---|---|---|---|
| | | Specific compound | Initial value (ppm) | Value after conditioning | | Initial value (Ω) | Value (Ω) after 300 cycles | DCR increase rate after 300 cycles | After 4-week durability test at 60°C (Ω) | DCR increase rate after 4-week durability test at 60°C | DCR increase rate at the same salt composition | Initial value (V) | After 4-week storage at 60°C | Difference (ΔV) before and after storage | |
| Ex. 1 | 0.1M LiFSI+1.1M LiPF₆ | Formula (6): M3 (0.5) | 1 | 6 | 3 7.44 | 1.122 | 1.184 | 1.055 | 1.436 | 1.280 | | 4.1995 | 4.0563 | 0.1432 | 26.5 |
| Ex. 2 | 0.2M LiFSI+1.0M LiPF₆ | Formula (6): M3 (0.5) | 1 | 5 | 37.10 | 1.110 | 1.166 | 1.050 | 1.394 | 1.256 | 0.904 | 4.1995 | 4.0464 | 0.1531 | 22.2 |
| Ex. 3 | 0.6M LiFSI+0.6M LiPF₆ | Formula (6): M3 (0.5) | 1 | 5 | 36.54 | 1.088 | 1.134 | 1.042 | 1.298 | 1.193 | 0.898 | 4.1995 | 4.0398 | 0.1597 | 17.1 |
| Ex. 4 | 1M L₁FSI+0.2M LiPF₆ | Formula (6): M3 (0.5) | 1 | 5 | 35.71 | 1.063 | 1.105 | 1.040 | 1.269 | 1.194 | 0.899 | 4.1995 | 4.0356 | 0.1639 | 16.1 |
| Ex. 5 | 0.6M LiFSI+0.6M LiPF₆ | Formula (6): M3 (0.5) | 150 | 76 | 33.24 | 1.057 | 1.097 | 1.038 | 1.257 | 1.189 | | 4.1995 | 4.0611 | 0.1384 | 16.3 |
| Ex. 6 | 0.6M LiFSI+0.6M LiPF₆ | Formula (6): M3 (0.5) | 60 | 54 | 33.57 | 1.060 | 1.116 | 1.053 | 1.274 | 1.202 | | 4.1995 | 4.0610 | 0.1385 | 16.6 |
| Ex. 7 | 0.6M LiFSI+0.6M LiPF₆ | Formula (6): M3 (0.5) | 30 | 35 | 34.12 | 1.065 | 1.120 | 1.052 | 1.283 | 1.205 | | 4.1995 | 4.0582 | 0.1413 | 16.9 |
| Ex. 8 | 0.6M LiFSI+0.6M LiPF₆ | Formula (6): M3 (0.5) | 10 | 11 | 34.43 | 1.080 | 1.135 | 1.051 | 1.295 | 1.199 | | 4.1995 | 4.0516 | 0.1479 | 17.0 |
| Comp. Ex. 1 | 1.2M LiPF₆ | | 1 | 5 | 45.10 | 1.250 | 1.575 | 1.260 | 1.712 | 1.370 | | 4.1995 | 4.0431 | 0.1564 | 34.4 |
| Comp. Ex. 2 | 0.2M LiFSI+1.0M LiPF₆ | | 1 | 5 | 41.66 | 1.163 | 1.419 | 1.220 | 1.542 | 1.326 | | 4.1995 | 4.0322 | 0.1673 | 24.4 |
| Comp. Ex. 3 | 0.6M LiFSI+0.6M LiPF₆ | | 1 | 5 | 39.30 | 1.107 | 1.344 | 1.214 | 1.446 | 1.306 | | 4.1995 | 4.0282 | 0.1713 | 17.7 |
| Comp. Ex. 4 | 1M LiFSI+0.2M LiPF₆ | | 1 | 5 | 37.33 | 1.085 | 1.314 | 1.211 | 1.412 | 1.301 | | 4.1995 | 4.0212 | 0.1783 | 16.8 |
| Comp. Ex. 5 | 1.2M LiPF₆ | Formula (6): M3 (0.5) | 1 | 5 | 39.14 | 1.233 | 1.339 | 1.086 | 1.591 | 1.290 | 0.929 | 4.1995 | 4.0438 | 0.1557 | 40.7 |

### [Consideration of Table 15-3 (Example 5-2(3) Series)]

Comparison between Examples 1 to 4 and Comparative Examples 2 to 4 showed that, depending on the concentration of LiFSI, the impedance and DCRs (initial DCR, DCR after 300 cycles, and DCR after 4-week enduring at 60°C) were reduced, and the effect of the reduction became significant by adding trimethylsilyl polyphosphate (Compound M3) to the electrolyte solution.

Comparison between Examples 1 to 4 and Comparative Examples 2 to 4 showed that, depending on the concentration of LiFSI, the OCV difference (ΔV) before and after storage increased, i.e., self-discharge increased, but when trimethylsilyl polyphosphate was added to the electrolyte solution, the OCV difference (ΔV) before and after storage decreased, i.e., self-discharge was suppressed. Although the reason was unknown, it was shown that self-discharge was yet further suppressed in the synthesized product (Compound M3) for which the Pb peak was observed in ³¹P-NMR Analysis than in the reagent (Compound M) manufactured by Sigma-Aldrich Co. LLC among trimethylsilyl polyphosphates.

Comparison between Examples 2 to 4 and Comparative Examples 2 to 4 with the same salt composition and comparison between Comparative Example 5 and Comparative Example 1 with the same salt composition showed that the mixed salt composition containing LiFSI and LiPF₆ had higher effects of reducing the impedance, suppressing self-discharge, and suppressing the DCR increase due to addition of trimethylsilyl polyphosphate, than the simple salt composition containing only LiPF₆.

Comparison between Comparative Examples 1 to 5 and Examples 2 to 8 showed that, depending on the concentration of LiFSI, the amount of electrodeposition after low-temperature cycles decreased, and degradation of the negative electrode due to low-temperature charging was reduced. It was also shown that the addition of trimethylsilyl polyphosphate to the simple salt composition containing only LiPF₆ increased the amount of lithium electrodeposited on the negative electrode during low-temperature cycles, and degradation of the negative electrode due to low temperature charging progressed. It was also shown that when trimethylsilyl polyphosphate was added to the mixed salt composition containing LiFSI and LiPF₆, the amount of electrodeposition after low-temperature cycles decreased, and degradation of the negative electrode due to low temperature charging was suppressed.

The reason for which the effects obtained due to addition of trimethylsilyl polyphosphate were higher for the mixed salt composition containing LiFSI and LiPF₆ than for the simple salt composition containing only LiPF₆ is considered to be that the coating film derived from an anionic component of LiFSI is formed on the interface between the positive and negative electrodes, so that the solubility of LiFSI is high and the viscosity of the electrolyte solution at low temperature is thereby reduced.

Comparison between Examples 3 and Examples 5 to 8 with the same salt composition showed that when CO₂ was dissolved in the electrolyte solution containing trimethylsilyl polyphosphate, the effect of reducing the impedance and DCR and the effect of suppressing self-discharge were further enhanced. It was further shown that these effects became significant when the amount of CO₂ dissolved in the electrolyte solution exceeded 10 ppm by mass (e.g., 20 ppm by mass or more).

The reason for which these effects due to dissolution of CO₂ are enhanced is considered to be that a coating film derived from CO₂ is formed on the positive and negative electrodes, so that lithium ion intercalation (intercalation (insertion) reaction) on the positive electrode during storage is suppressed, side reactions in the positive electrode are suppressed, and low-temperature charging acceptability to the negative electrode is improved.

Comparison of the DCR increase rates after 4-week enduring at 60°C with the same salt composition due to addition of trimethylsilyl polyphosphate showed that the DCR increase rate was significantly lower and the effect of suppressing the DCR increase was higher, for the electrolyte solution having the mixed salt composition containing LiFSI and LiPF6 than for the simple salt composition containing only LiPF₆. The same results were shown for the DCR increase rate after 300 cycles with the same salt composition due to addition of trimethylsilyl polyphosphate. The reason for this is also considered to be that anion coating film of LiFSI is formed on the positive and negative electrodes.

### <Example 5-2(4) Series>

### (Synthesis of Ethyl Polyphosphate)

10 g of phosphorus pentoxide and as a solvent, 10g of chloroform and 20 g of diethyl ether were placed in a test tube and stirred for 3 days at 900 rpm and 35°C. Thereafter, the solvent was distilled off by using an evaporator, and the resultant was dried in vacuum for 24 hours. Thus, ethyl polyphosphate (Compound T) was synthesized.

### (³¹P-NMR Analysis)

As a result of ³¹P-NMR analysis of ethyl polyphosphate (Compound T), three peaks were observed: a peak (Pt) appearing at a chemical shift of -12 ppm to -15 ppm; a peak (Pm) appearing at a chemical shift of -25 ppm to -31 ppm; and a peak (Pb) appearing at a chemical shift of -39 ppm to -46 ppm. The integral ratio of the three peaks was Pt : Pm : Pb = 1.00 : 3.59 : 0.42. It is estimated from this analysis result that Compound T is ethyl polyphosphate containing many branched structures (the branched structures represented by the structural formula (6a-3)).

### [Examples 1 to 4]

In a mixture solvent of ethylene carbonate (EC) and ethyl methyl carbonate (EMC) in a volume ratio of 3 : 7 (manufactured by Kishida Chemical Co., Ltd.) used as an electrolyte solution solvent, an electrolyte salt of a mixed salt composition containing LiFSI (manufactured by Nippon Shokubai Co., Ltd.) and LiPF₆ (manufactured by Stella Chemifa Corporation) was dissolved in concentrations shown in Table 15-4. To the solution obtained above, ethyl polyphosphate (Compound T) was added in the content shown in Table 15-4 as the phosphorus atom-containing compound (6) represented by the general formula (6). The resultant mixture was then stirred for a day. Thus, a non-aqueous electrolyte solution (reference electrolyte solution) was prepared. Subsequently, in the same manner as described above, cells were produced using the respective reference electrolyte solutions obtained above and evaluated except that each electrolyte solution was not subjected to dissolving. Table 15-4 shows the results.

### [Examples 5 to 8]

Each non-aqueous electrolyte solution (reference electrolyte solution) was prepared in the same manner as described above. Subsequently, each reference electrolyte solution obtained was used to perform dissolving in the same manner as described above. Then, in the same manner as describe above, a cell was produced using the CO₂ dissolving electrolyte solution and evaluated. Table 15-4 shows the results.

### [Comparative Examples 1 to 5]

In the same mixture solvent as described above, an electrolyte salt of mixed salt composition containing LiFSI and LiPF₆ or an electrolyte salt of simple salt composition containing only LiPF₆ was dissolved in concentrations shown in Table 15-4. In Comparative Examples 1 to 4, the solution obtained above was used as a non-aqueous electrolyte solution (reference electrolyte solution). In Comparative Example 5, to the solution obtained above, ethyl polyphosphate (Compound T) was further added in the content shown in Table 15-4, and the resultant mixture was then stirred for a day to prepare a non-aqueous electrolyte solution. Subsequently, in the same manner as described above, cells were produced using the respective reference electrolyte solutions obtained above and evaluated except that each electrolyte solution was not subjected to dissolving. Table 15-4 shows the results.

**[Table 15-4]**

| Non-aqueous electrolyte solution of Ex. 5-2(4) series | Salt composition | Type and content (wt%) of additive | Amount of CO₂ dissolved in non-aqueous | | Real axis resistance (impedance, Ω) at -30°C | DCR | | | | | | OCV | | |
|---|---|---|---|---|---|---|---|---|---|---|---|---|---|---|
| | | Specific compound | Initial value (ppm) | Value after conditioning | | Initial value (Ω) | Value (Ω) after 300 cycles | DCR increase rate after 300 cycles | After 4-week durability test at 60°C (Ω) | DCR increase rate after 4-week durability test at 60°C | DCR increase rate at the same salt composition | Initial value (V) | After 4-week storage at 60°C | Difference (ΔV) before and after storage |
| Ex. 1 | 0.1M LiFSI+1.1M LiPF₆ | Formula (6): T (0.5) | 1 | 6 | 26.27 | 1.211 | 1.309 | 1.081 | 1.487 | 1.228 | | 4.1995 | 4.0442 | 0.1553 |
| Ex. 2 | 0.2M LiFSI+1.0M LiPF₆ | Formula (6): T (0.5) | 1 | 5 | 25.12 | 1.145 | 1.234 | 1.078 | 1.387 | 1.211 | 0.899 | 4.1995 | 4.0334 | 0.1661 |
| Ex. 3 | 0.6M LiFSI+0.6M LiPF₆ | Formula (6): T (0.5) | 1 | 5 | 23.34 | 1.092 | 1.174 | 1.075 | 1.313 | 1.202 | 0.908 | 4.1995 | 4.0304 | 0.1691 |
| Ex. 4 | 1M LiFSI+0.2M LiPF₆ | Formula (6): T (0.5) | 1 | 5 | 22.15 | 1.072 | 1.150 | 1.073 | 1.286 | 1.200 | 0.911 | 4.1995 | 4.0258 | 0.1737 |
| Ex. 5 | 0.6M LiFSI+0.6M LiPF₆ | Formula (6): T (0.5) | 150 | 75 | 21.88 | 1.037 | 1.113 | 1.073 | 1.245 | 1.201 | | 4.1995 | 4.0677 | 0.1318 |
| Ex. 6 | 0.6M LiFSI+0.6M LiPF₆ | Formula (6): T (0.5) | 60 | 52 | 22.11 | 1.046 | 1.124 | 1.075 | 1.257 | 1.202 | | 4.1995 | 4.0622 | 0.1373 |
| Ex. 7 | 0.6M LiFSI+0.6M LiPF₆ | Formula (6): T (0.5) | 30 | 31 | 22.76 | 1.066 | 1.147 | 1.076 | 1.287 | 1.207 | | 4.1995 | 4.0544 | 0.1451 |
| Ex. 8 | 0.6M LiFSI+0.6M LiPF₆ | Formula (6): T (0.5) | 10 | 8 | 23.87 | 1.072 | 1.153 | 1.076 | 1.296 | 1.209 | | 4.1995 | 4.0498 | 0.1497 |
| Comp. Ex. 1 | 1.2M LiPF₆ | | 1 | 5 | 45.10 | 1.250 | 1.575 | 1.260 | 1.712 | 1.370 | | 4.1995 | 4.0431 | 0.1564 |
| Comp. Ex. 2 | 0.2M LiFSI+1.0M LiPF₆ | | 1 | 4 | 41.66 | 1.163 | 1.419 | 1.220 | 1.542 | 1.326 | | 4.1995 | 4.0322 | 0.1673 |
| Comp. Ex. 3 | 0.6M LiFSI+0.6M LiPF₆ | | 1 | 5 | 39.30 | 1.107 | 1.344 | 1.214 | 1.446 | 1.306 | | 4.1995 | 4.0282 | 0.1713 |
| Comp. Ex. 4 | 1M LiFSI+0.2M LiPF₆ | | 1 | 5 | 37.33 | 1.085 | 1.314 | 1.211 | 1.412 | 1.301 | | 4.1995 | 4.0212 | 0.1783 |
| Comp. Ex. 5 | 1.2M LiPF₆ | Formula (6): T (0.5) | 1 | 4 | 35.20 | 1.233 | 1.420 | 1.152 | 1.602 | 1.299 | 0.936 | 4.1995 | 4.0438 | 0.1557 |

### [Consideration of Table 15-4 (Example 5-2(4) Series)]

Comparison between Examples 1 to 4 and Comparative Examples 2 to 4 showed that, depending on the concentration of LiFSI, the impedance and DCRs (initial DCR, DCR after 300 cycles, and DCR after 4-week enduring at 60°C) were reduced, and the effect of the reduction became significant by adding ethyl polyphosphate (Compound T) to the electrolyte solution.

Comparison between Examples 1 to 4 and Comparative Examples 2 to 4 showed that, depending on the concentration of LiFSI, the OCV difference (ΔV) before and after storage increased, i.e., self-discharge increased, but when ethyl polyphosphate was added to the electrolyte solution, the OCV difference (ΔV) before and after storage decreased, i.e., self-discharge was suppressed.

Comparison between Examples 2 to 4 and Comparative Examples 2 to 4 with the same salt composition and comparison between Comparative Example 5 and Comparative Example 1 with the same salt composition showed that the mixed salt composition containing LiFSI and LiPF₆ had higher effects of reducing the impedance, suppressing self-discharge, and suppressing the DCR increase due to addition of ethyl polyphosphate, than the simple salt composition containing only LiPF₆.

The reason for which the effects obtained due to addition of ethyl polyphosphate were higher for the mixed salt composition containing LiFSI and LiPF₆ than for the simple salt composition containing only LiPF₆ is considered to be that the coating film derived from an anionic component of LiFSI is formed on the interface between the positive and negative electrodes, so that the solubility of LiFSI is high and the viscosity of the electrolyte solution at low temperature is thereby reduced.

Comparison between Examples 3 and Examples 5 to 8 with the same salt composition showed that when CO₂ was dissolved in the electrolyte solution containing ethyl polyphosphate, the effect of reducing the impedance and DCR and the effect of suppressing self-discharge were further enhanced. It was further shown that these effects became significant when the amount of CO₂ dissolved in the electrolyte solution exceeded 10 ppm by mass (e.g., 20 ppm by mass or more).

The reason for which these effects due to dissolution of CO₂ are enhanced is considered to be that a coating film derived from CO₂ is formed on the positive and negative electrodes, so that lithium ion intercalation (intercalation (insertion) reaction) on the positive electrode during storage is suppressed, side reactions in the positive electrode are suppressed, and low-temperature charging acceptability to the negative electrode is improved.

Comparison of the DCR increase rates after 4-week enduring at 60°C with the same salt composition due to addition of ethyl polyphosphate showed that the DCR increase rate was significantly lower and the effect of suppressing the DCR increase was higher, for the electrolyte solution having the mixed salt composition containing LiFSI and LiPF6 than for the simple salt composition containing only LiPF₆. The same results were shown for the DCR increase rate after 300 cycles with the same salt composition due to addition of ethyl polyphosphate. The reason for this is also considered to be that anion coating film of LiFSI is formed on the positive and negative electrodes.

### <Example 5-2(5) Series>

### (Synthesis of Triisopropylsilyl Polyphosphate)

0.53 g of indium(III) bromide was dissolved in 30 mL of tetrahydrofuran, and 4.75 g of triisopropylsilane was added to the resultant solution and then stirred for a day to perform a reaction. After the reaction, 30 mL of hexane was added to the resultant solution and then left to stand to separate into two layers. The upper layer which had separated and collected was concentrated under reduced pressure. Thus, 4.01 g of hexaisopropyldisiloxane, which was a colorless liquid, was obtained. Subsequently, 1.55 g of phosphorus pentaoxide and 1.70 g of the hexaisopropyldisiloxane obtained above were added to 10 mL of dichloromethane, and the resultant mixture was stirred for 3 days at 35°C to perform a reaction. After the reaction, the resultant solution was filtered and concentrated under reduced pressure. Thus, 2.10 g of triisopropylsilyl polyphosphate (Compound W), which was a viscous liquid, was synthesized.

### [Examples 1 to 4]

In a mixture solvent of ethylene carbonate (EC) and ethyl methyl carbonate (EMC) in a volume ratio of 3 : 7 (manufactured by Kishida Chemical Co., Ltd.) used as an electrolyte solution solvent, an electrolyte salt of a mixed salt composition containing LiFSI (manufactured by Nippon Shokubai Co., Ltd.) and LiPF₆ (manufactured by Stella Chemifa Corporation) was dissolved in concentrations shown in Table 15-5. To the solution obtained, triisopropylsilyl polyphosphate (Compound W) was added in the content shown in Table 15-5 as the phosphorus atom-containing compound (6) represented by the general formula (6). The resultant mixture was then stirred for a day. Thus, a non-aqueous electrolyte solution (reference electrolyte solution) was prepared. Subsequently, in the same manner as described above, cells were produced using the respective reference electrolyte solutions obtained above and evaluated except that each electrolyte solution was not subjected to dissolving. Table 15-5 shows the results.

### [Examples 5 to 8]

Each non-aqueous electrolyte solution (reference electrolyte solution) was prepared in the same manner as described above. Subsequently, each reference electrolyte solution obtained was used to perform dissolving in the same manner as described above. Then, in the same manner as describe above, a cell was produced using the CO₂ dissolving electrolyte solution and evaluated. Table 15-5 shows the results.

### [Comparative Examples 1 to 5]

In the same mixture solvent as described above, an electrolyte salt of mixed salt composition containing LiFSI and LiPF₆ or an electrolyte salt of simple salt composition containing only LiPF₆ was dissolved in concentrations shown in Table 15-5. In Comparative Examples 1 to 4, the solution obtained above was used as a non-aqueous electrolyte solution (reference electrolyte solution). In Comparative Example 5, to the solution obtained above, triisopropylsilyl polyphosphate (Compound W) was further added in the content shown in Table 15-5, and the resultant mixture was then stirred for a day to prepare a non-aqueous electrolyte solution. Subsequently, in the same manner as described above, cells were produced using the respective reference electrolyte solutions obtained above and evaluated except that each electrolyte solution was not subjected to dissolving. Table 15-5 shows the results.

**[Table 15-5]**

| Non-aqueous electrolyte solution of Ex. 5-2(5) series | Salt composition | Type and content (wt%) of additive | Amount of CO₂ dissolved in non-aqueous electrolyte solution | | Real axis resistance (impedance, Ω) at -30°C | DCR | | | | | | OCV | | |
|---|---|---|---|---|---|---|---|---|---|---|---|---|---|---|
| | | Specific compound | Initial value (ppm) | Value after conditioning | | Initial value (Ω) | Value (Ω) after 300 cycles | DCR increase rate after 300 cycles | After 4-week durability test at 60°C (Ω) | DCR increase rate after 4-week durability test at 60°C | DCR increase rate at the same salt composition | Initial value (V) | After 4-week storage at 60°C | Difference (ΔV) before and after storage |
| Ex. 1 | 0.1M LiFSI+1.1M LiPF₆ | Formula (6): W (0.5) | 1 | 6 | 37.15 | 1.092 | 1.289 | 1.180 | 1.418 | 1.299 | | 4.1995 | 4.0532 | 0.1463 |
| Ex. 2 | 0.2M LiFSI+1.0MLiPF₆ | Formula (6): W (0.5) | 1 | 5 | 36.92 | 1.082 | 1.271 | 1.175 | 1.379 | 1.274 | 0.894 | 4.1995 | 4.0514 | 0.1481 |
| Ex. 3 | 0.6M LiFSI+0.6M LiPF₆ | Formula (6): W (0.5) | 1 | 5 | 36.02 | 1.066 | 1.210 | 1.135 | 1.295 | 1.215 | 0.896 | 4.1995 | 4.0498 | 0.1497 |
| Ex. 4 | 1M LiFSI+0.2M LiPF₆ | Formula (6): W (0.5) | 1 | 5 | 35.74 | 1.052 | 1.160 | 1.103 | 1.267 | 1.204 | 0.897 | 4.1995 | 4.0456 | 0.1539 |
| Ex. 5 | 0.6M LiFSI+0.6M LiPF₆ | Formula (6): W (0.5) | 150 | 76 | 32.88 | 1.014 | 1.113 | 1.098 | 1.215 | 1.198 | | 4.1995 | 4.0602 | 0.1393 |
| Ex. 6 | 0.6M LiFSI+0.6M LiPF₆ | Formula (6): W (0.5) | 60 | 54 | 32.97 | 1.024 | 1.142 | 1.115 | 1.234 | 1.205 | | 4.1995 | 4.0590 | 0.1405 |
| Ex. 7 | 0.6M LiFSI+0.6M LiPF₆ | Formula (6): W (0.5) | 30 | 35 | 33.73 | 1.037 | 1.161 | 1.120 | 1.246 | 1.202 | | 4.1995 | 4.0572 | 0.1423 |
| Ex. 8 | 0.6M LiFSI+0.6M LiPF₆ | Formula (6): W (0.5) | 10 | 11 | 35.12 | 1.043 | 1.183 | 1.134 | 1.276 | 1.223 | | 4.1995 | 4.0526 | 0.1469 |
| Comp. Ex. 1 | 1.2M LiPF₆ | | 1 | 5 | 45.10 | 1.250 | 1.575 | 1.260 | 1.712 | 1.370 | | 4.1995 | 4.0431 | 0.1564 |
| Comp. Ex. 2 | 0.2M LiFSI+1.0MLiPF₆ | | 1 | 5 | 41.66 | 1.163 | 1.419 | 1.220 | 1.542 | 1.326 | | 4.1995 | 4.0322 | 0.1673 |
| Comp. Ex. 3 | 0.6M LiFSI+0.6M LiPF₆ | | 1 | 5 | 39.30 | 1.107 | 1.344 | 1.214 | 1.446 | 1.306 | | 4.1995 | 4.0282 | 0.1713 |
| Comp. Ex. 4 | 1M LiFSI+0.2M LiPF₆ | | 1 | 5 | 37.33 | 1.085 | 1.314 | 1.211 | 1.412 | 1.301 | | 4.1995 | 4.0212 | 0.1783 |
| Comp. Ex. 5 | 1.2M LiPF₆ | Formula (6): W (0.5) | 1 | 5 | 41.17 | 1.231 | 1.480 | 1.202 | 1.591 | 1.654 | 0.929 | 4.1995 | 4.0434 | 0.1561 |

### [Consideration of Table 15-5 (Example 5-2(5) Series)]

Comparison between Examples 1 to 4 and Comparative Examples 2 to 4 showed that, depending on the concentration of LiFSI, the impedance and DCRs (initial DCR, DCR after 300 cycles, and DCR after 4-week enduring at 60°C) were reduced, and the effect of the reduction became significant by adding triisopropylsilyl polyphosphate (Compound W) to the electrolyte solution.

Comparison between Examples 1 to 4 and Comparative Examples 2 to 4 showed that, depending on the concentration of LiFSI, the OCV difference (ΔV) before and after storage increased, i.e., self-discharge increased, but when triisopropylsilyl polyphosphate was added to the electrolyte solution, the OCV difference (ΔV) before and after storage decreased, i.e., self-discharge was suppressed.

Comparison between Examples 2 to 4 and Comparative Examples 2 to 4 with the same salt composition and comparison between Comparative Example 5 and Comparative Example 1 with the same salt composition showed that the mixed salt composition containing LiFSI and LiPF₆ had higher effects of reducing the impedance, suppressing self-discharge, and suppressing the DCR increase due to addition of triisopropylsilyl polyphosphate, than the simple salt composition containing only LiPF₆.

The reason for which the effects obtained due to addition of ethyl polyphosphate were higher for the mixed salt composition containing LiFSI and LiPF₆ than for the simple salt composition containing only LiPF₆ is considered to be that the coating film derived from an anionic component of LiFSI is formed on the interface between the positive and negative electrodes, so that the solubility of LiFSI is high and the viscosity of the electrolyte solution at low temperature is thereby reduced.

Comparison between Examples 3 and Examples 5 to 8 with the same salt composition showed that when CO₂ was dissolved in the electrolyte solution containing triisopropylsilyl polyphosphate, the effect of reducing the impedance and DCR and the effect of suppressing self-discharge were further enhanced. It was further shown that these effects became significant when the amount of CO₂ dissolved in the electrolyte solution exceeded 10 ppm by mass (e.g., 20 ppm by mass or more).

The reason for which these effects due to dissolution of CO₂ are enhanced is considered to be that a coating film derived from CO₂ is formed on the positive and negative electrodes, so that lithium ion intercalation (intercalation (insertion) reaction) on the positive electrode during storage is suppressed, side reactions in the positive electrode are suppressed, and low-temperature charging acceptability to the negative electrode is improved. Comparison of the DCR increase rates after 4-week enduring at 60°C with the same salt composition due to addition of triisopropylsilyl polyphosphate showed that the DCR increase rate was significantly lower and the effect of suppressing the DCR increase was higher, for the electrolyte solution having the mixed salt composition containing LiFSI and LiPF6 than for the simple salt composition containing only LiPF₆. The same results were shown for the DCR increase rate after 300 cycles with the same salt composition due to addition of ethyl polyphosphate. The reason for this is also considered to be that anion coating film of LiFSI is formed on the positive and negative electrodes.

### <Example 5-2(6) Series>

### (Synthesis of Tert-Butyldimethylsilyl Polyphosphate)

Tert-butyldimethylsilyl polyphosphate (Compound X) was synthesized by the same procedures as in Example 5-2(5) series except that triisopropylsilane used in synthesis of triisopropylsilyl polyphosphate (Compound W) was changed to tert-butyldimethylsilane.

### [Examples 1 to 4]

In a mixture solvent of ethylene carbonate (EC) and ethyl methyl carbonate (EMC) in a volume ratio of 3 : 7 (manufactured by Kishida Chemical Co., Ltd.) used as an electrolyte solution solvent, an electrolyte salt of a mixed salt composition containing LiFSI (manufactured by Nippon Shokubai Co., Ltd.) and LiPF₆ (manufactured by Stella Chemifa Corporation) was dissolved in concentrations shown in Table 15-6. To the solution obtained, [(tert-butyl)dimethylsilyl polyphosphate (Compound X) was added in the content shown in Table 15-6 as the phosphorus atom-containing compound (6) represented by the general formula (6). The resultant mixture was then stirred for a day. Thus, a non-aqueous electrolyte solution (reference electrolyte solution) was prepared. Subsequently, in the same manner as described above, cells were produced using the respective reference electrolyte solutions obtained above and evaluated except that each electrolyte solution was not subjected to dissolving. Table 15-6 shows the results.

### [Examples 5 to 8]

Each non-aqueous electrolyte solution (reference electrolyte solution) was prepared in the same manner as described above. Subsequently, each reference electrolyte solution obtained was used to perform dissolving in the same manner as described above. Then, in the same manner as describe above, a cell was produced using the CO₂ dissolving electrolyte solution and evaluated. Table 15-6 shows the results.

### [Comparative Examples 1 to 5]

In the same mixture solvent as described above, an electrolyte salt of mixed salt composition containing LiFSI and LiPF₆ or an electrolyte salt of simple salt composition containing only LiPF₆ was dissolved in concentrations shown in Table 15-6. In Comparative Examples 1 to 4, the solution obtained above was used as a non-aqueous electrolyte solution (reference electrolyte solution). In Comparative Example 5, to the solution obtained above, tert-butyldimethylsilyl polyphosphate (Compound X) was further added in the content shown in Table 15-6, and the resultant mixture was then stirred for a day to prepare a non-aqueous electrolyte solution. Subsequently, in the same manner as described above, cells were produced using the respective reference electrolyte solutions obtained above and evaluated except that each electrolyte solution was not subjected to dissolving. Table 15-6 shows the results.

**[Table 15-6]**

| Non-aqueous electrolyte solution of Ex. 5-2(6) series | Salt composition | Type and content (wt%) of additive | Amount of CO₂ dissolved in non-aqueous electrolyte solution | | Real axis resistance (impedance, Ω) at -30°C | DCR | | | | | | OCV | | |
|---|---|---|---|---|---|---|---|---|---|---|---|---|---|---|
| | | Specific compound | Initial value (ppm) | Value after conditioning | | Initial value (Ω) | Value (Ω) after 300 cycles | DCR increase rate after 300 cycles | After 4-week enduring at 60° C (Ω) | DCR increase rate after 4-week enduring at 60°C | DCR increase rate at the same salt composition | Initial value (V) | After 4-week storage at 60°C | Difference (ΔV) before and after storage |
| Ex. 1 | 0.1M LiFSI+1.1M LiPF₆ | Formula (6): X (0.5) | 1 | 6 | 37.22 | 1.102 | 1.288 | 1.169 | 1.412 | 1.281 | | 4.1995 | 4.0544 | 0.1451 |
| Ex. 2 | 0.2M LiFSI+1.0M LiPF₆ | Formula (6): X (0.5) | 1 | 5 | 37.03 | 1.095 | 1.254 | 1.145 | 1.391 | 1.270 | 0.902 | 4.1995 | 4.0466 | 0.1529 |
| Ex. 3 | 0.6M LiFSI+0.6M LiPF₆ | Formula (6): X (0.5) | 1 | 5 | 36.81 | 1.080 | 1.222 | 1.131 | 1.302 | 1.206 | 0.900 | 4.1995 | 4.0412 | 0.1583 |
| Ex. 4 | 1M LiFSI+0.2M LiPF₆ | Formula (6): X (0.5) | 1 | 5 | 36.12 | 1.071 | 1.210 | 1.130 | 1.271 | 1.187 | 0.900 | 4.1995 | 4.0372 | 0.1623 |
| Ex. 5 | 0.6M LiFSI+0.6M LiPF₆ | Formula (6): X (0.5) | 150 | 74 | 34.22 | 1.026 | 1.153 | 1.124 | 1.276 | 1.244 | | 4.1995 | 4.0623 | 0.1372 |
| Ex. 6 | 0.6M LiFSI+0.6M LiPF₆ | Formula (6): X (0.5) | 60 | 50 | 34.44 | 1.031 | 1.161 | 1.126 | 1.284 | 1.245 | | 4.1995 | 4.0617 | 0.1378 |
| Ex. 7 | 0.6M LiFSI+0.6M LiPF₆ | Formula (6): X (0.5) | 30 | 31 | 34.86 | 1.041 | 1.172 | 1.126 | 1.293 | 1.242 | | 4.1995 | 4.0604 | 0.1391 |
| Ex. 8 | 0.6M LiFSI+0.6M LiPF₆ | Formula (6): X (0.5) | 10 | 13 | 35.23 | 1.055 | 1.191 | 1.129 | 1.312 | 1.244 | | 4.1995 | 4.0586 | 0.1409 |
| Comp. Ex. 1 | 1.2M LiPF₆ | | 1 | 5 | 45.10 | 1.250 | 1.575 | 1.260 | 1.712 | 1.370 | | 4.1995 | 4.0431 | 0.1564 |
| Comp. Ex. 2 | 0.2M LiFSI+1.0M LiPF₆ | | 1 | 5 | 41.66 | 1.163 | 1.419 | 1.220 | 1.542 | 1.326 | | 4.1995 | 4.0322 | 0.1673 |
| Comp. Ex. 3 | 0.6M LiFSI+0.6M LiPF₆ | | 1 | 5 | 39.30 | 1.107 | 1.344 | 1.214 | 1.446 | 1.306 | | 4.1995 | 4.0282 | 0.1713 |
| Comp. Ex. 4 | 1M LiFSI+0.2M LiPF₆ | | 1 | 5 | 37.33 | 1.085 | 1.314 | 1.211 | 1.412 | 1.301 | | 4.1995 | 4.0212 | 0.1783 |
| Comp. Ex. 5 | 1.2M LiPF₆ | Formula (6): X (0.5) | 1 | 5 | 40.02 | 1.187 | 1.442 | 1.215 | 1.632 | 1.368 | 0.953 | 4.1995 | 4.0521 | 0.1474 |

### [Consideration of Table 15-6 (Example 5-2(6) Series)]

Comparison between Examples 1 to 4 and Comparative Examples 2 to 4 showed that, depending on the concentration of LiFSI, the impedance and DCRs (initial DCR, DCR after 300 cycles, and DCR after 4-week enduring at 60°C) were reduced, and the effect of the reduction became significant by adding tert-butyldimethylsilyl polyphosphate (Compound X) to the electrolyte solution.

Comparison between Examples 1 to 4 and Comparative Examples 2 to 4 showed that, depending on the concentration of LiFSI, the OCV difference (ΔV) before and after storage increased, i.e., self-discharge increased, but when [(tert-butyl)dimethylsilyl polyphosphate was added to the electrolyte solution, the OCV difference (ΔV) before and after storage decreased, i.e., self-discharge was suppressed.

Comparison between Examples 2 to 4 and Comparative Examples 2 to 4 with the same salt composition and comparison between Comparative Example 5 and Comparative Example 1 with the same salt composition showed that the mixed salt composition containing LiFSI and LiPF₆ had higher effects of reducing the impedance, suppressing self-discharge, and suppressing the DCR increase due to addition of tert-butyldimethylsilyl polyphosphate, than the simple salt composition containing only LiPF₆.

The reason for which the effects obtained due to addition of tert-butyldimethylsilyl polyphosphate were higher for the mixed salt composition containing LiFSI and LiPF₆ than for the simple salt composition containing only LiPF₆ is considered to be that the coating film derived from an anionic component of LiFSI is formed on the interface between the positive and negative electrodes, so that the solubility of LiFSI is high and the viscosity of the electrolyte solution at low temperature is thereby reduced.

Comparison between Examples 3 and Examples 5 to 8 with the same salt composition showed that when CO₂ was dissolved in the electrolyte solution containing tert-butyldimethylsilyl polyphosphate, the effect of reducing the impedance and DCR and the effect of suppressing self-discharge were further enhanced. It was further shown that these effects became significant when the amount of CO₂ dissolved in the electrolyte solution exceeded 10 ppm by mass (e.g., 20 ppm by mass or more).

The reason for which these effects due to dissolution of CO₂ are enhanced is considered to be that a coating film derived from CO₂ is formed on the positive and negative electrodes, so that lithium ion intercalation (intercalation (insertion) reaction) on the positive electrode during storage is suppressed, side reactions in the positive electrode are suppressed, and low-temperature charging acceptability to the negative electrode is improved.

Comparison of the DCR increase rates after 4-week enduring at 60°C with the same salt composition due to addition of tert-butyldimethylsilyl polyphosphate showed that the DCR increase rate was significantly lower and the effect of suppressing the DCR increase was higher, for the electrolyte solution having the mixed salt composition containing LiFSI and LiPF6 than for the simple salt composition containing only LiPF₆. The same results were shown for the DCR increase rate after 300 cycles with the same salt composition due to addition of tert-butyldimethylsilyl polyphosphate. The reason for this is also considered to be that anion coating film of LiFSI is formed on the positive and negative electrodes.

### <Example 5-3 Series>

### [Examples 1 to 8]

In a mixture solvent of ethylene carbonate (EC) and ethyl methyl carbonate (EMC) in a volume ratio of 3 : 7 (manufactured by Kishida Chemical Co., Ltd.) used as an electrolyte solution solvent, an electrolyte salt of a mixed salt composition containing LiFSI (manufactured by Nippon Shokubai Co., Ltd.) and LiPF₆ (manufactured by Stella Chemifa Corporation) was dissolved in concentrations shown in Table 16. To the solution obtained, tris(trimethylsilyl) phosphate (Compound N, manufactured by Tokyo Chemical Industry Co., Ltd.) was added in the content shown in Table 16 as the phosphorus atom-containing compound (8) represented by the general formula (8). The resultant mixture was then stirred for a day. Thus, a non-aqueous electrolyte solution (reference electrolyte solution) was prepared. In Example 8, to the solution obtained above, lithium nitrate (LiNO₃, manufactured by Tokyo Chemical Industry Co., Ltd.) was added in the content shown in Table 16 as the nitric acid compound (12), and the resultant mixture was then stirred for a day and filtered with a membrane filter. Subsequently, each reference electrolyte solution obtained was used to perform dissolving in the same manner as described above. Then, in the same manner as describe above, a cell was produced using the CO₂ dissolving electrolyte solution and evaluated. Table 16 shows the results.

### [Comparative Examples 1 to 6 and 8 to 12]

In the same mixture solvent as described above, an electrolyte salt of mixed salt composition containing LiFSI and LiPF₆ or an electrolyte salt of simple salt composition containing only LiPF₆ was dissolved in concentrations shown in Table 16. In Comparative Examples 1 to 4, the solution obtained above was used as a non-aqueous electrolyte solution (reference electrolyte solution). In Comparative Example 5, to the solution obtained above, lithium bis(oxalato)borate (LiBOB, manufactured by Tokyo Chemical Industry Co., Ltd.) was further added in the content shown in Table 16 as a fluoro-oxalate compound (13), and the resultant mixture was stirred for a day to prepare a non-aqueous electrolyte solution. In Comparative Example 6, to the solution obtained above, lithium difluoro(oxalato)borate (LiDFOB, manufactured by Tokyo Chemical Industry Co., Ltd.) was further added in the content shown in Table 16 as a fluoro-oxalate compound (13), and the resultant mixture was stirred for a day to prepare a non-aqueous electrolyte solution. In Comparative Example 8, to the solution obtained above, lithium nitrate (LiNO₃, manufactured by Tokyo Chemical Industry Co., Ltd.) was added in the content shown in Table 16 as the nitric acid compound (12), and the resultant mixture was then stirred for a day and filtered with a membrane filter. Thus, a non-aqueous electrolyte solution was prepared. In Comparative Examples 9 to 11, to the solution obtained above, tris(trimethylsilyl) phosphate (Compound N) was further added in the content shown in Table 16, and the resultant mixture was then stirred for a day to prepare a non-aqueous electrolyte solution. In Comparative Example 12, to the solution obtained above, trimethylsilyl polyphosphate (Compound M) was further added in the content shown in Table 16, and the resultant mixture was then stirred for a day to prepare a non-aqueous electrolyte solution. Subsequently, in the same manner as described above, cells were produced using the respective reference electrolyte solutions obtained above and evaluated except that each electrolyte solution was not subjected to dissolving. Table 16 shows the results.

### [Comparative Example 7]

In the same mixture solvent as described above, an electrolyte salt of simple salt composition containing only LiPF₆ was dissolved in a concentration shown in Table 16. Thus, a non-aqueous electrolyte solution (reference electrolyte solution) was prepared. Subsequently, the reference electrolyte solution obtained above was used to perform dissolving in the same manner as described above. Then, in the same manner as describe above, a cell was produced using the CO₂ dissolving electrolyte solution and evaluated. Table 16 shows the results.

**[Table 16]**

| Non-aqueous electrolyte solution of Ex. 53 series | Salt composition | Type and content (wt%) of additive | | | Amount of CO₂ dissolved in non-aqueous electrolyte solution | | Real axis resistance (impedance, Ω) at -30°C | DCR | | | | | | OCV | | | Amount of electrodeposition after low-temperature cycles |
|---|---|---|---|---|---|---|---|---|---|---|---|---|---|---|---|---|---|
| | | Nitric acid compound | Specific compound | Fluorooxalato compound | Initial value (ppm) | Value after conditioning | | Initial value (Ω) | Value (Ω) after 300 cycles | DCR increase rate after 300 cycles | After 4-week enduring at 60°C (Ω) | DCR increase rate after 4-week enduring at 60°C | DCR increase rate at the same salt composition | Initial value (V) | After 4-week storage at 60°C | Difference (ΔV) before and after storage | |
| Ex. 1 | 0.1M LiFSI+1.1M LiPF₆ | | Formula (8): N (0.5) | | 150 | 78 | 34.00 | 1.100 | 1.201 | 1.092 | 1.446 | 1.315 | | 4.1995 | 4.0612 | 0.1383 | 23.4 |
| Ex. 2 | 0.2M LiFSI+1.0M LiPF₆ | | Formula (8): N (0.5) | | 150 | 77 | 33.67 | 1.090 | 1.189 | 1.091 | 1.387 | 1.273 | 0.899 | 4.1995 | 4.0598 | 0.1397 | 20.7 |
| Ex. 3 | 0.6M LiFSI+0.6M LiPF₆ | | Formula (8): N (0.5) | | 150 | 77 | 33.01 | 1.074 | 1.170 | 1.089 | 1.292 | 1.203 | 0.893 | 4.1995 | 4.0567 | 0.1428 | 15.7 |
| Ex. 4 | 1M LiFSI+0.2M LiPF₆ | | Formula (8): N (0.5) | | 150 | 75 | 32.68 | 1.063 | 1.158 | 1.089 | 1.278 | 1.202 | 0.905 | 4.1996 | 4.0541 | 0.1455 | 15.2 |
| Ex. 5 | 0.6M LiFSI+0.6M LiPF₆ | | Formula (8): N (0.5) | | 60 | 51 | 33.10 | 1.077 | 1.174 | 1.089 | 1.297 | 1.204 | | 4.1996 | 4.0559 | 0.1437 | 15.5 |
| Ex. 6 | 0.6M LiFSI+0.6M LiPF₆ | | Formula (8): N (0.5) | | 30 | 26 | 33.14 | 1.080 | 1.177 | 1.090 | 1.304 | 1.207 | | 4.1995 | 4.0498 | 0.1497 | 15.8 |
| Ex. 7 | 0.6M LiFSI+0.6M LiPF₆ | | Formula (8): N (0.5) | | 10 | 9 | 33.57 | 1.090 | 1.192 | 1.094 | 1.318 | 1.209 | | 4.1996 | 4.0289 | 0.1707 | 16.3 |
| Ex. 8 | 0.6M LiFSI+0.6M LiPF₆ | LiNO₃ (0.5) | Formula (8): N (0.5) | | 150 | 79 | 14.23 | 0.993 | 1.082 | 1.089 | 1.199 | 1.207 | | 4.1996 | 4.0555 | 0.1441 | 15.2 |
| Comp. Ex. 1 | 1.2MLiPF₆ | | | | 1 | 6 | 45.10 | 1.250 | 1.575 | 1.260 | 1.712 | 1.370 | | 4.1995 | 4.0431 | 0.1564 | 34.4 |
| Comp. Ex. 2 | 0.2M LiFSI+1.0M LiPF₆ | | | | 1 | 4 | 41.66 | 1.163 | 1.419 | 1.220 | 1.542 | 1.326 | | 4.1995 | 4.0322 | 0.1673 | 24.4 |
| Comp. Ex. 3 | 0.6M LiFSI+0.6M LiPF₆ | | | | 1 | 5 | 39.30 | 1.107 | 1.344 | 1.214 | 1.446 | 1.306 | | 4.1995 | 4.0282 | 0.1713 | 17.7 |
| Comp. Ex. 4 | 1M LiFSI+0.2M LiPF₆ | | | | 1 | 5 | 37.33 | 1.085 | 1.314 | 1.211 | 1.412 | 1.301 | | 4.1995 | 4.0212 | 0.1783 | 16.8 |
| Comp. Ex. 5 | 0.6M LiFSI+0.6M LiPF₆ | | | LiBOB (0.5) | 1 | 6 | 428.62 | 1.808 | 1.952 | 1.080 | 2.222 | 1.229 | | 4.1995 | 4.0388 | 0.1607 | |
| Comp. Ex. 6 | 0.6M LiFSI+0.6M LiPF₆ | | | LiDFOB (0.5) | 1 | 5 | 40.08 | 1.141 | 1.232 | 1.080 | 1.462 | 1.281 | | 4.1995 | 4.0318 | 0.1677 | |
| Comp. Ex. 7 | 1.2M LiPF₆ | | | | 150 | 70 | 33.56 | 1.187 | 1.493 | 1.258 | 1.622 | 1.366 | | 4.1995 | 4.0598 | 0.1397 | 30.6 |
| Comp. Ex. 8 | 0.6M LiFSI+0.6M LiPF₆ | LiNO₃ (0.5) | | | 1 | 70 | 14.88 | 1.035 | 1.252 | 1.210 | 1.322 | 1.277 | | 4.1994 | 3.8771 | 0.3223 | |
| Comp. Ex. 9 | 1.2M LiPF₆ | | Formula (8): N (0.5) | | 1 | 5 | 38.21 | 1.215 | 1.363 | 1.122 | 1.603 | 1.319 | 0.936 | 4.1995 | 4.0433 | 0.1562 | 40.7 |
| Comp. Ex. 10 | 0.2M LiFSI+1.0M LiPF₆ | | Formula (8): N (0.5) | | 1 | 6 | 36.03 | 1.125 | 1.234 | 1.097 | 1.412 | 1.255 | 0.916 | 4.1995 | 4.0325 | 0.1670 | 21.7 |
| Comp. Ex. 11 | 0.6M LiFSI+0.6M LiPF₆ | | Formula (8): N (0.5) | | 1 | 5 | 35.31 | 1.115 | 1.220 | 1.095 | 1.321 | 1.185 | 0.914 | 4.1995 | 4.0281 | 0.1714 | 16.3 |
| Comp. Ex. 12 | 0.6M LiFSI+0.6M LiPF₆ | | Formula (8): N (0.5) Formula (6): M (0.5) | | 1 | 5 | 34.52 | 1.097 | 1.195 | 1.089 | 1.300 | 1.185 | | 4.1955 | 4.0278 | 0.1677 | 16.1 |

### [Consideration of Table 16 (Example 5-3 Series)]

Comparison between Comparative Examples 2 and 3 and Comparative Examples 10 and 11 with the same salt composition showed that, depending on the concentration of LiFSI, the impedance and DCRs (initial DCR, DCR after 300 cycles, and DCR after 4-week enduring at 60°C) were reduced, and the effect of the reduction became significant by adding tris(trimethylsilyl) phosphate (Compound N) to the electrolyte solution.

Comparison between Examples 1 to 7 and Comparative Examples 10 and 11 showed that, depending on the concentration of LiFSI, the OCV difference (ΔV) before and after storage increased, i.e., self-discharge increased, but when CO₂ was dissolved in the electrolyte solution containing tris(trimethylsilyl) phosphate, the OCV difference (ΔV) before and after storage decreased, i.e., self-discharge was suppressed, while the impedance and DCR further decrease. Comparison between Comparative Examples 1 to 3 and Comparative Examples 9 to 11 showed that the effect of suppressing self-discharge was not exhibited by adding only tris(trimethylsilyl) phosphate.

Comparison between Comparative Examples 1 to 3, Comparative Examples 9 to 11, and Examples 2 to7 showed that, depending on the concentration of LiFSI, the amount of electrodeposition after low-temperature cycles decreased, and degradation of the negative electrode due to low-temperature charging was reduced. It was also shown that the addition of tris(trimethylsilyl) phosphate to the simple salt composition containing only LiPF₆ increased the amount of lithium electrodeposited on the negative electrode during low-temperature cycles, and degradation of the negative electrode due to low temperature charging progressed. It was also shown that when tris(trimethylsilyl) phosphate was added to the mixed salt composition containing LiFSI and LiPF₆, the amount of electrodeposition after low-temperature cycles decreased, and degradation of the negative electrode due to low temperature charging was suppressed. It was further shown that low-temperature electrodeposition was suppressed by the dissolution of CO₂.

The reason for which the effects obtained due to addition of tris(trimethylsilyl) phosphate were higher for the mixed salt composition containing LiFSI and LiPF₆ than for the simple salt composition containing only LiPF₆ is considered to be that the coating film derived from an anionic component of LiFSI is formed on the interface between the positive and negative electrodes, so that the solubility of LiFSI is high and the viscosity of the electrolyte solution at low temperature is thereby reduced.

It was also shown that the effects of reducing the impedance and DCR, suppressing self-discharge, and suppressing low-temperature electrodeposition were significant when the amount of CO₂ dissolved in the electrolyte solution exceeded 10 ppm by mass (e.g., 20 ppm by mass or more).

The reason for which these effects due to dissolution of CO₂ are enhanced is considered to be that a coating film derived from CO₂ is formed on the positive and negative electrodes, so that lithium ion intercalation (intercalation (insertion) reaction) on the positive electrode during storage is suppressed, side reactions in the positive electrode are suppressed, and low-temperature charging acceptability to the negative electrode is improved.

Comparison between Examples 3 and 8 and Comparative Example 8 with the same salt composition showed that when LiNO₃ was further added to the electrolyte solution containing tris(trimethylsilyl) phosphate, the impedance and the DCR significantly decreased. It was also shown that although self-discharge increased, the self-discharge due to addition of LiNO₃ was suppressed by dissolving CO₂ in the electrolyte solution. The reason for which the effect of suppressing self-discharge due to dissolution of CO₂ is higher for the electrolyte solution having the mixed salt composition containing LiFSI and LiPF₆ than for the simple salt composition containing only LiPF₆ is considered to be related to the order of formation of the coating film of the anionic component of FSI formed on the positive and negative electrodes during charging and the coating film of a lithium carbonate component from CO₂.

Comparison between Comparative Example 11 and Comparative Example 12 with the same salt composition showed that when trimethylsilyl polyphosphate (Compound M) was further added to the electrolyte solution containing tris(trimethylsilyl) phosphate, the impedance and the DCR decreased, and self-discharge was suppressed.

Comparison of the DCR increase rates after 4-week enduring at 60°C with the same salt composition due to addition of tris(trimethylsilyl) phosphate showed that the DCR increase rate was significantly lower and the effect of suppressing the DCR increase was higher, for the electrolyte solution having the mixed salt composition containing LiFSI and LiPF6 than for the simple salt composition containing only LiPF₆. The same results were shown for the DCR increase rate after 300 cycles with the same salt composition due to addition of tris(trimethylsilyl) phosphate. The reason for this is also considered to be that anion coating film of LiFSI is formed on the positive and negative electrodes.

### <Example 6-1 Series>

### [Examples 1 to 4]

In a mixture solvent of ethylene carbonate (EC) and ethyl methyl carbonate (EMC) in a volume ratio of 3 : 7 (manufactured by Kishida Chemical Co., Ltd.) used as an electrolyte solution solvent, an electrolyte salt of a mixed salt composition containing LiFSI (manufactured by Nippon Shokubai Co., Ltd.) and LiPF₆ (manufactured by Stella Chemifa Corporation) was dissolved in concentrations shown in Table 17. To the solution obtained above, trimethyl phosphite (Compound O, manufactured by Tokyo Chemical Industry Co., Ltd.) was added in the content shown in Table 17 as the phosphorus atom-containing compound (7) represented by the general formula (7). The resultant mixture was then stirred for a day. Thus, a non-aqueous electrolyte solution (reference electrolyte solution) was prepared. In Example 10, to the solution obtained above, tris(trimethylsilyl) phosphate (Compound N) was further added in the content shown in Table 17 as a phosphorus atom-containing compound (8) represented by the general formula (8). Subsequently, in the same manner as described above, cells were produced using the respective reference electrolyte solutions obtained above and evaluated except that each electrolyte solution was not subjected to dissolving. Table 17 shows the results.

### [Examples 5 to 9 and 11]

Each non-aqueous electrolyte solution (reference electrolyte solution) was prepared in the same manner as described above. In Example 9, to the solution obtained above, lithium nitrate (LiNO₃, manufactured by Tokyo Chemical Industry Co., Ltd.) was added in the content shown in Table 17 as the nitric acid compound (12), and the resultant mixture was then stirred for a day and filtered with a membrane filter. In Example 11, to the solution obtained above, tris(trimethylsilyl) phosphate (Compound N) was further added in the content shown in Table 17. Subsequently, each reference electrolyte solution obtained was used to perform dissolving in the same manner as described above. Then, in the same manner as describe above, a cell was produced using the CO₂ dissolving electrolyte solution and evaluated. Table 17 shows the results.

### [Comparative Examples 1 to 6 and 8 to 12]

In the same mixture solvent as described above, an electrolyte salt of mixed salt composition containing LiFSI and LiPF₆ or an electrolyte salt of simple salt composition containing only LiPF₆ was dissolved in concentrations shown in Table 17. In Comparative Examples 1 to 4, the solution obtained above was used as a non-aqueous electrolyte solution (reference electrolyte solution). In Comparative Example 5, to the solution obtained above, lithium bis(oxalato)borate (LiBOB, manufactured by Tokyo Chemical Industry Co., Ltd.) was further added in the content shown in Table 17, and the resultant mixture was stirred for a day to prepare a non-aqueous electrolyte solution. In Comparative Example 6, to the solution obtained above, lithium difluoro(oxalato)borate (LiDFOB, manufactured by Tokyo Chemical Industry Co., Ltd.) was further added in the content shown in Table 17 as a fluoro-oxalate compound (13), and the resultant mixture was stirred for a day to prepare a non-aqueous electrolyte solution. In Comparative Example 8, a non-aqueous electrolyte solution was prepared as follows. To the solution obtained above, lithium nitrate (LiNO₃, manufactured by Tokyo Chemical Industry Co., Ltd.) was added in the content shown in Table 17 as the nitric acid compound (12), and the resultant mixture was then stirred for a day and filtered with a membrane filter. In Comparative Examples 9 to 11, to the solution obtained above, tris(trimethylsilyl) phosphate (Compound N) was further added in the content shown in Table 17, and the resultant mixture was then stirred for a day to prepare a non-aqueous electrolyte solution. In Comparative Example 12, to the solution obtained above, trimethyl phosphite (Compound O) was further added in the content shown in Table 17, and the resultant mixture was then stirred for a day to prepare a non-aqueous electrolyte solution. Subsequently, in the same manner as described above, cells were produced using the respective reference electrolyte solutions obtained above and evaluated except that each electrolyte solution was not subjected to dissolving. Table 17 shows the results.

### [Comparative Example 7]

In the same mixture solvent as described above, an electrolyte salt of simple salt composition containing only LiPF₆ was dissolved in a concentration shown in Table 17. Thus, a non-aqueous electrolyte solution (reference electrolyte solution) was prepared. Subsequently, the reference electrolyte solution obtained above was used to perform dissolving in the same manner as described above. Then, in the same manner as describe above, a cell was produced using the CO₂ dissolving electrolyte solution and evaluated. Table 17 shows the results.

**[Table 17]**

| Non-aqueous electrolyte solution of Ex. 6-1 series | Salt composition | Type and content (wt%) of additive | | | Amount of CO₂ dissolved in non-aqueous electrolyte solution | | Real axis resistance (impedance, Ω) at -30°C | DCR | | | | | | OCV | | | Amount of electrodeposition after low-temperature cycles |
|---|---|---|---|---|---|---|---|---|---|---|---|---|---|---|---|---|---|
| | | Nitric acid compound | Specific compound | Fluorooxalato compound | Initial value (ppm) | Value after conditioning | | Initial value (Ω) | Value (Ω) after 300 cycles | DCR increase rate after 300 cycles | After 4-week enduring at 60°C (Ω) | DCR increase rate after 4-week enduring at 60°C | DCR increase rate at the same salt composition | Initial value (V) | After 4-week storage at 60°C | Difference (ΔV) before and after storage | |
| Ex. 1 | 0.1M LiFSI+1.1M LiPF₆ | | Formula(7): 0 (0.5) | | 1 | 6 | 25.84 | 1.081 | 1.255 | 1.161 | 1.424 | 1.318 | | 4.1996 | 4.0372 | 0.1624 | 24.3 |
| Ex. 2 | 0.2M LiFSI+1.0M LiPF₆ | | Formula(7): O (0.5) | | 1 | 7 | 25.51 | 1.077 | 1.250 | 1.161 | 1.362 | 1.265 | 0.883 | 4.1996 | 4.0364 | 0.1632 | 19.6 |
| Ex. 3 | 0.6M LiFSI+0.6M LiPF₆ | | Formula(7): O (0.5) | | 1 | 5 | 25.26 | 1.063 | 1.234 | 1.161 | 1.276 | 1.201 | 0.882 | 4.1995 | 4.0318 | 0.1677 | 15.1 |
| Ex. 4 | 1M LiFSI+0.2M LiPF₆ | | Formula(7): O (0.5) | | 1 | 5 | 25.01 | 1.054 | 1.224 | 1.161 | 1.256 | 1.191 | 0.890 | 4.1959 | 4.0275 | 0.1684 | 14.8 |
| Ex. 5 | 0.6M LiFSI+0.6M LiPF₆ | | Formula(7): 0 (0.5) | | 150 | 77 | 23.61 | 1.010 | 1.172 | 1.161 | 1.211 | 1.200 | | 4.1995 | 4.0586 | 0.1409 | 14.7 |
| Ex. 6 | 0.6M LiFSI+0.6M LiPF₆ | | Formula(7): 0 (0.5) | | 60 | 54 | 23.82 | 1.014 | 1.177 | 1.161 | 1.223 | 1.207 | | 4.1995 | 4.0578 | 0.1417 | 14.9 |
| Ex. 7 | 0.6M LiFSI+0.6M LiPF₆ | | Formula (7): O (0.5) | | 30 | 28 | 23.91 | 1.019 | 1.183 | 1.161 | 1.238 | 1.215 | | 4.1994 | 4.0571 | 0.1423 | 150 |
| Ex. 8 | 0.6M LiFSI+0.6M LiPF₆ | | Formula(7): 0 (0.5) | | 10 | 11 | 2408 | 1.026 | 1.191 | 1.161 | 1.272 | 1.240 | | 4.1995 | 4.0322 | 0.1673 | 15.1 |
| Ex. 9 | 0.6M LiFSI+0.6M LiPF₆ | LiNO₃ (0.5) | Formula (7): O (0.5) | | 150 | 78 | 14.19 | 0.996 | 1.158 | 1.163 | 1.198 | 1.203 | | 4.1995 | 4.0478 | 0.1517 | 14.6 |
| Ex. 10 | 0.6M LiFSI+0.6M LiPF₆ | | Formula (7): O (0.5) | | 1 | 6 | 23.24 | 1.060 | 1.231 | 1.162 | 1.272 | 1.201 | | 4.1994 | 4.0324 | 0.1670 | 14.8 |
| | | | Formula (8): N (0.5) | | | | | | | | | | | | | | |
| Ex. 11 | 0.6M LiFSI+0.6M LiPF₆ | | Formula (7): O (0.5) | | 150 | 79 | 23.24 | 1.007 | 1.170 | 1.160 | 1.211 | 1.203 | | 4.1995 | 4.0611 | 0.1384 | 14.5 |
| | | | Formula (8): N (0.5) | | | | | | | | | | | | | | |
| Comp. Ex. 1 | 1.2M LiPF₆ | | | | 1 | 6 | 45.10 | 1.250 | 1.575 | 1.260 | 1.712 | 1.370 | | 4.1995 | 4.0431 | 0.1564 | 34.4 |
| Comp. Ex. 2 | 0.2M LiFSI+1.0M LiPF₆ | | | | 1 | 4 | 41.66 | 1.163 | 1.419 | 1.220 | 1.542 | 1.326 | | 4.1995 | 4.0322 | 0.1673 | 24.4 |
| Comp. Ex. 3 | 0.6M LiFSI+0.6M LiPF₆ | | | | 1 | 5 | 39.30 | 1.107 | 1.344 | 1.214 | 1.446 | 1.306 | | 4.1995 | 4.0282 | 0.1713 | 17.7 |
| Comp. Ex. 4 | 1M LiFSI+0.2M LiPF₆ | | | | 1 | 5 | 37.33 | 1.085 | 1.314 | 1.211 | 1.412 | 1.301 | | 4.1995 | 4.0212 | 0.1783 | 16.8 |
| Comp. Ex. 5 | 0.6M LiFSI+0.6M LiPF₆ | | | LiBOB (0.5) | 1 | 6 | 428.62 | 1.808 | 1.952 | 1.080 | 2.222 | 1.229 | | 4.1995 | 4.0388 | 0.1607 | |
| Comp. Ex. 6 | 0.6M LiFSI+0.6M LiPF₆ | | | LiDFOB (0.5) | 1 | 5 | 40.08 | 1.141 | 1.232 | 1.080 | 1.462 | 1.281 | | 4.1995 | 4.0318 | 0.1677 | |
| Comp. Ex. 7 | 1.2M LiPF₆ | | | | 150 | 70 | 33.56 | 1.187 | 1.493 | 1.258 | 1.622 | 1.366 | | 4.1995 | 4.0598 | 0.1397 | 30.6 |
| Comp. Ex. 8 | 0.6M LiFSI+0.6M LiPF₆ | LiNO₃ (0.5) | | | 1 | 70 | 14.88 | 1.035 | 1.252 | 1.210 | 1.322 | 1.277 | | 4.1994 | 3.8771 | 0.3223 | |
| Comp. Ex. 9 | 1.2M LiPF₆ | | Formula (8): N (0.5) | | 1 | 5 | 38.21 | 1.215 | 1.363 | 1.122 | 1.603 | 1.319 | 0.936 | 4.1995 | 4.0433 | 0.1562 | 40.7 |
| Comp. Ex. 10 | 0.2M LiFSI+1.0M LiPF₆ | | Formula (8): N (0.5) | | 1 | 6 | 36.03 | 1.125 | 1.234 | 1.097 | 1.412 | 1.255 | | 4.1995 | 4.0325 | 0.1670 | 21.7 |
| Comp. Ex. 11 | 0.6M LiFSI+0.6M LiPF₆ | | Formula (8): N (0.5) | | 1 | 5 | 35.31 | 1.115 | 1.220 | 1.095 | 1.321 | 1.185 | | 4.1995 | 4.0281 | 0.1714 | 16.3 |
| Comp. Ex. 12 | 1.2M LiPF₆ | | Formula (7): O (0.5) | | 1 | 6 | 38.47 | 1.221 | 1.451 | 1.188 | 1.543 | 1.2637 | 0.901 | 4.1995 | 4.0422 | 0.1573 | 41.7 |

### [Consideration of Table 17 (Example 6-1 Series)]

Comparison between Examples 1 to 4 and Comparative Examples 2 to 4 showed that, depending on the concentration of LiFSI, the impedance and DCRs (initial DCR, DCR after 300 cycles, and DCR after 4-week enduring at 60°C) were reduced, and the effect of the reduction became significant by adding trimethyl phosphite (Compound O) to the electrolyte solution.

Comparison between Examples 1 to 4 and Comparative Examples 2 to 4 showed that, depending on the concentration of LiFSI, the OCV difference (ΔV) before and after storage increased, i.e., self-discharge increased, but when trimethyl phosphite was added to the electrolyte solution, the OCV difference (ΔV) before and after storage decreased, i.e., self-discharge was suppressed.

Comparison between Examples 2 to 4 and Comparative Examples 2 to 4 with the same salt composition and comparison between Comparative Example 9 and Comparative Example 1 with the same salt composition showed that the mixed salt composition containing LiFSI and LiPF₆ had higher effects of reducing the impedance, suppressing self-discharge, and suppressing the DCR increase due to addition of trimethyl phosphite, than the simple salt composition containing only LiPF₆.

Comparison between Comparative Examples 1 to 3, Comparative Examples 9 and 12, and Examples 2 to7 showed that, depending on the concentration of LiFSI, the amount of electrodeposition after low-temperature cycles decreased, and degradation of the negative electrode was reduced. It was also shown that the addition of trimethyl phosphite to the simple salt composition containing only LiPF₆ increased the amount of lithium electrodeposited on the negative electrode during low-temperature cycles, and degradation of the negative electrode progressed. It was also shown that when trimethyl phosphite was added to the mixed salt composition containing LiFSI and LiPF₆, the amount of electrodeposition after low-temperature cycles decreased, and degradation of the negative electrode was suppressed. It was further shown that low-temperature electrodeposition was suppressed by the dissolution of CO₂.

The reason for which the effects obtained due to addition of trimethyl phosphite were higher for the mixed salt composition containing LiFSI and LiPF₆ than for the simple salt composition containing only LiPF₆ is considered to be that the coating film derived from an anionic component of LiFSI is formed on the interface between the positive and negative electrodes, so that the solubility of LiFSI is high and the viscosity of the electrolyte solution at low temperature is thereby reduced.

Comparison between Examples 3 and Examples 5 to 8 with the same salt composition showed that when CO₂ was dissolved in the electrolyte solution containing trimethyl phosphite, the effect of reducing the impedance and DCR and the effect of suppressing self-discharge were further enhanced. It was further shown that these effects became significant when the amount of CO₂ dissolved in the electrolyte solution exceeded 10 ppm by mass (e.g., 20 ppm by mass or more).

The reason for which these effects due to dissolution of CO₂ are enhanced is considered to be that a coating film derived from CO₂ is formed on the positive and negative electrodes, so that lithium ion intercalation (intercalation (insertion) reaction) on the positive electrode during storage is suppressed, side reactions in the positive electrode are suppressed, and low-temperature charging acceptability to the negative electrode is improved.

Comparison between Examples 5 and 9 and Comparative Example 8 with the same salt composition showed that when LiNO₃ was further added to the electrolyte solution containing trimethyl phosphite, the impedance and the DCR significantly decreased. It was also shown that although self-discharge increased, the self-discharge due to addition of LiNO₃ was suppressed by dissolving CO₂ in the electrolyte solution.

The reason for which the effect of suppressing self-discharge due to dissolution of CO₂ is higher for the electrolyte solution having the mixed salt composition containing LiFSI and LiPF₆ than for the simple salt composition containing only LiPF₆ is considered to be related to the order of formation of the coating film of the anionic component of FSI formed on the positive and negative electrodes during charging and the coating film of a lithium carbonate component from CO₂.

Comparison between Examples 3, 5, 10, and 11 showed that when tris(trimethylsilyl) phosphate (Compound N) was further added to the electrolyte solution containing trimethyl phosphite, the impedance and DCR were further reduced.

Comparison of the DCR increase rates after 4-week enduring at 60°C with the same salt composition due to addition of trimethyl phosphite showed that the DCR increase rate was significantly lower and the effect of suppressing the DCR increase was higher, for the electrolyte solution having the mixed salt composition containing LiFSI and LiPF₆ than for the simple salt composition containing only LiPF₆. The same results were shown for the DCR increase rate after 300 cycles with the same salt composition due to addition of trimethyl phosphite. The reason for this is also considered to be that anion coating film of LiFSI is formed on the positive and negative electrodes.

### <Example 6-2 Series>

### [Examples 1 to 4]

In a mixture solvent of ethylene carbonate (EC) and ethyl methyl carbonate (EMC) in a volume ratio of 3 : 7 (manufactured by Kishida Chemical Co., Ltd.) used as an electrolyte solution solvent, an electrolyte salt of a mixed salt composition containing LiFSI (manufactured by Nippon Shokubai Co., Ltd.) and LiPF₆ (manufactured by Stella Chemifa Corporation) was dissolved in concentrations shown in Table 18. To the solution obtained, tris(trimethylsilyl) phosphite (Compound P, manufactured by Tokyo Chemical Industry Co., Ltd.) was added in the content shown in Table 18 as the phosphorus atom-containing compound (7) represented by the general formula (7). The resultant mixture was then stirred for a day. Thus, a non-aqueous electrolyte solution (reference electrolyte solution) was prepared. In Example 10, to the solution obtained above, tris(trimethylsilyl) phosphate (Compound N) was further added in the content shown in Table 18 as a phosphorus atom-containing compound (8) represented by the general formula (8). Subsequently, in the same manner as described above, cells were produced using the respective reference electrolyte solutions obtained above and evaluated except that each electrolyte solution was not subjected to dissolving. Table 18 shows the results.

### [Examples 5 to 9 and 11]

Each non-aqueous electrolyte solution (reference electrolyte solution) was prepared in the same manner as described above. In Example 9, to the solution obtained above, lithium nitrate (LiNO₃, manufactured by Tokyo Chemical Industry Co., Ltd.) was added in the content shown in Table 18 as the nitric acid compound (12), and the resultant mixture was then stirred for a day and filtered with a membrane filter. In Example 11, to the solution obtained above, trimethylsilyl polyphosphate (Compound M) was further added in the content shown in Table 18. Subsequently, each reference electrolyte solution obtained was used to perform dissolving in the same manner as described above. Then, in the same manner as describe above, a cell was produced using the CO₂ dissolving electrolyte solution and evaluated. Table 18 shows the results.

### [Comparative Examples 1 to 6 and 8 to 12]

In the same mixture solvent as described above, an electrolyte salt of mixed salt composition containing LiFSI and LiPF₆ or an electrolyte salt of simple salt composition containing only LiPF₆ was dissolved in concentrations shown in Table 18. In Comparative Examples 1 to 4, the solution obtained above was used as a non-aqueous electrolyte solution (reference electrolyte solution). In Comparative Example 5, to the solution obtained above, lithium bis(oxalato)borate (LiBOB, manufactured by Tokyo Chemical Industry Co., Ltd.) was further added in the content shown in Table 18 as a fluoro-oxalate compound (13), and the resultant mixture was stirred for a day to prepare a non-aqueous electrolyte solution. In Comparative Example 6, to the solution obtained above, lithium difluoro(oxalato)borate (LiDFOB, manufactured by Tokyo Chemical Industry Co., Ltd.) was further added in the content shown in Table 18 as a fluoro-oxalate compound (13), and the resultant mixture was stirred for a day to prepare a non-aqueous electrolyte solution. In Comparative Example 8, to the solution obtained above, lithium nitrate (LiNO₃, manufactured by Tokyo Chemical Industry Co., Ltd.) was added in the content shown in Table 18 as the nitric acid compound (12), and the resultant mixture was then stirred for a day and filtered with a membrane filter. Thus, a non-aqueous electrolyte solution was prepared. In Comparative Examples 9 to 11, to the solution obtained above, tris(trimethylsilyl) phosphate (Compound N) was further added in the content shown in Table 18, and the resultant mixture was then stirred for a day to prepare a non-aqueous electrolyte solution. In Comparative Example 12, to the solution obtained above, tris(trimethylsilyl) phosphite (Compound P) was further added in the content shown in Table 18, and the resultant mixture was then stirred for a day to prepare a non-aqueous electrolyte solution. Subsequently, in the same manner as described above, cells were produced using the respective reference electrolyte solutions obtained above and evaluated except that each electrolyte solution was not subjected to dissolving. Table 18 shows the results.

### [Comparative Example 7]

In the same mixture solvent as described above, an electrolyte salt of simple salt composition containing only LiPF₆ was dissolved in a concentration shown in Table 18. Thus, a non-aqueous electrolyte solution (reference electrolyte solution) was prepared. Subsequently, the reference electrolyte solution obtained above was used to perform dissolving in the same manner as described above. Then, in the same manner as describe above, a cell was produced using the CO₂ dissolving electrolyte solution and evaluated. Table 18 shows the results.

**[Table 18]**

| Non-aqueous electrolyte solution of Ex. 6-2 series | Salt composition | Type and content (wt%) of additive | | | Amount of CO₂ dissolved in non-aqueous electrolyte solution | | Real axis resistance (impedance, Ω) at -30°C | DCR | | | | | | OCV | | | Amount of electrodeposition after low-temperature cycles |
|---|---|---|---|---|---|---|---|---|---|---|---|---|---|---|---|---|---|
| | | Nitric acid compound | Specific compound | Fluorooxalato compound | Initial value (ppm) | Value after conditioning | | Initial value (Ω) | Value (Ω) after 300 cycles | DCR increase rate after 300 cycles | After 4-week enduring at 60°C (Ω) | DCR increase rate after 4-week enduring at 60°C | DCR increase rate at the same salt composition | Initial value (V) | After 4-week storage at 60°C | Difference (ΔV) before and after storage | |
| Ex. 1 | 0.1M LiFSI+1.1M LiPF₆ | | Formula (7): P (0.5) | | 1 | 7 | 27.44 | 1.086 | 1.156 | 1.064 | 1.397 | 1.286 | | 4.1996 | 4.0366 | 0.1630 | 24.4 |
| Ex. 2 | 0.2M LiFSI+1.0M LiPF₆ | | Formula (7): P (0.5) | | 1 | 6 | 26.91 | 1.079 | 1.145 | 1.061 | 1.355 | 1.256 | 0.879 | 4.1995 | 4.0344 | 0.1651 | 20.7 |
| Ex. 3 | 0.6M LiFSI+0.6M LiPF₆ | | Formula (7): P (0.5) | | 1 | 5 | 26.64 | 1.065 | 1.129 | 1.060 | 1.303 | 1.224 | 0.901 | 4.1995 | 4.0316 | 0.1679 | 16.6 |
| Ex. 4 | 1M LiFSI+0.2M LiPF₆ | | Formula (7): P(0.5) | | 1 | 4 | 26.11 | 1.054 | 1.118 | 1.060 | 1.275 | 1.209 | 0.903 | 4.1995 | 4.0294 | 0.1701 | 15.8 |
| Ex. 5 | 0.6M LiFSI+0.6M LiPF₆ | | Formula (7): P (0.5) | | 150 | 75 | 25.14 | 1.001 | 1.059 | 1.058 | 1.232 | 1.231 | | 4.1996 | 4.0581 | 0.1415 | 15.7 |
| Ex. 6 | 0.6M LiFSI+0.6M LiPF₆ | | Formula (7): P (0.5) | | 60 | 56 | 25.21 | 1.006 | 1.065 | 1.059 | 1.255 | 1.247 | | 4.1996 | 4.0571 | 0.1425 | 15.9 |
| Ex. 7 | 0.6M LiFSI+0.6M LiPF₆ | | Formula (7): P (0.5) | | 30 | 24 | 25.34 | 1.010 | 1.070 | 1.059 | 1.264 | 1.251 | | 4.1996 | 4.0566 | 0.1430 | 16.1 |
| Ex. 8 | 0.6M LiFSI+0.6M LiPF₆ | | Formula (7): P (0.5) | | 10 | 12 | 25.44 | 1.013 | 1.074 | 1.060 | 1.294 | 1.277 | | 4.1995 | 4.0299 | 0.1696 | 16.5 |
| Ex. 9 | 0.6M LiFSI+0.6M LiPF₆ | LiNO₃ (0.5) | Formula (7): P (0.5) | | 150 | 79 | 14.20 | 0.997 | 1.056 | 1.059 | 1.228 | 1.232 | | 4.1996 | 4.0563 | 0.1433 | 15.5 |
| Ex. 10 | 0.6M LiFSI+0.6M LiPF₆ | | Formula (7): P (0.5) | | 1 | 5 | 26.40 | 1.061 | 1.127 | 1.062 | 1.294 | 1.220 | | 4.1995 | 4.0294 | 0.1701 | |
| | | | Formula (8): N (0.5) | | | | | | | | | | | | | | |
| Ex. 11 | 0.6M LiFSI+0.6M LiPF₆ | | Formula (7): P (0.5) | | 150 | 76 | 25.06 | 0.998 | 1.058 | 1.060 | 1.228 | 1.230 | | 4.1995 | 4.0602 | 0.1393 | |
| | | | Formula (6): M (0.5) | | | | | | | | | | | | | | |
| Comp. Ex. 1 | 1.2M LiPF₆ | | | | 1 | 6 | 45.10 | 1.250 | 1.575 | 1.260 | 1.712 | 1.370 | | 4.1995 | 4.0431 | 0.1564 | 34.4 |
| Comp. Ex. 2 | 0.2M LiFSI+1.0M LiPF₆ | | | | 1 | 4 | 41.66 | 1.163 | 1.419 | 1.220 | 1.542 | 1.326 | | 4.1995 | 4.0322 | 0.1673 | 24.4 |
| Comp. Ex. 3 | 0.6M LiFSI+0.6M LiPF₆ | | | | 1 | 5 | 39.30 | 1.107 | 1.344 | 1.214 | 1.446 | 1.306 | | 4.1995 | 4.0282 | 0.1713 | 17.7 |
| Comp. Ex. 4 | 1M LiFSI+0.2M LiPF₆ | | | | 1 | 5 | 37.33 | 1.085 | 1.314 | 1.211 | 1.412 | 1.301 | | 4.1995 | 4.0212 | 0.1783 | 16.8 |
| Comp. Ex. 5 | 0.6M LiFSI+0.6M LiPF₆ | | | LiBOB (0.5) | 1 | 6 | 428.62 | 1.808 | 1.952 | 1.080 | 2.222 | 1.229 | | 4.1995 | 4.0388 | 0.1607 | |
| Comp. Ex. 6 | 0.6M LiFSI+0.6M LiPF₆ | | | LiDFOB (0.5) | 1 | 5 | 40.08 | 1.141 | 1.232 | 1.080 | 1.462 | 1.281 | | 4.1995 | 4.0318 | 0.1677 | |
| Comp. Ex. 7 | 1.2M LiPF₆ | | | | 150 | 70 | 33.56 | 1.187 | 1.493 | 1.258 | 1.622 | 1.366 | | 4.1995 | 4.0598 | 0.1397 | 30.6 |
| Comp. Ex. 8 | 0.6M LiFSI+0.6M LiPF₆ | LiNO₃ (0.5) | | | 1 | 70 | 14.88 | 1.035 | 1.252 | 1.210 | 1.322 | 1.277 | | 4.1994 | 3.8771 | 0.3223 | |
| Comp. Ex. 9 | 1.2M LiPF₆ | | Formula (8): N (0.5) | | 1 | 5 | 38.21 | 1.215 | 1.363 | 1.122 | 1.603 | 1.319 | | 4.1995 | 4.0433 | 0.1562 | 40.7 |
| Comp. Ex. 10 | 0.2M LrFSI+1.0M LiPF₆ | | Formula (8): N (0.5) | | 1 | 6 | 36.03 | 1.125 | 1.234 | 1.097 | 1.412 | 1.255 | | 4.1995 | 4.0325 | 0.1670 | 21.7 |
| Comp. Ex. 11 | 0.6M LiFSI+0.6M LiPF₆ | | Formula (8): N (0.5) | | 1 | 5 | 35.31 | 1.115 | 1.220 | 1.095 | 1.321 | 1.185 | | 4.1995 | 4.0281 | 0.1714 | 16.3 |
| Comp. Ex. 12 | 1.2M LiPF₆ | | Formula (7): P (0.5) | | 1 | 6 | 39.85 | 1.222 | 1.393 | 1.140 | 1.589 | 1.300 | 0.928 | 4.1995 | 4.0433 | 0.1562 | 41.3 |

### [Consideration of Table 18 (Example 6-2 Series)]

Comparison between Examples 1 to 4 and Comparative Examples 2 to 4 showed that, depending on the concentration of LiFSI, the impedance and DCRs (initial DCR, DCR after 300 cycles, and DCR after 4-week enduring at 60°C) were reduced, and the effect of the reduction became significant by adding tris(trimethylsilyl) phosphite (Compound P) to the electrolyte solution.

Comparison between Examples 1 to 4 and Comparative Examples 2 to 4 showed that, depending on the concentration of LiFSI, the OCV difference (ΔV) before and after storage increased, i.e., self-discharge increased, but when tris(trimethylsilyl) phosphite was added to the electrolyte solution, the OCV difference (ΔV) before and after storage decreased, i.e., self-discharge was suppressed.

Comparison between Examples 2 to 4 and Comparative Examples 2 to 4 with the same salt composition and comparison between Comparative Example 12 and Comparative Example 1 with the same salt composition showed that the mixed salt composition containing LiFSI and LiPF₆ had higher effects of reducing the impedance, suppressing self-discharge, and suppressing the DCR increase due to addition of tris(trimethylsilyl) phosphite, than the simple salt composition containing only LiPF₆.

Comparison between Comparative Examples 1 to 3, Comparative Examples 9 and 12, and Examples 2 to7 showed that, depending on the concentration of LiFSI, the amount of electrodeposition after low-temperature cycles decreased, and degradation of the negative electrode due to low-temperature charging was reduced. It was also shown that the addition of tris(trimethylsilyl) phosphite to the simple salt composition containing only LiPF₆ increased the amount of lithium electrodeposited on the negative electrode during low-temperature cycles, and degradation of the negative electrode due to low temperature charging progressed. It was also shown that when tris(trimethylsilyl) phosphite was added to the mixed salt composition containing LiFSI and LiPF₆, the amount of electrodeposition after low-temperature cycles decreased, and degradation of the negative electrode due to low temperature charging was suppressed. It was further shown that low-temperature electrodeposition was suppressed by the dissolution of CO₂.

The reason for which the effects obtained due to addition of tris(trimethylsilyl) phosphite were higher for the mixed salt composition containing LiFSI and LiPF₆ than for the simple salt composition containing only LiPF₆ is considered to be that the coating film derived from an anionic component of LiFSI is formed on the interface between the positive and negative electrodes, so that the solubility of LiFSI is high and the viscosity of the electrolyte solution at low temperature is thereby reduced.

Comparison between Examples 3 and Examples 5 to 8 with the same salt composition showed that when CO₂ was dissolved in the electrolyte solution containing tris(trimethylsilyl) phosphite, the effect of reducing the impedance and DCR and the effect of suppressing self-discharge were further enhanced. It was further shown that these effects became significant when the amount of CO₂ dissolved in the electrolyte solution exceeded 10 ppm by mass (e.g., 20 ppm by mass or more).

The reason for which these effects due to dissolution of CO₂ are enhanced is considered to be that a coating film derived from CO₂ is formed on the positive and negative electrodes, so that lithium ion intercalation (intercalation (insertion) reaction) on the positive electrode during storage is suppressed, side reactions in the positive electrode are suppressed, and low-temperature charging acceptability to the negative electrode is improved.

Comparison between Examples 3, 5, 10, and 11 showed that when trimethylsilyl phosphate (Compound N) or trimethylsilyl polyphosphate (Compound M) was further added to the electrolyte solution containing tris(trimethylsilyl) phosphite, the impedance and DCR were further reduced. The reason for which the effect of suppressing self-discharge due to dissolution of CO₂ is higher for the electrolyte solution having the mixed salt composition containing LiFSI and LiPF₆ than for the simple salt composition containing only LiPF₆ is considered to be related to the order of formation of the coating film of the anionic component of FSI formed on the positive and negative electrodes during charging and the coating film of a lithium carbonate component from CO₂.

Comparison between Examples 5 and 9 and Comparative Example 8 with the same salt composition showed that when LiNO₃ was further added to the electrolyte solution containing tris(trimethylsilyl) phosphite, the impedance and the DCR significantly decreased. It was also shown that although self-discharge increased, the self-discharge due to addition of LiNO₃ was suppressed by dissolving CO₂ in the electrolyte solution.

Comparison of the DCR increase rates after 4-week enduring at 60°C with the same salt composition due to addition of tris(trimethylsilyl) phosphite showed that the DCR increase rate was significantly lower and the effect of suppressing the DCR increase was higher, for the electrolyte solution having the mixed salt composition containing LiFSI and LiPF6 than for the simple salt composition containing only LiPF₆. The same results were shown for the DCR increase rate after 300 cycles with the same salt composition due to addition of tris(trimethylsilyl) phosphite. The reason for this is also considered to be that anion coating film of LiFSI is formed on the positive and negative electrodes.

### <Example 7-1 Series>

### [Examples 1 to 9]

In a mixture solvent of ethylene carbonate (EC) and ethyl methyl carbonate (EMC) in a volume ratio of 3 : 7 (manufactured by Kishida Chemical Co., Ltd.) used as an electrolyte solution solvent, an electrolyte salt of a mixed salt composition containing LiFSI (manufactured by Nippon Shokubai Co., Ltd.) and LiPF₆ (manufactured by Stella Chemifa Corporation) was dissolved in concentrations shown in Table 19. To the solution obtained, 2,4,6-trimethoxyboroxine (Bₓ(OMe)₃, Compound Q, manufactured by Tokyo Chemical Industry Co., Ltd.) was added in the content shown in Table 19 as the boroxine compound (9) represented by the general formula (9). The resultant mixture was then stirred for a day. Thus, a non-aqueous electrolyte solution (reference electrolyte solution) was prepared. In Example 8, to the solution obtained above, lithium nitrate (LiNO₃, manufactured by Tokyo Chemical Industry Co., Ltd.) was added in the content shown in Table 19 as the nitric acid compound (12), and the resultant mixture was then stirred for a day and filtered with a membrane filter. Subsequently, each reference electrolyte solution obtained was used to perform dissolving in the same manner as described above. Then, in the same manner as describe above, a cell was produced using the CO₂ dissolving electrolyte solution and evaluated. Table 19 shows the results.

### [Comparative Examples 1 to 6 and 8 to 12]

In the same mixture solvent as described above, an electrolyte salt of mixed salt composition containing LiFSI and LiPF₆ or an electrolyte salt of simple salt composition containing only LiPF₆ was dissolved in concentrations shown in Table 19. In Comparative Examples 1 to 4, the solution obtained above was used as a non-aqueous electrolyte solution (reference electrolyte solution). In Comparative Example 5, to the solution obtained above, lithium bis(oxalato)borate (LiBOB, manufactured by Tokyo Chemical Industry Co., Ltd.) was further added in the content shown in Table 19 as a fluoro-oxalate compound (13), and the resultant mixture was stirred for a day to prepare a non-aqueous electrolyte solution. In Comparative Example 6, to the solution obtained above, lithium difluoro(oxalato)borate (LiDFOB, manufactured by Tokyo Chemical Industry Co., Ltd.) was further added in the content shown in Table 19 as a fluoro-oxalate compound (13), and the resultant mixture was stirred for a day to prepare a non-aqueous electrolyte solution. In Comparative Example 8, to the solution obtained above, lithium nitrate (LiNO₃, manufactured by Tokyo Chemical Industry Co., Ltd.) was added in the content shown in Table 19 as the nitric acid compound (12), and the resultant mixture was then stirred for a day and filtered with a membrane filter. Thus, a non-aqueous electrolyte solution was prepared. In Comparative Examples 9 to 11, to the solution obtained above, 2,4,6-trimethoxyboroxine (Compound Q) was further added in the content shown in Table 19, and the resultant mixture was then stirred for a day to prepare a non-aqueous electrolyte solution. In Comparative Example 12, to the solution obtained above, tris(trimethylsilyl) phosphate (Compound N) was further added in the content shown in Table 19, and the resultant mixture was then stirred for a day to prepare a non-aqueous electrolyte solution. Subsequently, in the same manner as described above, cells were produced using the respective reference electrolyte solutions obtained above and evaluated except that each electrolyte solution was not subjected to dissolving. Table 19 shows the results.

### [Comparative Example 7]

In the same mixture solvent as described above, an electrolyte salt of simple salt composition containing only LiPF₆ was dissolved in a concentration shown in Table 19. Thus, a non-aqueous electrolyte solution (reference electrolyte solution) was prepared. Subsequently, the reference electrolyte solution obtained above was used to perform dissolving in the same manner as described above. Then, in the same manner as describe above, a cell was produced using the CO₂ dissolving electrolyte solution and evaluated. Table 19 shows the results.

**[Table 19]**

| Non-aqueous electrolyte solution of Ex. 7-1 series | Salt composition | Type and content (wt%) of boroxine compound (9) | | | Amount of CO₂ dissolved in non-aqueous electrolyte solution | | Real axis resistance (impedance, Ω) at -30°C | DCR | | | | | | OCV | | | Amount of electrodeposition after low-temperature cycles |
|---|---|---|---|---|---|---|---|---|---|---|---|---|---|---|---|---|---|
| | | Nitric acid compound | Bx(OMe)₃ | Fluorooxalato compound | Initial value (ppm) | Value after conditioning | | Initial value (Ω) | Value (Ω) after 300 cycles | DCR increase rate after 300 cycles | After 4-week enduring at 60°C (Ω) | DCR increase rate after 4-week enduring at 60°C | DCR increase rate at the same salt composition | Initial value (V) | After 4-week storage at 60°C | Difference (ΔV) before and after storage | |
| Ex. 1 | 0.1M LiFSI+1.1M LiPF₆ | | Formula (9): Q (0.5) | | 150 | 73 | 26.37 | 1.098 | 1.172 | 1.067 | 1.425 | 1.298 | | 4.1995 | 4.0633 | 0.1362 | 23.7 |
| Ex. 2 | 0.2M LiFSI+1.0M LiPF₆ | | Formula (9): Q (0.5) | | 150 | 75 | 26.12 | 1.092 | 1.168 | 1.070 | 1.368 | 1.253 | 0.887 | 4.1996 | 4.0630 | 0.1366 | 20.6 |
| Ex. 3 | 0.6M LiFSI+0.6M LiPF₆ | | Formula (9): Q (0.5) | | 150 | 77 | 25.82 | 1.071 | 1.137 | 1.062 | 1.289 | 1.204 | 0.891 | 4.1995 | 4.0623 | 0.1372 | 14.9 |
| Ex. 4 | 1M LiFSI+0.2M LiPF₆ | | Formula (9): Q (0.5) | | 150 | 75 | 25.49 | 1.058 | 1.125 | 1.063 | 1.266 | 1.197 | | 4.1995 | 4.0602 | 0.1393 | 14.6 |
| Ex. 5 | 0.6M LiFSI+0.6M LiPF₆ | | Formula (9): Q (0.5) | | 60 | 55 | 25.85 | 1.075 | 1.178 | 1.096 | 1.296 | 1.206 | | 4.1995 | 4.0620 | 0.1375 | 15.2 |
| Ex. 6 | 0.6M LiFSI+0.6M LiPF₆ | | Formula (9): Q (0.5) | | 30 | 25 | 25.91 | 1.081 | 1.198 | 1.108 | 1.316 | 1.217 | | 4.1995 | 4.0619 | 0.1376 | 15.3 |
| Ex. 7 | 0.6M LiFSI+0.6M LiPF₆ | | Formula (9): Q (0.5) | | 10 | 13 | 34.01 | 1.091 | 1.206 | 1.105 | 1.457 | 1.335 | | 4.1995 | 4.0351 | 0.1644 | 15.4 |
| Ex. 8 | 0.6M LiFSI+0.6M LiPF₆ | LiNO₃ (0.5) | Formula (9): Q (0.5) | | 150 | 77 | 17.38 | 1.002 | 1.023 | 1.021 | 1.222 | 1.220 | | 4.1994 | 4.0531 | 0.1463 | 14.8 |
| Ex. 9 | 0.6M LiFSI+0.6M LiPF₆ | | Formula (9): Q (0.5) | | 150 | 76 | 25.12 | 1.022 | 1.074 | 1.051 | 1.268 | 1.241 | | 4.1996 | 4.0831 | 0.1165 | 14.7 |
| | | | Formula (8): N (0.5) | | | | | | | | | | | | | | |
| Comp. Ex. 1 | 1.2M LiPF₆ | | | | 1 | 6 | 45.10 | 1.250 | 1.575 | 1.260 | 1.712 | 1.370 | | 4.1995 | 4.0431 | 0.1564 | 34.4 |
| Comp. Ex. 2 | 0.2M LiFSI+1.0M LiPF₆ | | | | 1 | 4 | 41.66 | 1.163 | 1.419 | 1.220 | 1.542 | 1.326 | | 4.1995 | 4.0322 | 0.1673 | 24.4 |
| Comp. Ex. 3 | 0.6M LiFSI+0.6M LiPF₆ | | | | 1 | 5 | 39.30 | 1.107 | 1.344 | 1.214 | 1.446 | 1.306 | | 4.1995 | 4.0282 | 0.1713 | 17.7 |
| Comp. Ex. 4 | 1M LiFSI+0.2M LiPF₆ | | | | 1 | 5 | 37.33 | 1.085 | 1.314 | 1.211 | 1.412 | 1.301 | | 4.1995 | 4.0212 | 0.1783 | 16.8 |
| Comp. Ex. 5 | 0.6M LiFSI+0.6M LiPF₆ | | | LiBOB (0.5) | 1 | 6 | 428.62 | 1.808 | 1.952 | 1.080 | 2.222 | 1.229 | | 4.1995 | 4.0388 | 0.1607 | |
| Comp. Ex. 6 | 0.6M LiFSI+0.6M LiPF₆ | | | LiDFOB (0.5) | 1 | 5 | 40.08 | 1.141 | 1.232 | 1.080 | 1.462 | 1.281 | | 4.1995 | 4.0318 | 0.1677 | |
| Comp. Ex. 7 | 1.2M LiPF₆ | | | | 150 | 70 | 33.56 | 1.187 | 1.493 | 1.258 | 1.622 | 1.366 | | 4.1995 | 4.0598 | 0.1397 | 34.2 |
| Comp. Ex. 8 | 0.6M LiFSI+0.6M LiPF₆ | LiNO₃ (0.5) | | | 1 | 5 | 14.88 | 1.035 | 1.252 | 1.210 | 1.322 | 1.277 | | 4.1994 | 3.8771 | 0.3223 | |
| Comp. Ex. 9 | 1.2M LiPF₆ | | Formula (9): Q (0.5) | | 1 | 5 | 40.20 | 1.234 | 1.455 | 1.179 | 1.621 | 1.314 | 0.947 | 4.1995 | 4.0433 | 0.1562 | 40.1 |
| Comp. Ex. 10 | 0.2M LiFSI+1.0M LiPF₆ | | Formula (9): Q (0.5) | | 1 | 6 | 35.13 | 1.154 | 1.287 | 1.115 | 1.423 | 1.233 | 0.923 | 4.1995 | 4.0321 | 0.1674 | 21.4 |
| Comp. Ex. 11 | 0.6M LiFSI+0.6M LiPF₆ | | Formula (9): Q (0.5) | | 1 | 5 | 33.35 | 1.101 | 1.271 | 1.154 | 1.328 | 1.206 | 0.918 | 4.1995 | 4.0283 | 0.1712 | 15.4 |
| Comp. Ex. 12 | 0.6M LiFSI+0.6M LiPF₆ | | Formula (9): Q (0.5) | | 1 | 6 | 32.22 | 1.096 | 1.262 | 1.151 | 1.318 | 1.203 | | 4.1995 | 4.0284 | 0.1711 | 15.4 |
| | | | Formula (8): N (0.5) | | | | | | | | | | | | | | |

### [Consideration of Table 19 (Example 7-1 Series)]

Comparison between Comparative Examples 2 and 3 and Comparative Examples 10 and 11 with the same salt composition showed that, depending on the concentration of LiFSI, the impedance and DCRs (initial DCR, DCR after 300 cycles, and DCR after 4-week enduring at 60°C) were reduced, and the effect of the reduction became significant by adding 2,4,6-trimethoxyboroxine (Compound Q) to the electrolyte solution.

Comparison between Examples 1 to 7 and Comparative Examples 10 and 11 showed that, depending on the concentration of LiFSI, the OCV difference (ΔV) before and after storage increased, i.e., self-discharge increased, but when CO₂ was dissolved in the electrolyte solution containing 2,4,6-trimethoxyboroxine, the OCV difference (ΔV) before and after storage decreased, i.e., self-discharge was suppressed, while the impedance and DCR further decrease.

Comparison between Comparative Examples 1 to 3 and Comparative Examples 9 to 11 showed that the effect of suppression self-discharge was insufficient by adding only 2,4,6-trimethoxyboroxine.

Comparison between Comparative Examples 1 to 3, Comparative Examples 9 to 11, and Examples 2 to7 showed that, depending on the concentration of LiFSI, the amount of electrodeposition after low-temperature cycles decreased, and degradation of the negative electrode due to low-temperature charging was reduced. It was also shown that the addition of 2,4,6-trimethoxyboroxine to the simple salt composition containing only LiPF₆ increased the amount of lithium electrodeposited on the negative electrode during low-temperature cycles, and degradation of the negative electrode due to low temperature charging progressed. It was also shown that when 2,4,6-trimethoxyboroxine was added to the mixed salt composition containing LiFSI and LiPF₆, the amount of electrodeposition after low-temperature cycles decreased, and degradation of the negative electrode due to low temperature charging was suppressed. It was further shown that low-temperature electrodeposition was further suppressed by the dissolution of CO₂.

The reason for which the effects obtained due to addition of 2,4,6-trimethoxyboroxine were higher for the mixed salt composition containing LiFSI and LiPF₆ than for the simple salt composition containing only LiPF₆ is considered to be that the coating film derived from an anionic component of LiFSI is formed on the interface between the positive and negative electrodes, so that the solubility of LiFSI is high and the viscosity of the electrolyte solution at low temperature is thereby reduced.

It was also shown that the effects of reducing the impedance and DCR, suppressing self-discharge, and suppressing low-temperature electrodeposition were significant when the amount of CO₂ dissolved in the electrolyte solution exceeded 10 ppm by mass (e.g., 20 ppm by mass or more).

The reason for which these effects due to dissolution of CO₂ are enhanced is considered to be that a coating film derived from CO₂ is formed on the positive and negative electrodes, so that lithium ion intercalation (intercalation (insertion) reaction) on the positive electrode during storage is suppressed, side reactions in the positive electrode are suppressed, and low-temperature charging acceptability to the negative electrode is improved.

Comparison between Examples 3 and 8 and Comparative Example 8 with the same salt composition showed that when LiNO₃ was further added to the electrolyte solution containing 2,4,6-trimethoxyboroxine, the impedance and the DCR significantly decreased. It was also shown that although self-discharge increased, the self-discharge due to addition of LiNO₃ was suppressed by dissolving CO₂ in the electrolyte solution. The reason for which the effect of suppressing self-discharge due to dissolution of CO₂ is higher for the electrolyte solution having the mixed salt composition containing LiFSI and LiPF₆ than for the simple salt composition containing only LiPF₆ is considered to be related to the order of formation of the coating film of the anionic component of FSI formed on the positive and negative electrodes during charging and the coating film of a lithium carbonate component from CO₂.

Comparison between Comparative Example 11 and Comparative Example 12 with the same salt composition showed that when tris(trimethylsilyl) phosphate (Compound N) was further added to the electrolyte solution containing 2,4,6-trimethoxyboroxine, the impedance and the DCR decreased.

Comparison of the DCR increase rates after 4-week enduring at 60°C with the same salt composition due to addition of 2,4,6-trimethoxyboroxine showed that the DCR increase rate was significantly lower and the effect of suppressing the DCR increase was increased, for the electrolyte solution having the mixed salt composition containing LiFSI and LiPF6 than for the simple salt composition containing only LiPF₆. The same results were shown for the DCR increase rate after 300 cycles with the same salt composition due to addition of 2,4,6-trimethoxyboroxine. It was further shown that the effect of suppressing the DCR increase was further enhanced by dissolution of CO₂ or addition of trifluoromethane sulfonate (Compound 1). The reason for this is also considered to be that anion coating film of LiFSI is formed on the positive and negative electrodes.

### <Example 7-2 Series>

### [Examples 1 to 9]

In a mixture solvent of ethylene carbonate (EC) and ethyl methyl carbonate (EMC) in a volume ratio of 3 : 7 (manufactured by Kishida Chemical Co., Ltd.) used as an electrolyte solution solvent, an electrolyte salt of a mixed salt composition containing LiFSI (manufactured by Nippon Shokubai Co., Ltd.) and LiPF₆ (manufactured by Stella Chemifa Corporation) was dissolved in concentrations shown in Table 20. To the solution obtained, 2,4,6-triisopropoxyboroxine (Bₓ(OiPr)₃, Compound R, manufactured by Tokyo Chemical Industry Co., Ltd.) was added in the content shown in Table 20 as the boroxine compound (9) represented by the general formula (9). The resultant mixture was then stirred for a day. Thus, a non-aqueous electrolyte solution (reference electrolyte solution) was prepared. In Example 8, to the solution obtained above, lithium nitrate (LiNO₃, manufactured by Tokyo Chemical Industry Co., Ltd.) was added in the content shown in Table 20 as the nitric acid compound (12), and the resultant mixture was then stirred for a day and filtered with a membrane filter. Subsequently, each reference electrolyte solution obtained was used to perform dissolving in the same manner as described above. Then, in the same manner as describe above, a cell was produced using the CO₂ dissolving electrolyte solution and evaluated. Table 20 shows the results.

### [Comparative Examples 1 to 6 and 8 to 12]

In the same mixture solvent as described above, an electrolyte salt of mixed salt composition containing LiFSI and LiPF₆ or an electrolyte salt of simple salt composition containing only LiPF₆ was dissolved in concentrations shown in Table 20. In Comparative Examples 1 to 4, the solution obtained above was used as a non-aqueous electrolyte solution (reference electrolyte solution). In Comparative Example 5, to the solution obtained above, lithium bis(oxalato)borate (LiBOB, manufactured by Tokyo Chemical Industry Co., Ltd.) was further added in the content shown in Table 19 as a fluoro-oxalate compound (13), and the resultant mixture was stirred for a day to prepare a non-aqueous electrolyte solution. In Comparative Example 6, to the solution obtained above, lithium difluoro(oxalato)borate (LiDFOB, manufactured by Tokyo Chemical Industry Co., Ltd.) was further added in the content shown in Table 20 as a fluoro-oxalate compound (13), and the resultant mixture was stirred for a day to prepare a non-aqueous electrolyte solution. In Comparative Example 8, a non-aqueous electrolyte solution was prepared as follows. To the solution obtained above, lithium nitrate (LiNO₃, manufactured by Tokyo Chemical Industry Co., Ltd.) was added in the content shown in Table 20 as the nitric acid compound (12), and the resultant mixture was then stirred for a day and filtered with a membrane filter. In Comparative Examples 9 to 11, to the solution obtained above, 2,4,6-triisopropoxyboroxine (Compound R) was further added in the content shown in Table 20, and the resultant mixture was then stirred for a day to prepare a non-aqueous electrolyte solution. In Comparative Example 12, to the solution obtained above, tris(trimethylsilyl) phosphate (Compound N) was further added in the content shown in Table 20, and the resultant mixture was then stirred for a day to prepare a non-aqueous electrolyte solution. Subsequently, in the same manner as described above, cells were produced using the respective reference electrolyte solutions obtained above and evaluated except that each electrolyte solution was not subjected to dissolving. Table 20 shows the results.

### [Comparative Example 7]

In the same mixture solvent as described above, an electrolyte salt of simple salt composition containing only LiPF₆ was dissolved in a concentration shown in Table 20. Thus, a non-aqueous electrolyte solution (reference electrolyte solution) was prepared. Subsequently, the reference electrolyte solution obtained above was used to perform dissolving in the same manner as described above. Then, in the same manner as describe above, a cell was produced using the CO₂ dissolving electrolyte solution and evaluated. Table 20 shows the results.

**[Table 20]**

| Non-aqueous electrolyte solution of Ex. 7-2 series | Salt composition | Type and content (wt%) of boroxine compound (9) | | | Amount of CO₂ dissolved in non-aqueous electrolyte solution | | Real axis resistance (impedance, Ω) at -30°C | DCR | | | | | | OCV | | | Amount of electrodeposition after low-temperature cycles |
|---|---|---|---|---|---|---|---|---|---|---|---|---|---|---|---|---|---|
| | | Nitric acid compound | Bx(OiPr)₃ | Fluorooxalato compound | Initial value (ppm) | Value after conditioning | | Initial value (Ω) | Value (Ω) after 300 cycles | DCR increase rate after 300 cycles | After 4-week enduring at 60°C (Ω) | DCR increase rate after 4-week enduring at 60°C | DCR increase rate at the same salt composition | Initial value (V) | After 4-week storage at 60°C | Difference (ΔV) before and after storage | |
| Ex. 1 | 0.1M LiFSI+1.1M LiPF₆ | | Formula (9): R (0.5) | | 150 | 74 | 26.29 | 1.089 | 1.162 | 1.067 | 1.403 | 1.288 | | 4.1995 | 4.0632 | 0.1363 | 24.2 |
| Ex. 2 | 0.2M LiFSI+1.0M LiPF₆ | | Formula (9): R (0.5) | | 150 | 75 | 2603 | 1.082 | 1.160 | 1.072 | 1.366 | 1.262 | 0.886 | 4.1996 | 4.0629 | 0.1367 | 20.4 |
| Ex. 3 | 0.6M LiFSI+0.6M LiPF₆ | | Formula (9): R (0.5) | | 150 | 76 | 25.69 | 1.065 | 1.131 | 1.062 | 1.298 | 1.219 | 0.898 | 4.1995 | 4.0625 | 0.1370 | 15.9 |
| Ex. 4 | 1M LiFSI+0.2M LiPF₆ | | Formula (9): R (0.5) | | 150 | 76 | 25.30 | 1.050 | 1.119 | 1.066 | 1.277 | 1.216 | | 4.1996 | 4.0601 | 0.1395 | 15.2 |
| Ex. 5 | 0.6M LiFSI+0.6M LiPF₆ | | Formula (9): R (0.5) | | 60 | 54 | 25.85 | 1.068 | 1.171 | 1.096 | 1.308 | 1.225 | | 4.1995 | 4.0619 | 0.1376 | 15.9 |
| Ex. 6 | 0.6M LiFSI+0.6M LiPF₆ | | Formula (9): R (0.5) | | 30 | 26 | 25.91 | 1.060 | 1.179 | 1.112 | 1.314 | 1.240 | | 4.1994 | 4.0619 | 0.1375 | 16.1 |
| Ex. 7 | 0.6M LiFSI+0.6M LiPF₆ | | Formula (9): R (0.5) | | 10 | 13 | 29.89 | 1.091 | 1.250 | 1.146 | 1.322 | 1.212 | | 4.1995 | 4.0298 | 0.1697 | 16.2 |
| Ex. 8 | 0.6M LiFSI+0.6M LiPF₆ | LiNO₃ (0.5) | Formula (9): R (0.5) | | 150 | 76 | 17.38 | 0.998 | 1.008 | 1.010 | 1.222 | 1.224 | | 4.1994 | 4.0632 | 0.1362 | 15.7 |
| Ex. 9 | 0.6M LiFSI+0.6M LiPF₆ | | Formula (9): R (0.5) | | 150 | 77 | 24.83 | 1.018 | 1.058 | 1.039 | 1.238 | 1.216 | | 4.1994 | 4.0629 | 0.1365 | 15.6 |
| | | | Formula (8): N (0.5) | | | | | | | | | | | | | | |
| Comp. Ex. 1 | 1.2M LiPF₆ | | | | 1 | 6 | 45.10 | 1.250 | 1.575 | 1.260 | 1.712 | 1.370 | | 4.1995 | 4.0431 | 0.1564 | 34.4 |
| Comp. Ex. 2 | 0.2M LiFSI+1.0M LiPF₆ | | | | 1 | 4 | 41.66 | 1.163 | 1.419 | 1.220 | 1.542 | 1.326 | | 4.1995 | 4.0322 | 0.1673 | 24.4 |
| Comp. Ex. 3 | 0.6M LiFSI+0.6M LiPF₆ | | | | 1 | 5 | 39.30 | 1.107 | 1.344 | 1.214 | 1.446 | 1.306 | | 4.1995 | 4.0282 | 0.1713 | 17.7 |
| Comp. Ex. 4 | 1M LiFSI+0.2M LiPF₆ | | | | 1 | 5 | 37.33 | 1.085 | 1.314 | 1.211 | 1.412 | 1.301 | | 4.1995 | 4.0212 | 0.1783 | 16.8 |
| Comp. Ex. 5 | 0.6M LiFSI+0.6M LiPF₆ | | | LiBOB (0.5) | 1 | 6 | 428.62 | 1.808 | 1.952 | 1.080 | 2.222 | 1.229 | | 4.1995 | 4.0388 | 0.1607 | |
| Comp. Ex. 6 | 0.6M LiFSI+0.6M LiPF₆ | | | LiDFOB (0.5) | 1 | 5 | 40.08 | 1.141 | 1.232 | 1.080 | 1.462 | 1.281 | | 4.1995 | 4.0318 | 0.1677 | |
| Comp. Ex. 7 | 1.2M LiPF₆ | | | | 150 | 70 | 33.56 | 1.187 | 1.493 | 1.258 | 1.622 | 1.366 | | 4.1995 | 4.0598 | 0.1397 | 34.2 |
| Comp. Ex. 8 | 0.6M LiFSI+0.6M LiPF₆ | LiNO₃ (0.5) | | | 1 | 70 | 14.88 | 1.035 | 1.252 | 1.210 | 1.322 | 1.277 | | 4.1994 | 3.8771 | 0.3223 | |
| Comp. Ex. 9 | 1.2M LiPF₆ | | Formula (9): R (0.5) | | 1 | 5 | 36.34 | 1.208 | 1.295 | 1.072 | 1.594 | 1.320 | 0.931 | 4.1995 | 4.0433 | 0.1562 | 40.4 |
| Comp. Ex. 10 | 0.2M LiFSI+1.0M LiPF₆ | | Formula (9): R (0.5) | | 1 | 6 | 32.21 | 1.149 | 1.270 | 1.105 | 1.421 | 1.237 | 0.922 | 4.1995 | 4.0321 | 0.1674 | 21.1 |
| Comp. Ex. 11 | 0.6M LiFSI+0.6M LiPF₆ | | Formula (9): R (0.5) | | 1 | 5 | 30.46 | 1.098 | 1.263 | 1.150 | 1.333 | 1.214 | 0.922 | 4.1996 | 4.0283 | 0.1713 | 16.4 |
| Comp. Ex. 12 | 0.6M LiFSI+0.6M LiPF₆ | | Formula (9): R (0.5) | | 1 | 6 | 27.97 | 1.065 | 1.225 | 1.150 | 1.316 | 1.236 | | 4.1995 | 4.0284 | 0.1711 | 15.7 |
| | | | Formula (8): N (0.5) | | | | | | | | | | | | | | |

### [Consideration of Table 20 (Example 7-2 Series)]

Comparison between Comparative Examples 2 and 3 and Comparative Examples 10 and 11 with the same salt composition showed that, depending on the concentration of LiFSI, the impedance and DCRs (initial DCR, DCR after 300 cycles, and DCR after 4-week enduring at 60°C) were reduced, and the effect of the reduction became significant by adding 2,4,6-triisopropoxyboroxine (Compound R) to the electrolyte solution.

Comparison between Examples 1 to 7 and Comparative Examples 10 and 11 showed that, depending on the concentration of LiFSI, the OCV difference (ΔV) before and after storage increased, i.e., self-discharge increased, but when CO₂ was dissolved in the electrolyte solution containing 2,4,6-triisopropoxyboroxine, the OCV difference (ΔV) before and after storage decreased, i.e., self-discharge was suppressed, while the impedance and DCR further decreased. Comparison between Comparative Examples 1 to 3 and Comparative Examples 9 to 11 showed that the effect of suppressing self-discharge was insufficient by adding only 2,4,6-triisopropoxyboroxine.

Comparison between Comparative Examples 1 to 3, Comparative Examples 9 to 11, and Examples 2 to7 showed that, depending on the concentration of LiFSI, the amount of electrodeposition after low-temperature cycles decreased, and degradation of the negative electrode due to low-temperature charging was reduced. It was also shown that the addition of 2,4,6-triisopropoxyboroxine to the simple salt composition containing only LiPF₆ increased the amount of lithium electrodeposited on the negative electrode during low-temperature cycles, and degradation of the negative electrode due to low-temperature charging progressed. It was also shown that when 2,4,6-triisopropoxyboroxine was added to the mixed salt composition containing LiFSI and LiPF₆, the amount of electrodeposition after low-temperature cycles decreased, and degradation of the negative electrode due to low temperature charging was suppressed. It was further shown that low-temperature electrodeposition was further suppressed by the dissolution of CO₂.

The reason for which the effects obtained due to addition of 2,4,6-triisopropoxyboroxine were higher for the mixed salt composition containing LiFSI and LiPF₆ than for the simple salt composition containing only LiPF₆ is considered to be that the coating film derived from an anionic component of LiFSI is formed on the interface between the positive and negative electrodes, so that the solubility of LiFSI is high and the viscosity of the electrolyte solution at low temperature is thereby reduced.

It was also shown that the effects of reducing the impedance and DCR, suppressing self-discharge, and suppressing low-temperature electrodeposition were significant when the amount of CO₂ dissolved in the electrolyte solution exceeded 10 ppm by mass (e.g., 20 ppm by mass or more).

The reason for which these effects due to dissolution of CO₂ are enhanced is considered to be that a coating film derived from CO₂ is formed on the positive and negative electrodes, so that lithium ion intercalation (intercalation (insertion) reaction) on the positive electrode during storage is suppressed, side reactions in the positive electrode are suppressed, and low-temperature charging acceptability to the negative electrode is improved.

The reason for which the effect of suppressing self-discharge due to dissolution of CO₂ is higher for the electrolyte solution having the mixed salt composition containing LiFSI and LiPF₆ than for the simple salt composition containing only LiPF₆ is considered to be related to the order of formation of the coating film of the anionic component of FSI formed on the positive and negative electrodes during charging and the coating film of a lithium carbonate component from CO₂.

Comparison between Examples 3 and 8 and Comparative Example 8 with the same salt composition showed that when LiNO₃ was further added to the electrolyte solution containing 2,4,6-triisopropoxyboroxine, the impedance and the DCR significantly decreased. It was also shown that although self-discharge increased, the self-discharge due to addition of LiNO₃ was suppressed by dissolving CO₂ in the electrolyte solution.

Comparison between Comparative Example 11 and Comparative Example 12 with the same salt composition showed that when tris(trimethylsilyl) phosphate was further added to the electrolyte solution containing 2,4,6-triisopropoxyboroxine, the impedance and the DCR decreased.

Comparison of the DCR increase rates after 4-week enduring at 60°C with the same salt composition due to addition of 2,4,6-triisopropoxyboroxine showed that the DCR increase rate was significantly lower and the effect of suppressing the DCR increase was higher, for the electrolyte solution having the mixed salt composition containing LiFSI and LiPF6 than for the simple salt composition containing only LiPF₆. The same results were shown for the DCR increase rate after 300 cycles with the same salt composition due to addition of 2,4,6-triisopropoxyboroxine. It was further shown that the effect of suppressing the DCR increase was further enhanced by dissolution of CO₂ or addition of trifluoromethane sulfonate (Compound 1). The reason for this is also considered to be that anion coating film of LiFSI is formed on the positive and negative electrodes.

### <Example 7-3 Series>

### [Examples 1 to 9]

In a mixture solvent of ethylene carbonate (EC) and ethyl methyl carbonate (EMC) in a volume ratio of 3 : 7 (manufactured by Kishida Chemical Co., Ltd.) used as an electrolyte solution solvent, an electrolyte salt of a mixed salt composition containing LiFSI (manufactured by Nippon Shokubai Co., Ltd.) and LiPF₆ (manufactured by Stella Chemifa Corporation) was dissolved in concentrations shown in Table 21. To the solution obtained above, 2,4,6-triphenylboroxine (Bₓ(O_{c}Hₓ)₃, Compound S, manufactured by Tokyo Chemical Industry Co., Ltd.) was added in the content shown in Table 21 as the boroxine compound (9) represented by the general formula (9). The resultant mixture was then stirred for a day. Thus, a non-aqueous electrolyte solution (reference electrolyte solution) was prepared. In Example 8, to the solution obtained above, lithium nitrate (LiNO₃, manufactured by Tokyo Chemical Industry Co., Ltd.) was added in the content shown in Table 21 as the nitric acid compound (12), and the resultant mixture was then stirred for a day and filtered with a membrane filter. Subsequently, each reference electrolyte solution obtained was used to perform dissolving in the same manner as described above. Then, in the same manner as describe above, a cell was produced using the CO₂ dissolving electrolyte solution and evaluated. Table 21 shows the results.

### [Comparative Examples 1 to 6 and 8 to 12]

In the same mixture solvent as described above, an electrolyte salt of mixed salt composition containing LiFSI and LiPF₆ or an electrolyte salt of simple salt composition containing only LiPF₆ was dissolved in concentrations shown in Table 21. In Comparative Examples 1 to 4, the solution obtained above was used as a non-aqueous electrolyte solution (reference electrolyte solution). In Comparative Example 5, to the solution obtained above, lithium bis(oxalato)borate (LiBOB, manufactured by Tokyo Chemical Industry Co., Ltd.) was further added in the content shown in Table 21 as a fluoro-oxalate compound (13), and the resultant mixture was stirred for a day to prepare a non-aqueous electrolyte solution. In Comparative Example 6, to the solution obtained above, lithium difluoro(oxalato)borate (LiDFOB, manufactured by Tokyo Chemical Industry Co., Ltd.) was further added in the content shown in Table 21 as a fluoro-oxalate compound (13), and the resultant mixture was stirred for a day to prepare a non-aqueous electrolyte solution. In Comparative Example 8, a non-aqueous electrolyte solution was prepared as follows. To the solution obtained above, lithium nitrate (LiNO₃, manufactured by Tokyo Chemical Industry Co., Ltd.) was added in the content shown in Table 21 as the nitric acid compound (12), and the resultant mixture was then stirred for a day and filtered with a membrane filter. In Comparative Examples 9 to 11, to the solution obtained above, 2,4,6-triphenylboroxine (Compound S) was further added in the content shown in Table 21, and the resultant mixture was then stirred for a day to prepare a non-aqueous electrolyte solution. In Comparative Example 12, to the solution obtained above, tris(trimethylsilyl) phosphate (Compound N) was further added in the content shown in Table 21, and the resultant mixture was then stirred for a day to prepare a non-aqueous electrolyte solution. Subsequently, in the same manner as described above, cells were produced using the respective reference electrolyte solutions obtained above and evaluated except that each electrolyte solution was not subjected to dissolving. Table 21 shows the results.

### [Comparative Example 7]

In the same mixture solvent as described above, an electrolyte salt of simple salt composition containing only LiPF₆ was dissolved in a concentration shown in Table 21. Thus, a non-aqueous electrolyte solution (reference electrolyte solution) was prepared. Subsequently, the reference electrolyte solution obtained above was used to perform dissolving in the same manner as described above. Then, in the same manner as describe above, a cell was produced using the CO₂ dissolving electrolyte solution and evaluated. Table 21 shows the results.

**[Table 21]**

| Non-aqueous electrolyte solution of Ex. 73 series | Salt composition | Type and content (wt%) of boroxine compound (9) | | | Amount of CO₂ dissolved in non-aqueous electrolyte solution | | Real axis resistance (impedance, Ω) at -30°C | DCR | | | | | | OCV | | | Amount of electrodeposition after low-temperature cycles |
|---|---|---|---|---|---|---|---|---|---|---|---|---|---|---|---|---|---|
| | | Nitric acid compound | B_{X}(OcHx)₃ | Fluorooxalato compound | Initial value (ppm) | Value after conditioning | | Initial value (Ω) | Value (Ω) after 300 cycles | DCR increase rate after 300 cycles | After 4-week enduring at 60°C (Ω) | DCR increase rate after 4-week enduring at 60°C | DCR increase rate at the same salt composition | Initial value (V) | After 4-week storage at 60°C | Difference (ΔV) before and after storage | |
| Ex. 1 | 0.1M LiFSI+1.1M LiPF₆ | | Formula (9): S (0.5) | | 150 | 74 | 26.41 | 1.089 | 1.274 | 1.170 | 1.456 | 1.337 | | 4.1994 | 4.0631 | 0.1363 | |
| Ex. 2 | 0.2M LiFSI+ 1.0M LiPF₆ | | Formula (9): S (0.5) | | 150 | 75 | 26.20 | 1.036 | 1.191 | 1.150 | 1.372 | 1.324 | 0.890 | 4.1995 | 4.0627 | 0.1368 | 21.2 |
| Ex. 3 | 0.6M LiFSI+0.6M LiPF₆ | | Formula (9): S (0.5) | | 150 | 76 | 25.87 | 1.025 | 1.178 | 1.149 | 1.292 | 1.260 | 0.893 | 4.1996 | 4.0617 | 0.1379 | 16.1 |
| Ex. 4 | 1M LiFSI+0.2M LiPF₆ | | Formula (9): S (0.5) | | 150 | 76 | 25.51 | 1.018 | 1.161 | 1.140 | 1.281 | 1.258 | | 4.1995 | 4.0588 | 0.1407 | 15.5 |
| Ex. 5 | 0.6M LiFSI+0.6M LiPF₆ | | Formula (9): S (0.5) | | 60 | 54 | 25.80 | 1.026 | 1.180 | 1.150 | 1.297 | 1.264 | | 4.1995 | 4.0601 | 0.1394 | 16.2 |
| Ex. 6 | 0.6M LiFSI+0.6M LiPF₆ | | Formula (9): S (0.5) | | 30 | 26 | 25.85 | 1.030 | 1.195 | 1.160 | 1.304 | 1.266 | | 4.1995 | 4.0603 | 0.1392 | 16.3 |
| Ex. 7 | 0.6M LiFSI+0.6M LiPF₆ | | Formula (9): S (0.5) | | 10 | 13 | 3400 | 1.058 | 1.236 | 1.168 | 1.326 | 1.253 | | 4.1995 | 4.0342 | 0.1653 | 16.6 |
| Ex. 8 | 0.6M LiFSI+0.6M LiPF₆ | LiNO₃ (0.5) | Formula (9): S (0.5) | | 150 | 76 | 17.63 | 1.012 | 1.163 | 1.149 | 1.272 | 1.257 | | 4.1994 | 4.0615 | 0.1379 | 15.5 |
| Ex. 9 | 0.6M LiFSI+0.6M LiPF₆ | | Formula (9): S (0.5) | | 150 | 77 | 25.15 | 1.020 | 1.163 | 1.140 | 1.276 | 1.251 | | 4.1995 | 4.0625 | 0.1370 | 15.4 |
| | | | Formula (8): N (0.5) | | | | | | | | | | | | | | |
| Comp. Ex. 1 | 1.2M LiPF₆ | | | | 1 | 6 | 45.10 | 1.250 | 1.575 | 1.260 | 1.712 | 1.370 | | 4.1995 | 4.0431 | 0.1564 | 34.4 |
| Comp. Fx. 2 | 0.2M LiFSI+1.0M LiPF₆ | | | | 1 | 4 | 41.66 | 1.163 | 1.419 | 1.220 | 1.542 | 1.326 | | 4.1995 | 4.0322 | 0.1673 | 24.4 |
| Comp. Fx. 3 | 0.6M LiFSI+0.6M LiPF₆ | | | | 1 | 5 | 39.30 | 1.107 | 1.344 | 1.214 | 1.446 | 1.306 | | 4.1995 | 4.0282 | 0.1713 | 17.7 |
| Comp. Ex. 4 | 1M LiFSI+0.2M LiPF₆ | | | | 1 | 5 | 37.33 | 1.085 | 1.314 | 1.211 | 1.412 | 1.301 | | 4.1995 | 4.0212 | 0.1783 | 16.8 |
| Comp. Fx. 5 | 0.6M LiFSI+0.6M LiPF₆ | | | LiBOB (0.5) | 1 | 6 | 428.62 | 1.808 | 1.952 | 1.080 | 2.222 | 1.229 | | 4.1995 | 4.0388 | 0.1607 | |
| Comp. Fx. 6 | 0.6M LiFSI+0.6M LiPF₆ | | | LiDFOB (0.5) | 1 | 5 | 40.08 | 1.141 | 1.232 | 1.080 | 1.462 | 1.281 | | 4.1995 | 4.0318 | 0.1677 | |
| Comp. Ex. 7 | 1.2M LiPF₆ | | | | 150 | 70 | 33.56 | 1.187 | 1.493 | 1.258 | 1.622 | 1.366 | | 4.1995 | 4.0598 | 0.1397 | 34.2 |
| Comp. Fx. 8 | 0.6M LiFSI+0.6M LiPF₆ | LiNO₃ (0.5) | | | 1 | 70 | 14.88 | 1.035 | 1.252 | 1.210 | 1.322 | 1.277 | | 4.1994 | 3.8771 | 0.3223 | |
| Comp. Ex. 9 | 1.2M LiPF₆ | | Formula (9): S (0.5) | | 1 | 5 | 36.89 | 1.223 | 1.433 | 1.172 | 1.621 | 1.325 | 0.947 | 4.1994 | 4.0428 | 0.1566 | 39.6 |
| Comp. Ex. 10 | 02M LiFSI+ 1.0M LiPF₆ | | Formula (9): S (0.5) | | 1 | 6 | 32.12 | 1.123 | 1.304 | 1.161 | 1.421 | 1.265 | 0.922 | 4.1995 | 4.0322 | 0.1673 | 22.3 |
| Comp. Ex. 11 | 0.6M LiFSI+0.6M LiPF₆ | | Formula (9): S (0.5) | | 1 | 5 | 30.12 | 1.068 | 1.238 | 1.159 | 1.332 | 1.247 | 0.921 | 4.1995 | 4.0283 | 0.1712 | 16.6 |
| Comp. Ex. 12 | 0.6M LiFSI+0.6M LiPF₆ | | Formula (9): S (0.5) | | 1 | 6 | 26.21 | 1.064 | 1.226 | 1.152 | 1.328 | 1.248 | | 4.1995 | 4.0284 | 0.1711 | 15.6 |
| | | | Formula (8): N (0.5) | | | | | | | | | | | | | | |

### [Consideration of Table 21 (Example 7-3 Series)]

Comparison between Comparative Examples 2 and 3 and Comparative Examples 10 and 11 with the same salt composition showed that, depending on the concentration of LiFSI, the impedance and DCRs (initial DCR, DCR after 300 cycles, and DCR after 4-week enduring at 60°C) were reduced, and the effect of the reduction became significant by adding 2,4,6-triphenylboroxine (Compound S) to the electrolyte solution.

Comparison between Examples 1 to 7 and Comparative Examples 10 and 11 showed that, depending on the concentration of LiFSI, the OCV difference (ΔV) before and after storage increased, i.e., self-discharge increased, but when CO₂ was dissolved in the electrolyte solution containing 2,4,6-triphenylboroxine, the OCV difference (ΔV) before and after storage decreased, i.e., self-discharge is suppressed, while the impedance and DCR further decreased.

Comparison between Comparative Examples 1 to 3 and Comparative Examples 9 to 11 showed that the effect of suppressing self-discharge was insufficient by adding only 2,4,6-triphenylboroxine.

Comparison between Comparative Examples 1 to 3, Comparative Examples 9 to 11, and Examples 2 to7 showed that, depending on the concentration of LiFSI, the amount of electrodeposition after low-temperature cycles decreased, and degradation of the negative electrode due to low-temperature charging was reduced. It was also shown that the addition of 2,4,6-triphenylboroxine to the simple salt composition containing only LiPF₆ increased the amount of lithium electrodeposited on the negative electrode during low-temperature cycles, and degradation of the negative electrode due to low-temperature charging progressed. It was also shown that when 2,4,6-triphenylboroxine was added to the mixed salt composition containing LiFSI and LiPF₆, the amount of electrodeposition after low-temperature cycles decreased, and degradation of the negative electrode due to low temperature charging was suppressed. It was further shown that low-temperature electrodeposition was further suppressed by the dissolution of CO₂.

The reason for which the effects obtained due to addition of 2,4,6-triphenylboroxine were higher for the mixed salt composition containing LiFSI and LiPF₆ than for the simple salt composition containing only LiPF₆ is considered to be that the coating film derived from an anionic component of LiFSI is formed on the interface between the positive and negative electrodes, so that the solubility of LiFSI is high and the viscosity of the electrolyte solution at low temperature is thereby reduced.

It was also shown that the effects of reducing the impedance and DCR, suppressing self-discharge, and suppressing low-temperature electrodeposition were significant when the amount of CO₂ dissolved in the electrolyte solution exceeded 10 ppm by mass (e.g., 20 ppm by mass or more).

The reason for which these effects due to dissolution of CO₂ are enhanced is considered to be that a coating film derived from CO₂ is formed on the positive and negative electrodes, so that lithium ion intercalation (intercalation (insertion) reaction) on the positive electrode during storage is suppressed, side reactions in the positive electrode are suppressed, and low-temperature charging acceptability to the negative electrode is improved.
The reason for which the effect of suppressing self-discharge due to dissolution of CO₂ is higher for the electrolyte solution having the mixed salt composition containing LiFSI and LiPF₆ than for the simple salt composition containing only LiPF₆ is considered to be related to the order of formation of the coating film of the anionic component of FSI formed on the positive and negative electrodes during charging and the coating film of a lithium carbonate component from CO₂.

Comparison between Examples 3 and 8 and Comparative Example 8 with the same salt composition showed that when LiNO₃ was further added to the electrolyte solution containing 2,4,6-triphenylboroxine, the impedance and the DCR significantly decreased. It was also shown that although self-discharge increased, the self-discharge due to addition of LiNO₃ was suppressed by dissolving CO₂ in the electrolyte solution. Comparison between Comparative Example 11 and Comparative Example 12 with the same salt composition showed that when tris(trimethylsilyl) phosphate (Compound N) was further added to the electrolyte solution containing 2,4,6-triphenylboroxine, the impedance and the DCR decreased.

Comparison of the DCR increase rates after 4-week enduring at 60°C with the same salt composition due to addition of 2,4,6-triphenylboroxine showed that the DCR increase rate was significantly lower and the effect of suppressing the DCR increase was higher, for the electrolyte solution having the mixed salt composition containing LiFSI and LiPF6 than for the simple salt composition containing only LiPF₆. The same results were shown for the DCR increase rate after 300 cycles with the same salt composition due to addition of 2,4,6-triphenylboroxine. It was further shown that the effect of suppressing the DCR increase was further enhanced by dissolution of CO₂ or addition of trifluoromethane sulfonate (Compound 1). The reason for this is also considered to be that anion coating film of LiFSI is formed on the positive and negative electrodes.

### <Series of Example 8>

### [Examples 1 to 4]

In a mixture solvent of ethylene carbonate (EC) and ethyl methyl carbonate (EMC) in a volume ratio of 3 : 7 (manufactured by Kishida Chemical Co., Ltd.) used as an electrolyte solution solvent, an electrolyte salt of a mixed salt composition containing LiFSI (manufactured by Nippon Shokubai Co., Ltd.) and LiPF₆ (manufactured by Stella Chemifa Corporation) was dissolved in concentrations shown in Table 22. To the solution obtained above, tetrakis(trimethylsiloxy)silane (Compound Y, manufactured by Tokyo Chemical Industry Co., Ltd.) was added in the content shown in Table 22 as the silicon atom-containing compound (14) represented by the general formula (14). The resultant mixture was then stirred for a day and insoluble matters were filtered off. Thus, a non-aqueous electrolyte solution (reference electrolyte solution) was prepared. Subsequently, in the same manner as described above, cells were produced using the respective reference electrolyte solutions obtained above and evaluated except that each electrolyte solution was not subjected to dissolving. Table 22 shows the results.

### [Examples 5 to 8]

Each non-aqueous electrolyte solution (reference electrolyte solution) was prepared in the same manner as described above. Subsequently, each reference electrolyte solution obtained was used to perform dissolving in the same manner as described above. Then, in the same manner as describe above, a cell was produced using the CO₂ dissolving electrolyte solution and evaluated. Table 22 shows the results.

### [Comparative Examples 1 to 5]

In the same mixture solvent as described above, an electrolyte salt of mixed salt composition containing LiFSI and LiPF₆ or an electrolyte salt of simple salt composition containing only LiPF₆ was dissolved in concentrations shown in Table 22. In Comparative Examples 1 to 4, the solution obtained above was used as a non-aqueous electrolyte solution (reference electrolyte solution). In Comparative Example 5, to the solution obtained above, tetrakis(trimethylsiloxy)silane (Compound Y) was further added in the content shown in Table 22, and the resultant mixture was then stirred for a day to prepare a non-aqueous electrolyte solution. Subsequently, in the same manner as described above, cells were produced using the respective reference electrolyte solutions obtained above and evaluated except that each electrolyte solution was not subjected to dissolving. Table 22 shows the results.

**[Table 22]**

| Non-aqueous electrolyte solution of Ex. 8 series | Salt composition | Type and content (wt%) of additive | Amount of CO₂ dissolved in non-aqueous electrolyte solution | | Real axis resistance (impedance , Ω) at -30° C | DCR | | | | | | OCV | | | Amount of electrodeposition after low-temperature cycles |
|---|---|---|---|---|---|---|---|---|---|---|---|---|---|---|---|
| | | Specific compound | Initial value (ppm) | Value after conditioning | | Initial value (Ω) | Value (Ω) after 300 cycles | DCR increase rate after 300 cycles | After 4-week enduring at 60°C (Ω) | DCR increase rate after 4-week enduring at 60°C | DCR increase rate at the same salt composition | Initial value (V) | After 4-week storage at 60°C | Difference (ΔV) before and after storage | |
| Ex. 1 | 0.1M LiFSI+1.1M LiPF₆ | Chemical formula (14): Y (0.5) | 1 | 6 | 26.73 | 1.122 | 1.294 | 1.153 | 1.414 | 1.260 | | 4.1995 | 4.0394 | 0.1601 | 26.5 |
| Ex. 2 | 0.2M LiFSI+1.0M LiPF₆ | Chemical formula (14): Y (0.5) | 1 | 5 | 24.47 | 1.110 | 1.271 | 1.145 | 1.389 | 1.251 | 0.931 | 4.1995 | 4.0378 | 0.1617 | 23.2 |
| Ex. 3 | 0.6M LiFSI+0.6M LiPF₆ | Chemical formula (14): Y (0.5) | 1 | 5 | 22.44 | 1.088 | 1.245 | 1.144 | 1.350 | 1.241 | 0.934 | 4.1995 | 4.0341 | 0.1654 | 16.8 |
| Ex. 4 | 1M LiFSI+0.2M LiPF₆ | Chemical formula (14): Y (0.5) | 1 | 5 | 21.67 | 1.062 | 1.213 | 1.142 | 1.317 | 1.240 | 0.933 | 4.1995 | 4.0330 | 0.1665 | 16.0 |
| Ex. 5 | 0.6M LiFSI+0.6M LiPF₆ | Chemical formula (14): Y (0.5) | 150 | 75 | 20.22 | 1.057 | 1.205 | 1.140 | 1.310 | 1.239 | | 4.1995 | 3.0696 | 1.1299 | 16.2 |
| Ex. 6 | 0.6M LiFSI+0.6M LiPF₆ | Chemical formula (14): Y (0.5) | 60 | 55 | 20.48 | 1.060 | 1.214 | 1.145 | 1.321 | 1.246 | | 4.1995 | 4.0651 | 0.1344 | 16.6 |
| Ex. 7 | 0.6M LiFSI+0.6M LiPF₆ | Chemical formula (14): Y (0.5) | 30 | 32 | 21.44 | 1.065 | 1.220 | 1.146 | 1.344 | 1.262 | | 4.1995 | 4.0631 | 0.1364 | 16.6 |
| Ex. 8 | 0.6M LiFSI+0.6M LiPF₆ | Chemical formula (14): Y (0.5) | 10 | 11 | 21.67 | 1.072 | 1.223 | 1.141 | 1.348 | 1.257 | | 4.1995 | 4.0448 | 0.1547 | 16.7 |
| Comp. Ex. 1 | 1.2M LiPF₆ | | 1 | 5 | 45.10 | 1.250 | 1.575 | 1.260 | 1.712 | 1.370 | | 4.1995 | 4.0431 | 0.1564 | 34.4 |
| Comp. Ex. 2 | 0.2M LiFSI+1.0M LiPF₆ | | 1 | 5 | 41.66 | 1.163 | 1.419 | 1.220 | 1.492 | 1.283 | | 4.1995 | 4.0322 | 0.1673 | 24.4 |
| Comp. Ex. 3 | 0.6M LiFSI+0.6M LiPF₆ | | 1 | 5 | 39.30 | 1.107 | 1.344 | 1.214 | 1.446 | 1.306 | | 4.1995 | 4.0282 | 0.1713 | 17.7 |
| Comp. Ex. 4 | 1M LiFSI+0.2M LiPF₆ | | 1 | 5 | 37.33 | 1.085 | 1.314 | 1.211 | 1.412 | 1.301 | | 4.1995 | 4.0212 | 0.1783 | 16.8 |
| Comp. Ex. 5 | 1.2M LiPF₆ | Chemical formula (14): Y (0.5) | 1 | 5 | 39.66 | 1.227 | 1.472 | 1.200 | 1.672 | 1.363 | 0.977 | 4.1995 | 4.0440 | 0.1555 | 38.6 |

### [Consideration of Table 22 (Example 8 Series)]

Comparison between Examples 1 to 4 and Comparative Examples 2 to 4 showed that, depending on the concentration of LiFSI, the impedance and DCRs (initial DCR, DCR after 300 cycles, and DCR after 4-week enduring at 60°C) were reduced, and the effect of the reduction became significant by adding tetrakis(trimethylsiloxy)silane (Compound Y) to the electrolyte solution.

Comparison between Examples 1 to 4 and Comparative Examples 2 to 4 showed that, depending on the concentration of LiFSI, the OCV difference (ΔV) before and after storage increased, i.e., self-discharge increased, but when tetrakis(trimethylsiloxy)silane was added to the electrolyte solution, the OCV difference (ΔV) before and after storage decreased, i.e., self-discharge was suppressed.

Comparison between Examples 2 to 4 and Comparative Examples 2 to 4 with the same salt composition and comparison between Comparative Example 5 and Comparative Example 1 with the same salt composition showed that the mixed salt composition containing LiFSI and LiPF₆ had higher effects of reducing the impedance, suppressing self-discharge, and suppressing the DCR increase rate due to addition of tetrakis(trimethylsiloxy)silane, than the simple salt composition containing only LiPF₆.

Comparison between Comparative Examples 1 to 5 and Examples 2 to 8 showed that, depending on the concentration of LiFSI, the amount of electrodeposition after low-temperature cycles decreased, and degradation of the negative electrode due to low-temperature charging was reduced. It was also shown that the addition of tetrakis(trimethylsiloxy)silane to the simple salt composition containing only LiPF₆ increased the amount of lithium electrodeposited on the negative electrode during low-temperature cycles, and degradation of the negative electrode due to low temperature charging progressed. It was also shown that when tetrakis(trimethylsiloxy)silane was added to the mixed salt composition containing LiFSI and LiPF₆, the amount of electrodeposition after low-temperature cycles decreased, and degradation of the negative electrode due to low temperature charging was suppressed.

The reason for which the effects obtained due to addition of tetrakis(trimethylsiloxy)silane were higher for the mixed salt composition containing LiFSI and LiPF₆ than for the simple salt composition containing only LiPF₆ is considered to be that the coating film derived from an anionic component of LiFSI is formed on the interface between the positive and negative electrodes, so that the solubility of LiFSI is high and the viscosity of the electrolyte solution at low temperature is thereby reduced.

Comparison between Examples 3 and Examples 5 to 8 with the same salt composition showed that when CO₂ was dissolved in the electrolyte solution containing tetrakis(trimethylsiloxy)silane, the effect of reducing the impedance and DCR and the effect of suppressing self-discharge were further enhanced. It was further shown that these effects became significant when the amount of CO₂ dissolved in the electrolyte solution exceeded 10 ppm by mass (e.g., 20 ppm by mass or more).

The reason for which these effects due to dissolution of CO₂ are enhanced is considered to be that a coating film derived from CO₂ is formed on the positive and negative electrodes, so that lithium ion intercalation (intercalation (insertion) reaction) on the positive electrode during storage is suppressed, side reactions in the positive electrode are suppressed, and low-temperature charging acceptability to the negative electrode is improved. Comparison of the DCR increase rates after 4-week enduring at 60°C with the same salt composition due to addition of tetrakis(trimethylsiloxy)silane showed that the DCR increase rate was significantly lower and the effect of suppressing the DCR increase was higher, for the electrolyte solution having the mixed salt composition containing LiFSI and LiPF6 than for the simple salt composition containing only LiPF₆. The same results were shown for the DCR increase rate after 300 cycles with the same salt composition due to addition of tetrakis(trimethylsiloxy)silane. The reason for this is also considered to be that anion coating film of LiFSI is formed on the positive and negative electrodes.

### INDUSTRIAL APPLICABILITY

As can be seen from above, the present disclosure is suitable for a non-aqueous electrolyte solution used in lithium ion secondary batteries.

## Claims

1. A non-aqueous electrolyte solution comprising:
as an electrolyte, LiN(FSO₂)₂; and
as an additive, at least one selected from the group consisting of a silicon atom-containing compound represented by the general formula (2), a silicon atom-containing compound represented by the general formula (14), a boron atom-containing compound represented by the general formula (3), a carbon atom-containing compound represented by the general formula (4), a sulfur atom-containing compound represented by the general formula (5), and a phosphorus atom-containing compound represented by the general formula (6),
Si(R⁵)₂(OR⁶)₂ (2)
(in the general formula (2), R⁵ and R⁶ are identical to or different from each other and each represent an alkyl group with 1 to 6 carbon atoms (optionally having a substituent), a fluoroalkyl group with 1 to 6 carbon atoms (optionally having a substituent), an aryl group (optionally having a substituent), a silyl group (optionally having a substituent), an alkali metal atom, an onium salt, or a hydrogen atom),
Si(R⁵)₄ (14)
(in the formula (14), R⁵ represents the same as defined above),
B(OR⁶)₃ (3)
(in the formula (3), R⁶ represents the same as defined above),
C(=O)(R⁵)(OR⁶) (4)
(in the formula (4), R⁵ and R⁶ represent the same as defined above),
{S(=O)₂(R⁵)_{y}}ₓ(OR⁶)_{x(2-y)} (5)
(in the formula (5), R⁵ and R⁶ represent the same as defined above, x represents an integer of 1 or 2, and y represents an integer of 0 or 1, provide that when x is 2 and y is 1, (OR⁶)₂ is (-O-R⁶-O-), and the formula (5) represents S(=O)₂(R⁵)-O-R⁶-O-S(=O)₂(R⁵),
P(=O)(R⁵)_{y}(OR⁶)₂ (6)
(in the formula (6), R⁵, R⁶, and y represent the same as defined above, provided that when the formula (6) is a polymerizable group, y is 0, one of (OR⁶)₂ is (-O-), and the formula (6) represents [-P(=O)(OR⁶)O-]ₙ).

2. The non-aqueous electrolyte solution of claim 1, further comprising
at least one of carbon dioxide (CO₂), carbon monoxide (CO), a bicarbonate ion (HCO₃⁻), or a carbonate ion (CO₃²⁻) dissolved therein.

3. A non-aqueous electrolyte solution comprising:
as an electrolyte, LiN(FSO₂)₂;
as an additive, at least one selected from the group consisting of a silicon atom-containing compound represented by the general formula (2), a silicon atom-containing compound represented by the general formula (14), a boron atom-containing compound represented by the general formula (3), a carbon atom-containing compound represented by the general formula (4), a sulfur atom-containing compound represented by the general formula (5), a phosphorus atom-containing compound represented by the general formula (6), a phosphorus atom-containing compound represented by the general formula (7), a phosphorus atom-containing compound represented by the general formula (8), and a boroxine compound represented by the general formula (9); and
at least one of carbon dioxide (CO₂), carbon monoxide (CO), a bicarbonate ion (HCO₃⁻), or a carbonate ion (CO₃²⁻) dissolved therein,
Si(R⁵)₂(OR⁶)₂ (2)
(in the general formula (2), R⁵ and R⁶ are identical to or different from each other and each represent an alkyl group with 1 to 6 carbon atoms (optionally having a substituent), a fluoroalkyl group with 1 to 6 carbon atoms (optionally having a substituent), an aryl group (optionally having a substituent), a silyl group (optionally having a substituent), an alkali metal atom, an onium salt, or a hydrogen atom),
Si(R⁵)₄ (14)
(in the formula (14), R⁵ represents the same as defined above),
B(OR⁶)₃ (3)
(in the formula (3), R⁶ represents the same as defined above),
C(=O)(R⁵)(OR⁶) (4)
(in the formula (4), R⁵ and R⁶ represent the same as defined above),
{S(=O)₂(R⁵)_{y}}ₓ(OR⁶)_{x(2-y)} (5)
(in the formula (5), R⁵ and R⁶ represent the same as defined above, x represents an integer of 1 or 2, and y represents an integer of 0 or 1, provided that when x is 2 and y is 1, (OR⁶)₂ is (-O-R⁶-O-), and the formula (5) represents S(=O)₂(R⁵)-O-R⁶-O-S(=O)₂(R⁵); and
P(=O)(R⁵)_{y}(OR⁶)₂ (6)
(in the formula (6), R⁵, R⁶, and y represent the same as defined above, provided that when the formula (6) is a polymerizable group, y is 0, one of (OR⁶)₂ is (-O-), and the formula (6) represents [-P(=O)(OR⁶)O-]ₙ),
P(OR⁶)₃ (7)
(in the formula (7), R⁶ represents the same as defined above),
P(=O)(OR⁶)₃ (8)
(in the formula (8), R⁶ represents the same as defined above), 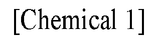 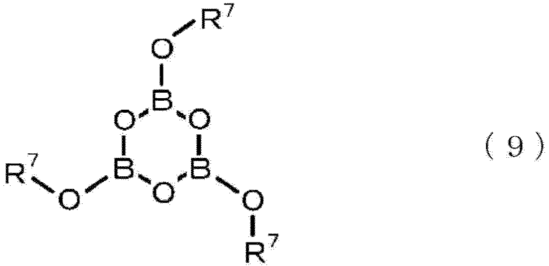
(in the formula (9), R⁷'s are identical to or different from each other and each represent an alkyl group with 1 to 6 carbon atoms (optionally having a substituent), a fluoroalkyl group with 1 to 6 carbon atoms (optionally having a substituent), or a cycloalkyl group (optionally having a substituent).

4. The non-aqueous electrolyte solution of claim 2 or 3, wherein
a total amount of the at least one of carbon dioxide (CO₂), carbon monoxide (CO), a bicarbonate ion (HCO₃⁻), or a carbonate ion (CO₃²⁻) dissolved is 20 ppm by mass or more.

5. The non-aqueous electrolyte solution of any one of claims 1 to 4, wherein the electrolyte includes at least one selected from the group consisting of a compound represented by the general formula (10), a compound represented by the general formula (11), and LiAsF₆, ${LiPF}_{a} {\left({C}_{m}{F}_{2 m + 1}\right)}_{6 - a} \left(0\leq a\leq 6 and 1\leq m\leq 4\right)$ ${LiBF}_{b} {\left({C}_{n}{F}_{2 n + 1}\right)}_{4 - b} \left(0\leq b\leq 4, 1\leq n\leq 4\right)$

6. The non-aqueous electrolyte solution of any one of claims 1 to 5, further comprising:
at least one selected from the group consisting of a compound represented by the general formula (12) and a compound represented by the general formula (13),
M¹NO₃ (M¹ represents an alkali metal element) (12) 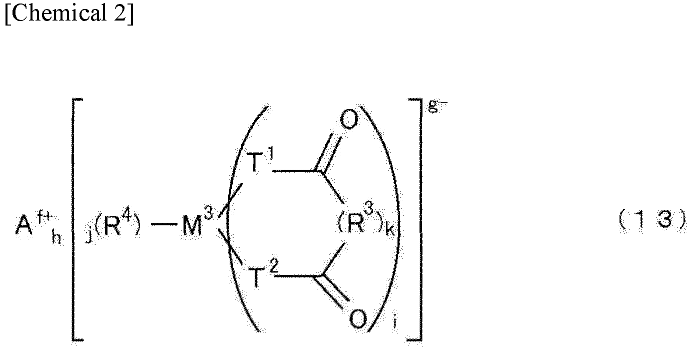
(in the general formula (13), M³ represents B or P, A^{f+} represents a metal ion, H, or an onium ion, 1 ≤ f ≤ 3, 1 ≤ g ≤ 3, h is g/f, 1 ≤ i ≤ 3, 0 ≤ j ≤ 4, k is 0 or 1, R³ represents an alkylene group with 1 to 10 carbon atoms or a halogenated alkylene group with 1 to 10 carbon atoms, R⁴ represents P or a fluorinated alkyl group with 1 to 10 carbon atoms, and T¹ and T² each independently represent O or S).

7. A non-aqueous electrolyte solution comprising:
an electrolyte; and
as an additive, at least one selected from the group consisting of ethyl polyphosphate, triisopropylsilyl polyphosphate, and tert-butyldimethylsilyl polyphosphate.

8. A secondary battery using the non-aqueous electrolyte solution of any one of claims 1 to 7.
